(19) **Europäisches Patentamt / European Patent Office / Office européen des brevets**

(11) **EP 4 135 226 A1**

(12) # EUROPEAN PATENT APPLICATION
published in accordance with Art. 153(4) EPC

(43) Date of publication:
**15.02.2023 Bulletin 2023/07**

(21) Application number: **20932853.3**

(22) Date of filing: **29.04.2020**

(51) International Patent Classification (IPC):
**H04L 1/00** *(1968.09)*   **G06N 3/02** *(2000.01)*

(52) Cooperative Patent Classification (CPC):
**G06N 3/02; H04L 1/00**

(86) International application number:
**PCT/CN2020/087875**

(87) International publication number:
**WO 2021/217519 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **CAI, Shijie**
  **Shenzhen, Guangdong 518129 (CN)**
- **LIU, Kunpeng**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR ADJUSTING NEURAL NETWORK**

(57) This application provides a neural network adjustment method and apparatus. The neural network adjustment method relates to a first neural network and a second neural network. The method includes: Whether a currently used neural network needs to be updated is first determined; and if the currently used neural network needs to be updated, a first device may autonomously complete the update or indicate a second device to complete the update. In other words, a more appropriate neural network may be obtained by updating a neural network in an AI model, to improve precision of information transmission based on the AI model.

FIG. 5(a)-1

**(Cont. next page)**

EP 4 135 226 A1

CONT.
FROM
FIG. 5(a)-1

CONT.
FROM
FIG. 5(a)-1

**Manner 2**

S530a: First notification message

S532a: Determine not to send a response message

Alternatively, S532a: Second response message

S522a: Keep a non-AI mode for information transmission

S522a: Keep a non-AI mode for information transmission

**Manner 3**

S540a: Second information

S520a: Information about a third neural network and/or a fourth neural network

**Manner 4**

S520a: Information about a third neural network and/or a fourth neural network

**Manner 5**

S530a: First notification message

S520a: Information about a third neural network and/or a fourth neural network

FIG. 5(a)-2

FIG. 5(b)

First signal → … → First neural network → … → Second signal → Feedback link → Second signal → … → Second neural network → … → Fifth signal

FIG. 5(c)

| To-be-fed-back downlink channel information | → | First compressor | → | Compressed channel information | Feedback link → | Compressed channel information | → | Second decompressor | → | Restored downlink channel information |

FIG. 5(d)

FIG. 5(e)

**Description**

**TECHNICAL FIELD**

This application relates to the communication field, and more specifically, to a neural network adjustment method and apparatus.

**BACKGROUND**

In a massive multiple-input multiple-output (massive multiple-input multiple-output, Massive MIMO) technology, a network device may reduce interference between a plurality of terminal devices and interference between a plurality of signal flows of a same terminal device through precoding. This helps improve signal quality, implement spatial multiplexing, and improve spectrum utilization. The terminal device may determine a precoding matrix based on downlink channel measurement, and enable, through feedback, the network device to obtain a precoding matrix that is the same as or similar to the precoding matrix determined by the terminal device.

Currently, an artificial intelligence (artificial intelligence, AI) based information transmission method is known. The terminal device and the network device obtain a first neural network and a second neural network through joint training. The first neural network is set on a terminal device side, the second neural network is set on a network device side, and a communication system including the first neural network and the second neural network is referred to as an AI framework. Specifically, the AI based information transmission method includes: The terminal device obtains to-be-fed-back information, where the to-be-fed-back information is processed by using at least the first neural network to obtain information that needs to be fed back through an air interface; the terminal device then feeds back, to the network device over a feedback link, the information that needs to be fed back through the air interface; and the network device receives the information fed back by the terminal device, and processes the information by using at least the second neural network, to restore the to-be-fed-back information on the terminal device side. However, in such an AI based information transmission manner, the first neural network and the second neural network that are obtained through offline training are directly applied to an online information transmission process. If the terminal device is displaced, a degree of matching between a communication environment and the first neural network and the second neural network may be reduced, affecting performance of information transmission based on the trained first neural network and the trained second neural network.

**SUMMARY**

This application provides a neural network adjustment method and apparatus, to improve performance of information transmission.

According to a first aspect, a neural network adjustment method is provided. The neural network adjustment method may be performed by a first device, or may be performed by a chip or a circuit disposed in the first device. This is not limited in this application. For ease of description, an example in which the method is performed by the first device is used for description below.

The neural network adjustment method relates to a first neural network and a second neural network. The first neural network is applied to a first device side, and the second neural network is applied to a second device side. The method includes: the first device determines a third neural network and a fourth neural network, where the third neural network and the fourth neural network respectively correspond to the first neural network and the second neural network; and the first device sends information about the fourth neural network to a second device, where the first neural network or the third neural network is used by the first device to perform first signal processing, the second neural network or the fourth neural network is used by the second device to perform second signal processing, and the second signal processing corresponds to the first signal processing.

According to the neural network adjustment method provided in this embodiment of this application, the first device may determine a new neural network, and send information about the new neural network to the second device, so that the first device and the second device can perform information transmission by using the new neural network. In this way, information transmission performance can be improved.

With reference to the first aspect, in some implementations of the first aspect, that the first neural network or the third neural network is used by the first device to perform first signal processing includes: the first neural network is used by the first device to process a first signal to obtain a second signal; and the third neural network is used by the first device to process a third signal to obtain a fourth signal.

Optionally, that the second neural network or the fourth neural network is used by the second device to perform second signal processing includes: the second neural network is used by the second device to process the second signal to obtain a fifth signal; and the fourth neural network is used by the second device to process the fourth signal to obtain a sixth signal.

Alternatively, that the second neural network or the fourth neural network is used by the second device to perform second signal processing includes: the second neural network is used by the second device to process a first signal to obtain a second signal; and the fourth neural network is used by the second device to process a third signal to obtain a fourth signal.

Optionally, that the first neural network or the third neural network is used by the first device to perform first signal processing includes: the first neural network is used by the first device to process the second signal to obtain a fifth signal; and the third neural network is used by the first device to process the fourth signal to obtain a sixth signal.

According to the neural network adjustment method provided in this embodiment of this application, the first neural network and the second neural network may be considered as a pair of neural networks, the third neural network and the fourth neural network may be considered as a pair of neural networks, and corresponding signal processing may be performed by using the paired neural networks.

With reference to the first aspect, in some implementations of the first aspect, a degree of difference between a first training signal related to the third signal and a second training signal related to the sixth signal meets a first condition; or a similarity between a first training signal related to the third signal and a second training signal related to the sixth signal meets a second condition.

When the third neural network and the fourth neural network that are obtained through update are used for signal processing, the first training signal related to the third signal and the second training signal related to the sixth signal meet a preset condition.

With reference to the first aspect, in some implementations of the first aspect, the degree of difference includes any one of the following: a difference, a mean squared error, a normalized mean squared error, or an average absolute error; and the similarity includes a correlation coefficient.

According to the neural network adjustment method provided in this embodiment of this application, the foregoing degree of difference or similarity may be specifically reflected in a plurality of forms, so that flexibility of the solution is improved.

With reference to the first aspect, in some implementations of the first aspect, that the first neural network or the second neural network is used to process a first signal to obtain a second signal includes: the first neural network or the second neural network and a first function module are used to process the first signal to obtain the second signal; and/or that the first neural network or the second neural network is used to process the second signal to obtain a fifth signal includes: the first neural network or the second neural network and a second function module are used to process the second signal to obtain the fifth signal.

That the third neural network or the fourth neural network is used to process a third signal to obtain a fourth signal includes: the third neural network or the fourth neural network and a third function module are used to process the third signal to obtain the fourth signal; and/or that the third neural network or the fourth neural network is used to process the fourth signal to obtain a sixth signal includes: the third neural network or the fourth neural network and a fourth function module are used to process the fourth signal to obtain the sixth signal.

According to the neural network adjustment method provided in this embodiment of this application, another signal processing function module may be further included in a process in which the foregoing paired neural networks are used to perform signal processing. Specific composition of a communication system is not limited. In this way, flexibility of the solution is improved.

With reference to the first aspect, in some implementations of the first aspect, that the first device determines a third neural network and a fourth neural network includes: The first device updates the first neural network and the second neural network to respectively obtain the third neural network and the fourth neural network.

According to the neural network adjustment method provided in this embodiment of this application, the first device may update an original neural network, to obtain a new fourth neural network.

With reference to the first aspect, in some implementations of the first aspect, before that the first device updates the first neural network and the second neural network to respectively obtain the third neural network and the fourth neural network, the method further includes: the first device receives first indication information from the second device, where the first indication information is used to indicate the first device to update the first neural network and the second neural network; or the first device periodically or aperiodically determines whether the first neural network and the second neural network need to be updated, and the first device determines that the first neural network and the second neural network need to be updated; or the first device receives second indication information from the second device, where the second indication information is used to indicate the first device to determine whether the first neural network and the second neural network need to be updated, and the first device determines that the first neural network and the second neural network need to be updated; or the first device determines, based on triggering of a preset condition, whether the first neural network and the second neural network need to be updated, and the first device determines that the first neural network and the second neural network need to be updated.

According to the neural network adjustment method provided in this embodiment of this application, there may be a plurality of conditions for triggering the first device to perform update, so that flexibility of the solution is improved.

With reference to the first aspect, in some implementations of the first aspect, that the first device updates the first neural network and the second neural network includes: The first device periodically or aperiodically updates the first neural network and the second neural network.

According to the neural network adjustment method provided in this embodiment of this application, the first device may periodically or aperiodically update the neural networks. This is not limited in this application. In this way, flexibility of the solution is improved.

With reference to the first aspect, in some implementations of the first aspect, that the first device determines whether the first neural network and the second neural network need to be updated includes: The first device determines, depending on whether a degree of difference or a similarity between first information and second information meets a third condition, whether the first neural network and the second neural network need to be updated, where the first information includes a first determining signal related to the first signal, and the second information includes a second determining signal related to the fifth signal.

According to the neural network adjustment method provided in this embodiment of this application, the first device may determine, based on a value relationship between information processed by using the neural network and a preset threshold, whether to update the neural network, so that accuracy of determining whether to perform update can be improved.

With reference to the first aspect, in some implementations of the first aspect, the method further includes: the first device determines the second determining signal based on the first determining signal, the first neural network, and the second neural network; or the first device determines the second determining signal based on the first determining signal, the first neural network, the second neural network, and the first function module and/or the second function module.

According to the neural network adjustment method provided in this embodiment of this application, the first device side may obtain information about a local end and information about a peer end through simulation, so that the first device side can determine, based on information processed by using the neural network, whether to update the neural network.

With reference to the first aspect, in some implementations of the first aspect, the first determining signal includes downlink channel information received by the first device from the second device; or the first determining signal includes channel information obtained through measurement by the first device based on a sounding reference signal SRS received from the second device, where the downlink channel information is carried on a preset resource, or the downlink channel information is indicated to be used to determine the first determining signal.

According to the neural network adjustment method provided in this embodiment of this application, the first device side may determine, by using information sent by the second device side, the first signal used to determine whether to update the neural network, and different information types are provided, so that flexibility of the solution is improved.

With reference to the first aspect, in some implementations of the first aspect, the determining, by a first device, a third neural network and a fourth neural network includes: the first device selects the third neural network and the fourth neural network from a first set based on communication system data, where the first set includes a plurality of neural networks; or the first device adjusts, based on communication system data, network weights corresponding to the first neural network and the second neural network, to obtain the third neural network and the fourth neural network; or the first device selects a fifth neural network and a sixth neural network from a second set based on communication system data, and then adjusts, based on the communication system data, network weights corresponding to the fifth neural network and the sixth neural network, to obtain the third neural network and the fourth neural network.

According to the neural network adjustment method provided in this embodiment of this application, the first device may determine the third neural network and the fourth neural network in different manners, so that flexibility of the solution is improved.

With reference to the first aspect, in some implementations of the first aspect, the communication system data includes at least one of the following: a channel feature, a signal-to-noise ratio, downlink channel information, uplink channel information, and hybrid automatic repeat request HARQ information.

According to the neural network adjustment method provided in this embodiment of this application, there are a plurality of possible forms of communication system data based on which the first device determines the third neural network and the fourth neural network, so that flexibility of the solution can be improved.

With reference to the first aspect, in some implementations of the first aspect, the method further includes: The first device sends information about the third neural network to the second device.

According to the neural network adjustment method provided in this embodiment of this application, in addition to sending, to the second device, the information about the fourth neural network that may be applied to the second device side, the first device may further send, to the second device, the information about the third neural network that may be applied to the first device side, so that the second device can subsequently determine whether to update the third neural network and the fourth neural network.

With reference to the first aspect, in some implementations of the first aspect, the information about the third neural network includes at least one of the following information:

an identifier of the third neural network, information about a network structure corresponding to the third neural network and information about a network weight corresponding to the third neural network, an identifier of a network structure corresponding to the third neural network and information about a network weight corresponding to the third neural network, an identifier of a network structure corresponding to the third neural network and an identifier of a network weight corresponding to the third neural network, information about a network weight corresponding to the third neural network, a variation between a network weight corresponding to the third neural network and a network weight corresponding to the first neural network, an identifier of a network weight corresponding to the third neural network, or third indication information, where the third indication information is used to indicate whether the network structure corresponding to the third neural network is the same as a network structure corresponding to the first neural network.

The information about the fourth neural network includes at least one of the following information:

an identifier of the fourth neural network, information about a network structure corresponding to the fourth neural network and information about a network weight corresponding to the fourth neural network, an identifier of a network structure corresponding to the fourth neural network and information about a network weight corresponding to the fourth neural network, an identifier of a network structure corresponding to the fourth neural network and an identifier of a network weight corresponding to the fourth neural network, information about a network weight corresponding to the fourth neural network, a variation between a network weight corresponding to the fourth neural network and a network weight corresponding to the second neural network, an identifier of a network weight corresponding to the fourth neural network, or fourth indication information, where the fourth indication information is used to indicate whether the network structure corresponding to the fourth neural network is the same as a network structure corresponding to the second neural network.

According to the neural network adjustment method provided in this embodiment of this application, there may be a plurality of specific forms of the information about the neural network, so that flexibility of the solution can be improved.

With reference to the first aspect, in some implementations of the first aspect, the variation between the network weight corresponding to the third neural network and the network weight corresponding to the first neural network and/or the variation between the network weight corresponding to the fourth neural network and the network weight corresponding to the second neural network include/includes one or more of the following information: weight position information, weight interpretation rule indication information, weight value arrangement information, and weight value variation arrangement information; the information about the network structure corresponding to the third neural network and/or the information about the network structure corresponding to the fourth neural network include/includes: neural network type indication information and neural network structure indication information; and the information about the network weight corresponding to the third neural network and/or the information about the network weight corresponding to the fourth neural network include/includes: weight interpretation rule indication information and/or weight value arrangement information.

The variation between the network weights, the information about the network structure corresponding to the neural network, and the information about the network weight corresponding to the neural network may be indicated by using different information.

With reference to the first aspect, in some implementations of the first aspect, before that the first device sends information about the fourth neural network to a second device, or sends information about the fourth neural network and information about the third neural network, the method further includes: the first device sends first information to the second device, where the first information is used to request the second device to receive the information about the fourth neural network, or is used to request the second device to receive the information about the fourth neural network and the information about the third neural network; and the first device receives a first response message from the second device, where the first response message is used to indicate the first device to send the information about the fourth neural network, or is used to indicate the first device to send the information about the fourth neural network and the information about the third neural network;

and/or

the first device receives second information from the second device, where the second information is used to indicate that the second device can receive the information about the fourth neural network, or indicate that the second device can receive the information about the fourth neural network and the information about the third neural network; that the first device sends information about the fourth neural network to a second device, or sends information about the fourth neural network and information about the third neural network includes:

the first device sends the information about the fourth neural network to the second device, or sends the information about the fourth neural network and the information about the third neural network after receiving the second information; and

further, after receiving the second information, the first device starts to send the information about the fourth neural network to the second device, or send the information about the fourth neural network and the information about the third neural network within first preset duration after a first start moment or after the second preset duration;

and/or

the first device sends the information about the fourth neural network to the second device, or sends the information about the fourth neural network and the information about the third neural network after updating the first neural network and the second neural network to respectively obtain the third neural network and the fourth neural network; and

further, after updating the first neural network and the second neural network to respectively obtain the third neural network and the fourth neural network, the first device starts to send the information about the fourth neural network to the second device, or send the information about the fourth neural network and the information about the third neural network within second preset duration after a second start moment or after the second preset duration;

and/or

the first device sends first information to the second device, where the first information is used to request the second device to receive the information about the fourth neural network, or is used to request the second device to receive the information about the fourth neural network and the information about the third neural network; and

the first device receives a first response message from the second device, where the first response message is used to indicate the first device to send the information about the fourth neural network, or is used to indicate the first device to send the information about the fourth neural network and the information about the third neural network.

According to the neural network adjustment method provided in this embodiment of this application, the first device may send the information about the fourth neural network to the second device, or send the information about the fourth neural network and the information about the third neural network after negotiation between the first device and the second device, or the first device may autonomously determine to send the information; or the second device may indicate the first device to send the information; and so on. In this embodiment of this application, a plurality of possible premises under which the first device sends the information about the fourth neural network to the second device, or sends the information about the fourth neural network and the information about the third neural network are provided, so that flexibility of the solution is improved.

With reference to the first aspect, in some implementations of the first aspect, after that the first device sends information about the fourth neural network to a second device, or sends information about the fourth neural network and information about the third neural network, the method further includes: The first device receives a first notification message from the second device, where the first notification message is used to indicate whether the second device performs information transmission by using the fourth neural network or by using the fourth neural network and the third neural network.

According to the neural network adjustment method provided in this embodiment of this application, the second device may determine whether to use the received new neural network, to avoid restricting the new neural network to be definitely used.

With reference to the first aspect, in some implementations of the first aspect, the method further includes: The first device sends a second notification message to the second device; or the first device receives a second notification message from the second device, where the second notification message is used to notify that an information transmission mode is changed from a first mode to a second mode, the first mode includes information transmission based on an AI model, the AI model includes the first neural network and the second neural network, and the second mode includes information transmission based on a non-AI model.

According to the neural network adjustment method provided in this embodiment of this application, different transmission modes may be switched by using the second notification message, to avoid information transmission based on an inappropriate neural network.

With reference to the first aspect, in some implementations of the first aspect, the AI model further includes a seventh neural network and an eighth neural network.

According to the neural network adjustment method provided in this embodiment of this application, when a local device and a peer device in a communication system determine to roll back to a non-AI mode for information transmission, it may be understood that different information processing procedures included in the communication system all roll back to the non-AI mode.

With reference to the first aspect, in some implementations of the first aspect, the method further includes: The first device switches the information transmission mode from the first mode to the second mode.

Further, the first device starts to switch the information transmission mode from the first mode to the second mode within fourth preset duration after a fourth start moment or after the fourth preset duration, where the fourth start moment includes a moment at which the first device sends the second notification message to the second device or a moment at which the first device receives the second notification message from the second device.

According to the neural network adjustment method provided in this embodiment of this application, a moment at which switching is performed may be determined based on the receiving moment and the sending moment of the second notification message.

With reference to the first aspect, in some implementations of the first aspect, the first start moment and the second start moment include: a moment at which the first device receives the first indication information from the second device; or the moment at which the first device sends the second notification message to the second device; or the moment at which the first device receives the second notification message from the second device; or a moment at which the first device sends first signaling to the second device; or a moment at which the first device receives second signaling from the second device, where the first signaling is used to indicate that timing starts, and the second signaling is used to indicate that an update starts, where the second notification message is used to notify that the information transmission mode is changed from the first mode to the second mode.

According to the neural network adjustment method provided in this embodiment of this application, the foregoing defined start moment may be determined based on receiving or sending moments of different messages, so that flexibility of the solution is improved.

With reference to the first aspect, in some implementations of the first aspect, the method further includes: The first device receives a second response message from the second device, where the second response message is used to indicate to reject receiving of the information about the fourth neural network, or is used to indicate to reject receiving of the information about the fourth neural network and the information about the third neural network.

According to the neural network adjustment method provided in this embodiment of this application, the second device may reject receiving of information about a new neural network, to provide an initiative for a receive end device of the neural network.

With reference to the first aspect, in some implementations of the first aspect, the first device includes a terminal device or a network device, and the second device includes the terminal device or the network device; and when the first device is the terminal device, the second device is the network device; or when the first device is the network device, the second device is the terminal device.

The first device or the second device may be the terminal device or the network device.

With reference to the first aspect, in some implementations of the first aspect, the method further includes: the first device receives fifth indication information from the second device, where the fifth indication information is used to indicate the first device to send a capability of the first device; and the first device sends first capability information to the second device, where the first capability information includes at least one of the following information: computing capability information of the first device, storage capability information of the first device, information indicating whether the first device stores a first AI model, a neural network structure supported by the first device, a neural network scale supported by the first device, or an AI communication function supported by the first device, where the first AI model is any AI model. Alternatively, the method further includes: the first device sends sixth indication information to the second device, where the sixth indication information is used to indicate the second device to send a capability of the second device; and the first device receives second capability information from the second device, where the second capability information includes at least one of the following information: computing capability information of the second device, storage capability information of the second device, information indicating whether the second device stores a second AI model, a neural network structure supported by the second device, a neural network scale supported by the second device, or an AI communication function supported by the second device, where the second AI model is any AI model.

According to the neural network adjustment method provided in this embodiment of this application, the first device and the second device may previously learn of capabilities of each other through signaling exchange.

With reference to the first aspect, in some implementations of the first aspect, the first signal includes channel information; and the first neural network includes a first compressor, the second neural network includes a first decompressor, the third neural network includes a second compressor, and the fourth neural network includes a second decompressor; or the first neural network includes a first decompressor, the second neural network includes a first compressor, the third neural network includes a second decompressor, and the fourth neural network includes a second compressor.

According to the neural network adjustment method provided in this embodiment of this application, in a channel information transmission scenario, the foregoing neural network may be a compressor or a decompressor.

With reference to the first aspect, in some implementations of the first aspect, the channel information includes channel information received by a plurality of receive antennas or channel information for a plurality of layers.

According to the neural network adjustment method provided in this embodiment of this application, in a channel information transmission scenario, channel information for a plurality of receive antennas/a plurality of layers (layers) is jointly encoded into one codeword, to implement joint compression on the channel information, improve a compression rate of the channel information, and reduce feedback overheads of the channel information.

With reference to the first aspect, in some implementations of the first aspect, one or more of the first indication information, the second indication information, the first information, the first response message, the second information, the first notification message, the second notification message, or the second response message are carried on a physical uplink control channel PUCCH, a physical downlink control channel PDCCH, a physical uplink shared channel PUSCH, a physical downlink shared channel PDSCH, an uplink grant UL grant, or a random access channel RACH.

The messages in this embodiment of this application may be transmitted in different manners, so that flexibility of the solution is improved.

According to a second aspect, a neural network adjustment method is provided. The neural network adjustment method may be performed by a second device, or may be performed by a chip or a circuit disposed in the second device. This is not limited in this application. For ease of description, an example in which the method is performed by the second device may be used for description.

The neural network adjustment method relates to a first neural network and a second neural network. The first neural network is applied to a first device side, and the second neural network is applied to a second device side. The method includes: the second device receives information about a fourth neural network from a first device, where the fourth neural network is a neural network corresponding to the second neural network; and
the second device determines the fourth neural network based on the information about the fourth neural network.

According to the neural network adjustment method provided in this embodiment of this application, the first device may determine a new neural network, and send information about the new neural network to the second device, so that the first device and the second device can perform information transmission by using the new neural network. In this way, information transmission performance can be improved.

With reference to the second aspect, in some implementations of the second aspect, the method further includes:

The second device receives information about a third neural network from the first device, where the third neural network is a neural network corresponding to the first neural network, where the first neural network or the third neural network is used by the first device to perform first signal processing, the second neural network or the fourth neural network is used by the second device to perform second signal processing, and the second signal processing corresponds to the first signal processing.

According to the neural network adjustment method provided in this embodiment of this application, in addition to sending, to the second device, the information about the fourth neural network that may be applied to the second device side, the first device may further send, to the second device, the information about the third neural network that may be applied to the first device side, so that the second device can subsequently determine whether to update the third neural network and the fourth neural network.

With reference to the second aspect, in some implementations of the second aspect, that the first neural network or the third neural network is used by the first device to perform first signal processing includes: the first neural network is used by the first device to process a first signal to obtain a second signal; and the third neural network is used by the first device to process a third signal to obtain a fourth signal; and that the second neural network or the fourth neural network is used by the second device to perform second signal processing includes: the second neural network is used by the second device to process the second signal to obtain a fifth signal; and the fourth neural network is used by the second device to process the fourth signal to obtain a sixth signal; or that the second neural network or the fourth neural network is used by the second device to perform second signal processing includes: the second neural network is used by the second device to process a first signal to obtain a second signal; and the fourth neural network is used by the second device to process a third signal to obtain a fourth signal; and that the first neural network or the third neural network is used by the first device to perform first signal processing includes: the first neural network is used by the first device to process the second signal to obtain a fifth signal; and the third neural network is used by the first device to process the fourth signal to obtain a sixth signal.

According to the neural network adjustment method provided in this embodiment of this application, the first neural network and the second neural network may be considered as a pair of neural networks, the third neural network and the fourth neural network may be considered as a pair of neural networks, and corresponding signal processing may be performed by using the paired neural networks.

With reference to the second aspect, in some implementations of the second aspect, a degree of difference between a first training signal related to the third signal and a second training signal related to the sixth signal meets a first condition; or a similarity between a first training signal related to the third signal and a second training signal related to the sixth signal meets a second condition.

When the third neural network and the fourth neural network that are obtained through update are used for signal processing, the first training signal related to the third signal and the second training signal related to the sixth signal meet a preset condition.

With reference to the second aspect, in some implementations of the second aspect, the degree of difference includes any one of the following: a difference, a mean squared error, a normalized mean squared error, or an average absolute error; and the similarity includes a correlation coefficient.

According to the neural network adjustment method provided in this embodiment of this application, the foregoing degree of difference or similarity may be specifically reflected in a plurality of forms, so that flexibility of the solution is improved.

With reference to the second aspect, in some implementations of the second aspect, that the first neural network or the second neural network is used to process a first signal to obtain a second signal includes: the first neural network or the second neural network and a first function module are used to process the first signal to obtain the second signal; and/or that the first neural network or the second neural network is used to process the second signal to obtain a fifth signal includes: the first neural network or the second neural network and a second function module are used to process the second signal to obtain the fifth signal.

That the third neural network or the fourth neural network is used to process a third signal to obtain a fourth signal includes: the third neural network or the fourth neural network and a third function module are used to process the third signal to obtain the fourth signal; and/or that the third neural network or the fourth neural network is used to process the fourth signal to obtain a sixth signal includes: the third neural network or the fourth neural network and a fourth function module are used to process the fourth signal to obtain the sixth signal.

According to the neural network adjustment method provided in this embodiment of this application, another signal processing function module may be further included in a process in which the foregoing paired neural networks are used to perform signal processing. Specific composition of a communication system is not limited. In this way, flexibility of the solution is improved.

With reference to the second aspect, in some implementations of the second aspect, before that the second device receives information about a fourth neural network from a first device, or receives information about a fourth neural network and information about a third neural network from the first device, the method further includes: the second device determines that the first neural network and the second neural network need to be updated; and the second device sends first indication information to the first device, where the first indication information is used to indicate the first device to update the first neural network and the second neural network; or the method further includes: the second device sends second indication information to the first device, where the second indication information is used to indicate the first device to determine whether the first neural network and the second neural network need to be updated.

According to the neural network adjustment method provided in this embodiment of this application, the second device may indicate the first device to update the neural network or determine whether to update the neural network.

With reference to the second aspect, in some implementations of the second aspect, that the second device determines that the first neural network and the second neural network need to be updated includes: the second device periodically or aperiodically determines whether the first neural network and the second neural network need to be updated; or the second device receives seventh indication information from the first device, where the seventh indication information is used to indicate the second device to determine whether the first neural network and the second neural network need to be updated; or the second device determines, based on triggering of a preset condition, whether the first neural network and the second neural network need to be updated.

According to the neural network adjustment method provided in this embodiment of this application, the second device may determine to update the neural networks in a plurality of manners. This is not limited in this application. In this way, flexibility of the solution is improved.

With reference to the second aspect, in some implementations of the second aspect, that the second device determines whether the first neural network and the second neural network need to be updated includes:

The second device determines, depending on whether a degree of difference or a similarity between first information and second information meets a third condition, whether the first neural network and the second neural network need to be updated, where the first information includes a first determining signal related to the first signal, and the second information includes a second determining signal related to the fifth signal.

According to the neural network adjustment method provided in this embodiment of this application, the second device may determine, based on a value relationship between information processed by using the neural network and a preset threshold, whether to update the neural network, so that accuracy of determining whether to perform update can be improved.

With reference to the second aspect, in some implementations of the second aspect, the method further includes: the second device determines the second determining signal based on the first determining signal, the first neural network, and the second neural network; or the second device determines the second determining signal based on the first determining signal, the first neural network, the second neural network, and the first function module and/or the second function module.

According to the neural network adjustment method provided in this embodiment of this application, the second device side may obtain information about a local end and information about a peer end through simulation, so that the second device side can determine, based on information processed by using the neural network, whether to update the neural network.

With reference to the second aspect, in some implementations of the second aspect, the first determining signal includes downlink channel information sent by the first device to the second device; or the first determining signal includes channel information obtained through measurement based on a sounding reference signal SRS sent by the first device, where the downlink channel information is carried on a preset resource, or the downlink channel information is indicated to be used to determine the first determining signal.

According to the neural network adjustment method provided in this embodiment of this application, the second device side may determine, by using information sent by the first device side, the first signal used to determine whether to update the neural network, and different information types are provided, so that flexibility of the solution is improved.

With reference to the second aspect, in some implementations of the second aspect, the information about the third neural network includes at least one of the following information:

an identifier of the third neural network, information about a network structure corresponding to the third neural network and information about a network weight corresponding to the third neural network, an identifier of a network structure corresponding to the third neural network and information about a network weight corresponding to the third neural network, an identifier of a network structure corresponding to the third neural network and an identifier of a network weight corresponding to the third neural network, information about a network weight corresponding to the third neural network, a variation between a network weight corresponding to the third neural network and a network weight corresponding to the first neural network, an identifier of a network weight corresponding to the third neural network, or third indication information, where the third indication information is used to indicate whether the network structure corresponding to the third neural network is the same as a network structure corresponding to the first neural network.

The information about the fourth neural network includes at least one of the following information:

an identifier of the fourth neural network, information about a network structure corresponding to the fourth neural network and information about a network weight corresponding to the fourth neural network, an identifier of a network structure corresponding to the fourth neural network and information about a network weight corresponding to the fourth neural network, an identifier of a network structure corresponding to the fourth neural network and an identifier of a network weight corresponding to the fourth neural network, information about a network weight corresponding to the fourth neural network, a variation between a network weight corresponding to the fourth neural network and a network weight corresponding to the second neural network, an identifier of a network weight corresponding to the fourth neural network, or fourth indication information, where the fourth indication information is used to indicate whether the network structure corresponding to the fourth neural network is the same as a network structure corresponding to the second neural network.

According to the neural network adjustment method provided in this embodiment of this application, there may be a plurality of specific forms of the information about the neural network, so that flexibility of the solution can be improved.

With reference to the second aspect, in some implementations of the second aspect, the variation between the network weight corresponding to the third neural network and the network weight corresponding to the first neural network and/or the variation between the network weight corresponding to the fourth neural network and the network weight corresponding to the second neural network include/includes one or more of the following information: weight position information, weight interpretation rule indication information, weight value arrangement information, and weight value variation arrangement information; the information about the network structure corresponding to the third neural network and/or the information about the network structure corresponding to the fourth neural network include/includes: neural network type indication information and neural network structure indication information; and the information about the network weight corresponding to the third neural network and/or the information about the network weight corresponding to the fourth neural network include/includes: weight interpretation rule indication information and/or weight value arrangement information.

The variation between the network weights, the information about the network structure corresponding to the neural network, and the information about the network weight corresponding to the neural network may be indicated by using different information.

With reference to the second aspect, in some implementations of the second aspect, before that the second device receives information about a fourth neural network from a first device, or information about a fourth neural network and information about a third neural network, the method further includes:

the second device receives first information from the first device, where the first information is used to notify the second device to receive the information about the fourth neural network, or is used to notify the second device to receive the information about the fourth neural network and the information about the third neural network; and the second device sends a first response message to the first device, where the first response message is used to indicate the first device to send the information about the fourth neural network, or is used to indicate the first device to send the information about the fourth neural network and the information about the third neural network; and/or

the second device sends second information to the first device, where the second information is used to indicate that the second device can receive the information about the fourth neural network, or the information about the fourth neural network and the information about the third neural network;

that the second device receives information about a fourth neural network from a first device, or information about a fourth neural network and information about a third neural network includes:

the second device starts to receive the information about the fourth neural network from the first device, or receive the information about the fourth neural network and the information about the third neural network from the first device after sending the second information; and

further, after sending the second information, the second device starts to receive the information about the fourth neural network from the first device, or receive the information about the fourth neural network and the information about the third neural network from the first device within first preset duration after a first start moment or after the first preset duration;

and/or

the second device receives the information about the fourth neural network from the first device, or receives the information about the fourth neural network and the information about the third neural network from the first device; and

further, the second device starts to receive the information about the fourth neural network from the first device, or receive the information about the fourth neural network and the information about the third neural network from the first device within second preset duration after a second start moment or after the second preset duration;

and/or

the second device receives first information from the first device, where the first information is used to notify the second device to receive the information about the fourth neural network, or the information about the fourth neural network and the information about the third neural network; and

that the second device receives information about a fourth neural network from a first device, or information about a fourth neural network and information about a third neural network includes:

the second device starts to receive the information about the fourth neural network from the first device, or receive the information about the fourth neural network and the information about the third neural network from the first device within third preset duration after a time point at which the second device receives the first information from the first device or after the third preset duration.

According to the neural network adjustment method provided in this embodiment of this application, the first device may send the information about the fourth neural network to the second device, or send the information about the fourth neural network and the information about the third neural network after negotiation between the first device and the second device, or the first device may autonomously determine to send the information; or the second device may indicate the first device to send the information; and so on. In this embodiment of this application, a plurality of possible premises under which the first device sends the information about the fourth neural network to the second device, or sends the information about the fourth neural network and the information about the third neural network are provided, so that flexibility of the solution is improved.

With reference to the second aspect, in some implementations of the second aspect, after that the second device receives information about a fourth neural network from a first device, or receives information about a fourth neural network and information about a third neural network, the method further includes: The second device sends a first notification message to the first device, where the first notification message is used to indicate whether the second device performs information transmission by using the fourth neural network or by using the fourth neural network and the third neural network.

According to the neural network adjustment method provided in this embodiment of this application, the second device may determine whether to use the received new neural network, to avoid restricting the new neural network to be definitely used.

With reference to the second aspect, in some implementations of the second aspect, the method further includes: the second device sends a second notification message to the first device, or the second device receives a second notification message from the first device, where the second notification message is used to notify that an information transmission mode is changed from a first mode to a second mode, the first mode includes information transmission based on an AI model, the AI model includes the first neural network and the second neural network, and the second mode includes information transmission based on a non-AI model.

According to the neural network adjustment method provided in this embodiment of this application, different transmission modes may be switched by using the second notification message, to avoid information transmission based on an inappropriate neural network.

With reference to the second aspect, in some implementations of the second aspect, the AI model further includes a seventh neural network and an eighth neural network.

According to the neural network adjustment method provided in this embodiment of this application, when a local device and a peer device in a communication system determine to roll back to a non-AI mode for information transmission, it may be understood that different information processing procedures included in the communication system all roll back to the non-AI mode.

With reference to the second aspect, in some implementations of the second aspect, the method further includes:

The second device switches the information transmission mode from the first mode to the second mode.

Further, the second device starts to switch the information transmission mode from the first mode to the second mode within fourth preset duration after a fourth start moment or after the fourth preset duration, where

the fourth start moment includes a moment at which the second device sends the second notification message to the first device or a moment at which the second device receives the second notification message from the first device.

According to the neural network adjustment method provided in this embodiment of this application, a moment at which switching is performed may be determined based on the receiving moment and the sending moment of the second notification message.

With reference to the second aspect, in some implementations of the second aspect, the first start moment and the second start moment include: a moment at which the second device sends the first indication information to the first device; or the moment at which the second device receives the second notification message from the first device; or the moment at which the second device sends the second notification message to the first device; or a moment at which the second device receives first signaling from the first device; or a moment at which the second device sends second signaling to the first device, where the first signaling is used to indicate that timing starts, and the second signaling is used to indicate that an update starts, where the second notification message is used to notify that the information transmission mode is changed from the first mode to the second mode.

According to the neural network adjustment method provided in this embodiment of this application, the foregoing defined start moment may be determined based on receiving or sending moments of different messages, so that flexibility of the solution is improved.

With reference to the second aspect, in some implementations of the second aspect, the method further includes:

The second device sends a second response message to the first device, where the second response message is used to indicate to reject receiving of the information about the fourth neural network, or is used to indicate to reject receiving of the information about the fourth neural network and the information about the third neural network.

According to the neural network adjustment method provided in this embodiment of this application, the second device may reject receiving of information about a new neural network, to provide an initiative for a receive end device of the neural network.

With reference to the second aspect, in some implementations of the second aspect, the first device includes a terminal device or a network device, and the second device includes the terminal device or the network device; and when the first device is the terminal device, the second device is the network device; or when the first device is the network device, the second device is the terminal device.

The first device or the second device may be the terminal device or the network device.

With reference to the second aspect, in some implementations of the second aspect, the method further includes: the second device sends fifth indication information to the first device, where the fifth indication information is used to indicate the first device to send a capability of the first device; and the second device receives first capability information from the first device, where the first capability information includes at least one of the following information: computing capability information of the first device, storage capability information of the first device, information indicating whether the first device stores a first AI model, a neural network structure supported by the first device, a neural network scale supported by the first device, or an AI communication function supported by the first device, where the first AI model is any AI model; or

the method further includes:

the second device receives sixth indication information from the first device, where the sixth indication information is used to indicate the second device to send a capability of the second device; and the second device sends second capability information to the first device, where the second capability information includes at least one of the following information: computing capability information of the second device, storage capability information of the second device, information indicating whether the second device stores a second AI model, a neural network structure supported by the second device, a neural network scale supported by the second device, or an AI communication function supported by the second device, where the second AI model is any AI model.

According to the neural network adjustment method provided in this embodiment of this application, the first device and the second device may previously learn of capabilities of each other through signaling exchange.

With reference to the second aspect, in some implementations of the second aspect, the first signal includes channel information; and the first neural network includes a first compressor, the second neural network includes a first decompressor, the third neural network includes a second compressor, and the fourth neural network includes a second decompressor; or the first neural network includes a first decompressor, the second neural network includes a first compressor, the third neural network includes a second decompressor, and the fourth neural network includes a second compressor.

According to the neural network adjustment method provided in this embodiment of this application, in a channel information transmission scenario, the foregoing neural network may be a compressor or a decompressor.

With reference to the second aspect, in some implementations of the second aspect, the channel information includes channel information received by a plurality of receive antennas or channel information for a plurality of layers.

According to the neural network adjustment method provided in this embodiment of this application, in a channel information transmission scenario, channel information for a plurality of receive antennas/a plurality of layers (layers) is jointly encoded into one codeword, to implement joint compression on the channel information, improve a compression rate of the channel information, and reduce feedback overheads of the channel information.

With reference to the second aspect, in some implementations of the second aspect, one or more of the first indication information, the second indication information, the first information, the first response message, the second information, the first notification message, the second notification message, or the second response message are carried on a physical uplink control channel PUCCH, a physical downlink control channel PDCCH, a physical uplink shared channel PUSCH, a physical downlink shared channel PDSCH, an uplink grant UL grant, or a random access channel RACH.

The messages in this embodiment of this application may be transmitted in different manners, so that flexibility of the solution is improved.

According to a third aspect, a communication method is provided. The communication method may be performed by a first device, or may be performed by a chip or a circuit disposed in the first device. This is not limited in this application. For ease of description, an example in which the method is performed by the first device is used for description below.

The communication method includes:

The first device receives tenth indication information from a second device, where the tenth indication information is used to indicate an AI capability of the second device.

Optionally, the first device sends information about an AI model to the second device based on the AI capability of the second device.

Optionally, the first device sends information about an AI model to the second device based on the tenth indication information.

According to the communication method provided in this embodiment of this application, the first device may determine, based on the capability or the indication information reported by the second device, the information about the AI model that is to be delivered, so that an AI function can be enabled.

With reference to the third aspect, in some implementations of the third aspect, the tenth indication information includes at least one of the following information: computing capability information of the second device, storage capability information of the second device, information indicating whether the second device stores a first AI model, a neural network structure supported by the second device, a neural network scale supported by the second device, or an AI communication function supported by the second device, where the first AI model is any AI model.

The capability information may be specifically reflected in a plurality of forms, so that flexibility of the solution is improved.

With reference to the third aspect, in some implementations of the third aspect, before that the first device receives tenth indication information from a second device, the method further includes: The first device sends a first message to the second device, where the first message is used to indicate the second device to report the AI capability of the second device.

According to the communication method provided in this embodiment of this application, the first device learns of the AI capability of the second device by delivering the first message.

With reference to the third aspect, in some implementations of the third aspect, the first message is included in an eighth response message.

The eighth response message is used to confirm conflict resolution in a random access process, and may be an MSG 4 in the random access process or a message similar to the MSG 4.

With reference to the third aspect, in some implementations of the third aspect, the first message is included in a seventh response message.

The seventh response message is used to respond to random access of a terminal device, and may be an MSG 2 in a random access process or a message similar to the MSG 2. The seventh response message includes an index number of a random preamble sequence that corresponds to the terminal device and that is determined by a base station.

With reference to the third aspect, in some implementations of the third aspect, the method further includes:

The first device sends first resource indication information to the second device, where the first resource indication information indicates a resource for receiving the first message by the second device.

Optionally, the first resource indication information is included in the seventh response message.

Optionally, the first resource indication information is included in the eighth response message.

According to the communication method provided in this embodiment of this application, the first device sends the first message in a plurality of manners, so that flexibility of the solution is improved.

With reference to the third aspect, in some implementations of the third aspect, before the sending a seventh response message, the method further includes:
receiving an initial access request from the second device, where the seventh response message is in response to the initial access request.

With reference to the third aspect, in some implementations of the third aspect, before that the first device receives tenth indication information from a second device, the method further includes: The first device sends the eighth response message to the second device.

With reference to the third aspect, in some implementations of the third aspect, before that the first device receives tenth indication information from a second device, the method further includes: The first device sends the seventh response message to the second device.

With reference to the third aspect, in some implementations of the third aspect, the tenth indication information is included in an eighth message.

The eighth message is used to request to establish a connection in a random access process, and may be an MSG 3 in the random access process or a message similar to the MSG 3. The eighth message includes an identifier of a terminal device.

With reference to the third aspect, in some implementations of the third aspect, the tenth indication information is included in a seventh message.

The seventh message is used for random access process initiation in a random access procedure, and may be an MSG 1 in the random access process or a message similar to the MSG 1.

With reference to the third aspect, in some implementations of the third aspect, the method further includes:

The first device receives second resource indication information from the second device, where the second resource indication information indicates a resource for receiving the tenth indication information by the first device.

Optionally, the second resource indication information is included in the seventh message.

Optionally, the second resource indication information is included in the eighth message.

With reference to the third aspect, in some implementations of the third aspect, the information about the AI model is included in the eighth response message.

With reference to the third aspect, in some implementations of the third aspect, the method further includes:

The first device sends third resource indication information to the second device, where the third resource indication information indicates a resource for receiving the information about the AI model by the second device.

Optionally, the third resource indication information is included in the eighth response message.

According to the communication method provided in this embodiment of this application, the foregoing signaling exchange between the first device and the second device may be completed in different phases of an initial access process, to implement combination with a current initial access process. In this way, convergence between the solution and a current technology is improved.

With reference to the third aspect, in some implementations of the third aspect, the first device locally stores N neural networks. The method further includes: The first device sends at least one neural network to the second device, where N is a positive integer, and the at least one neural network is some or all of the N neural networks.

With reference to the third aspect, in some implementations of the third aspect, the N neural networks are applied to the second device or the first device. That the first device sends at least one neural network to the second device includes at least one of the following: The first device sends, to the second device, M neural networks, network weights corresponding to M neural networks, network structures corresponding to M neural networks, or a network structure of one neural network, where M is a positive integer less than or equal to N.

According to the communication method provided in this embodiment of this application, the first device may send a candidate neural network to the second device.

With reference to the third aspect, in some implementations of the third aspect, the method further includes:

The first device sends eighth indication information to the second device, where the eighth indication information is used to indicate a currently applicable neural network.

According to the communication method provided in this embodiment of this application, the first device may specify a currently applicable neural network from candidate neural networks by using indication information.

With reference to the third aspect, in some implementations of the third aspect, the N neural networks include N/2 neural network pairs, each pair of neural networks includes a first neural network and a second neural network, and N is a non-zero even number. That the first device sends at least one neural network to the second device includes at least one of the following: The first device sends, to the second device, Q second neural networks, Q first neural networks, network weights corresponding to Q first neural networks, network weights corresponding to Q second neural networks, network structures corresponding to Q first neural networks, network structures corresponding to Q second neural networks, a network structure of one first neural network, or a network structure of one second neural network, where Q is a positive integer less than or equal to N/2.

According to the communication method provided in this embodiment of this application, the first device may send, to the second device, a candidate neural network pair used by the first device and the second device.

For example, identifiers (indexes) of neural networks in a neural network pair may be defined to be the same.

With reference to the third aspect, in some implementations of the third aspect, the first device sends ninth indication information to the second device, where the ninth indication information is used to indicate a currently applicable neural network pair.

According to the communication method provided in this embodiment of this application, the first device may specify a currently applicable neural network pair from candidate neural network pairs by using indication information.

With reference to the third aspect, in some implementations of the third aspect, that the first device sends at least one neural network to the second device includes: The first device sends a preset first neural network and/or a preset second neural network to the second device.

According to the communication method provided in this embodiment of this application, the first device may send only a currently applicable neural network to the second device.

With reference to the third aspect, in some implementations of the third aspect, the first device includes a terminal device or a network device, and the second device includes the terminal device or the network device; and when the first device is the terminal device, the second device is the network device; or when the first device is the network device, the second device is the terminal device.

According to a fourth aspect, a communication method is provided. The communication method may be performed by a second device, or may be performed by a chip or a circuit disposed in the second device. This is not limited in this application. For ease of description, an example in which the method is performed by the second device may be used for description.

The communication method includes: the second device sends tenth indication information to a first device, where the tenth indication information is used to indicate an AI capability of the second device; and the second device receives information about an AI model from the first device.

According to the communication method provided in this embodiment of this application, the first device may determine, based on the tenth indication information and/or the AI capability of the second device that are/is reported by the second device, the information about the AI model that is to be delivered, so that an AI function can be enabled.

With reference to the fourth aspect, in some implementations of the fourth aspect, the tenth indication information includes at least one of the following information: computing capability information of the second device, storage capability information of the second device, information indicating whether the second device stores a first AI model, a neural network structure supported by the second device, a neural network scale supported by the second device, or an AI communication function supported by the second device, where the first AI model is any AI model.

The capability information may be specifically reflected in a plurality of forms, so that flexibility of the solution is improved.

With reference to the fourth aspect, in some implementations of the fourth aspect, before that the second device sends tenth indication information to a first device, the method further includes: The second device receives a first message from the first device, where the first message is used to indicate the second device to report the AI capability of the second device.

According to the communication method provided in this embodiment of this application, the first device learns of the capability of the second device by delivering the first message.

With reference to the fourth aspect, in some implementations of the fourth aspect, the first message is included in an eighth response message.

The eighth response message is used to confirm conflict resolution in a random access process, and may be an MSG 4 in the random access process or a message similar to the MSG 4.

With reference to the fourth aspect, in some implementations of the fourth aspect, the first message is included in a seventh response message.

The seventh response message is used to respond to random access of a terminal device, and may be an MSG 2 in a random access process or a message similar to the MSG 2. The seventh response message includes an index number of a random preamble sequence that corresponds to the terminal device and that is determined by a base station.

With reference to the fourth aspect, in some implementations of the fourth aspect, the second device receives first resource indication information from the first device, where the first resource indication information indicates a resource for receiving the first message by the second device.

Optionally, the first resource indication information is included in the seventh response message.

Optionally, the first resource indication information is included in the eighth response message.

According to the communication method provided in this embodiment of this application, the first device sends the first message in a plurality of manners, so that flexibility of the solution is improved.

With reference to the fourth aspect, in some implementations of the fourth aspect, before that the second device sends tenth indication information to a first device, the method further includes: The second device receives the eighth response message from the first device.

With reference to the fourth aspect, in some implementations of the fourth aspect, before that the second device sends tenth indication information to a first device, the method further includes: The second device receives the seventh response message from the first device.

With reference to the fourth aspect, in some implementations of the fourth aspect, the tenth indication information is included in an eighth message.

The eighth message is used to request to establish a connection in a random access process, and may be an MSG 3 in the random access process or a message similar to the MSG 3. The eighth message includes an identifier of a terminal device.

With reference to the fourth aspect, in some implementations of the fourth aspect, the tenth indication information is included in a seventh message.

The seventh message is used for random access process initiation in a random access procedure, and may be an MSG 1 in the random access process or a message similar to the MSG 1.

With reference to the fourth aspect, in some implementations of the fourth aspect, the method further includes:

The second device sends second resource indication information to the first device, where the second resource indication information indicates a resource for receiving the tenth indication information by the first device.

Optionally, the second resource indication information is included in the seventh message.

Optionally, the second resource indication information is included in the eighth message.

With reference to the fourth aspect, in some implementations of the fourth aspect, the information about the AI model is included in the eighth response message.

With reference to the fourth aspect, in some implementations of the fourth aspect, the second device receives third resource indication information from the first device, where the third resource indication information indicates a resource for receiving the information about the AI model by the second device.

Optionally, the third resource indication information is included in the eighth response message.

According to the communication method provided in this embodiment of this application, the foregoing signaling exchange between the first device and the second device may be completed in different phases of an initial access process, to implement combination with a current initial access process. In this way, convergence between the solution and a current technology is improved.

With reference to the fourth aspect, in some implementations of the fourth aspect, the first device locally stores N neural networks. The method further includes: The second device receives at least one neural network from the first device, where N is a positive integer, and the at least one neural network is some or all of the N neural networks.

With reference to the fourth aspect, in some implementations of the fourth aspect, the N neural networks are applied to the second device or the first device. That the second device receives at least one neural network from the first device includes at least one of the following: The second device receives, from the first device, M neural networks, network weights corresponding to M neural networks, network structures corresponding to M neural networks, or a network structure of one neural network, where M is a positive integer less than or equal to N.

With reference to the fourth aspect, in some implementations of the fourth aspect, the N neural networks include N/2 neural network pairs, each pair of neural networks includes a first neural network and a second neural network, and N is a non-zero even number. That the second device receives at least one neural network from the first device includes at least one of the following: The second device receives, from the first device, Q second neural networks, Q first neural networks, network weights corresponding to Q first neural networks, network weights corresponding to Q second neural networks, network structures corresponding to Q first neural networks, network structures corresponding to Q second neural networks, a network structure of one first neural network, or a network structure of one second neural network, where Q is a positive integer less than or equal to N/2.

According to the communication method provided in this embodiment of this application, the first device may send a candidate neural network to the second device.

With reference to the fourth aspect, in some implementations of the fourth aspect, the method further includes: The second device receives eighth indication information from the first device, where the eighth indication information is used to indicate a currently applicable neural network.

According to the communication method provided in this embodiment of this application, the first device may specify a currently applicable neural network from candidate neural networks by using indication information.

With reference to the fourth aspect, in some implementations of the fourth aspect, the method further includes: The second device receives ninth indication information from the first device, where the ninth indication information is used to indicate a currently applicable neural network pair.

According to the communication method provided in this embodiment of this application, the first device may specify a currently applicable neural network pair from candidate neural network pairs by using indication information.

With reference to the fourth aspect, in some implementations of the fourth aspect, the first device includes a terminal device or a network device, and the second device includes the terminal device or the network device; and when the first device is the terminal device, the second device is the network device; or when the first device is the network device, the second device is the terminal device.

According to a fifth aspect, a neural network adjustment apparatus is provided. The neural network adjustment apparatus includes a processor, configured to implement a function of the first device in the method described in the first aspect.

Optionally, the neural network adjustment apparatus may further include a memory. The memory is coupled to the processor. The processor is configured to implement the function of the first device in the method described in the first aspect.

In a possible implementation, the memory is configured to store program instructions and data. The memory is coupled to the processor. The processor may invoke and execute the program instructions stored in the memory, to implement the function of the first device in the method described in the first aspect.

Optionally, the neural network adjustment apparatus may further include a communication interface. The communication interface is used by the neural network adjustment apparatus to communicate with another device. When the neural network adjustment apparatus is a network device, the communication interface is a transceiver, an input/output interface, a circuit, or the like.

In a possible design, the neural network adjustment apparatus includes the processor and the communication interface, configured to implement the function of the first device in the method described in the first aspect. Specifically, details are as follows.

The processor communicates with the outside through the communication interface.

The processor is configured to run a computer program, to enable the apparatus to implement any method described in the first aspect.

It may be understood that the external device may be an object other than the processor, or an object other than the apparatus.

In another possible design, the neural network adjustment apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a sixth aspect, a neural network adjustment apparatus is provided. The neural network adjustment apparatus includes a processor, configured to implement a function of the second device in the method described in the second aspect.

Optionally, the neural network adjustment apparatus may further include a memory. The memory is coupled to the processor. The processor is configured to implement the function of the second device in the method described in the second aspect.

In a possible implementation, the memory is configured to store program instructions and data. The memory is coupled to the processor. The processor may invoke and execute the program instructions stored in the memory, to implement the function of the second device in the method described in the second aspect.

Optionally, the neural network adjustment apparatus may further include a communication interface. The communication interface is used by the neural network adjustment apparatus to communicate with another device. When the neural network adjustment apparatus is a terminal device, the transceiver may be a communication interface or an input/output interface.

In a possible design, the neural network adjustment apparatus includes the processor and the communication interface, configured to implement the function of the second device in the method described in the second aspect. Specifically, details are as follows.

The processor communicates with the outside through the communication interface.

The processor is configured to run a computer program, to enable the apparatus to implement any method described in the second aspect.

It may be understood that the external device may be an object other than the processor, or an object other than the apparatus.

In another implementation, when the neural network adjustment apparatus is a chip or a chip system, the communication interface may be an input/output interface, an interface circuit, an output circuit, an input circuit, a pin, a related circuit, or the like in the chip or the chip system. The processor may alternatively be embodied as a processing circuit or a logic circuit.

According to a seventh aspect, a neural network adjustment apparatus is provided. The neural network adjustment apparatus includes a processor, configured to implement a function of the first device in the method described in the third aspect.

Optionally, the neural network adjustment apparatus may further include a memory. The memory is coupled to the processor. The processor is configured to implement the function of the first device in the method described in the third aspect.

In a possible implementation, the memory is configured to store program instructions and data. The memory is coupled to the processor. The processor may invoke and execute the program instructions stored in the memory, to implement the function of the first device in the method described in the third aspect.

Optionally, the neural network adjustment apparatus may further include a communication interface. The communication interface is used by the neural network adjustment apparatus to communicate with another device. When the neural network adjustment apparatus is a network device, the communication interface is a transceiver, an input/output interface, a circuit, or the like.

In a possible design, the neural network adjustment apparatus includes the processor and the communication interface, configured to implement the function of the first device in the method described in the third aspect. Specifically, details are as follows.

The processor communicates with the outside through the communication interface.

The processor is configured to run a computer program, to enable the apparatus to implement any method described in the third aspect.

It may be understood that the external device may be an object other than the processor, or an object other than the apparatus.

In another possible design, the neural network adjustment apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to an eighth aspect, a neural network adjustment apparatus is provided. The neural network adjustment apparatus includes a processor, configured to implement a function of the second device in the method described in the fourth aspect.

Optionally, the neural network adjustment apparatus may further include a memory. The memory is coupled to the processor. The processor is configured to implement the function of the second device in the method described in the fourth aspect.

In a possible implementation, the memory is configured to store program instructions and data. The memory is coupled to the processor. The processor may invoke and execute the program instructions stored in the memory, to implement the function of the second device in the method described in the fourth aspect.

Optionally, the neural network adjustment apparatus may further include a communication interface. The communication interface is used by the neural network adjustment apparatus to communicate with another device. When the neural network adjustment apparatus is a terminal device, the transceiver may be a communication interface or an input/output interface.

In a possible design, the neural network adjustment apparatus includes the processor and the communication interface, configured to implement the function of the second device in the method described in the fourth aspect. Specifically, details are as follows.

The processor communicates with the outside through the communication interface.

The processor is configured to run a computer program, to enable the apparatus to implement any method described in the fourth aspect.

It may be understood that the external device may be an object other than the processor, or an object other than the apparatus.

In another implementation, when the neural network adjustment apparatus is a chip or a chip system, the communication interface may be an input/output interface, an interface circuit, an output circuit, an input circuit, a pin, a related circuit, or the like in the chip or the chip system. The processor may alternatively be embodied as a processing circuit or a logic circuit.

According to a ninth aspect, a computer-readable storage medium is provided. The computer-readable storage medium stores a computer program. When the computer program is executed by a communication apparatus, the communication apparatus is enabled to implement the method according to any one of the first aspect and the possible implementations of the first aspect.

According to a tenth aspect, a computer-readable storage medium is provided. The computer-readable storage medium stores a computer program. When the computer program is executed by a communication apparatus, the communication apparatus is enabled to implement the method according to any one of the second aspect and the possible implementations of the second aspect.

According to an eleventh aspect, a computer-readable storage medium is provided. The computer-readable storage medium stores a computer program. When the computer program is executed by a communication apparatus, the communication apparatus is enabled to implement the method according to any one of the third aspect and the possible implementations of the third aspect.

According to a twelfth aspect, a computer-readable storage medium is provided. The computer-readable storage medium stores a computer program. When the computer program is executed by a communication apparatus, the communication apparatus is enabled to implement the method according to any one of the fourth aspect and the possible implementations of the fourth aspect.

According to a thirteenth aspect, a computer program product including instructions is provided. When the instructions are executed by a computer, a communication apparatus is enabled to implement the method according to any one of the first aspect and the possible implementations of the first aspect.

According to a fourteenth aspect, a computer program product including instructions is provided. When the instructions are executed by a computer, a communication apparatus is enabled to implement the method according to any one of the second aspect and the possible implementations of the second aspect.

According to a fifteenth aspect, a computer program product including instructions is provided. When the instructions are executed by a computer, a communication apparatus is enabled to implement the method according to any one of the third aspect and the possible implementations of the third aspect.

According to a sixteenth aspect, a computer program product including instructions is provided. When the instructions are executed by a computer, a communication apparatus is enabled to implement the method according to any one of the fourth aspect and the possible implementations of the fourth aspect.

According to a seventeenth aspect, a communication system is provided. The communication system includes the neural network adjustment apparatus described in the fifth aspect and the neural network adjustment apparatus described in the sixth aspect.

According to an eighteenth aspect, a communication system is provided. The communication system includes the communication apparatus described in the seventh aspect and the communication apparatus described in the eighth aspect.

According to a nineteenth aspect, a chip apparatus is provided. The chip apparatus includes a processing circuit. The processing circuit is configured to invoke a program from a memory and run the program, to enable a communication device in which the chip apparatus is installed to perform the method according to any one of the possible implementations of the first aspect to the fourth aspect.

## BRIEF DESCRIPTION OF DRAWINGS

FIG. 1 is a schematic diagram of a system 100 to which a neural network adjustment method according to an embodiment of this application can be applied;

FIG. 2 is a schematic flowchart of CSI feedback based on an existing CSI feedback procedure;

FIG. 3 is a schematic diagram of an AI based CSI feedback procedure according to an embodiment of this application;

FIG. 4 is a phase diagram of AI based CSI compression and feedback according to this application;

FIG. 5(a)-1 and FIG. 5(a)-2 to FIG. 5(e) are schematic diagrams of a neural network adjustment method according to an embodiment of this application;

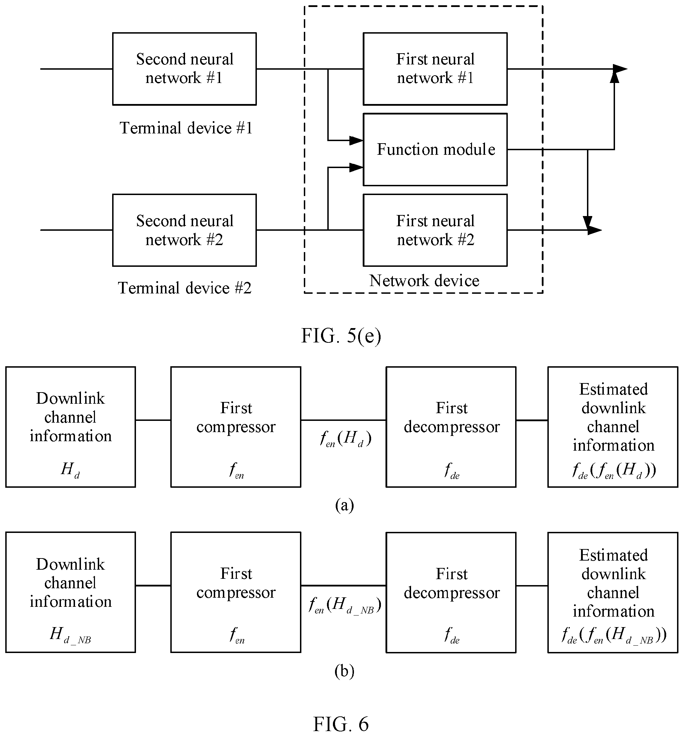

(a) and (b) in FIG. 6 each are a schematic diagram of determining estimated downlink channel information according to an embodiment of this application;

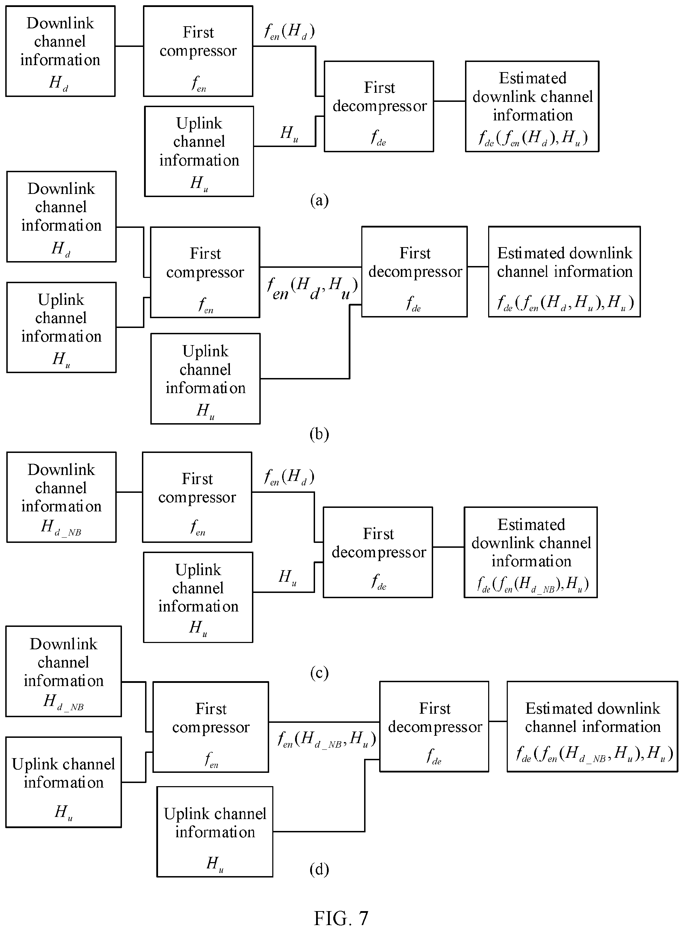

(a) to (d) in FIG. 7 each are another schematic diagram of determining estimated downlink channel information according to an embodiment of this application;

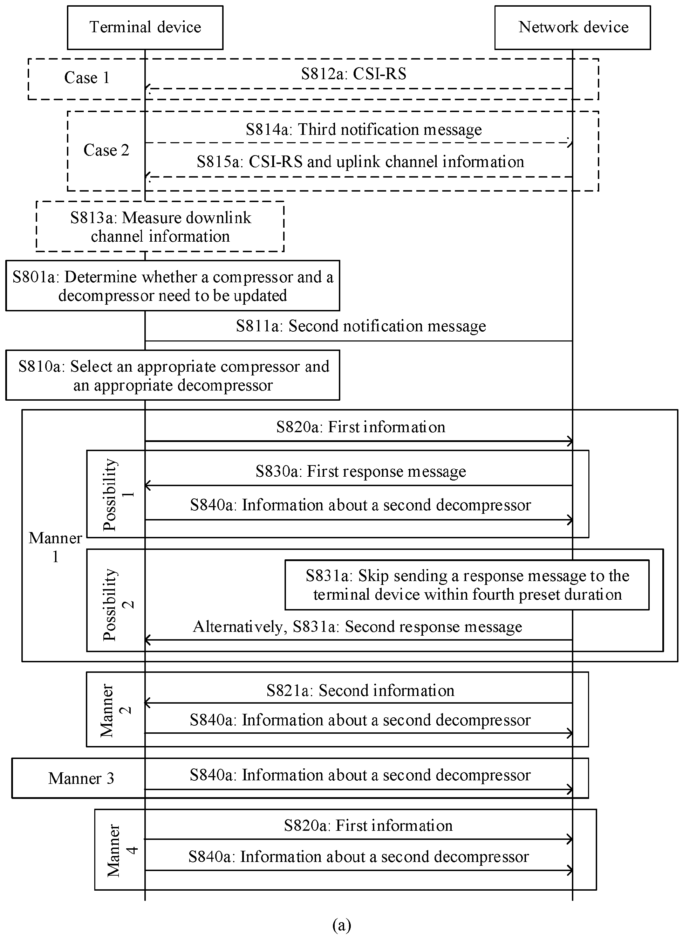

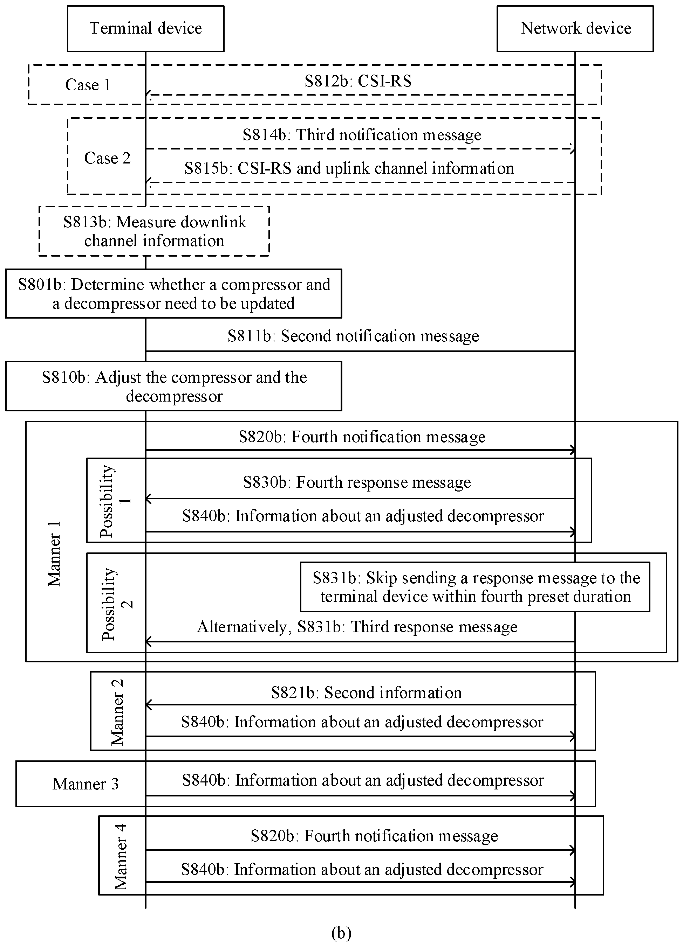

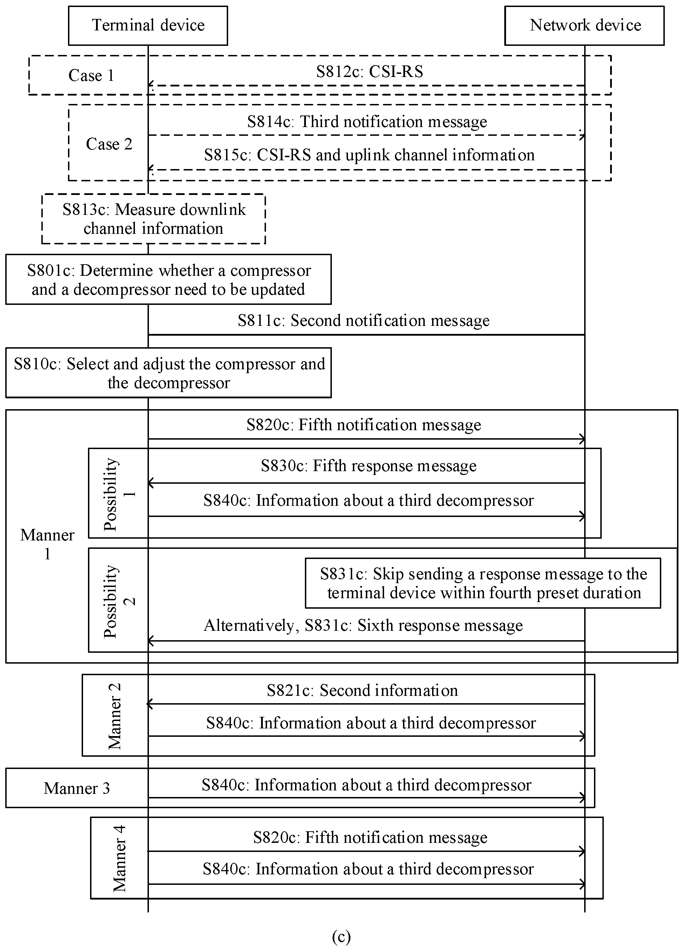

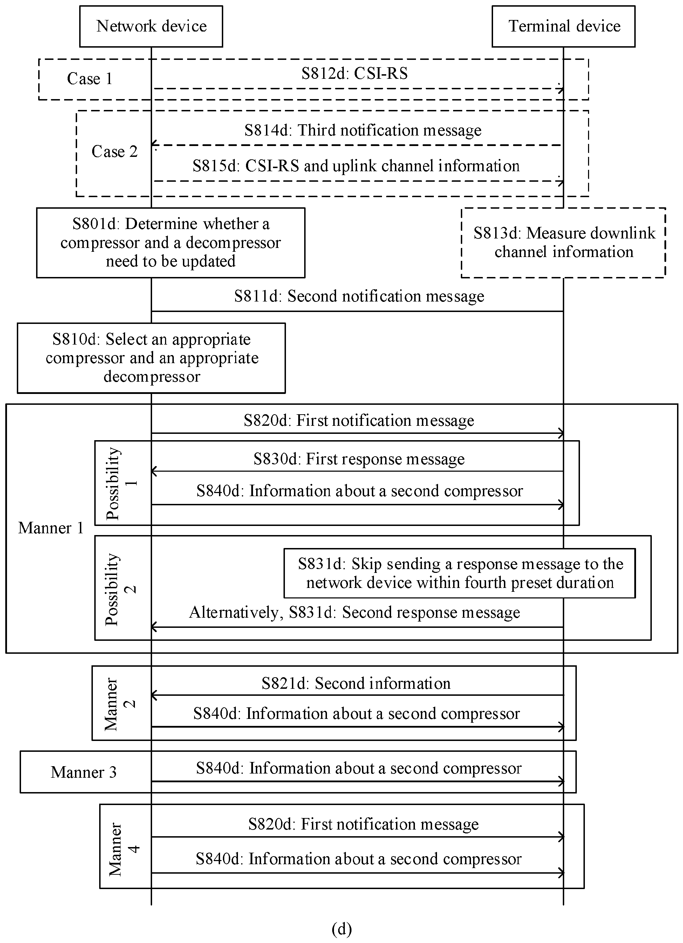

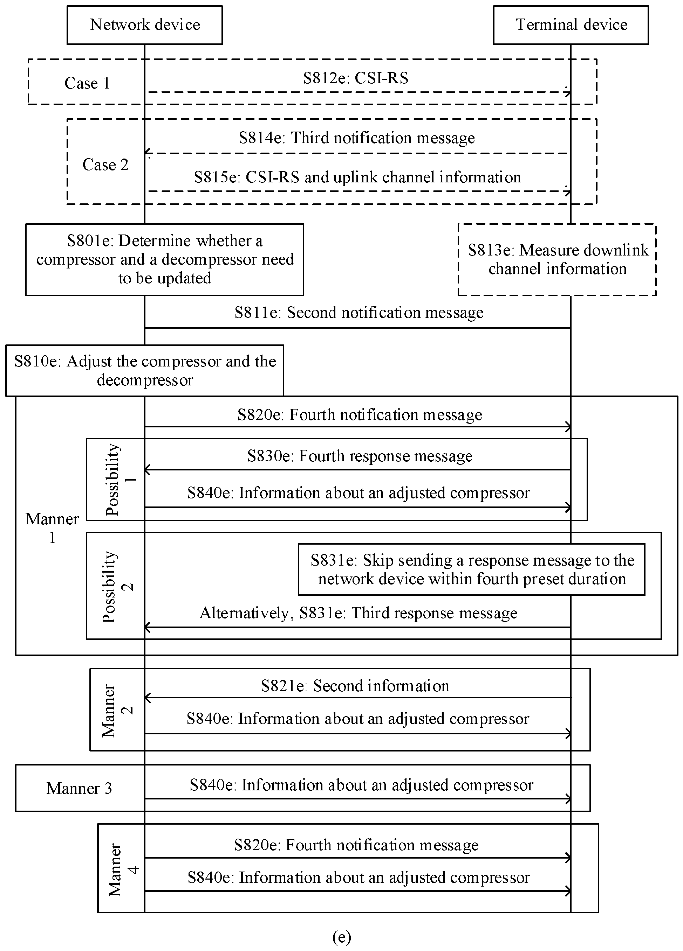

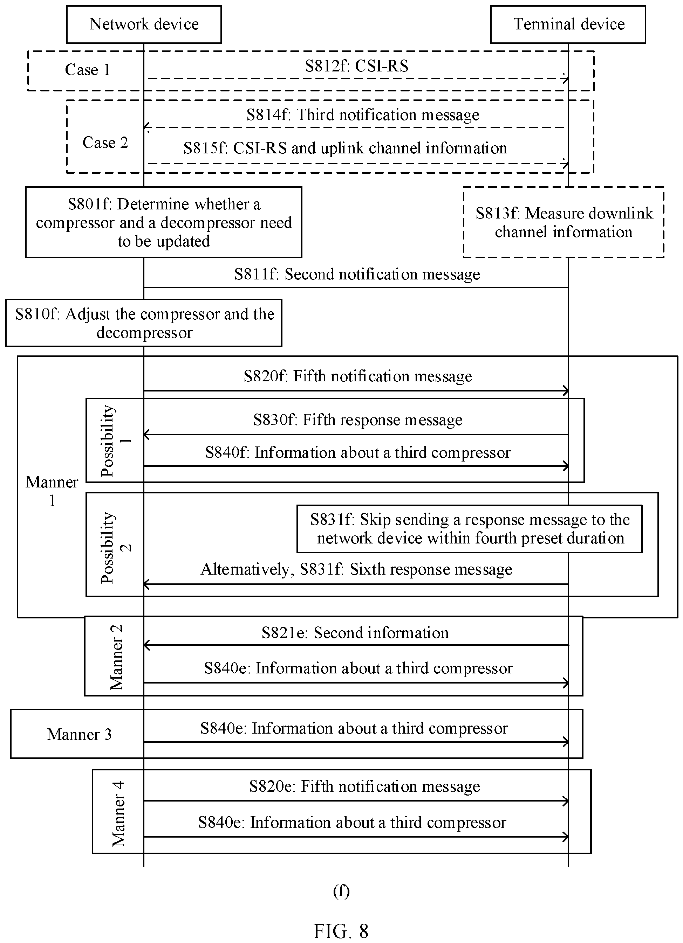

(a) to (f) in FIG. 8 each are a schematic flowchart of sending information about an updated encoder and/or an updated decoder according to an embodiment of this application;

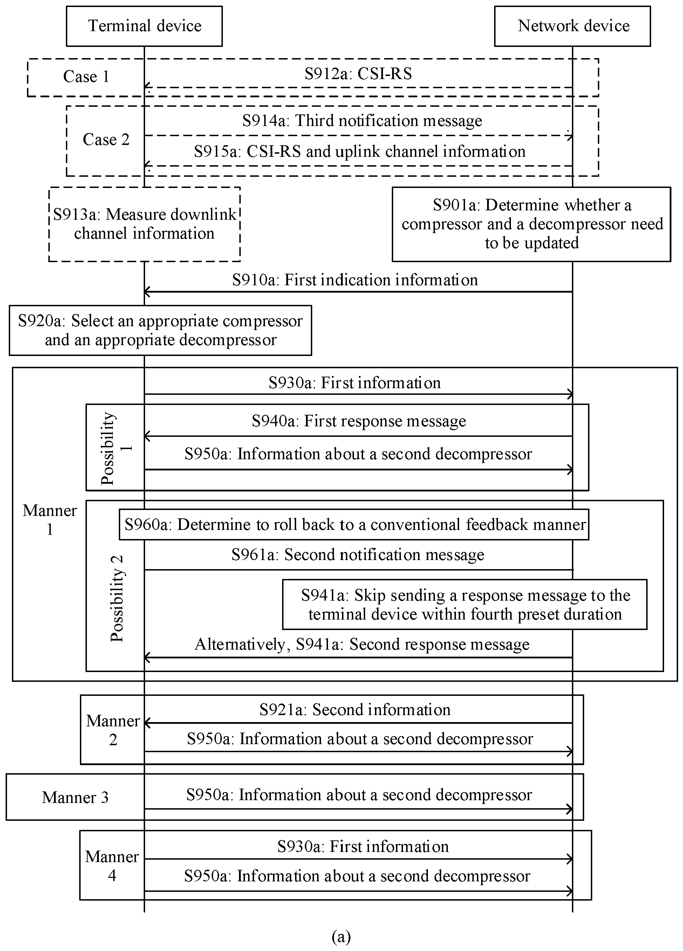

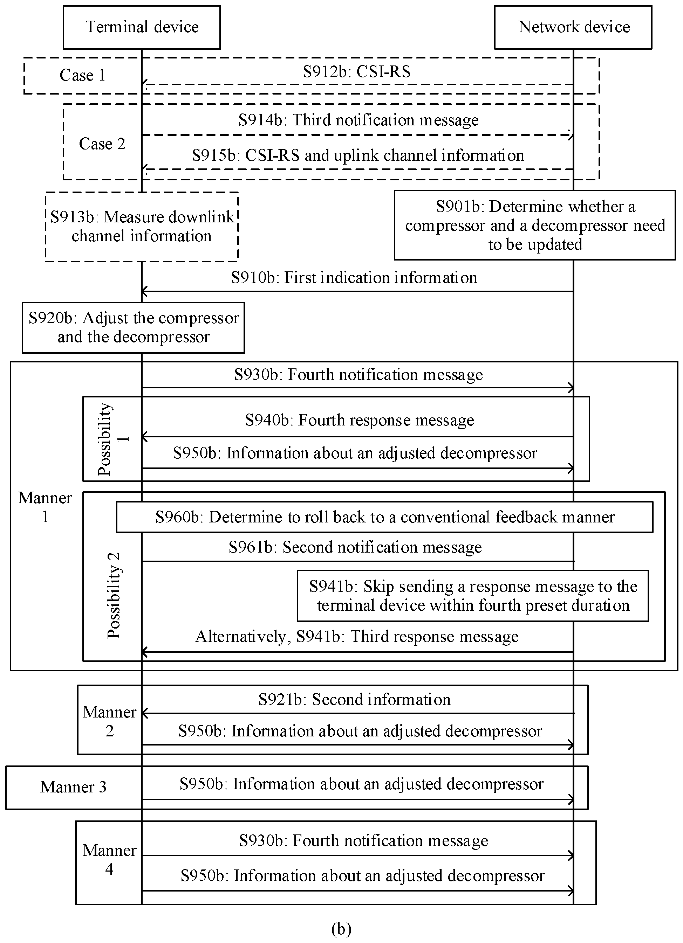

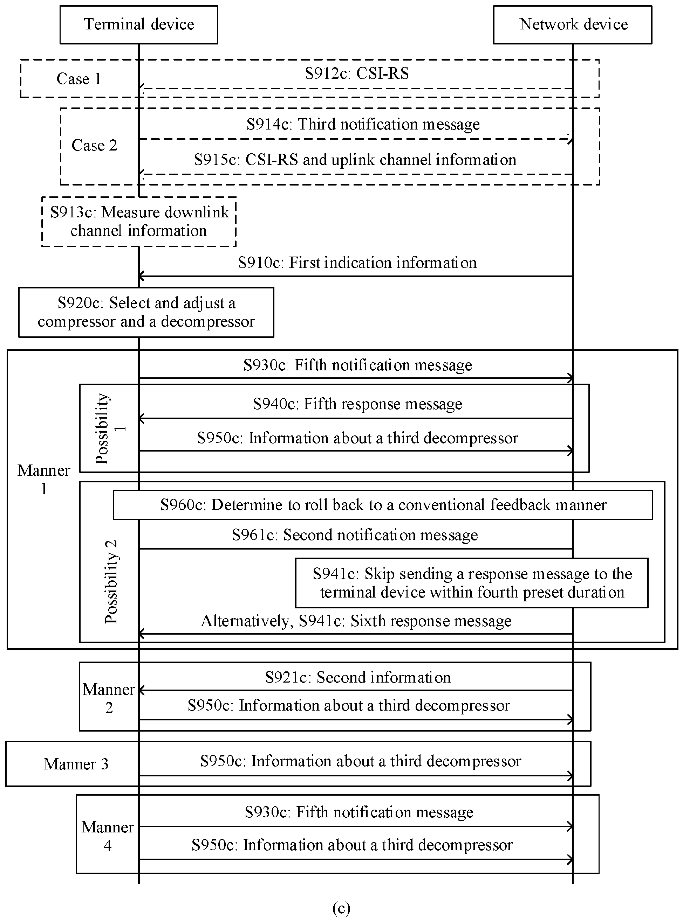

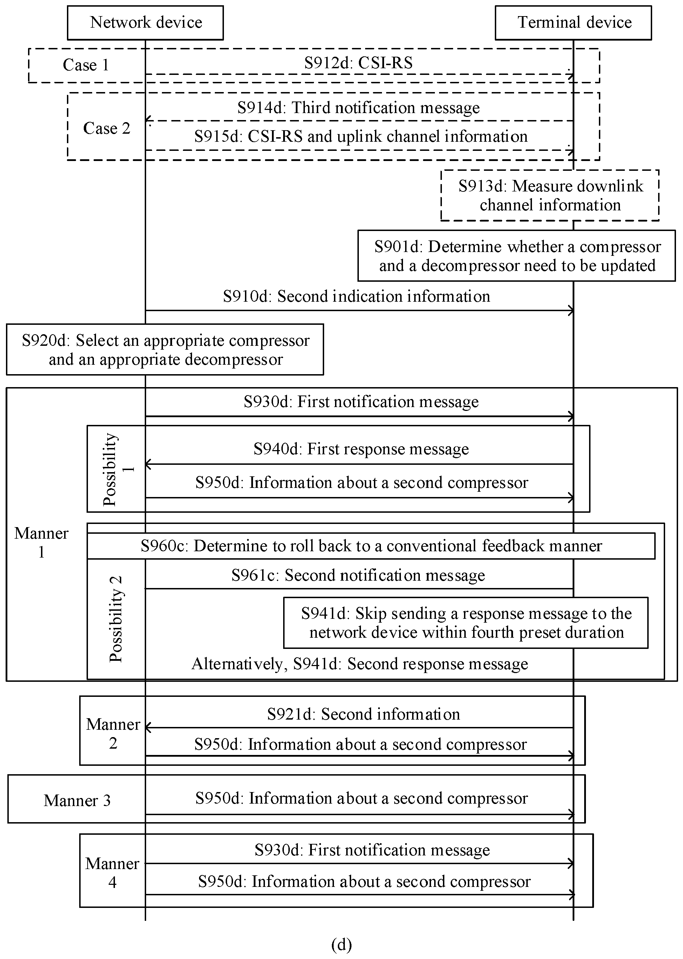

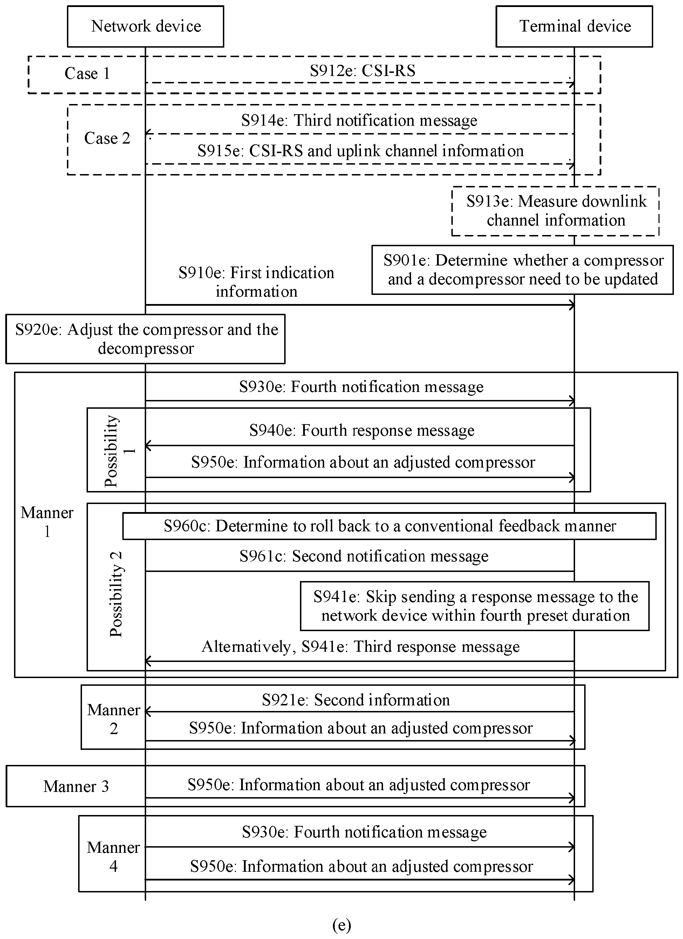

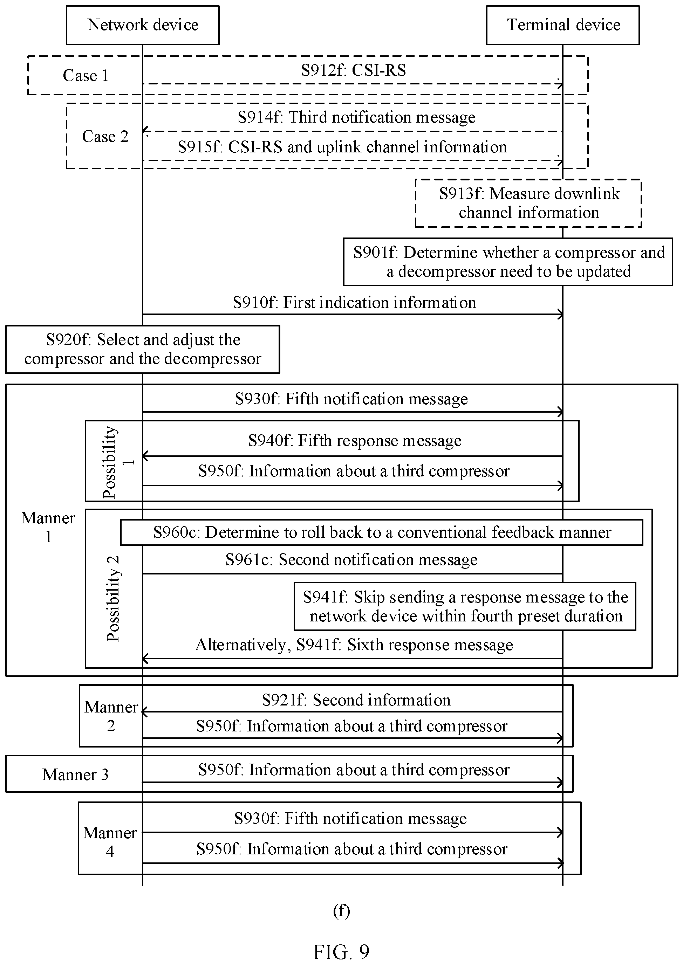

(a) to (f) in FIG. 9 each are another schematic flowchart of sending information about an updated encoder and/or an updated decoder according to an embodiment of this application;

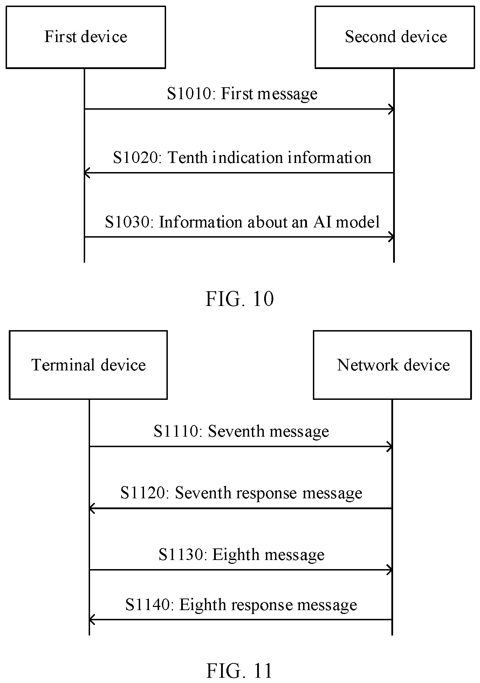

FIG. 10 is a schematic flowchart of a communication method according to an embodiment of this application;

FIG. 11 is a schematic flowchart of initial access;

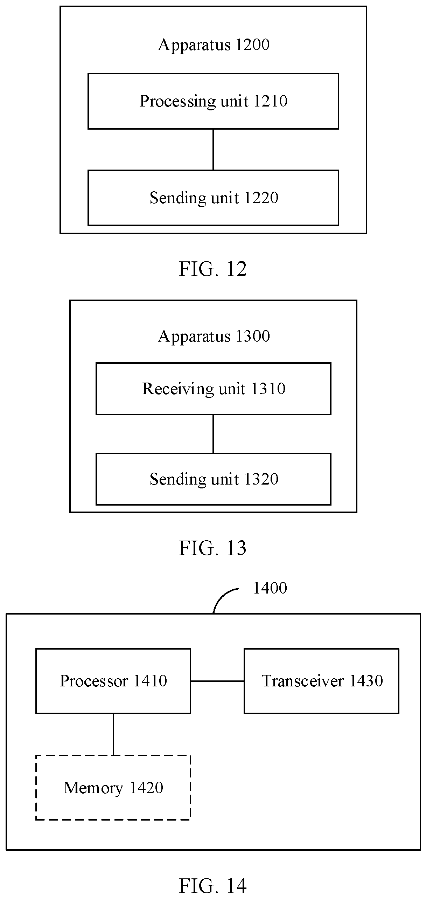

FIG. 12 is a schematic structural diagram of a neural network adjustment apparatus 1200 that is applicable to an embodiment of this application;

FIG. 13 is a schematic diagram of a communication apparatus 1300 according to this application;

FIG. 14 is a schematic diagram of a first device 1400 according to this application;

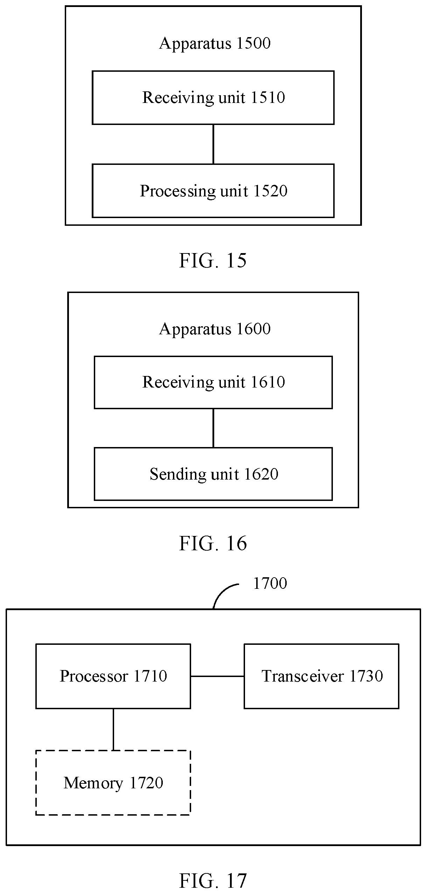

FIG. 15 is a schematic diagram of a neural network adjustment apparatus 1500 according to this application;

FIG. 16 is a schematic diagram of a communication apparatus 1600 according to this application; and

FIG. 17 is a schematic diagram of a second device 1700 according to this application.

## DESCRIPTION OF EMBODIMENTS

The following describes the technical solutions in this application with reference to the accompanying drawings.

The technical solutions in embodiment of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, a new radio (new radio, NR) system, or a future network. The 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of things, IoT) communication system, or another communication system.

A terminal device (terminal equipment) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

By way of example but not limitation, in embodiments of this application, the wearable device may also be referred to as a wearable smart device, and is a generic term of wearable devices developed by intelligently designing daily wear by using a wearable technology, such as glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with another device such as a smartphone, for example, various smart bands or smart accessories for monitoring physical signs.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrow band (narrow band, NB) technology.

In addition, in embodiments of this application, the terminal device may further include a sensor such as an intelligent printer, a train detector, or a gas station. Main functions of the terminal device include collecting data (for some terminal devices), receiving control information and downlink data from a network device, sending an electromagnetic wave, and transmitting uplink data to the network device.

A network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home NodeB (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), a 5G system, for example, a gNB in an NR system, or a transmission point (TRP or TP), one or a group of antenna panels (including a plurality of antenna panels) of a base station in a 5G system, or a network node that constitutes a gNB or a transmission point, for example, a baseband unit (BBU) or a distributed unit (distributed unit, DU).

In some deployments, the network device in embodiments of this application may be a central unit (central unit, CU) or a distributed unit (distributed unit, DU), or the network device includes the CU and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an EI interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiment of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

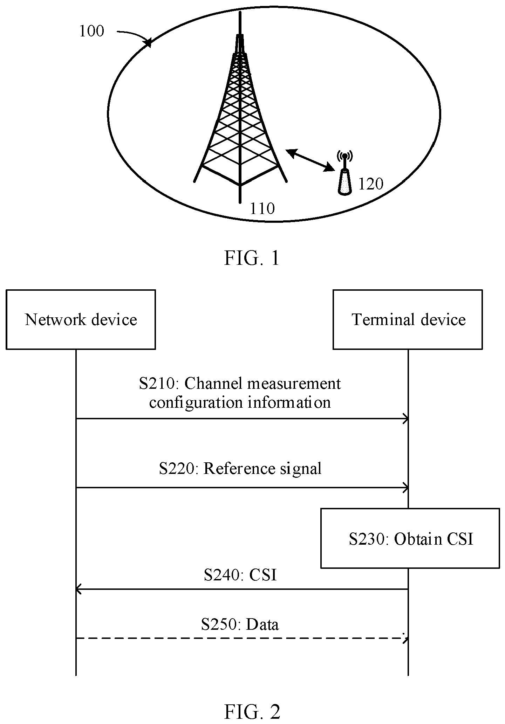

For ease of understanding of embodiments of this application, a communication system shown in FIG. 1 is first used as an example to describe in detail a communication system to which embodiments of this application are applicable. FIG. 1 is a schematic diagram of a communication system 100 to which a neural network adjustment method according to an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 over a radio link. A plurality of antennas may be configured for each communication device, for example, the network device 110 or the terminal device 120. For each communication device in the communication system 100, the configured plurality of antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

It should be understood that FIG. 1 is only a simplified schematic diagram of an example for ease of understanding. The communication system 100 may further include another network device or another terminal device, which is not shown in FIG. 1.

For ease of understanding of embodiments of this application, several basic concepts in embodiments of this application are briefly described. It should be understood that basic concepts described below are briefly described by using a basic concept specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another system, for example, a 2G, 3G, 4G, or future communication system.

1. Precoding technology

When a channel state is known, the network device may process a to-be-sent signal by using a precoding matrix that matches the channel state, so that a precoded to-be-sent signal adapts to a channel. In this way, a receiving device can suppress impact between signals of a plurality of receiving devices, and maximize a signal to interference plus noise ratio of a received signal. Therefore, after the to-be-sent signal is precoded, received signal quality (for example, a signal to interference plus noise ratio (signal to interference plus noise ratio, SINR)) is improved. Therefore, transmission between a sending device and the plurality of receiving devices can be performed on a same time-frequency resource by using the precoding technology, that is, MU-MIMO is implemented.

It should be understood that related descriptions of the precoding technology in this application are merely examples for ease of understanding, and are not intended to limit the protection scope of embodiments of this application. In a specific implementation process, the sending device may perform precoding in another manner. For example, when channel information (for example, but not limited to, a channel matrix) cannot be learned of, precoding is performed by using a preset precoding matrix or through weighting. For brevity, specific content of the precoding technology is not described in this application.

2. Precoding matrix indicator (precoding matrix indicator, PMI)

The PMI may be used to indicate a precoding matrix. The precoding matrix may be, for example, a precoding matrix determined by the terminal device based on a channel matrix for each frequency domain unit. The precoding matrix may be determined by the terminal device through channel estimation or the like or based on channel reciprocity. However, it should be understood that a specific method for determining the precoding matrix by the terminal device is not limited to the foregoing descriptions. For a specific implementation, refer to the conventional technology. For brevity, details are not exhaustively described herein.

For example, the precoding matrix may be obtained by performing singular value decomposition (singular value decomposition, SVD) on a channel matrix or a covariance matrix of the channel matrix, or may be obtained by performing eigenvalue decomposition (eigenvalue decomposition, EVD) on the covariance matrix of the channel matrix. It should be understood that the foregoing listed manner of determining the precoding matrix is merely an example, and should not constitute any limitation on this application. For a manner of determining the precoding matrix, refer to the conventional technology. For brevity, details are not exhaustively described herein.

The precoding matrix determined by the terminal device may be referred to as a to-be-fed-back precoding matrix or a to-be-reported precoding matrix. The terminal device may indicate the to-be-fed-back precoding matrix by using the PMI, so that the network device restores the precoding matrix based on the PMI. The precoding matrix restored by the network device based on the PMI may be the same as or similar to the to-be-fed-back precoding matrix.

In downlink channel measurement, higher approximation between the precoding matrix determined by the network device based on the PMI and the precoding matrix determined by the terminal device indicates that the precoding matrix determined by the network device for data transmission is more adaptable to a downlink channel. In this way, signal transmission quality can be improved.

It should be understood that the PMI is merely a name, and should not constitute any limitation on this application. This application does not exclude a possibility of defining other signaling in a future protocol to implement a same or similar function.

It should be noted that, according to a method provided in embodiments of this application, the network device may determine, based on a feedback of the terminal device, a precoding matrix corresponding to one or more frequency domain units. The precoding matrix determined by the network device may be directly used for downlink data transmission. Alternatively, the precoding matrix finally used for downlink data transmission may be obtained by using some beamforming methods, including, for example, zero forcing (zero forcing, ZF), regularized zero-forcing (regularized zero-forcing, RZF), a minimum mean squared error (minimum mean squared error, MMSE), and maximizing a signal-to-leakage-and-noise ratio (signal-to-leakage-and-noise, SLNR). This is not limited in this application. Unless otherwise specified, all precoding matrices mentioned below may be precoding matrices determined according to the method provided in this application.

In embodiments of this application, a channel information feedback manner based on the foregoing precoding technology and precoding matrix indicator is referred to as a conventional channel information feedback manner. It should be noted that this is merely a name and does not constitute any limitation on the protection scope of this application, and is used to distinguish between a channel information feedback manner in an AI mode and a channel information feedback manner based on a precoding matrix indicator. In addition, in this application, a channel information feedback manner in a non-AI mode may also be referred to as a conventional channel information feedback manner or a regular channel information feedback manner.

3. Channel reciprocity

In a time division duplex (time division duplex, TDD) mode, on uplink and downlink channels, signals are transmitted on a same frequency domain resource and different time domain resources. Within a short period of time (for example, coherence time of channel propagation), it may be considered that channels through which signals on the uplink and downlink channels pass are the same, and the uplink and downlink channels may be obtained equivalently. This is reciprocity between the uplink and downlink channels. Based on the reciprocity between the uplink and downlink channels, the network device may measure the uplink channel based on an uplink reference signal, for example, a sounding reference signal (sounding reference signal, SRS). In addition, the downlink channel may be estimated based on the uplink channel, so that a precoding matrix used for downlink transmission can be determined.

However, in a frequency division duplex (frequency division duplex, FDD) mode, because a frequency band interval between the uplink and downlink channels is far greater than a coherence bandwidth, and the uplink and downlink channels do not have complete reciprocity, the precoding matrix that is used for downlink transmission and that is determined by using the uplink channel may not adapt to the downlink channel. In an FDD system, the network device may perform downlink precoding based on channel state information (channel state information, CSI) fed back by the terminal device to the network device. Specifically, a basic flowchart in which the network device and the terminal device provide a CSI feedback is shown in FIG. 2. FIG. 2 is a schematic flowchart of CSI feedback based on an existing CSI feedback procedure.

As shown in FIG. 2, the CSI feedback procedure includes S210: The network device sends channel measurement configuration information to the terminal device. The channel measurement configuration information notifies the terminal device to perform channel measurement (which may further include time for performing channel measurement). After sending the channel measurement configuration information, the network device further needs to send reference information used for channel measurement to the terminal device. To be specific, the method procedure shown in FIG. 2 further includes S220: The network device sends a reference signal to the terminal device. After receiving the reference signal, the terminal device can perform channel measurement based on the reference signal, to obtain final CSI feedback content through calculation. To be specific, the method procedure shown in FIG. 2 further includes S230: The terminal device obtains CSI. Specifically, the terminal device needs to feed back the obtained CSI to the network device. In this case, the method procedure shown in FIG. 2 further includes S240: The terminal device feeds back the CSI to the network device.

Further, after learning of the CSI, the network device can send data to the terminal device based on the CSI. Optionally, the method procedure shown in FIG. 2 further includes S250: The network device sends the data to the terminal device.

Specifically, the network device determines, based on a channel rank indicator (rank indicator, RI) fed back by the terminal device, a quantity of flows for transmitting the data to the terminal device. The network device determines, based on a channel state indicator (channel quality indicator, CQI) fed back by the terminal device, a modulation order and a channel coding bit rate for transmitting the data to the terminal device. The network device determines, based on a precoding matrix indicator (precoding matrix indicator, PMI) fed back by the terminal device, precoding for transmitting the data to the terminal device.

4. Reference signal (reference signal, RS)

The RS may also be referred to as a pilot (pilot), a reference sequence, or the like. In embodiments of this application, the reference signal may be a reference signal used for channel measurement. For example, the reference signal may be a channel state information reference signal (channel state information reference signal, CSI-RS) used for downlink channel measurement, or may be a sounding reference signal (sounding reference signal, SRS) used for uplink channel measurement. It should be understood that the foregoing listed reference signals are merely examples, and should not constitute any limitation on this application. This application does not exclude a possibility of defining another reference signal in a future protocol to implement a same or similar function.

5. Compressed channel

The compressed channel in embodiments of this application is information obtained by compressing channel information or auxiliary CSI information by using a compressor, and is referred to as a compressed channel, or may be referred to as a compressed codeword.

In addition, in embodiments of this application, information input to a decompressor may also be referred to as a compressed channel. The following describes the compressed channel in this application in detail with reference to the accompanying drawings. Details are not described herein.

It should be noted that, in this application, that the information output by the compressor and/or the information input to the decompressor are/is referred to as the compressed channels/compressed channel is merely an example. This does not constitute any limitation on the protection scope of this application. For example, the information may also be referred to as a codeword, compressed information, or a complex coefficient. Examples are not described one by one herein.

6. Channel sparsity

In a massive MIMO system, first, because a limited quantity of angles, a multipath delay, a Doppler shift, a relatively centralized angle spread, a delay spread, and a Doppler spread exist in signal propagation space, energy of channels of the massive MIMO system is concentrated on several main paths, energy on other paths is very small and can be ignored, and the channels may be considered to be sparse. In space domain, it can be learned that channel energy is concentrated at some angles when a space domain channel is converted to an angle domain. In frequency domain, it can be learned that channel energy is concentrated in some multipath delays when a frequency domain channel is converted to a delay domain. In time domain, it can be learned that channel energy is concentrated in some Doppler shifts when the time domain channel is converted to a Doppler domain.

7. Auxiliary CSI information

It may be learned from the foregoing descriptions of reciprocity that the uplink and downlink channels do not have complete reciprocity in the FDD mode. However, in the FDD mode, the uplink and downlink channels still have partial reciprocity, for example, angle reciprocity and delay reciprocity. Therefore, an angle and a delay may also be referred to as reciprocity parameters.

When a signal is transmitted through a radio channel, the signal may arrive at a receive antenna through a plurality of paths from a transmit antenna. A multipath delay results in frequency selective fading, namely, a change in a frequency domain channel. The delay is transmission time of a radio signal on different transmission paths, is determined by a distance and a speed, and is irrelevant to a frequency domain of the radio signal. When a signal is transmitted on different transmission paths, there are different transmission delays due to different distances. Therefore, delays on the uplink and downlink channels in the FDD mode may be considered to be the same, in other words, reciprocal.

In addition, an angle may be an angle of arrival (angle of arrival, AoA) at which a signal arrives at the receive antenna through a radio channel, or may be an angle of departure (angle of departure, AoD) at which a signal is transmitted through the transmit antenna. In embodiments of this application, the angle may be an angle of arrival at which an uplink signal arrives at the network device, or may be an angle of departure at which the network device transmits a downlink signal. The angle of arrival of the uplink reference signal and the angle of departure of the downlink reference signal may be considered to be the same, in other words, reciprocal.

The uplink and downlink channels in the FDD mode have partial reciprocity. To be specific, in the FDD mode, the network device may obtain, by using uplink channel information, a channel eigenvector having reciprocity. In this application, the uplink channel information in the FDD mode may be referred to as auxiliary CSI information.

8. Artificial intelligence (artificial intelligence, AI)

Artificial intelligence is sweeping the world. Many words, such as artificial intelligence, machine learning, and deep learning, are lingering around us. This application relates to the deep learning in the AI. The deep learning is a learning process in which a deep neural network is used to represent a feature. A neural network usually includes two phases: training and testing. The training is a process of extracting model parameters from training data by using a neural network model. The testing is to run test data by using a trained model (a neural network model + a model parameter) and view a result. An available framework obtained by uniformly abstracting phase data in a training process is referred to as a training framework. This application mainly relates to adjustment of a compressor and a decompressor in an AI based CSI feedback procedure. The compressor may also be referred to as a CSI compressor, and the decompressor may also be referred to as a CSI decompressor.

9. Compressor and decompressor

Currently, in CSI feedback research in the massive MIMO system, to-be-fed-back CSI may be compressed by using the foregoing channel sparsity in time, frequency, and space domains, and the compressed CSI is transmitted to a network device end over a feedback link. The network device end reconstructs an original sparse channel matrix based on a feedback value. The CSI feedback method is based on an automatic architecture of a compressor and a decompressor. Encoding is performed on a terminal device end, and decoding and reconstruction are performed on the network device end.

It should be noted that, in this application, that a unit for compressing the to-be-fed-back CSI is referred to as a compressor is merely an example. This does not constitute any limitation on the protection scope of this application. For example, the unit may also be referred to as an encoder or a compression unit. Similarly, in this application, that a unit for decompressing the compressed CSI is referred to as a decompressor is merely an example. This does not constitute any limitation on the protection scope of this application. For example, the unit may also be referred to as a decoder or a decompression unit.

It should be understood that, the compressor and the decompressor each are one type of neural network.

10. AI based CSI feedback

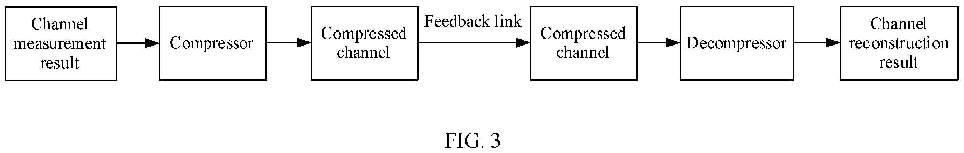

Specifically, FIG. 3 is a schematic diagram of an AI based CSI feedback procedure according to an embodiment of this application. In embodiments of this application, a framework including a compressor and a decompressor may be referred to as an AI model or an AI framework.

The network device and the terminal device perform joint training to obtain a compressor and a decompressor through training. The compressor is deployed in the terminal device, and the decompressor is deployed in the network device. The terminal device measures a downlink reference signal to obtain downlink channel information. The downlink channel information is encoded by using the compressor to obtain compressed channel information that needs to be fed back to an air interface, and the compressed channel information is fed back to the network device over a feedback link. After receiving the compressed channel information, the network device decodes the compressed channel information by using the locally deployed decompressor, to obtain reconstructed information of the channel information fed back by the terminal device.

It should be noted that, training processes of the compressor and the decompressor in the AI based CSI feedback procedure are highly complex. Generally, training of the compressor and the decompressor is completed in an offline state, and then the trained compressor and the trained decompressor are applied to online channel compression and decompression.

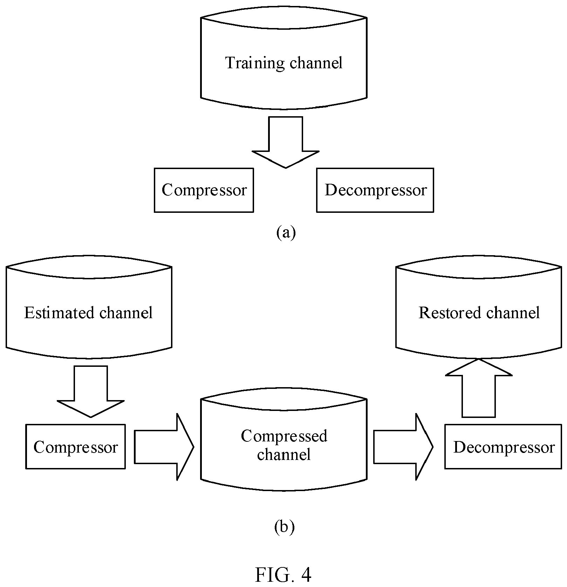

FIG. 4 is a phase diagram of AI based CSI compression and feedback according to this application. Specifically, an AI based CSI feedback procedure includes an AI based training process shown in (a) in FIG. 4 and an AI based CSI feedback process shown in (b) in FIG. 4.

The AI based training process shown in (a) in FIG. 4 is highly complex. In existing related research, it is basically assumed that an AI model is trained offline, and then a training result is applied to an online CSI feedback process. To ensure channel compression performance, a training channel shown in (a) in FIG. 4 and an estimated channel (which may also be referred to as a measured channel, a to-be-fed-back channel, or the like) in (b) in FIG. 4 should have same statistical performance (for example, similar angle and delay domain features).

It can be learned from the foregoing descriptions that, in an AI based CSI compression process shown in FIG. 4, it generally needs to be ensured that the training channel and the estimated channel have the same statistical performance. In this case, if the terminal device is displaced, a feature of the estimated channel may be changed, affecting performance of performing channel compression based on a trained compressor.

For example, based on a compressor #1 and a decompressor #1 that are obtained through offline training of a training channel #1, in principle, when statistical performance of an estimated channel #1 is similar to that of the training channel #1, the compressed channel #1 is obtained by compressing the estimated channel #1 based on the compressor #1 and then a restored channel #1 is obtained by decompressing the estimated channel #1 based on the decompressor #1, and a difference between the restored channel #1 and the estimated channel #1 should meet a difference requirement (for example, the difference should be less than a preset threshold). If the terminal device is displaced, a channel feature of an estimated channel #2 that is obtained through measurement by the terminal device may be inconsistent with that of the estimated channel #1. Consequently, a difference between a restored channel #2 obtained by compressing and decompressing the estimated channel #2 based on the compressor #1 and the decompressor #1 that are obtained through offline training of the training channel #1 and the estimated channel #2 may not meet a difference requirement. In this case, the compressor #1 and the decompressor #1 need to be updated.

To resolve a problem that channel compression performance deteriorates due to a channel feature change that may occur in the AI based CSI feedback procedure shown in FIG. 4, this application provides a neural network adjustment method. The method is applied to a channel information feedback scenario. The compressor and/or the decompressor are/is updated in real time in a channel measurement process, to provide a channel feedback based on the updated compressor and/or the updated decompressor. In this way, channel compression performance can be improved.

It should be noted that, a scenario to which the neural network adjustment method provided in embodiments of this application can be applied is not limited to a channel information compression and feedback scenario, and the method may be further applied to another scenario, for example, a scenario in which an encoder and a decoder are respectively configured on a terminal device side and a network device side, or a scenario in which a modulator and a demodulator are respectively configured on a terminal device side and a network device side.

In other words, in embodiments of this application, specific representation forms of neural networks respectively configured on the terminal device side and the network device side are not limited. The neural networks may be the foregoing compressor and the foregoing decompressor, or may be other neural networks. Examples are not described one by one herein.

For ease of understanding of embodiments of this application, the following descriptions are provided.

First, in this application, "being used to indicate" may include "being used to directly indicate" and "being used to indirectly indicate". When a piece of indication information is described as being used to indicate A, the indication information may be used to directly indicate A or used to indirectly indicate A, but it does not necessarily mean that the indication information includes A.

Information indicated by the indication information is referred to as to-be-indicated information. In a specific implementation process, there are many manners of indicating the to-be-indicated information, for example, but not limited to, a manner of directly indicating the to-be-indicated information. For example, the to-be-indicated information is indicated by using the to-be-indicated information or an index of the to-be-indicated information. The to-be-indicated information may alternatively be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated based on an arrangement sequence of a plurality of pieces of information that is pre-agreed on (for example, stipulated in a protocol), to reduce indication overheads to some extent. In addition, a common part of all pieces of information may be further identified and indicated in a unified manner, to reduce indication overheads caused by separately indicating same information. For example, a person skilled in the art should understand that a precoding matrix includes precoding vectors, and the precoding vectors in the precoding matrix may have a same part in terms of composition or another attribute.

In addition, a specific indication manner may alternatively be various existing indication manners, for example, but not limited to, the foregoing indication manners and various combinations thereof. For details about the various indication manners, refer to the conventional technology. Details are not described in this specification. It can be learned from the foregoing descriptions that, for example, when a plurality of pieces of information of a same type need to be indicated, manners of indicating different information may be different. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

The to-be-indicated information may have another equivalent form. For example, a row vector may be represented as a column vector; a matrix may be represented by using a transposed matrix of the matrix; the matrix may alternatively be represented in a form of a vector or an array; and the vector or the array may be formed by connecting row vectors or column vectors in the matrix. The technical solutions provided in embodiments of this application should be understood as covering various forms. For example, some or all features in embodiments of this application should be understood as covering various representation forms of the features.

The to-be-indicated information may be sent as a whole, or may be divided into a plurality of pieces of sub-information for separate sending. In addition, sending periodicities and/or sending occasions of the sub-information may be the same or may be different. A specific sending method is not limited in this application. The sending periodicities and/or the sending occasions of the sub-information may be predefined, for example, predefined according to a protocol, or may be configured by a transmit end device by sending configuration information to a receive end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

Second, "first", "second", and various numerical numbers (for example, "#1" and "#2") in this application are merely used to distinguish between objects for ease of description, but are not intended to limit the scope of embodiments of this application. For example, different indication information is differentiated.

Third, in this application, "preset" may include "indicated by a network device by using signaling" or "predefined", for example, "defined in a protocol". Herein, "predefined" may be implemented in a manner in which corresponding code, a table, or other related indication information is prestored in a device (for example, including a terminal device and a network device). A specific implementation thereof is not limited in this application.

Fourth, "storage" in embodiments of this application may be storage in one or more memories. The one or more memories may be separately disposed, or may be integrated into a compressor or a decompressor, a processor, or a communication apparatus. Alternatively, some of the one or more memories may be separately disposed, and some of the memories are integrated into a decompressor, a processor, or a communication apparatus. A type of the memory may be a storage medium in any form, and this is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, names of signaling in embodiments of this application are all functional descriptions, and specific names are not limited. To be specific, a message, information, and the like in embodiments of this application may be referred to as other names. For brevity, details are not described in this application. With reference to FIG. 1, the foregoing briefly describes the scenario to which the neural network adjustment method provided in embodiments of this application can be applied, and describes the basic concepts that may be used in embodiments of this application. With reference to the accompanying drawings, the following describes in detail the neural network adjustment method provided in embodiments of this application.

It should be understood that, the neural network adjustment method provided in embodiments of this application may be applied to a system in which communication is performed by using a multi-antenna technology, for example, the communication system 100 shown in FIG. 1. The communication system may include at least one network device and at least one terminal device. The network device and the terminal device may communicate with each other by using the multi-antenna technology.

It should be further understood that, a specific structure of an entity for performing the method provided in embodiments of this application is not particularly limited in the following embodiments, provided that the entity can run a program that records code of the method provided in embodiments of this application to perform communication according to the method provided in embodiments of this application. For example, the entity for performing the method provided in embodiments of this application may be the terminal device, the network device, or a function module that is in the terminal device or the network device and that can invoke and execute the program.

Without loss of generality, interaction between the network device and the terminal device is used as an example below to describe in detail the neural network adjustment method provided in embodiments of this application.

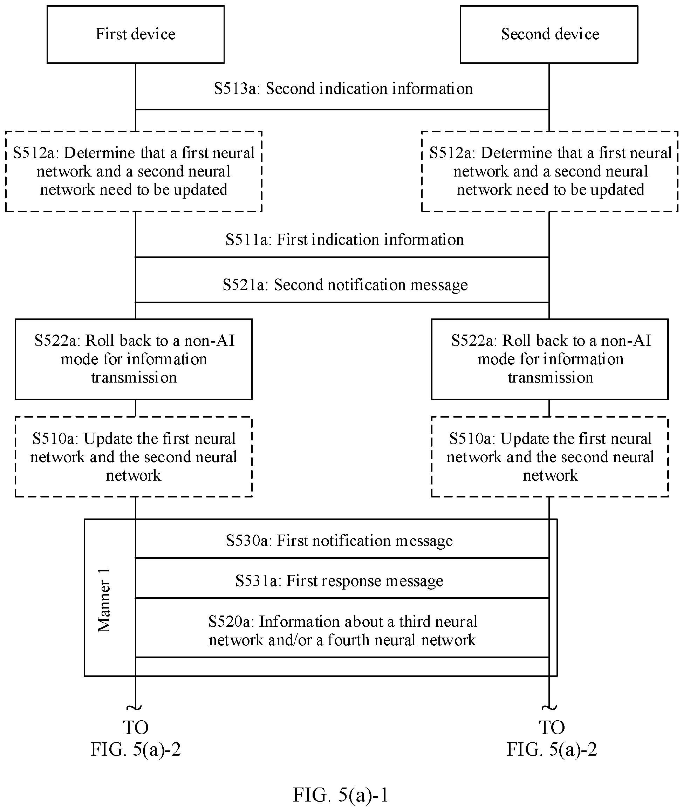

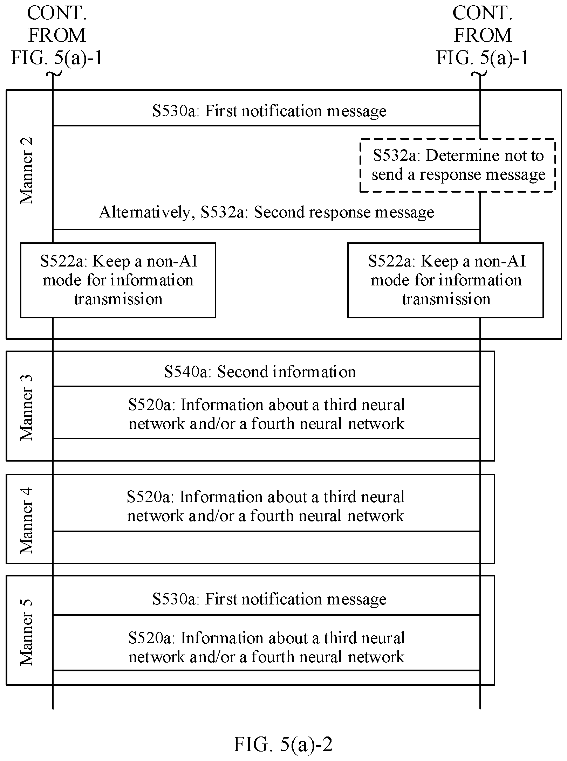

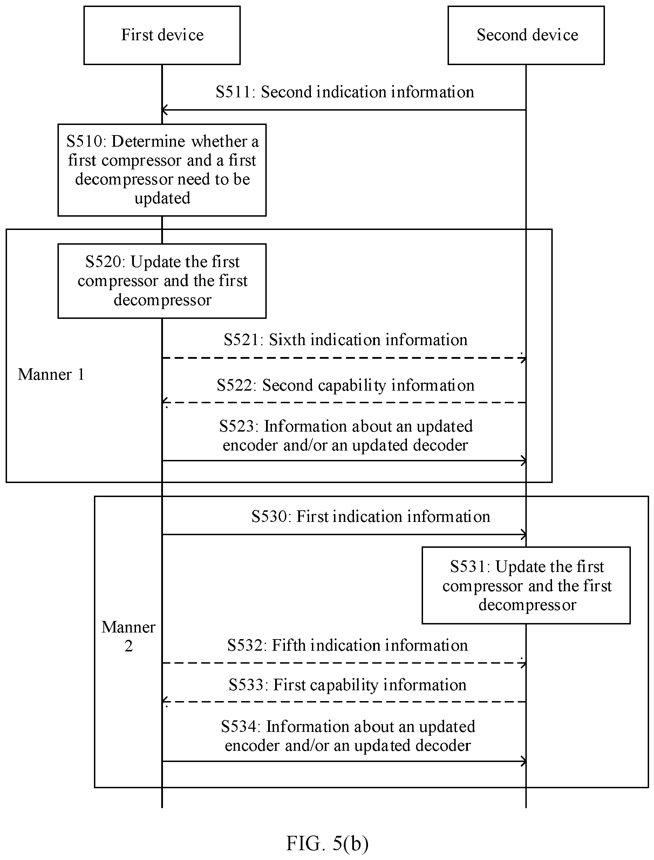

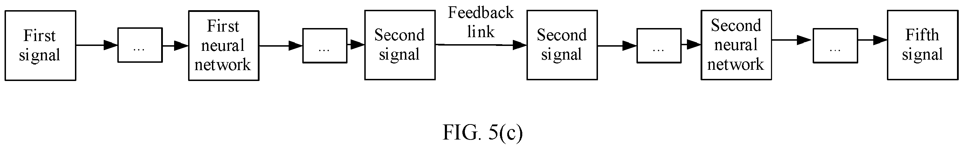

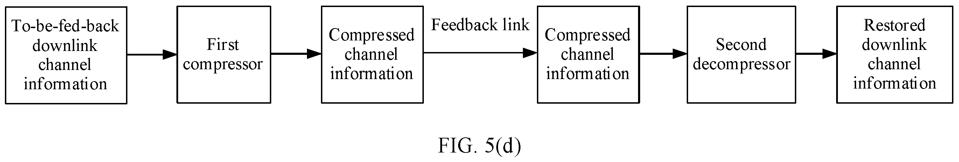

FIG. 5(a)-1 and FIG. 5(a)-2 to FIG. 5(e) are schematic flowcharts of a neural network adjustment method according to an embodiment of this application. FIG. 5 includes FIG. 5(a)-1 and FIG. 5(a)-2 to FIG. 5(e). FIG. 5(a)-1 and FIG. 5(a)-2 show a general procedure of the neural network adjustment method according to this application. To-be-fed-back information may be any information that needs to be fed back by using a communication system. FIG. 5(b) is a schematic flowchart in a scenario in which the neural network adjustment method provided in this application is applied to channel information feedback based on an AI model. In the scenario shown in FIG. 5(b), to-be-fed-back information is channel information (for example, CSI). FIG. 5(c) is a diagram of the communication system corresponding to the scenario to which FIG. 5(a)-1 and FIG. 5(a)-2 are applied. FIG. 5(d) is a diagram of an AI framework corresponding to the scenario to which FIG. 5(b) is applied.

Neural network adjustment in this embodiment of this application includes changing a network architecture corresponding to a neural network, and/or changing a network weight corresponding to a neural network.

In addition, a neural network in this embodiment of this application may be a neural network obtained through training, or may be a neural network defined by a network architecture and a network weight, or may be a function whose input is related to an output. That the input is related to the output includes that the output is related to a current input, or the output is related to both a current input and a historical input. A specific definition of the neural network is not limited in this embodiment of this application. For details, refer to a related definition of the neural network in the current or future communication field.

The following separately describes method procedures shown in FIG. 5(a)-1 and FIG. 5(a)-2 and FIG. 5(b).

The method procedure shown in FIG. 5(a)-1 and FIG. 5(a)-2 may be applied to a transmission framework shown in FIG. 5(c). It can be learned from FIG. 5(c) that a first signal is processed by using at least a first neural network to obtain a second signal, and the second signal is processed by using at least a second neural network to obtain a fifth signal.

Alternatively, a first signal is processed at least by using a second neural network to obtain a second signal, and the second signal is processed at least by using a first neural network to obtain a fifth signal. This case is not shown in FIG. 5(c).

It should be understood that, FIG. 5(c) is merely an example and does not constitute any limitation on the protection scope of this application. The foregoing process of processing the first signal to obtain the second signal may alternatively be as follows:

The first signal is processed by using the first neural network and a first function module to obtain the second signal, or the first signal is processed by using the second neural network and a first function module to obtain the second signal.

Similarly, the foregoing process of processing the second signal to obtain the fifth signal may alternatively be as follows:

The second signal is processed by using the first neural network and a second function module to obtain the fifth signal, or the second signal is processed by using the second neural network and a second function module to obtain the fifth signal.

In this embodiment of this application, quantities of first function modules and second function modules included in the communication system are not limited.

It should be noted that the first function module, the second function module, a third function module, and a fourth function module in this application each may be understood as an AI unit or a non-AI unit for signal processing or implementation of a specific function, or may be referred to as a function unit or another name.

Theoretically, a degree of difference or a similarity between the fifth signal and the first signal can fall within an acceptable range based on the communication system shown in FIG. 5(c). However, the first neural network and the second neural network are obtained through offline training, and if the first signal is changed in an online information feedback process, after the first signal is fed back based on the communication system that includes at least the first neural network and the second neural network, a degree of difference or a similarity between the fifth signal and the first signal may fall beyond the acceptable range. In this case, the first neural network and the second neural network may need to be dynamically adjusted online, or another function module in the communication system needs to be adjusted. This application mainly relates to adjustment of the first neural network and the second neural network, so that a degree of difference or a similarity between the fifth signal and the first signal falls within the acceptable range when information is fed back based on the communication system including at least an updated first neural network and an updated second neural network.

In addition, signaling exchange between the first device and the second device and steps performed by the first device and the second device in a scenario in which one of the first neural network and the second neural network needs to be updated or another function module in the system needs to be updated are similar to those for updating the first neural network and the second neural network. Details are not described in this application.

For example, in a scenario in which only the first neural network or the second neural network needs to be updated, the first neural network or the second neural network is updated, and information about an updated neural network may be further sent to a peer device. The peer device and/or a local device may choose to perform information transmission based on the updated neural network, or may choose not to perform information transmission based on the updated neural network.

With reference to FIG. 5(a)-1 and FIG. 5(a)-2, the following describes in detail how to update the first neural network and the second neural network online.

The method shown in FIG. 5(a)-1 and FIG. 5(a)-2 includes some or all of the following steps.

S510a: A first device or a second device determines a third neural network and a fourth neural network.

It can be learned from the foregoing descriptions that in the scenario in which only the first neural network or the second neural network needs to be updated, the first neural network or the second neural network is updated, and the third neural network and/or the fourth neural network may be determined.

It should be noted that, in this embodiment of this application, an example in which the first device is one device and the second device is another device is mainly used for description. The first device and the second device may be any two devices in a communication system including a plurality of devices (for example, the first device and the second device may be terminal devices, network devices, or a network device and a terminal device). For signaling exchange between another two devices included in the communication system and steps performed by the devices, refer to signaling exchange between the first device and the second device and steps performed by the first device and the second device in this application.

However, a quantity of first devices or second devices that perform communication is not limited in this application. For example, the first device is the network device, the second device is the terminal device, and the network device communicates with a plurality of terminal devices. In addition, this embodiment of this application is also applicable to a scenario in which feedback information is collaboratively processed. The scenario in which the feedback information is collaboratively processed includes the following:

The network device receives information fed back by the plurality of terminal devices, and performs joint processing on the information fed back by the plurality of terminal devices; or at least one of the plurality of terminal devices may obtain (for example, in a D2D manner) information (for example, information that needs to be fed back, or information processed based on information that needs to be fed back) related to information that needs to be fed back by at least one terminal device other than the at least one of the plurality of terminal devices, perform joint processing on the obtained information (for example, information that needs to be fed back locally and the information related to the obtained information that needs to be fed back by the at least one terminal device), and then feed back the information to the network device; or the network device side and the terminal device side both perform joint processing.

Optionally, when the network device communicates with the plurality of terminal devices and collaboratively processes feedback information, an example in which one or more first neural networks are set on the network device side and a plurality of second neural networks are set on a plurality of terminal device sides (for example, one second neural network is set in each terminal device) is used to describe that the first device or the second device determines the third neural network and the fourth neural network. That the one or more first neural networks that are set on the network device side correspond to the plurality of second neural networks may be understood as that input information of the one or more first neural networks is related to output information of the plurality of second neural networks. It should be noted that when the network device communicates with another terminal device (for example, a terminal device other than the plurality of terminal devices) and collaboratively processes feedback information, a neural network other than the one or more first neural networks may be set in the network device.

For example, the network device may determine that one or more of the plurality of second neural networks need to be updated, and/or the network device may determine that one or more of the one or more first neural networks need to be updated. For another example, a specific terminal device in the plurality of terminal devices may determine whether an update is required. In this application, when the network device communicates with the plurality of terminal devices and collaboratively processes feedback information, an example in which the network device determines whether an update is required is mainly used for description.

In addition, when the network device communicates with the plurality of terminal devices and collaboratively processes the feedback information, the network device may update a specific second neural network in the plurality of second neural networks, or may update the plurality of second neural networks. When the network device updates the plurality of second neural networks, the network device may separately indicate the plurality of terminal devices in which the plurality of second neural networks are set to receive updated neural networks, or may uniformly indicate (for example, in a broadcast manner) the plurality of terminal devices in which the plurality of second neural networks are set to receive updated neural networks.

Optionally, the one or more first neural networks that are set on the network device side may be considered as a whole, and are entirely referred to as a first neural network. The one or more first neural networks may be associated by using a function module. That the one or more first neural networks may be associated by using a function module may be understood as that an output of at least one of the one or more first neural networks is related to an input of another first neural network. As shown in FIG. 5(e), a first neural network #1 is associated with a first neural network #2.

Optionally, the one or more first neural networks that are set on the network device side may alternatively be one first neural network that is set on the network device side.

Determining the third neural network may be determining a network structure corresponding to the third neural network, or may be determining a network weight corresponding to the third neural network, or may be determining a network structure corresponding to the third neural network and a network weight corresponding to the third neural network, or may be determining a part of network weights corresponding to the third neural network (for example, the part of network weights corresponding to the third neural network are the same as a part of network weights corresponding to the first neural network, to be specific, a different part of network weights in the network weights corresponding to the third neural network and the network weights corresponding to the first neural network need to be determined), or may be determining a part of network structures corresponding to the third neural network.

Similarly, determining the fourth neural network is similar to determining the third neural network. Details are not described herein again.

Specifically, that a first device or a second device determines a third neural network and a fourth neural network in this embodiment of this application may be understood as that the first device or the second device updates the first neural network and the second neural network to respectively obtain the third neural network and the fourth neural network.

The first neural network corresponds to the third neural network, and is used by the first device or the second device to perform first signal processing. The second neural network corresponds to the fourth neural network, and is used by the first device or the second device to perform second signal processing. The first signal processing and the second signal processing are corresponding signal processing. For example, the first signal processing is encoding processing, and the second signal processing is decoding processing, or the second signal processing is encoding processing, and the first signal processing is decoding processing. For another example, the first signal processing is modulation processing, and the second signal processing is demodulation processing, or the second signal processing is modulation processing, and the first signal processing is demodulation processing. For another example, the first signal processing is compression processing, and the second signal processing is decompression processing, or the second signal processing is compression processing, and the first signal processing is decompression processing.

For example, the first signal processing may alternatively be a signal processing procedure performed by the first device or the second device on a neural network that is not completely the same as the third neural network and that is determined based on information about the third neural network.

For example, the second signal processing may alternatively be a signal processing procedure performed by the first device or the second device on a neural network that is not completely the same as the fourth neural network and that is determined based on information about the fourth neural network.

It should be noted that, in this embodiment of this application, it is not limited that the third neural network and the fourth neural network determined by the first device or the second device definitely need to be applied. For example, only the third neural network and the fourth neural network may be determined, but the first device and/or the second device do/does not use the determined third neural network or the determined fourth neural network.

Further, the first neural network and the second neural network are understood as a pair of neural networks, to perform the first signal processing and the second signal processing; and the third neural network and the fourth neural network are understood as a pair of neural networks, to perform the first signal processing and the second signal processing.

Optionally, that the first neural network is used to perform first signal processing includes: processing the first signal to obtain the second signal; and

optionally, that the second neural network is used to perform second signal processing includes: processing the second signal to obtain the fifth signal;
or
optionally, that the second neural network is used to perform second signal processing includes: processing the first signal to obtain the second signal; and
optionally, that the first neural network is used to perform first signal processing includes: processing the second signal to obtain the fifth signal.

Optionally, that the third neural network is used to perform first signal processing includes: processing a third signal to obtain a fourth signal; and

optionally, that the fourth neural network is used to perform second signal processing includes: processing the fourth signal to obtain a sixth signal;
or
optionally, that the fourth neural network is used to perform second signal processing includes: processing a third signal to obtain a fourth signal; and
optionally, that the third neural network is used to perform first signal processing includes: processing the fourth signal to obtain a sixth signal.

The third signal and the first signal may be a same signal or different signals, for example, channel information at different moments (for example, CSI at different moments); for another example, may be channel information on different frequencies (for example, CSI on different frequencies); or for another example, may be channel information at different moments and on different frequencies (for example, CSI at different moments and on different frequencies).

That the first neural network or the second neural network is used to process the first signal to obtain the second signal includes:

the first neural network or the second neural network is used to process the first signal to obtain the second signal; or
the first neural network or the second neural network and the first function module are used to process the first signal to obtain the second signal.

That the first neural network or the second neural network is used to process the second signal to obtain a fifth signal includes:

the first neural network or the second neural network is used to process the second signal to obtain the fifth signal; or
the first neural network or the second neural network and the second function module are used to process the second signal to obtain the fifth signal.

That the third neural network or the fourth neural network is used to process a third signal to obtain a fourth signal includes:

the third neural network or the fourth neural network is used to process the third signal to obtain the fourth signal; or
the third neural network or the fourth neural network and the third function module are used to process the third signal to obtain the fourth signal.

That the third neural network or the fourth neural network is used to process the fourth signal to obtain a sixth signal includes:

the third neural network or the fourth neural network is used to process the fourth signal to obtain the sixth signal; or
the third neural network or the fourth neural network and the fourth function module are used to process the fourth signal to obtain the sixth signal.

The first function module and the third function module may be a same function module, or the third function module is a module obtained by updating the first function module. The second function module and the fourth function module may be a same module, or the fourth function module is a function module obtained by updating the second function module. When the first device is the terminal device, the second device may be the network device. When the first device is the network device, the second device may be the terminal device.

In a possible implementation, a degree of difference between a first training signal related to the third signal and a second training signal related to the sixth signal meets a first condition. The first training signal related to the third signal represents a signal that is similar to the third signal and that is obtained through simulation by the first device or the second device that determines the third neural network and the fourth neural network in a process of determining the third neural network and the fourth neural network (for example, a size of the signal is the same as that of the third signal, and/or a type of the signal is the same as that of the third signal). The second training signal related to the sixth signal represents a signal that is similar to the sixth signal and that is obtained through simulation by the first device or the second device that determines the third neural network and the fourth neural network in the process of determining the third neural network and the fourth neural network (for example, a size of the signal is the same as that of the sixth signal, and/or a type of the signal is the same as that of the sixth signal).

The degree of difference in this application may be any one of a difference, a mean squared error, a normalized mean squared error, or an average absolute error, or the degree of difference may be another value that can indicate the degree of difference between the first training signal related to the third signal and the second training signal related to the sixth signal. A specific form of the degree of difference is not limited in this embodiment of this application.

For example, the first condition may be that the degree of difference is less than or equal to a first preset value, or may be that an absolute value of the degree of difference is less than or equal to a first preset value, or may be that an opposite number of the degree of difference is less than or equal to a first preset value, or may be that a value (for example, the degree of difference+ $\Delta$) determined based on the degree of difference is less than or equal to a first preset value. For ease of description, the following uses an example in which the degree of difference is less than or equal to the first preset value for description. However, this application is not limited thereto.

In another possible implementation, a similarity between a first training signal related to the third signal and a second training signal related to the sixth signal meets a second condition.

The similarity in this application may be a correlation coefficient, or the similarity may be another value that can indicate the similarity between the first training signal related to the third signal and the second training signal related to the sixth signal. A specific form of the similarity is not limited in this embodiment of this application.

For example, the second condition may be that the similarity is greater than or equal to a second preset value, or may be that an opposite number of the similarity is greater than or equal to a second preset value, or may be that a value determined based on the similarity is greater than or equal to a second preset value. For ease of description, the following uses an example in which the similarity is greater than or equal to the second preset value for description. However, it should be understood that this application is not limited thereto.

The following describes several manners in which the first device determines to update the first neural network and the second neural network.

Manner 1:

The first device periodically updates the first neural network and the second neural network. In other words, in the manner 1, after a moment for periodically updating the first neural network and the second neural network arrives, the first device determines that the first neural network and the second neural network need to be updated.

A "periodicity" in this embodiment of this application may be understood as a time interval in a unit of a slot, a subframe, a frame, or the like. For example, the periodicity may be 10 slots or 10 subframes.

In addition, the term "periodically" represents a time interval. When a time interval represented by one periodicity is determined, the first neural network and the second neural network may be updated once in a half of the periodicity, or the first neural network and the second neural network may be updated once in a quarter of the periodicity. In this embodiment of this application, the term "periodically" is understood as updating at a fixed time interval, but duration of the time interval is not limited.

For example, the first device periodically updates the first neural network and the second neural network based on a first preset periodicity T 1. If the first device updates the first neural network and the second neural network at a moment t, the first device updates the first neural network and the second neural network at a moment t+Tl. T1 may be predefined in a protocol, or determined by the first device and the second device through negotiation, or may be a periodicity randomly selected by the first device. How the first device learns of the first preset periodicity is not limited in this application.

Manner 2:

The first device aperiodically updates the first neural network and the second neural network. In other words, in the manner 2, the first device may randomly determine a moment for updating the first neural network and the second neural network.

For example, the first device may update the first neural network and the second neural network at any moment, and the moment at which the first device updates the currently used first neural network and the currently used second neural network is not regular.

Manner 3:

The first device receives first indication information sent by the second device, where the first indication information indicates to update the first neural network and the second neural network. In other words, in the manner 3, after receiving the first indication information, the first device determines a moment for updating the first neural network and the second neural network.

To be specific, in the manner 3, the method procedure shown in FIG. 5(a)-1 and FIG. 5(a)-2 further includes S511a: The second device sends the first indication information to the first device.

For example, that a transmit end device sends the first indication information to a receive end device includes: The local device sends the first indication information to the receive end device on an uplink physical control channel (physical uplink control channel, PUCCH), a physical downlink control channel (physical downlink control channel, PDCCH), a physical uplink shared channel (physical uplink shared channel, PUSCH), a physical downlink shared channel (physical downlink shared channel, PDSCH), an uplink grant UL grant, or a random access channel (random access channel, RACH).

It should be understood that, because PUCCH and PDCCH resources are limited, sending the first indication information to the receive end device on the PUSCH or the PDSCH can improve flexibility of the solution.

Manner 4:

When the first device determines that the first neural network and the second neural network need to be updated, the first device updates the first neural network and the second neural network.

For example, the first device may determine, depending on whether a degree of difference or a similarity between first information and second information meets a third condition, whether the first neural network and the second neural network need to be updated. When the degree of difference or the similarity between the first information and the second information meets the third condition, the first device determines that the first neural network and the second neural network do not need to be updated. When the degree of difference or the similarity between the first information and the second information does not meet the third condition, the first device determines that the first neural network and the second neural network need to be updated.

For example, when the network device communicates with the plurality of terminal devices and collaboratively processes feedback information, the network device may determine, based on an input of a specific second neural network in the plurality of second neural network and an output of the first neural network that are obtained through simulation, whether one or more of the plurality of second neural networks need to be updated; or the network device may determine, based on a joint input of a plurality of second neural networks in the plurality of second neural networks and an output of the first neural network that are obtained through simulation, whether one or more of the plurality of second neural networks need to be updated. If one first neural network is set on the network device side, the output of the first neural network is an output of the first neural network. If a plurality of first neural networks are set on the network device side, the output of the first neural network is an output of a first neural network corresponding to the second neural network in the plurality of first neural networks.

The first information may be understood as information related to input information (for example, the foregoing first determining signal related to the first signal) of the first neural network that is obtained by the first device or the second device through simulation, and the second information may be understood as information related to output information (for example, the foregoing second determining signal related to the fifth signal) of the second neural network that is obtained by the first device or the second device through simulation.

The first determining signal related to the first signal represents a signal that is similar to the first signal and that is obtained through simulation by the first device or the second device that performs determining in a process of determining whether the first neural network and the second neural network need to be updated (for example, a size of the signal is the same as that of the first signal, and/or a type of the signal is the same as that of the first signal). The second determining signal related to the fifth signal represents a signal that is similar to the fifth signal and that is obtained through simulation by the first device or the second device that performs determining in the process of determining whether the first neural network and the second neural network need to be updated (for example, a size of the signal is the same as that of the fifth signal, and/or a type of the signal is the same as that of the fifth signal).

For example, the third condition may be that the degree of difference is less than or equal to a third preset value, or may be that an absolute value of the degree of difference is less than or equal to a third preset value, or may be that a value (for example, the degree of difference+ $\Delta$) determined based on the degree of difference is less than or equal to a third preset value. For ease of description, the following uses an example in which if the degree of difference is less than or equal to the third preset value, the third condition is met, or if the degree of difference is greater than the third preset value, the third condition is not met for description. However, it should be understood that this application is not limited thereto.

For example, the third condition may be that the similarity is greater than or equal to a fourth preset value, or may be that a value determined based on the similarity is greater than or equal to a fourth preset value. For ease of description, the following uses an example in which if the similarity is greater than or equal to the fourth preset value, the third condition is met, or if the similarity is less than the fourth preset value, the third condition is not met for description. However, it should be understood that this application is not limited thereto.

For example, for the communication system shown in FIG. 5(c), after being processed by using the first neural network, the first signal is sent to a receiving device. After receiving information fed back through an air interface, the receiving device processes the information by using the second neural network to obtain the fifth signal. In this case, the first information is input information (the first signal) of the first neural network that is obtained through simulation by the first device or the second device, the second information is output information (the fifth signal) of the second neural network that is obtained through simulation by the first device or the second device, and output information of the first neural network is input information of the second neural network.

For example, for the communication system shown in FIG. 5(c), after being processed by using the first function module, the first signal is processed by using the first neural network, and sent to a receiving device side. After receiving information fed back through an air interface, a receiving device processes the information by using the second function module, and then processes the information by using the second neural network, to obtain the fifth signal. In this case, the first information is input information (the first signal) of the first function module that is obtained through simulation by the first device or the second device, the second information is output information (the fifth signal) of the second neural network that is obtained through simulation by the first device or the second device, and information obtained by processing output information of the first neural network by using the second function module is input information of the second neural network. There may be at least one first function module and at least one second function module.

For example, for the communication system shown in FIG. 5(c), after being processed by using the first function module, the first signal is processed by using the first neural network, and sent to a receiving device side. After receiving information fed back through an air interface, a receiving device processes the information by using the second neural network, and processes the information by using the second function module, to obtain the fifth signal. In this case, the first information is input information (the first signal) of the first function module that is obtained by the first device or the second device through simulation, the second information is output information (the fifth signal) of the second function module that is obtained through simulation by the first device or the second device, and information obtained by processing output information of the first neural network by using the second neural network is input information of the second function module. There may be at least one first function module and at least one second function module.

For example, for the communication system shown in FIG. 5(c), after being processed by using the first neural network, the first signal is processed by using the first function module, and sent to a receiving device side. After receiving information fed back through an air interface, a receiving device processes the information by using the second function module, and then processes the information by using the second neural network, to obtain the fifth signal. In this case, the first information is input information (the first signal) of the first neural network that is obtained through simulation by the first device or the second device, the second information is output information (the fifth signal) of the second neural network that is obtained through simulation by the first device or the second device, and information obtained by processing output information of the first neural network by using the first function module and the second function module is input information of the second neural network. There may be at least one first function module and at least one second function module.

For example, for the communication system shown in FIG. 5(c), after being processed by the first neural network, the first signal is processed by using the first function module, and sent to a receiving device side. After receiving information fed back through an air interface, the receiving device processes the information by using the second neural network, and then processes the information by using the second function module, to obtain the fifth signal. In this case, the first information is input information (the first signal) of the first neural network that is obtained through simulation by the first device or the second device, the second information is output information (the fifth signal) of the second function module that is obtained through simulation by the first device or the second device, and information obtained by processing output information of the first neural network by using the first function module is input information of the second neural network. There may be at least one first function module and at least one second function module.

For example, for the communication system shown in FIG. 5(c), after being processed by using the first neural network, the first signal is sent to a receiving device side. After receiving information fed back through an air interface, a receiving device processes the information by using the second neural network based on auxiliary information and received feedback information to obtain the fifth signal. In this case, the first information is input information (the first signal) of the first neural network that is obtained through simulation by the first device or the second device, and the second information is output information (the fifth signal) of the second neural network that is obtained through simulation by the first device or the second device.

The foregoing describes possible forms of the first information and the second information. For ease of description, in this embodiment of this application, an example in which the first information is the input information of the first neural network that is obtained through simulation by the first device or the second device, namely, the first signal, and the second information is the output information of the second neural network that is obtained through simulation by the first device or the second device, namely, the fifth signal is used for description. A case in which the first information and the second information is output/input information of another function module is similar to a case in which the first information is the input information of the first neural network and the second information is the output information of the second neural network. Details are not described.

When the degree of difference between the first information and the second information is greater than or equal to the third preset value, or when the similarity between the first information and the second information is less than or equal to the fourth preset value, the first device determines that the first neural network and the second neural network need to be updated; or when the degree of difference between the first information and the second information is less than the third preset value, or when the similarity between the first information and the second information is greater than the fourth preset value, the first device determines that the first neural network and the second neural network do not need to be updated.

Alternatively, when the degree of difference between the first information and the second information is greater than the third preset value, or when the similarity between the first information and the second information is less than the fourth preset value, the first device determines that the first neural network and the second neural network need to be updated; or when the degree of difference between the first information and the second information is less than or equal to the third preset value, or when the similarity between the first information and the second information is greater than or equal to the fourth preset value, the first device determines that the first neural network and the second neural network do not need to be updated.

It should be noted that, the determining, based on a value relationship between the degree of difference or the similarity between the first information and the second information and a corresponding preset value, whether the first neural network and the second neural network need to be updated is merely an example and does not constitute any limitation on the protection scope of this application. For example, the first device may further determine, based on a further degree of difference or a further similarity between the degree of difference or the similarity between the first information and the second information and the corresponding preset value, whether the first neural network and the second neural network need to be updated.

It may be understood that the degree of difference or the similarity between the first information and the second information may reflect a degree of matching between the first neural network and the second neural network and a current communication environment. For example, the degree of difference between the first information and the second information may reflect a degree of difference between the first information and the second information that is obtained by processing the first information by using the first neural network and the second neural network, to deduce restoration performance of the first neural network and the second neural network. For another example, the similarity between the first information and the second information may reflect a similarity between the first information and the second information that is obtained by processing the first information by using the first neural network and the second neural network, to deduce restoration performance of the first neural network and the second neural network.

If the degree of difference or the similarity between the first information and the second information falls within the acceptable range, it is considered that the restoration performance of the first neural network and the second neural network is good, and information transmission may continue to be performed based on the communication system including the first neural network and the second neural network. If the degree of difference or the similarity between the first information and the second information falls beyond the acceptable range, it is considered that the restoration performance of the first neural network and the second neural network is poor, and the first neural network and the second neural network need to be updated.

To be specific, in the manner 4, the method procedure shown in FIG. 5(a)-1 and FIG. 5(a)-2 further includes S512a: The first device determines that the first neural network and the second neural network need to be updated. This embodiment of this application mainly relates to an online update of the first neural network and the second neural network. A case in which the first device determines that the first neural network and the second neural network do not need to be updated is not described in detail.

Further, in the manner 4, the first device may be triggered, based on one of the following possible triggering manners, to determine whether the first neural network and the second neural network need to be updated:

Possibility 1: The first device periodically performs the foregoing determining.

For example, the first device periodically determines, based on a second preset periodicity T2, whether the first neural network and the second neural network need to be updated. T2 may be predefined in a protocol, or determined by the first device and the second device through negotiation, or may be a periodicity randomly selected by the first device. How the first device learns of the second preset periodicity is not limited in this application.

Possibility 2: The first device aperiodically performs the foregoing determining.

For example, the first device may perform the foregoing determining at any time.

Possibility 3: The first device may perform the foregoing determining based on second indication information sent by the second device. The second indication information may be referred to as trigger signaling, and is used to trigger the first device to perform the foregoing determining. To be specific, in this example, the method procedure shown in FIG. 5(a)-1 and FIG. 5(a)-2 may further include S513a: The second device sends the second indication information to the first device.

For example, the first device receives the second indication information sent by the second device, where the second indication information is used to indicate the first device to determine whether the first neural network and the second neural network need to be updated.

For example, that the transmit end device sends second indication information to the receive end device includes: The local device sends the second indication information to the receive end device on a PUCCH, a PDCCH, a PUSCH, a PDSCH, a UL grant, or a RACH.

It should be understood that, because PUCCH and PDCCH resources are limited, sending the second indication information to the receive end device on the PUSCH or the PDSCH can improve flexibility of the solution.

Possibility 4: The first device may perform the foregoing determining based on trigger information of the first device.

For example, if the first device perceives that transmission performance of the first device deteriorates (for example, throughput performance deteriorates), the first device may trigger the first device to perform the foregoing determining.

A manner in which the second device determines to update the first neural network and the second neural network is similar to that of the first device. A difference lies in that when the second device is triggered by the first device to perform update, the first indication information is sent by the first device to the second device. Similarly, when the second device is triggered by the first device to perform determining, the second indication information is sent by the first device to the second device. Another manner of determining to perform update and another determining manner are the same as those of the first device, except that an execution body is changed from the first device to the second device. Details are not described herein.

The foregoing describes how the first device or the second device determines that the first neural network and the second neural network need to be updated.

Specifically, when the first device or the second device determines that the first neural network and the second neural network need to be updated, or when the first device or the second device directly and periodically or aperiodically determines that the first neural network and the second neural network need to be updated, the first device or the second device updates the first neural network and the second neural network to obtain the third neural network and the fourth neural network.

The following describes several manners of updating the first neural network and the second neural network to obtain the third neural network and the fourth neural network.

Manner 1:

An appropriate third neural network and an appropriate fourth neural network are selected from a first set based on communication system data, where the third neural network is an updated first neural network, the fourth neural network is an updated second neural network, and the communication system data includes system data, for example, at least one of a channel feature, a signal-to-noise ratio, downlink channel information, uplink channel information, and hybrid automatic repeat request HARQ information, that is collected by the first device or the second device in a recent communication process.

For example, the first device or the second device locally stores three pairs of neural networks: a neural network pair #1, a neural network pair #2, and a neural network pair #3. The neural network pair described in this application includes a neural network that is set in the first device and a neural network that is set in the second device.

The neural network pair #1 (for example, the first neural network and the second neural network) may be applied to a communication system when the communication system data is communication system data #1; the neural network pair #2 (for example, the third neural network and the fourth neural network) may be applied to a communication system when the communication system data is communication system data #2; and the neural network pair #3 (for example, a ninth neural network and a tenth neural network) may be applied to a communication system when the communication system data is communication system data #3. When the first device or the second device determines that the neural network pair # 1 (for example, the first neural network and the second neural network) needs to be updated, and currently obtained communication system data is the communication system data #2, the first device or the second device may update the neural network pair #1 in the communication system to the neural network pair #2, that is, update the first neural network to the third neural network and update the second neural network to the fourth neural network.

It should be noted that, in the manner 1, the first device or the second device stores a plurality of available neural network pairs (referred to as the first set), and when a neural network pair in a current communication system is inappropriate (for example, the degree of difference or the similarity between the first information and the second information falls beyond the acceptable range), one appropriate neural network pair may be selected from the plurality of available neural network pairs.

Manner 2:

The first neural network and the second neural network are adjusted based on the communication system data, so that an adjusted first neural network and an adjusted second neural network can be used in the communication system. The adjusted first neural network may be referred to as the third neural network, and the adjusted second neural network may be referred to as the fourth neural network.

For example, the first neural network corresponds to a network architecture #1 and a network weight #1, and the second neural network corresponds to a network architecture #2 and a network weight #2. When the first device or the second device determines that the first neural network and the second neural network need to be updated, the first device or the second device determines, based on current communication system data, that an updated first neural network and an updated second neural network can be used for information feedback when the network weight corresponding to the first neural network is updated to a network weight #3 and the network weight corresponding to the second neural network is updated to a network weight #4.

It should be noted that, adjustment of a neural network in the manner 2 means that a network architecture corresponding to the neural network is not changed, but only a network weight in the network architecture is changed. This may be understood as changing a network weight corresponding to a specific neural network based on the neural network, to update the neural network.

Manner 3:

A ninth neural network and a tenth neural network are selected from a second set based on communication system data, and the ninth neural network and the tenth neural network are further adjusted to obtain an appropriate third neural network and an appropriate fourth neural network.

For example, the first device or the second device locally stores three pairs of neural networks: a neural network pair #1, a neural network pair #2, and a neural network pair #3. The neural network pair #1 (for example, the first neural network and the second neural network) may be applied to a communication system when the communication system data is communication system data #1; the neural network pair #2 (for example, a seventh neural network and an eighth neural network) may be applied to a communication system when the communication system data is communication system data #2; and the neural network pair #3 (for example, the ninth neural network and the tenth neural network) may be applied to a communication system when the communication system data is communication system data #3.

When the first device or the second device determines that the neural network pair #1 (for example, the first neural network and the second neural network) needs to be updated, and currently obtained communication system data is communication system data #4,

the first device or the second device may first select the neural network pair #3 from the second set, that is, update the first neural network to the ninth neural network, and update the second neural network to the tenth neural network. Then, the first device or the second device determines, based on the communication system data #4, that the ninth neural network and the tenth neural network can be applied to the communication system when a network weight corresponding to the ninth neural network is updated to a network weight #5 and a network weight corresponding to the tenth neural network is updated to a network weight #6.

It should be understood that, the manner 1 to the manner 3 are merely examples for describing how to obtain the third neural network and the fourth neural network through update, and do not constitute any limitation on the protection scope of this application. The foregoing update procedure may alternatively be completed in another manner. For example, the first neural network and the second neural network may be adjusted for a plurality of times to obtain an appropriate third neural network and an appropriate fourth neural network. It should be noted that, after the first device or the second device performs the foregoing step of updating the first neural network and the second neural network, if the appropriate third neural network and the appropriate fourth neural network cannot be selected and/or obtained through adjustment, the first device or the second device may choose to roll back an information feedback manner to a non-AI mode. In other words, even if the first device or the second device selects and/or obtains through adjustment the appropriate third neural network and the appropriate fourth neural network after performing the foregoing step of updating the first neural network and the second neural network, the first device or the second device may also choose to roll back the information feedback manner to the non-AI mode.

The non-AI mode includes a mode in which information transmission is implemented not based on a neural network. For example, when the first neural network and the second neural network are a compressor and a decompressor, the non-AI mode may be understood as implementing information transmission between the first device and the second device in a conventional compression and decompression manner. For another example, when the first neural network and the second neural network are a modulator and a demodulator, the non-AI mode may be understood as implementing information transmission between the first device and the second device in a conventional modulation and demodulation manner. For another example, when the first neural network and the second neural network are an encoder and a decoder, the non-AI mode may be understood as implementing information transmission between the first device and the second device in a conventional encoding and decoding manner.

For example, before the first device or the second device determines that the first neural network and the second neural network need to be updated, and performs the foregoing step of updating the first neural network and the second neural network, according to the neural network adjustment method provided in this embodiment of this application, to ensure that information transmission is no longer performed based on a communication system including an inappropriate first neural network and an inappropriate second neural network, the first device and the second device may first roll back to the non-AI mode to perform information transmission, to avoid impact on timeliness of information transmission. In this application, the non-AI mode may be referred to as a second mode, and an AI mode may be referred to as a first mode. To be specific, the method procedure shown in FIG. 5(a)-1 and FIG. 5(a)-2 further includes S522a: Roll back to the non-AI mode.

By way of example but not limitation, in this embodiment of this application, that the first device or the second device determines to roll back to the non-AI mode to perform information transmission includes the following two possibilities.

Possibility 1: Predefinition in a protocol: The protocol specifies that when the first neural network and the second neural network need to be updated, rollback to the non-AI mode may be performed on an information feedback mode.

Possibility 2: Indication of the peer device: The first device sends a second notification message to the second device; or the second device sends a second notification message to the first device. To be specific, the method procedure shown in FIG. 5(a)-1 and FIG. 5(a)-2 further includes S521a: Send the second notification message. The second notification message is used to indicate the peer device to roll back to the non-AI mode to provide an information feedback.

For example, that the peer end device sends a second notification message to the local device includes: The local device receives, on a PUCCH, a PDCCH, a PUSCH, a PDSCH, a UL grant, or a RACH, the second notification message sent by the peer device.

It should be understood that, because PUCCH and PDCCH resources are limited, sending the second notification message to the local device on the PUSCH or the PDSCH can improve flexibility of the solution.

The peer device in this application includes the first device or the second device. When the first device is the local device, the second device is the peer device. When the second device is the local device, the first device is the peer device.

For example, the first device determines that the first neural network and the second neural network need to be updated, and the first device sends the second notification message to the second device. For another example, the second device determines that the first neural network and the second neural network need to be updated, and the second device sends the second notification message to the first device. For another example, the first device determines that the first neural network and the second neural network need to be updated, and the second device sends the second notification message to the first device. For another example, the second device determines that the first neural network and the second neural network need to be updated, and the first device sends the second notification message to the second device.

In a possible implementation, that the local device falls, based on an indication of the peer device, back to the non-AI mode to perform information transmission includes: The local device switches the information transmission mode from the AI mode to the non-AI mode.

It should be noted that, in this embodiment of this application, an occasion for the local device to switch the information transmission mode is not limited, and may be any moment after the indication of the peer device is received.

For example, the local device receives the indication from the peer end device, and starts to switch the information transmission mode from the AI mode to the non-AI mode within fourth preset duration after a fourth start moment or after the fourth preset duration. The fourth start moment includes a moment at which the local device receives the second notification message from the peer device.

In another possible implementation, that the peer device rolls back to the non-AI mode to perform information transmission includes: The peer device switches the information transmission mode from the AI mode to the non-AI mode.

It should be noted that, in this embodiment of this application, an occasion for the peer device to switch the information transmission mode is not limited, and may be any moment.

For example, the peer device starts to switch the information transmission mode from the AI mode to the non-AI mode within fourth preset duration after a fourth start moment or after the fourth preset duration. The fourth start moment includes a moment at which the peer device sends the second notification message to the local device.

In a possible implementation, in addition to the first neural network and the second neural network, the system shown in FIG. 5(c) in the AI mode further includes other neural networks (for example, the seventh neural network and the eighth neural network).

For example, the first neural network and the second neural network are used for channel encoding and decoding, and the seventh neural network and the eighth neural network are used for modulation and demodulation. When the local device and the peer device in the communication system determine to roll back to the non-AI mode for information transmission, it may be understood that different information processing procedures included in the communication system all roll back to the non-AI mode, that is, the foregoing channel encoding and decoding and modulation and demodulation are all performed in the non-AI mode.

Further, after the first device or the second device completes the foregoing update step, the first device or the second device needs to send the obtained information about the third neural network and/or the obtained information about the fourth neural network to the peer device. To be specific, the method procedure shown in FIG. 5(a)-1 and FIG. 5(a)-2 further includes S520a: Send the information about the third neural network and/or the information about the fourth neural network.

For example, when SS 10a is performed by the first device, the first device sends the information about the third neural network and/or the information about the fourth neural network to the second device.

For example, when SS 10a is performed by the second device, the second device sends the information about the third neural network and/or the information about the fourth neural network to the first device.

Specifically, content sent in S520a includes the following two possibilities.

Possibility 1: The peer device needs to configure the third neural network, that is, sends the information about the third neural network, or sends the information about the third neural network and the information about the fourth neural network in S520a.

Possibility 2: The peer device needs to configure the fourth neural network, that is, sends the information about the fourth neural network, or sends the information about the third neural network and the information about the fourth neural network in S520a.

It should be noted that, in this embodiment of this application, the first device or the second device may send, to the peer device, the information about the third neural network that needs to be configured by the peer device or the information about the fourth neural network that needs to be configured by the peer device; or

the first device or the second device may send the information about the third neural network and the information about the fourth neural network to the peer device, and subsequently the peer device may determine, based on the third neural network and the fourth neural network, whether the third neural network and the fourth neural network need to be updated.

Specifically, specific content of the information about the third neural network and the information about the fourth neural network is separately described for the foregoing three different manners of updating the first neural network and the second neural network to obtain the third neural network and the fourth neural network. In correspondence to the foregoing update manners, the following also provides three manners for description.

Manner 1:

In correspondence to the foregoing update manner 1, the third neural network and the fourth neural network are selected from the first set. In the manner 1, the specific content of the information about the third neural network and the information about the fourth neural network includes the following several possibilities.

Possibility 1: The first device and the second device each locally store the third neural network, and an index (index) of the third neural network in the first device is the same as an index of the third neural network in the second device. In this case, the information about the third neural network may be the index of the third neural network. Similarly, the first device and the second device each locally store the fourth neural network, and an index of the fourth neural network in the first device is the same as an index of the fourth neural network in the second device. In this case, the information about the fourth neural network may be the index of the fourth neural network.

Optionally, the index of the third neural network is the same as the index of the fourth neural network. In this case, the information about the third neural network and the information about the fourth neural network are the same index. In other words, when the information about the third neural network and the information about the fourth neural network need to be sent, the same index needs to be sent.

It should be noted that, the index in this embodiment of this application may be understood as an identifier (identifier, ID), used to identify a neural network.

Possibility 2: The third neural network may be represented by using a first network weight and a first network structure. In this case, the information about the third neural network may be the first network weight and the first network structure. Similarly, the fourth neural network may be represented by using a second network weight and a second network structure. In this case, the information about the fourth neural network may be the second network weight and the second network structure.

For example, a neural network in this embodiment of this application includes at least one of neural networks such as a convolutional neural network (convolutional neural network, CNN), a deep neural network (deep neural network, DNN), and a recurrent neural network (recurrent neural network, RNN). The DNN may also be referred to as a fully connected neural network (fully connected layers, FC), and is described as a DNN/FC below.

It may be understood that the neural network in this embodiment of this application may include a neural network such as a CNN, a DNN/FC, or an RNN, or may include a neural network including a CNN, a DNN/FC, and an RNN. For example, the neural network in this embodiment of this application includes a DNN/FC and an RNN.

By way of example but not limitation, network structure indication information in information about the neural network in this embodiment of this application may include neural network type indication information and neural network structure indication information.

For example, when the neural network includes a CNN, the neural network type indication information in the network structure indication information is used to indicate that the neural network is the CNN; and the neural network structure indication information in the network structure indication information includes at least one piece of information such as a quantity of neural network layers, a quantity of convolution kernels of each layer, a scale of each convolution kernel, and an activation function indication of each layer.

When the scale of the convolution kernel of each layer of neural network in the neural network is the same, scale information of each convolution kernel included in the neural network structure indication information may be understood as including scale information of one convolution kernel corresponding to each layer of neural network or scale information of one convolution kernel corresponding to the entire neural network. Similarly, when activation function indication information of each layer of neural network in the neural network is the same, activation function indication information of each layer included in the neural network structure indication information may be understood as including one piece of activation function indication information corresponding to the entire neural network.

For another example, when the neural network includes a DNN/FC, the neural network type indication information in the network structure indication information is used to indicate that the neural network is the DNN/FC; and the neural network structure indication information in the network structure indication information includes at least one piece of information such as a quantity of neural network layers, a quantity of nodes at each layer, and an activation function indication of each layer.

When activation function indication information of each layer of neural network in the neural network is the same, the activation function indication information of each layer included in the neural network structure indication information may be understood as including one piece of activation function indication information corresponding to the entire neural network.

For another example, when the neural network includes an RNN, the neural network type indication information in the network structure indication information is used to indicate that the neural network is the RNN; and the neural network structure indication information in the network structure indication information includes at least one piece of information such as a position of an RNN ring and an activation function indication.

It should be noted that, the neural network in this application may include a plurality of CNNs, and when the neural network includes the CNN, there may be a plurality of sets of corresponding network structure indication information. Similarly, the neural network in this application may include a plurality of DNNs/FCs, and when the neural network includes the DNN/FC, there may be a plurality of sets of corresponding network structure indication information. The neural network in this application may include a plurality of RNNs, and when the neural network includes the RNN, there may be a plurality of sets of corresponding network structure indication information. In addition, the neural network in this application may further include any combination of a CNN, a DNN/FC, and an RNN. In this case, the network structure indication information may be a combination of the foregoing network structure indication information.

By way of example but not limitation, network weight indication information in the information about the neural network in this embodiment of this application may include weight interpretation rule indication information and weight value arrangement information. The weight interpretation rule indication information is optional.

The weight interpretation rule indication information may include at least one piece of information such as a quantity of weights, a quantity of quantized bits of each weight, and a weight position sorting rule indication.

It should be understood that, the foregoing is merely an example for describing a possible form of the network structure indication information and a possible specific form of the network weight indication information corresponding to the neural network when the neural network is of different types, and does not constitute any limitation on the protection scope of this application. When the neural network is of another type, the network structure indication information and the network weight indication information can be correspondingly changed. In this embodiment of this application, it is only limited that the neural network can be determined by a network weight and a network architecture that correspond to the neural network, and specific representation forms of the network weight and the network architecture are not limited.

Possibility 3: The first device and the second device each locally store a first network structure corresponding to the third neural network, an index of the first network structure in the first device is the same as an index of the first network structure in the second device, and the third neural network may be represented by using a first network weight and the first network structure. In this case, the information about the third neural network may be the index of the first network structure and the first network weight. Similarly, the first device and the second device each locally store a second network structure corresponding to the fourth neural network, an index of the second network structure in the first device is the same as an index of the second network structure in the second device, and the fourth neural network may be represented by using a second network weight and the second network structure. In this case, the information about the fourth neural network may be the index of the second network structure and the second network weight.

Optionally, the index of the first network structure is the same as the index of the second network structure. In this case, the index of the first network structure and the index of the second network structure are the same index.

Possibility 4: The first device and the second device each locally store a first network structure corresponding to the third neural network, an index of the first network structure in the first device is the same as an index of the first network structure in the second device, the third neural network may be represented by using a first network weight and the first network structure, the first device and the second device each locally store the first network weight corresponding to the third neural network, and an index of the first network weight in the first device is the same as an index of the first network weight in the second device. In this case, the information about the third neural network may be the index of the first network structure and the index of the first network weight. Similarly, the first device and the second device each locally store a second network structure corresponding to the fourth neural network, an index of the second network structure in the first device is the same as an index of the second network structure in the second device, the fourth neural network may be represented by using a second network weight and the second network structure, the first device and the second device each locally store the second network weight corresponding to the fourth neural network, and an index of the second network weight in the first device is the same as an index of the second network weight in the second device. In this case, the information about the fourth neural network may be the index of the second network structure and the index of the second network weight.

Optionally, the index of the first network structure is the same as the index of the second network structure. In this case, the index of the first network structure and the index of the second network structure are the same index. The index of the first network weight is the same as the index of the second network weight. In this case, the index of the first network weight and the index of the second network weight are the same index.

Possibility 5: The first device and the second device each locally store only a first network structure corresponding to the third neural network, and the third neural network may be represented by using a first network weight and the first network structure. In this case, the information about the third neural network may be the first network weight. Similarly, the first device and the second device each locally store only a second network structure corresponding to the fourth neural network, and the fourth neural network may be represented by using a second network weight and the second network structure. In this case, the information about the third neural network may be the first network weight.

Possibility 6: The first device and the second device each locally store only a first network structure corresponding to the third neural network, the third neural network may be represented by using a first network weight and the first network structure, the first device and the second device each locally store the first network weight corresponding to the third neural network, and an index of the first network weight in the first device is the same as an index of the first network weight in the second device. In this case, the information about the third neural network may be the index of the first network weight. Similarly, the first device and the second device each locally store only a second network structure corresponding to the fourth neural network, the fourth neural network may be represented by using a second network weight and the second network structure, the first device and the second device each locally store the second network weight corresponding to the fourth neural network, and an index of the second network weight in the first device is the same as an index of the second network weight in the second device. In this case, the information about the fourth neural network may be an index of the second network weight.

Optionally, the index of the first network weight is the same as the index of the second network weight. In this case, the index of the first network weight and the index of the second network weight are the same index.

Possibility 7: Network structures corresponding to the first neural network and the third neural network are the same, and a variation between a third network weight corresponding to the first neural network and a first network weight corresponding to the third neural network is a first network weight variation. In this case, the information about the third neural network may be the first network weight variation. Similarly, network structures corresponding to the second neural network and the fourth neural network are the same, and a variation between a fourth network weight corresponding to the second neural network and a second network weight corresponding to the fourth neural network is a second network weight variation. In this case, the information about the fourth neural network may be the second network weight variation.

By way of example but not limitation, network weight variation indication information in the information about the neural network in this embodiment of this application may include one or more of weight position information, weight interpretation rule indication information, weight value variation arrangement information, and weight value arrangement information.

For example, the weight variation indication information includes the weight interpretation rule indication information, the weight position information, and the weight value arrangement information. For another example, the weight variation indication information includes the weight interpretation rule indication information, the weight position information, and the weight value variation arrangement information. For another example, the weight variation indication information includes the weight interpretation rule indication information and the weight value variation arrangement information. For another example, the weight variation indication information includes the weight position information and the weight value arrangement information. For another example, the weight variation indication information includes the weight position information and the weight value variation arrangement information. For another example, the weight variation indication information includes the weight value variation arrangement information.

The weight interpretation rule indication information is optional, and a sequence of carrying three types of information: a weight position set, the weight interpretation rule indication information, and the weight value arrangement information may be randomly combination. Details are not described herein.

It should be understood that, the weight position set includes at least one weight position. A weight in this embodiment of this application includes the following several granularities:
a transfer weight (for example, weights of different layers and different nodes in a DNN/FC neural network), a convolution kernel weight (for example, weights corresponding to different convolution kernels in a CNN neural network), and a transfer weight of an RNN ring (for example, weights corresponding to different RNN rings in an RNN neural network) for connecting two nodes.

Further, different weight granularities correspond to different weight position data structures, and the weight position data structure includes the following several possibilities:

possibility 1: a sequence number of a weight layer and a weight sequence number in the layer (where for example, different weights included in a DNN/FC neural network may be determined by the sequence number of the weight layer and the weight sequence number in the layer), where a difference between the weight layer and a network layer lies in that the network layer refers to a network layer including nodes, and the weight layer refers to a weight layer including transfer weights of different nodes between two network layers;

possibility 2: a sequence number of a weight layer and a convolution kernel sequence number in the layer (where for example, different weights included in a CNN neural network may be determined based on the weight layer sequence number and the intra-layer convolution kernel sequence number); and

possibility 3: a start node position of an RNN ring and an end node position of the RNN ring (where for example, different weights included in an RNN neural network may be determined by the start node position of the RNN ring and the end node position of the RNN ring).

It can be learned from the foregoing weight position data structure that a position of a node is involved (for example, a weight position data structure in an RNN neural network relates to a start node position of an RNN ring and an end node position of the RNN ring). Therefore, this embodiment of this application further provides a node position data structure: a sequence number of a node layer and a node sequence number in the node layer. In other words, a position of a node may be determined based on a sequence number of a node layer in which the node is located and a node sequence number in the node layer.

The weight interpretation rule indication information may include at least one piece of information such as a quantity of weights, a quantity of quantized bits of each weight, and a weight position sorting rule indication.

A relative sequence of a plurality of weight positions included in the weight position set may be determined by the weight position sorting rule indication, or may be predefined in a protocol. The following briefly describes how to determine the relative sequence of the plurality of weight positions based on the weight position sorting rule indication.

For a DNN/FC neural network, weight sequence numbers in a layer are first traversed (in ascending or descending order), and then weight layer sequence numbers are traversed (in ascending or descending order).

For a CNN neural network, convolution kernel sequence numbers in a layer are first traversed (in ascending or descending order), and then weight layer sequence numbers are traversed (in ascending or descending order).

For an RNN neural network, an end node position of an RNN ring is first traversed (generally, the RNN ring is placed on a DNN/FC, and node sequence numbers in a layer are first traversed in ascending or descending order, and then node layer sequence numbers are traversed in ascending or descending order), and then a start node position of the RNN ring is traversed (the node sequence numbers in the layer are first traversed in ascending or descending order, and then the node layer sequence numbers are traversed in ascending or descending order); or

for an RNN neural network, a start node position of an RNN ring is first traversed (generally, the RNN ring is placed on a DNN/FC, and node sequence numbers in a layer are first traversed in ascending or descending order, and then node layer sequence numbers are traversed in ascending or descending order), and then an end node position of the RNN ring is traversed (the node sequence numbers in the layer are first traversed in ascending or descending order, and then the node layer sequence numbers are traversed in ascending or descending order).

By way of example but not limitation, network weight variation indication information in the information about the neural network in this embodiment of this application may include a weight position and a weight variation at the weight position.

By way of example but not limitation, network weight variation indication information in the information about the neural network in this embodiment of this application may include information about a position at which no weight exists and weight variations at all positions.

It should be understood that, the foregoing is merely an example for describing a possible specific form of the network weight variation indication information corresponding to the neural network, and does not constitute any limitation on the protection scope of this application. In this embodiment of this application, it is only limited that the neural network can be determined by the weight variation indication information, and a specific representation form of the network weight variation indication information is not limited.

It should be noted that, specific content of the seven possibilities of the information about the third neural network and the information about the fourth neural network listed in the foregoing manner 1 is merely examples, and does not constitute any limitation on the protection scope of this application. Simple variations of the foregoing possibility 1 to possibility 7 and possible content of other information about the third neural network and other information about the fourth neural network also fall within the protection scope of this application. For example, the information about the third neural network may be indexes of a network structure and a network weight that correspond to the third neural network. Examples are not described herein one by one.

In addition, in the manner 1, sending the information about the fourth neural network, or sending the information about the third neural network and the information about the fourth neural network in correspondence to the foregoing update manner 1 is mainly described. However, in this application, it is not limited that sending the information about the fourth neural network, or sending the information about the third neural network and the information about the fourth neural network in the manner 1 cannot be applied to the scenarios/scenario shown in the foregoing update manner 2 and/or the foregoing update manner 3. In other words, when the update manner is the foregoing update manner 2 and/or the foregoing update manner 3, the manner 1 may also be selected as a manner of sending the information about the fourth neural network, or sending the information about the third neural network and the information about the fourth neural network.

Manner 2:

In correspondence to the foregoing update manner 2, the first neural network and the second neural network are adjusted to obtain an appropriate third neural network and an appropriate fourth neural network. To distinguish between the information about the third neural network and the fourth neural network in the foregoing manner 1, the appropriate third neural network obtained through adjustment in the manner 2 may also be referred to as an adjusted first neural network, and the appropriate fourth neural network obtained through adjustment may also be referred to as an adjusted second neural network.

In the manner 1, specific content of the information about the third neural network and the information about the fourth neural network includes the following several possibilities.

Possibility 1: The first device and the second device each locally store only a third network structure corresponding to the first neural network, and an adjusted first neural network may be represented by using the third network structure and a third network weight. In this case, the information about the third neural network may be the third network weight. Similarly, the first device and the second device each locally store only a fourth network structure corresponding to the second neural network, and an adjusted second neural network may be represented by using the fourth network structure and a fourth network weight. In this case, the information about the fourth neural network may be the fourth network weight.

Possibility 2: The first device and the second device each locally store only a third network structure corresponding to the first neural network, and a difference between an adjusted first neural network and the first neural network may be represented by using a first network weight variation. In this case, the information about the third neural network may be the third network weight variation. Similarly, the first device and the second device each locally store only a fourth network structure corresponding to the second neural network, and a difference between an adjusted second neural network and the second neural network may be represented by using a fourth network weight variation. In this case, the information about the fourth neural network may be the fourth network weight variation.

It should be noted that, specific content of the seven possibilities of the information about the third neural network and the information about the fourth neural network listed in the foregoing manner 2 is merely examples, and does not constitute any limitation on the protection scope of this application. Simple variations of the foregoing possibility 1 and possibility 2 and possible content of other information about the third neural network and other information about the fourth neural network also fall within the protection scope of this application. For example, the information about the third neural network may be an index of a network weight corresponding to the third neural network. Examples are not described herein one by one.

In addition, in the manner 2, sending the information about the fourth neural network is sent, or sending the information about the third neural network and the information about the fourth neural network in correspondence to the foregoing update manner 2 is mainly described. However, in this application, it is not limited that sending the information about the fourth neural network, or sending the information about the third neural network and the information about the fourth neural network in the manner 2 cannot be applied to the scenarios/scenario shown in the foregoing update manner 1 and/or the foregoing update manner 3. In other words, when the update manner is the foregoing update manner 1 and/or the foregoing update manner 3, the manner 2 may also be selected as a manner of sending the information about the fourth neural network, or sending the information about the third neural network and the information about the fourth neural network.

Manner 3:

In correspondence to the foregoing update manner 3, an appropriate third neural network and an appropriate fourth neural network are selected and obtained through adjustment.

In the manner 3, specific content of the information about the third neural network and the information about the fourth neural network includes the following several possibilities.

Possibility 1: A first network structure corresponding to the third neural network is the same as a third network structure corresponding to the first neural network, and the third neural network may be represented by using the first network structure and a first network weight. In this case, the information about the third neural network may be the first network weight and third indication information. The third indication is used to indicate that the first network structure corresponding to the third neural network is the same as the third network structure corresponding to the first neural network, that is, indicate that a network structure is not changed. Similarly, a second network structure corresponding to the fourth neural network is the same as a fourth network structure corresponding to the second neural network, and the fourth neural network may be represented by using the second network structure and a second network weight. In this case, the information about the fourth neural network may be the second network weight and fourth indication information. The fourth indication is used to indicate that the second network structure corresponding to the fourth neural network is the same as the fourth network structure corresponding to the second neural network, that is, indicate that a network structure is not changed.

Possibility 2: A first network structure corresponding to the third neural network is the same as a third network structure corresponding to the first neural network, the third neural network may be represented by using the first network structure and a first network weight, the first device and the second device each locally store the first network weight corresponding to the third neural network, and an index of the first network weight in the first device is the same as an index of the first network weight in the second device. In this case, the information about the third neural network may be the index of the first network weight and third indication information. The third indication is used to indicate that the first network structure corresponding to the third neural network is the same as the third network structure corresponding to the first neural network, that is, indicate that a network structure is not changed. Similarly, a second network structure corresponding to the fourth neural network is the same as a fourth network structure corresponding to the second neural network, the fourth neural network may be represented by using the second network structure and a second network weight, the first device and the second device each locally store the second network weight corresponding to the fourth neural network, and an index of the second network weight in the first device is the same as an index of the second network weight in the second device. In this case, the information about the fourth neural network may be the index of the second network weight and fourth indication information. The fourth indication is used to indicate that the second network structure corresponding to the fourth neural network is the same as the fourth network structure corresponding to the second neural network, that is, indicate that a network structure is not changed.

Optionally, the index of the first network weight is the same as the index of the second network weight. In this case, the index of the first network weight and the index of the second network weight are the same index.

Possibility 3: A first network structure corresponding to the third neural network is the same as a third network structure corresponding to the first neural network, the third neural network may be represented by using the first network structure and a first network weight, the first neural network may be represented by using the third network structure and a third network weight, and a variation between the third network weight and the first network weight is a fifth network weight variation. In this case, the information about the third neural network may be the fifth network weight variation and third indication information. The third indication is used to indicate that the first network structure corresponding to the third neural network is the same as the third network structure corresponding to the first neural network, that is, indicate that a network structure is not changed. Similarly, a second network structure corresponding to the fourth neural network is the same as a fourth network structure corresponding to the second neural network, the fourth neural network may be represented by using the second network structure and a second network weight, the second neural network may be represented by using the fourth network structure and a fourth network weight, and a variation between the fourth network weight and the second network weight is a sixth network weight variation. In this case, the information about the fourth neural network may be the sixth network weight variation and the fourth indication information. The fourth indication is used to indicate that the second network structure corresponding to the fourth neural network is the same as the fourth network structure corresponding to the second neural network, that is, indicate that a network structure is not changed.

Possibility 4: A first network structure corresponding to the third neural network is different from or the same as a third network structure corresponding to the first neural network, the first device and the second device each locally store the third neural network, and an index of the third neural network in the first device is the same as an index of the third neural network in the second device. In this case, the information about the third neural network may be the index of the third neural network, and the information about the third neural network may further include indication information used to indicate whether a network structure is changed. Similarly, a second network structure corresponding to the fourth neural network is different from or the same as a fourth network structure corresponding to the second neural network, the first device and the second device each locally store the fourth neural network, and an index of the fourth neural network in the first device is the same as an index of the fourth neural network in the second device. In this case, the information about the fourth neural network may be the index of the fourth neural network, and the information about the fourth neural network may further include indication information used to indicate whether a network structure is changed.

Optionally, the index of the third neural network is the same as the index of the fourth neural network. In this case, the information about the third neural network and the information about the fourth neural network are the same index and include the indication information indicating whether the network structures are changed.

Possibility 5: A first network structure corresponding to the third neural network is different from a third network structure corresponding to the first neural network, and the third neural network may be represented by using the first network structure and a first network weight. In this case, the information about the third neural network may be the first network structure, the first network weight, and fifth indication information. The fifth indication is used to indicate that the first network structure corresponding to the third neural network is different from the third network structure corresponding to the first neural network, that is, indicate that a network structure is changed. Similarly, a second network structure corresponding to the fourth neural network is different from a fourth network structure corresponding to the second neural network, and the fourth neural network may be represented by using the second network structure and a second network weight. In this case, the information about the fourth neural network may be the second network structure, the second network weight, and sixth indication information. The sixth indication is used to indicate that the second network structure corresponding to the fourth neural network is different from the fourth network structure corresponding to the second neural network, that is, indicate that a network structure is changed.

Possibility 6: A first network structure corresponding to the third neural network is different from a third network structure corresponding to the first neural network, the third neural network may be represented by using the first network structure and a first network weight, the first device and the second device each locally store the first network structure, and an index of the first network structure in the first device is the same as an index of the first network structure in the second device. In this case, the information about the third neural network may be the first network weight, the index of the first network structure, and fifth indication information. The fifth indication is used to indicate that the first network structure corresponding to the third neural network is different from the third network structure corresponding to the first neural network, that is, indicate that a network structure is changed. Similarly, a second network structure corresponding to the fourth neural network is different from a fourth network structure corresponding to the second neural network, the fourth neural network may be represented by using the second network structure and a second network weight, the first device and the second device each locally store the second network structure, and an index of the second network structure in the first device is the same as an index of the second network structure in the second device. In this case, the information about the fourth neural network may be the second network weight, the index of the second network structure, and sixth indication information. The sixth indication is used to indicate that the second network structure corresponding to the fourth neural network is different from the fourth network structure corresponding to the second neural network, that is, indicate that a network structure is changed.

Optionally, the index of the first network structure is the same as the index of the second network structure. In this case, the index of the first network structure and the index of the second network structure are the same index.

Possibility 7: A first network structure corresponding to the third neural network is different from a third network structure corresponding to the first neural network, the third neural network may be represented by using the first network structure and a first network weight, the first device and the second device each locally store the first network structure and the first network weight, an index of the first network structure in the first device is the same as an index of the first network structure in the second device, and an index of the first network weight in the first device is the same as an index of the first network weight in the second device. In this case, the information about the third neural network may be the index of the first network weight, the index of the first network structure, and fifth indication information. The fifth indication is used to indicate that the first network structure corresponding to the third neural network is different from the third network structure corresponding to the first neural network, that is, indicate that a network structure is changed. Similarly, a second network structure corresponding to the fourth neural network is different from a fourth network structure corresponding to the second neural network, the fourth neural network may be represented by using the second network structure and a second network weight, the first device and the second device each locally store the second network structure and the second network weight, an index of the second network structure in the first device is the same as an index of the second network structure in the second device, and an index of the second network weight in the first device is the same as an index of the second network weight in the second device. In this case, the information about the fourth neural network may be the index of the second network weight, the index of the second network structure, and sixth indication information. The sixth indication is used to indicate that the second network structure corresponding to the fourth neural network is different from the fourth network structure corresponding to the second neural network, that is, indicate that a network structure is changed.

Optionally, the index of the first network structure is the same as the index of the second network structure. In this case, the index of the first network structure and the index of the second network structure are the same index. The index of the first network weight is the same as the index of the second network weight. In this case, the index of the first network weight and the index of the second network weight are the same index.

In addition, in the manner 3, sending the information about the fourth neural network, or sending the information about the third neural network and the information about the fourth neural network in correspondence to the foregoing update manner 3 is mainly described. However, in this application, it is not limited that sending the information about the fourth neural network, or sending the information about the third neural network and the information about the fourth neural network in the manner 3 cannot be applied to the scenarios/scenario shown in the foregoing update manner 1 and/or the foregoing update manner 2. In other words, when the update manner is the foregoing update manner 1 and/or the foregoing update manner 2, the manner 3 may also be selected as a manner of sending the information about the fourth neural network, or sending the information about the third neural network and the information about the fourth neural network.

By way of example but not limitation, before sending the information about the third neural network and/or the information about the fourth neural network in this embodiment of this application, the first device or the second device may determine, in the following manners, to send the information about the third neural network and/or the information about the fourth neural network to the peer device.

Manner 1:

After performing S510a to obtain the third neural network and the fourth neural network, the first device or the second device sends first information to the peer device. The first information is used to notify the peer device to receive the information about the third neural network and/or the information about the fourth neural network. To be specific, the method procedure shown in FIG. 5(a)-1 and FIG. 5(a)-2 further includes S530a: Send the first information.

For example, that the transmit end device sends first information to the receive end device includes: The local device sends the first information to the receive end device on a PUCCH, a PDCCH, a PUSCH, a PDSCH, a UL grant, or a RACH.

It should be understood that, because PUCCH and PDCCH resources are limited, sending the first information to the receive end device on the PUSCH or the PDSCH can improve flexibility of the solution.

Further, after receiving the first information, the peer device determines that the peer device can receive the information about the third neural network and/or the information about the fourth neural network from the first device or the second device. To be specific, the method procedure shown in FIG. 5(a)-1 and FIG. 5(a)-2 further includes S531a: Send a first response message, where the first response message is used to indicate that the first device or the second device can send the information about the third neural network and/or the information about the fourth neural network.

For example, that the transmit end device sends a first response message to the receive end device includes: The transmit end device sends the first response message to the receive end device on a PUCCH, a PDCCH, a PUSCH, a PDSCH, a UL grant, or a RACH.

For example, the first response message is carried in on the uplink grant (uplink grant, UL Grant), and the UL grant includes a preset field indicating whether the first device or the second device sends the information about the third neural network and/or the information about the fourth neural network.

For example, the preset field includes 2 bits. When a bit value of the preset field is 00, it indicates that the first device or the second device does not send the information about the third neural network or the information about the fourth neural network. When a bit value of the preset field is 01, it indicates that the first device or the second device does not send the information about the third neural network but sends the information about the fourth neural network. When a bit value of the preset field is 10, it indicates that the first device or the second device does not send the information about the fourth neural network but sends the information about the third neural network. When a bit value of the preset field is 11, it indicates that the first device or the second device sends the information about the third neural network and the information about the fourth neural network.

It should be noted that meanings represented by a bit quantity and the bit value of the preset field included in the UL grant are merely examples, and do not constitute any limitation on the protection scope of this application.

It should be understood that, because PUCCH and PDCCH resources are limited, sending the first response message to the receive end device on the PUSCH or the PDSCH can improve flexibility of the solution.

Based on different execution bodies that perform S510a and different neural networks that need to be configured by the peer device, S530a and S531a in the manner 1 include the following several possibilities.

Possibility 1: When the first device updates the first neural network and the second neural network, and the second device needs to configure the third neural network, S530a is that the first device sends the first information to the second device, where the first information is used to notify the second device to receive the information about the third neural network, or the first information is used to notify the second device to receive the information about the third neural network and the information about the fourth neural network; and S531a is that the second device sends the first response message to the first device, where the first response message is used to indicate the first device to send the information about the third neural network, or the first response message is used to indicate the first device to send the information about the third neural network and the information about the fourth neural network.

Possibility 2: When the first device updates the first neural network and the second neural network, and the second device needs to configure the fourth neural network, S530a is that the first device sends the first information to the second device, where the first information is used to notify the second device to receive the information about the fourth neural network, or the first information is used to notify the second device to receive the information about the third neural network and the information about the fourth neural network; and S531a is that the second device sends the first response message to the first device, where the first response message is used to indicate the first device to send the information about the fourth neural network, or the first response message is used to indicate the first device to send the information about the third neural network and the information about the fourth neural network.

Possibility 3: When the second device updates the first neural network and the second neural network, and the first device needs to configure the third neural network, S530a is that the second device sends the first information to the first device, where the first information is used to notify the first device to receive the information about the third neural network, or the first information is used to notify the first device to receive the information about the third neural network and the information about the fourth neural network; and S531a is that the first device sends the first response message to the second device, where the first response message is used to indicate the second device to send the information about the third neural network, or the first response message is used to indicate the second device to send the information about the third neural network and the information about the fourth neural network.

Possibility 4: When the second device updates the first neural network and the second neural network, and the first device needs to configure the fourth neural network, S530a is that the second device sends the first information to the first device, where the first information is used to notify the first device to receive the information about the fourth neural network, or the first information is used to notify the first device to receive the information about the third neural network and the information about the fourth neural network; and S531a is that the first device sends the first response message to the second device, where the first response message is used to indicate the second device to send the information about the fourth neural network, or the first response message is used to indicate the second device to send the information about the third neural network and the information about the fourth neural network.

Manner 2:

After performing S510a to obtain the third neural network and the fourth neural network, the first device or the second device sends first information to the peer device. The first information is used to notify the peer device to receive the information about the third neural network and/or the information about the fourth neural network. To be specific, the method procedure shown in FIG. 5(a)-1 and FIG. 5(a)-2 further includes S530a: Send the first information.

Further, after receiving the first information, the peer device may not agree to perform information transmission based on the AI mode. For example, the peer device sends a second response message to the first device or the second device, where the second response message is used to indicate the first device or the second device to perform information transmission based on the non-AI mode. For another example, if the peer device does not send any response message to the first device or the second device within a period of time after receiving the first information, and the first device or the second device does not receive any response message within fourth preset duration after a time point at which the first device or the second device sends the first information, the first device or the second device may determine to perform information transmission based on a conventional information transmission mode.

In the manner 2, the method procedure shown in FIG. 5(a)-1 and FIG. 5(a)-2 further includes S532a: The peer device sends the second response message to the first device or the second device, or the peer device skips sending a response message to the first device or the second device within a period of time.

Based on different execution bodies that perform S510a and different neural networks that need to be configured by the peer device, S530a and S532a in the manner 2 include the following several possibilities.

Possibility 1: When the first device updates the first neural network and the second neural network, and the second device needs to configure the third neural network, S530a is that the first device sends the first information to the second device, where the first information is used to notify the second device to receive the information about the third neural network, or the first information is used to notify the second device to receive the information about the third neural network and the information about the fourth neural network; and S532a is that the second device sends the second response message to the first device, where the second response message is used to indicate the first device to perform information transmission based on the non-AI mode; or the second device skips sending a response message to the first device within a period of time.

For example, that the transmit end device sends a second response message to the receive end device includes: The transmit end device sends the second response message to the receive end device on a PUCCH, a PDCCH, a PUSCH, a PDSCH, a UL grant, or a RACH.

It should be understood that, because PUCCH and PDCCH resources are limited, sending the second response message to the receive end device on the PUSCH or the PDSCH can improve flexibility of the solution.

Possibility 2: When the first device updates the first neural network and the second neural network, and the second device needs to configure the fourth neural network, S530a is that the first device sends the first information to the second device, where the first information is used to notify the second device to receive the information about the fourth neural network, or the first information is used to notify the second device to receive the information about the third neural network and the information about the fourth neural network; and S532a is that the second device sends the second response message to the first device, where the second response message is used to indicate the first device to perform information transmission based on the non-AI mode; or the second device skips sending a response message to the first device within a period of time.

Possibility 3: When the second device updates the first neural network and the second neural network, and the first device needs to configure the third neural network, S530a is that the second device sends the first information to the first device, where the first information is used to notify the first device to receive the information about the third neural network, or the first information is used to notify the first device to receive the information about the third neural network and the information about the fourth neural network; and S532a is that the first device sends the second response message to the second device, where the second response message is used to indicate the second device to perform information transmission based on the non-AI mode; or the first device skips sending a response message to the second device within a period of time.

Possibility 4: When the second device updates the first neural network and the second neural network, and the first device needs to configure the fourth neural network, S530a is that the second device sends the first information to the first device, where the first information is used to notify the first device to receive the information about the fourth neural network, or the first information is used to notify the first device to receive the information about the third neural network and the information about the fourth neural network; and S532a is that the first device sends the second response message to the second device, where the second response message is used to indicate the second device to perform information transmission based on the non-AI mode; or the first device skips sending a response message to the second device within a period of time.

Manner 3:

The first device or the second device performs S510a to obtain the third neural network and the fourth neural network. The first device or the second device sends the information about the fourth neural network and/or the information about the third neural network sent to the second device after receiving second information.

It should be noted that, in this embodiment of this application, an occasion on which the first device or the second device sends the information about the fourth neural network and/or the information about the third neural network to the peer device after receiving the second information sent by the peer device is not limited, and may be any moment after the second information is received.

For example, after receiving the second information sent by the peer device, the first device or the second device starts to send the information about the third neural network and/or the information about the fourth neural network to the peer device within first preset duration after a first start moment or after the first preset duration. The second information is used to indicate that the peer device can receive the information about the third neural network and/or the information about the fourth neural network. To be specific, the method procedure shown in FIG. 5(a)-1 and FIG. 5(a)-2 further includes S540a: Send the second information.

The first start moment includes any one of the following moments:

a moment at which the receive end device receives the first indication information from the transmit end device; a moment at which the transmit end device sends the second notification message to the receive end device; a moment at which the receive end device receives the second notification message from the transmit end device; a moment at which the transmit end device sends first signaling to the receive end device; or a moment at which the receive end device receives second signaling from the transmit end device, where the first signaling is used to indicate that timing starts, and the second signaling is used to indicate that an update starts.

For example, that the transmit end device sends second information to the receive end device includes: The transmit end device sends the second information to the receive end device on a PUCCH, a PDCCH, a PUSCH, a PDSCH, a UL grant, or a RACH.

It should be understood that, because PUCCH and PDCCH resources are limited, sending the second information to the receive end device on the PUSCH or the PDSCH can improve flexibility of the solution.

Based on different execution bodies that perform S510a and different neural networks that need to be configured by the peer device, S540a in the manner 3 includes the following several possibilities.

Possibility 1: When the first device updates the first neural network and the second neural network, and the second device needs to configure the third neural network, S540a is that the second device sends the second information to the first device, where the second information is used to indicate that the second device can receive the information about the third neural network, or the second information is used to indicate that the second device can receive the information about the third neural network and the information about the fourth neural network.

Possibility 2: When the first device updates the first neural network and the second neural network, and the second device needs to configure the fourth neural network, S540a is that the second device sends the second information to the first device, where the second information is used to indicate that the second device can receive the information about the fourth neural network, or the second information is used to indicate that the second device can receive the information about the third neural network and the information about the fourth neural network.

Possibility 3: When the second device updates the first neural network and the second neural network, and the first device needs to configure the third neural network, S540a is that the first device sends the second information to the second device, where the second information is used to indicate that the first device can receive the information about the third neural network, or the second information is used to indicate that the first device can receive the information about the third neural network and the information about the fourth neural network.

Possibility 4: When the second device updates the first neural network and the second neural network, and the first device needs to configure the fourth neural network, S540a is that the first device sends the second information to the second device, where the second information is used to indicate that the first device can receive the information about the fourth neural network, or the second information is used to indicate that the first device can receive the information about the third neural network and the information about the fourth neural network.

Manner 4:

The first device or the second device performs S510a to obtain the third neural network and the fourth neural network. The first device or the second device sends the information about the third neural network and/or the information about the fourth neural network to the peer device.

It should be noted that, in this embodiment of this application, an occasion on which the first device or the second device sends the information about the third neural network and/or the information about the fourth neural network to the peer device is not limited.

For example, the first device or the second device starts to send the information about the third neural network and/or the information about the fourth neural network to the peer device within second preset duration after a second start moment or after the second preset duration. To be specific, in the manner 4, S520a of sending the information about the third neural network and/or the information about the fourth neural network is directly performed after preset duration.

The second start moment includes any one of the following moments:

a moment at which the receive end device receives the first indication information from the transmit end device; a moment at which the transmit end device sends the second notification message to the receive end device; a moment at which the receive end device receives the second notification message from the transmit end device; a moment at which the transmit end device sends first signaling to the receive end device; or a moment at which the receive end device receives second signaling from the transmit end device, where the first signaling is used to indicate that timing starts, and the second signaling is used to indicate that an update starts.

Based on different execution bodies that perform S510a and different neural networks that need to be configured by the peer device, S520a in the manner 4 includes the following several possibilities.

Possibility 1: When the first device updates the first neural network and the second neural network, and the second device needs to configure the third neural network, S520a is that the first device sends the information about the third neural network to the second device, or the first device sends the information about the third neural network and the information about the fourth neural network to the second device.

Possibility 2: When the first device updates the first neural network and the second neural network, and the second device needs to configure the fourth neural network, S520a is that the first device sends the information about the fourth neural network to the second device, or the first device sends the information about the third neural network and the information about the fourth neural network to the second device.

Possibility 3: When the second device updates the first neural network and the second neural network, and the first device needs to configure the third neural network, S520a is that the second device sends the information about the third neural network to the first device; or the second device sends the information about the third neural network and the information about the fourth neural network to the first device.

Possibility 4: When the second device updates the first neural network and the second neural network, and the first device needs to configure the fourth neural network, S520a is that the second device sends the information about the fourth neural network to the first device; or the second device sends the information about the third neural network and the information about the fourth neural network to the first device.

It should be noted that, in the manner 3 and the manner 4, both the first device and the second device can learn of a moment at which the first neural network and the second neural network start to be updated (for example, the local device that performs update can learn of the moment, and the peer device perceives occurrence of the update based on an interruption or a mode change of information transmission). After the preset duration, the first device and the second device learn that the update is completed, and may agree to transmit the information about the third neural network obtained through update and/or the information about the fourth neural network obtained through update, without requiring an instruction (for example, the first information) to notify the peer device that the update is completed.

Manner 5:

After performing S510a to obtain the third neural network and the fourth neural network, the first device or the second device sends first information to the peer device. The first information is used to notify the peer device to receive the information about the third neural network and/or the information about the fourth neural network. To be specific, in the manner 5, the method procedure shown in FIG. 5(a)-1 and FIG. 5(a)-2 further includes S530a: Send the first information.

Further, after sending the first information, the first device or the second device starts to send the information about the third neural network and/or the information about the fourth neural network to the peer device within third preset duration or after the third preset duration. To be specific, in the manner 5, the method procedure shown in FIG. 5(a)-1 and FIG. 5(a)-2 further includes S520a: Send the information about the third neural network and/or the information about the fourth neural network.

A difference from the manner 1 lies in that in the manner 5, after sending the first information, the first device or the second device directly sends the information about the third neural network obtained through update and/or the information about the fourth neural network obtained through update to the peer device after a period of time without waiting for a response from the peer device.

Based on different execution bodies that perform S510a and different neural networks that need to be configured by the peer device, S530a and S520a in the manner 5 include the following several possibilities.

Possibility 1: When the first device updates the first neural network and the second neural network, and the second device needs to configure the third neural network, S530a is that the first device sends the first information to the second device, where the first information is used to notify the second device to receive the information about the third neural network, or the first information is used to notify the second device to receive the information about the third neural network and the information about the fourth neural network; and S520a is that the first device sends the information about the third neural network to the second device, or the first device sends the information about the third neural network and the information about the fourth neural network to the second device.

Possibility 2: When the first device updates the first neural network and the second neural network, and the second device needs to configure the fourth neural network, S530a is that the first device sends the first information to the second device, where the first information is used to notify the second device to receive the information about the fourth neural network, or the first information is used to notify the second device to receive the information about the third neural network and the information about the fourth neural network; and S520a is that the first device sends the information about the fourth neural network to the second device, or the first device sends the information about the third neural network and the information about the fourth neural network to the second device.

Possibility 3: When the second device updates the first neural network and the second neural network, and the first device needs to configure the third neural network, S530a is that the second device sends the first information to the first device, where the first information is used to notify the first device to receive the information about the third neural network, or the first information is used to notify the first device to receive the information about the third neural network and the information about the fourth neural network; and S520a is that the second device sends the information about the third neural network to the first device; or the second device sends the information about the third neural network and the information about the fourth neural network to the first device.

Possibility 4: When the second device updates the first neural network and the second neural network, and the first device needs to configure the fourth neural network, S530a is that the second device sends the first information to the first device, where the first information is used to notify the first device to receive the information about the fourth neural network, or the first information is used to notify the first device to receive the information about the third neural network and the information about the fourth neural network; and S520a is that the second device sends the information about the fourth neural network to the first device; or the second device sends the information about the third neural network and the information about the fourth neural network to the first device.

It should be understood that, the foregoing manner 1 to manner 5 are merely examples for description. The first device and the second device may determine, through negotiation, whether to transmit the information about the third neural network and/or the information about the fourth neural network, or the information about the third neural network and/or the information about the fourth neural network may be directly transmitted between the first device and the second device without negotiation. This does not constitute any limitation on the protection scope of this application, and whether to transmit the information about the third neural network and/or the information about the fourth neural network may be determined in another manner, for example, predefined in a protocol: After the local device obtains through update the third neural network and the fourth neural network, the protocol specifies that the peer device needs to receive the information about the third neural network obtained through update and/or the information about the fourth neural network obtained through update, and perform information transmission based on a communication system that includes the third neural network obtained through update and the fourth neural network obtained through update. Examples are not described one by one herein.

It should be further understood that after receiving the information about the third neural network and/or the information about the fourth neural network, the receive end device may locally determine whether performance of the third neural network and/or the fourth neural network meets a requirement, and determine whether to perform information transmission with the transmit end device by using the third neural network and the fourth neural network.

For example, the receive end device sends the first notification message to the transmit end device, where the first notification message is used to indicate whether the receive end device performs information transmission by using the fourth neural network or by using the fourth neural network and the third neural network.

For example, when the receive end device and the transmit end device have negotiated to roll back to the non-AI mode for information transmission, the first notification message may indicate to perform information transmission in the AI mode, that is, perform information transmission with the transmit end device by using the received third neural network and the received fourth neural network; or the first notification message may indicate to perform information transmission in the non-AI mode, that is, reject information transmission with the transmit end device by using the received third neural network and the received fourth neural network. For another example, when the receive end device and the transmit end device have not negotiated to roll back to the non-AI mode, but perform information transmission by using the first neural network and the second neural network, the first notification message may indicate to perform information transmission in the AI mode, that is, switch from information transmission by using the first neural network and the second neural network to information transmission with the transmit end device by using the received third neural network and the received fourth neural network; or the first notification message may indicate to perform information transmission in the non-AI mode, that is, reject information transmission with the transmit end device by using the received third neural network and the received fourth neural network, and roll back to the non-AI mode.

The method procedure shown in FIG. 5(b) may be applied to a transmission framework shown in FIG. 5(d). It can be learned from FIG. 5(d) that a terminal device side obtains to-be-fed-back downlink channel information, and processes, by using a first compressor, the to-be-fed-back downlink channel information to obtain compressed channel information that needs to be fed back to an air interface. After obtaining the compressed channel information, a network device side performs decompression processing by using a first decompressor to obtain restored downlink channel information.

Theoretically, an AI model that includes the first compressor and the first decompressor and that is obtained through training can enable a degree of difference or a similarity between the restored downlink channel information and the to-be-fed-back downlink channel information to fall within an acceptable range. However, the first compressor and the first decompressor are obtained through offline training. In an online downlink channel information feedback process, if a to-be-fed-back downlink channel and a training channel used to obtain through training the first compressor and the first decompressor have different features, after the to-be-fed-back downlink channel information is fed back based on the AI model that includes the first compressor and the first decompressor, a degree of difference or a similarity between the restored downlink channel information and the to-be-fed-back downlink channel information may fall beyond the acceptable range. In this case, the first compressor and the first decompressor need to be updated online, so that a degree of difference or a similarity between the restored downlink channel information and the to-be-fed-back downlink channel information falls within the acceptable range when the downlink channel information is fed back based on an updated first compressor and an updated first decompressor. The following describes in detail how to update the first compressor and the first decompressor online with reference to FIG. 5(b).

It should be noted that, the method procedure shown in FIG. 5(b) is similar to the method procedure shown in FIG. 5(a)-1 and FIG. 5(a)-2. A difference lies in that FIG. 5(b) mainly describes an online update of the first compressor and the first decompressor in the channel information feedback scenario.

In addition, signaling exchanged between a first device and a second device in FIG. 5(b) is similar to that in FIG. 5(a)-1 and FIG. 5(a)-2, and may be carried on a PUCCH, a PDCCH, a PUSCH, a PDSCH, a UL grant, or a RACH. Details are not described below again. Because PUCCH and PDCCH resources are limited, signaling exchange on the PUSCH or the PDSCH can improve flexibility of the solution.

Specifically, the first device or the second device in FIG. 5(b) may perform the step of updating the first compressor and the first decompressor, and similar to that described in FIG. 5(a)-1 and FIG. 5(a)-2, the first device or the second device may periodically or aperiodically update the first compressor and the first decompressor without performing update through triggering. To reflect a specific implementation in the channel information feedback scenario, in FIG. 5(b), a procedure of updating the first compressor and the first decompressor online in the channel information feedback scenario is mainly described in detail from a perspective that the first device determines that the first compressor and the first decompressor need to be updated. For periodically or aperiodically updating the first compressor and the first decompressor by the first device or the second device, refer to the foregoing descriptions in FIG. 5(a)-1 and FIG. 5(a)-2. Details are not described again in FIG. 5(b).

The method shown in FIG. 5(b) includes some or all of the following steps.

S510: The first device determines whether the first compressor and the first decompressor need to be updated.

The first device includes a terminal device or a network device.

The following describes two manners that may be used by the first device to determine whether the first compressor and the first decompressor need to be updated.

Manner 1:

The first device determines estimated downlink channel information based on downlink channel information, the first compressor, and the first decompressor, and determines, based on a value relationship between a degree of difference or a similarity between the downlink channel information and the estimated downlink channel information and a corresponding preset threshold, whether the first compressor and the first decompressor need to be updated. The degree of difference between the downlink channel information and the estimated downlink channel information is compared with a first preset threshold, and the similarity between the downlink channel information and the estimated downlink channel information is compared with a second preset threshold.

The preset threshold in this application may also be referred to as a threshold, a threshold, or the like. A specific name does not constitute any limitation on the protection scope of this application.

For example, when the degree of difference between the downlink channel information and the estimated downlink channel information is greater than or equal to the first preset threshold, or when the similarity between the downlink channel information and the estimated downlink channel information is less than or equal to the second preset threshold, the first device determines that the first compressor and the first decompressor need to be updated. When the degree of difference between the downlink channel information and the estimated downlink channel information is less than the first preset threshold, or when the similarity between the downlink channel information and the estimated downlink channel information is greater than the second preset threshold, the first device determines that the first compressor and the first decompressor do not need to be updated.

Alternatively, when the degree of difference between the downlink channel information and the estimated downlink channel information is greater than the first preset threshold, or when the similarity between the downlink channel information and the estimated downlink channel information is less than the second preset threshold, the first device determines that the first compressor and the first decompressor need to be updated. When the degree of difference between the downlink channel information and the estimated downlink channel information is less than or equal to the first preset threshold, or when the similarity between the downlink channel information and the estimated downlink channel information is greater than or equal to the second preset threshold, the first device determines that the first compressor and the first decompressor do not need to be updated.

It should be noted that, the determining, based on a value relationship between a degree of difference or a similarity between the downlink channel information and the estimated downlink channel information and a corresponding preset threshold, whether the first compressor and the first decompressor need to be updated is merely an example and does not constitute any limitation on the protection scope of this application. For example, the first device may further determine, based on a further degree of difference or a further similarity between the degree of difference or the similarity the downlink channel information and the estimated downlink channel information and the corresponding preset threshold, whether the first compressor and the first decompressor need to be updated.

A specific value of the preset threshold may be predefined in a protocol, or may be determined through negotiation between a network device and a terminal device, or may be determined by the network device, or may be determined by the terminal device, or may be notified by a third-party device to the network device and the terminal device after being determined. How the first device learns of the preset threshold is not limited in this embodiment of this application.

In the manner 1, that the first device determines estimated downlink channel information based on downlink channel information, the first compressor, and the first decompressor includes the following several possibilities.

Possibility 1: If the first device is the terminal device, the downlink channel information is a downlink channel (denoted as $H_d$) that has no compression loss and that is obtained by the terminal device. The first compressor is denoted as a function $f_{en}$, and the first decompressor is denoted as a function $f_{de}$. How the terminal device obtains the downlink channel that has no compression loss is not limited in this embodiment of this application. For details, refer to an existing solution in which the terminal device obtains the downlink channel that has no compression loss. Details are not described herein.

In the possibility 1, a procedure of determining the estimated downlink channel information based on the downlink channel information, the first compressor, and the first decompressor is shown in (a) in FIG. 6. FIG. 6 is a schematic diagram of determining the estimated downlink channel information according to an embodiment of this application.

It can be learned from (a) in FIG. 6 that a result of compressing the downlink channel information by using the first compressor is decompressed by using the first decompressor to obtain the estimated downlink channel information.

It should be noted that, in the possibility 1, the terminal device knows the first compressor and the first decompressor (for example, the terminal device locally stores the first compressor and the first decompressor, or the terminal device knows the first compressor and the network device sends the first decompressor to the terminal device). Therefore, after obtaining the downlink channel that has no compression loss, the terminal device can determine the estimated downlink channel information based on the downlink channel that has no compression loss, and the first compressor and the first decompressor that are known.

That the terminal device determines the estimated downlink channel information may be that the terminal device obtains the estimated downlink channel information through calculation, or may be that the terminal device determines the estimated downlink channel information by searching a table.

For example, it can be learned from (a) in FIG. 6 that the terminal device may obtain the estimated downlink channel information through calculation based on the following formula:

$\hat{H}_d = f_{de}(f_{en}(H_d))$, where $H_d$ indicates the downlink channel that has no compression loss and that is obtained by the terminal device, $f_{en}$ indicates the first compressor, $f_{en}(H_d)$ indicates a result of compressing, by using the first compressor, the downlink channel that has no compression loss and that is obtained by the terminal device, $f_{de}$ indicates the first decompressor, and $\hat{H}_d$ indicates the estimated downlink channel information obtained by the terminal device through calculation.

It should be understood that, the foregoing formula $\hat{H}_d = f_{de}(f_{en}(H_d))$ is merely an example and does not constitute any limitation on the protection scope of this application. A simple variation, for example, $\hat{H}_d = f_{de}(f_{en}(H_d)) + \Delta$, of the formula also falls within the protection scope of this application. $\Delta$ is an offset, and may be a preset value. Details are not described herein.

For another example, the terminal device may obtain the estimated downlink channel information by searching Table 1.

**Table 1**

| Downlink channel that has no compression loss | Compressor | Decompressor | Estimated downlink channel information |
|---|---|---|---|
| $H_d$ | $f_{en}$ | $f_{de}$ | $\hat{H}_d$ |
| $H_{d1}$ | $f_{en1}$ | $f_{de1}$ | $\hat{H}_{d1}$ |
| ... | ... | ... | ... |

It should be understood that, the foregoing manner in which the terminal device determines the estimated downlink channel information is merely an example, and does not constitute any limitation on the protection scope of this application. Another manner in which the terminal device can determine the estimated downlink channel information also falls within the protection scope of this application. Examples are not described one by one in this application.

Possibility 2: If the first device is the network device, the downlink channel information is a downlink channel (denoted as $H_{d\_NB}$) that has a compression loss and that is obtained by the network device. The first compressor is denoted as a function $f_{en}$, and the first decompressor is denoted as a function $f_{de}$. In this embodiment of this application, how the network device obtains the downlink channel that has a compression loss is not limited. For details, refer to a solution in which the network device obtains a downlink channel that has no compression loss in an existing AI manner or a conventional channel feedback manner. Details are not described herein.

In the possibility 2, a procedure of determining the estimated downlink channel information based on the downlink channel information, the first compressor, and the first decompressor is shown in (b) in FIG. 6. It can be learned from (b) in FIG. 6 that a result of compressing the downlink channel information by using the first compressor is decompressed by using the first decompressor, to obtain the estimated downlink channel information.

It should be noted that, in the possibility 2, the network device knows the first compressor and the first decompressor (for example, the network device locally stores the first compressor and the first decompressor, or the network device knows the first decompressor and the terminal device sends the first compressor to the network device). Therefore, after obtaining the downlink channel that has a compression loss, the network device can determine the estimated downlink channel information based on the downlink channel that has a compression loss, and the first compressor and the first decompressor that are known.

That the network device determines the estimated downlink channel information may be that the network device obtains the estimated downlink channel information through calculation, or may be that the network device determines the estimated downlink channel information by searching a table.

For example, it can be learned from (b) in FIG. 6 that the network device may obtain the estimated downlink channel information through calculation based on the following formula:

$$H_{d\_NB}^{\wedge} = f_{de}(f_{en}(H_{d\_NB}))$$

, where $H_{d\_NB}$ indicates the downlink channel that has a compression loss and that is obtained by the network device, $f_{en}$ indicates the first compressor, $f_{en}(H_{d\_NB})$ indicates a result of compressing, by using the first compressor, the downlink channel that has a compression loss and that is obtained by the network device, $f_{de}$ indicates the first decompressor, and

$$H_{d\_NB}^{\wedge}$$

indicates the estimated downlink channel information obtained by the network device through calculation.

It should be understood that, the foregoing formula $H_{d\_NB}^{\wedge} = f_{de}(f_{en}(H_{d\_NB}))$ is merely an example and does not constitute any limitation on the protection scope of this application. A simple variation, for example,

$$H_{d\_NB}^{\wedge} = f_{de}(f_{en}(H_{d\_NB})) + \Delta$$

of the formula also falls within the protection scope of this application. $\Delta$ is an offset, and may be a preset value. Details are not described herein.

For another example, the terminal device may obtain the estimated downlink channel information by searching Table 2.

**Table 2**

| Downlink channel that has no compression loss | Compressor | Decompressor | Estimated downlink channel information |
|---|---|---|---|
| $H_{d\_NB}$ | $f_{en}$ | $f_{de}$ | $\overset{\wedge}{H}_{d\_NB}$ |
| $H_{d1\_NB}$ | $f_{en1}$ | $f_{de1}$ | $\overset{\wedge}{H}_{d1\_NB}$ |
| ... | ... | ... | ... |

It should be understood that, the foregoing manner in which the network device determines the estimated downlink channel information is merely an example, and does not constitute any limitation on the protection scope of this application. Another manner in which the network device can determine the estimated downlink channel information also falls within the protection scope of this application. Examples are not described one by one in this application.

Manner 2:

The first device determines estimated downlink channel information based on downlink channel information, uplink channel information, the first compressor, and the first decompressor. Further, a manner in which whether the first compressor and the first decompressor need to be updated is determined based on the downlink channel information and the estimated downlink channel information is the same as the foregoing manner 1, and details are not described herein again. Therefore, in the manner 2, how to determine the estimated downlink channel information based on the downlink channel information, the uplink channel information, the first compressor, and the first decompressor is mainly described.

In the manner 2, that the first device determines estimated downlink channel information based on downlink channel information, uplink channel information, the first compressor, and the first decompressor includes the following several possibilities.

Possibility 1: If the first device is the terminal device, the downlink channel information is a downlink channel (denoted as $H_d$) that has no compression loss and that is obtained by the terminal device, and the uplink channel is uplink channel information (denoted as $H_u$) delivered by the network device to the terminal device. The first compressor is denoted as a function $f_{en}$, and the first decompressor is denoted as a function $f_{de}$.

In the possibility 1, a procedure of determining the estimated downlink channel information based on the downlink channel information, the uplink channel information, the first compressor, and the first decompressor is shown in (a) in FIG. 7. FIG. 7 is another schematic diagram of determining the estimated downlink channel information according to an embodiment of this application

It can be learned from (a) in FIG. 7 that a result of compressing the downlink channel information by using the first compressor and the uplink channel information are decompressed by using the first decompressor to obtain the estimated downlink channel information.

It should be noted that, in the possibility 1, the terminal device knows the first compressor and the first decompressor. Therefore, after obtaining the downlink channel that has no compression loss and the uplink channel information, the terminal device can determine the estimated downlink channel information based on the downlink channel that has no compression loss, the uplink channel information, and the first compressor and the first decompressor that are known.

That the terminal device determines the estimated downlink channel information may be that the terminal device obtains the estimated downlink channel information through calculation, or may be that the terminal device determines the estimated downlink channel information by searching a table.

For example, it can be learned from (a) in FIG. 7 that the terminal device may obtain the estimated downlink channel information through calculation based on the following formula:
$\overset{\wedge}{H}_d = f_{de}(f_{en}(H_d), H_u)$, where $H_d$ indicates the downlink channel that has no compression loss and that is obtained by the terminal device, $H_u$ indicates the uplink channel information obtained by the terminal device, $f_{en}$ indicates the first compressor, $f_{en}(H_d)$ indicates a result of compressing, by using the first compressor, the downlink channel that has no compression loss and that is obtained by the terminal device, $f_{de}$ indicates the first decompressor, and $\overset{\wedge}{H}_d$ indicates the estimated downlink channel information obtained by the terminal device through calculation.

It should be understood that, the foregoing formula $\overset{\wedge}{H}_d = f_{de}(f_{en}(H_d), H_u)$ is merely an example and does not constitute any limitation on the protection scope of this application. A simple variation, for example, $\overset{\wedge}{H}_d = f_{de}(f_{en}(H_d),$

$H_u$)+$\Delta$ of the formula also falls within the protection scope of this application. $\Delta$ is an offset, and may be a preset value. Details are not described herein.

For another example, the terminal device may obtain the estimated downlink channel information by searching Table 3.

**Table 3**

| Downlink channel information that has no compression loss | Uplink channel information | Compressor | Decompressor | Estimated downlink channel information |
|---|---|---|---|---|
| $H_d$ | $H_u$ | $f_{en}$ | $f_{de}$ | $\hat{H}_d$ |
| $H_{d1}$ | $H_{u1}$ | $f_{en1}$ | $f_{de1}$ | $H_{d1}$ |
| ... | ... | ... | ... | ... |

Possibility 2: If the first device is the terminal device, the downlink channel information is a downlink channel (denoted as $H_d$) that has no compression loss and that is obtained by the terminal device, and the uplink channel is uplink channel information (denoted as $H_u$) delivered by the network device to the terminal device. The first compressor is denoted as a function $f_{en}$, and the first decompressor is denoted as a function $f_{de}$.

In the possibility 2, a procedure of determining the estimated downlink channel information based on the downlink channel information, the uplink channel information, the first compressor, and the first decompressor is shown in (b) in FIG. 7. It can be learned from (b) in FIG. 7 that a result of compressing a difference between the downlink channel information and the uplink channel information by using the first compressor and the uplink channel information are decompressed by using the first decompressor to obtain the estimated downlink channel information.

It should be noted that, in the possibility 1, the terminal device knows the first compressor and the first decompressor. Therefore, after obtaining the downlink channel that has no compression loss and the uplink channel information, the terminal device can determine the estimated downlink channel information based on the downlink channel that has no compression loss, the uplink channel information, and the first compressor and the first decompressor that are known.

That the terminal device determines the estimated downlink channel information may be that the terminal device obtains the estimated downlink channel information through calculation, or may be that the terminal device determines the estimated downlink channel information by searching a table.

For example, it can be learned from (b) in FIG. 7 that the terminal device may obtain the estimated downlink channel information through calculation based on the following formula:

$\hat{H}_d = f_{de}(f_{en}(H_d, H_u), H_u)$, where $H_d$ indicates the downlink channel that has no compression loss and that is obtained by the terminal device, $H_u$ indicates the uplink channel information obtained by the terminal device, $f_{en}$ indicates the first compressor, $f_{en}(H_d)$ indicates a result of compressing, by using the first compressor, the downlink channel that has no compression loss and that is obtained by the terminal device, $f_{de}$ indicates the first decompressor, and $\hat{H}_d$ indicates the estimated downlink channel information obtained by the terminal device through calculation.

It should be understood that, the foregoing formula $\hat{H}_d = f_{de}(f_{en}(H_d, H_u), H_u)$ is merely an example and does not constitute any limitation on the protection scope of this application. A simple variation, for example, $\hat{H}_d = f_{de}(f_{en}(H_d, H_u), H_u)+\Delta$ of the formula also falls within the protection scope of this application. $\Delta$ is an offset, and may be a preset value. Details are not described herein.

For another example, the terminal device may obtain the estimated downlink channel information by searching a table similar to Table 3. Details are not described herein.

It should be understood that, the foregoing manner 2 in which the terminal device determines the estimated downlink channel information is merely an example, and does not constitute any limitation on the protection scope of this application. Another manner in which the terminal device can determine the estimated downlink channel information also falls within the protection scope of this application. Examples are not described one by one in this application.

Possibility 3: If the first device is the network device, the downlink channel information is a downlink channel (denoted as $H_{d\_NB}$) that has a compression loss and that is obtained by the network device, and the uplink channel information is uplink channel information (denoted as $Hu$) measured by the network device. The first compressor is denoted as a function $f_{en}$, and the first decompressor is denoted as a function $f_{de}$.

In the possibility 3, a procedure of determining the estimated downlink channel information based on the downlink channel information, the uplink channel information, the first compressor, and the first decompressor is shown in (c) in FIG. 7. It can be learned from (c) in FIG. 7 that a result of compressing the downlink channel information by using the first compressor and the uplink channel information are decompressed by using the first decompressor to obtain the estimated downlink channel information.

It should be noted that, in the possibility 3, the network device knows the first compressor and the first decompressor. Therefore, after obtaining the downlink channel that has a compression loss and the uplink channel information, the network device can determine the estimated downlink channel information based on the downlink channel that has a compression loss and the uplink channel information, and the first compressor and the first decompressor that are known.

That the network device determines the estimated downlink channel information may be that the network device obtains the estimated downlink channel information through calculation, or may be that the network device determines the estimated downlink channel information by searching a table.

For example, it can be learned from (c) in FIG. 7 that the network device may obtain the estimated downlink channel information through calculation based on the following formula:

$$H_{d\_NB}^{\wedge} = f_{de}(f_{en}(H_{d\_NB}), H_u)$$

, where $H_{d\_NB}$ indicates the downlink channel that has a compression loss and that is obtained by the network device, $H_u$ indicates the uplink channel information obtained by the terminal device, $f_{en}$ indicates the first compressor, $f_{en}(H_{d\_NB})$ indicates a result of compressing, by using the first compressor, the downlink channel that has a compression loss and that is obtained by the network device, $f_{de}$ indicates the first decompressor, and $H_{d\_NB}^{\wedge}$ indicates the estimated downlink channel information obtained by the network device through calculation.

It should be understood that, the foregoing formula $H_{d\_NB}^{\wedge} = f_{de}(f_{en}(H_{d\_NB}), H_u)$ is merely an example and does not constitute any limitation on the protection scope of this application. A simple variation, for example,

$$H_{d\_NB}^{\wedge} = f_{de}(f_{en}(H_{d\_NB}), H_u) + \Delta$$

of the formula also falls within the protection scope of this application. $\Delta$ is an offset, and may be a preset value. Details are not described herein.

For another example, the terminal device may obtain the estimated downlink channel information by searching Table 4.

**Table 4**

| Downlink channel that has no compression loss | Uplink channel information | Compressor | Decompressor | Estimated downlink channel information |
|---|---|---|---|---|
| $H_{d\_NB}$ | $H_u$ | $f_{en}$ | $f_{de}$ | $H_{d\_NB}^{\wedge}$ |
| $H_{d1\_NB}$ | $H_{u1}$ | $f_{en1}$ | $f_{de1}$ | $H_{d1\_NB}^{\wedge}$ |
| ... | ... | ... | ... | ... |

Possibility 4: If the first device is the network device, the downlink channel information is a downlink channel (denoted as $H_{d\_NB}$) that has a compression loss and that is obtained by the network device, and the uplink channel information is uplink channel information (denoted as $H_u$) measured by the network device. The first compressor is denoted as a function $f_{en}$, and the first decompressor is denoted as a function $f_{de}$.

In the possibility 4, a procedure of determining the estimated downlink channel information based on the downlink channel information, the uplink channel information, the first compressor, and the first decompressor is shown in (d) in FIG. 7. It can be learned from (d) in FIG. 7 that a result of compressing a difference between the downlink channel information and the uplink channel information by using the first compressor and the uplink channel information are decompressed by using the first decompressor to obtain the estimated downlink channel information.

It should be noted that, in the possibility 4, the network device knows the first compressor and the first decompressor. Therefore, after obtaining the downlink channel that has a compression loss and the uplink channel information, the network device can determine the estimated downlink channel information based on the downlink channel that has a compression loss, the uplink channel information, and the first compressor and the first decompressor that are known.

That the network device determines the estimated downlink channel information may be that the network device obtains the estimated downlink channel information through calculation, or may be that the network device determines the estimated downlink channel information by searching a table.

For example, it can be learned from (d) in FIG. 7 that the network device may obtain the estimated downlink channel information through calculation based on the following formula:

$$\hat{H}_{d\ NB} = f_{de}(f_{en}(H_{d\ NB}, H_u), H_u)$$ , where $H_{d\_NB}$ indicates the downlink channel that has a compression loss and that is obtained by the network device, $H_u$ indicates the uplink channel information obtained by the terminal device, $f_{en}$ indicates the first compressor, $f_{en}(H_{d\_NB})$ indicates a result of compressing, by using the first compressor, the downlink channel that has a compression loss and that is obtained by the network device, $f_{de}$ indicates the first decompressor, and $\hat{H}_{d\_NB}$ indicates the estimated downlink channel information obtained by the network device through calculation.

It should be understood that, the foregoing formula $\hat{H}_{d\_NB} = f_{de}(f_{en}(H_{d\_NB}, H_u), H_u)$ is merely an example and does not constitute any limitation on the protection scope of this application. A simple variation, for example,

$$\hat{H}_{d\_NB} = f_{de}(f_{en}(H_{d\_NB}, H_u), H_u) + \Delta$$ of the formula also falls within the protection scope of this application. $\Delta$ is an offset, and may be a preset value. Details are not described herein.

For another example, the terminal device may obtain the estimated downlink channel information by searching a table similar to Table 4. Details are not described herein.

It should be understood that, the foregoing manner 2 in which the network device determines the estimated downlink channel information is merely an example, and does not constitute any limitation on the protection scope of this application. Another manner in which the network device can determine the estimated downlink channel information also falls within the protection scope of this application. Examples are not described one by one in this application.

With reference to FIG. 6 and FIG. 7, the foregoing describes in detail how the first device determines whether the first compressor and the first decompressor need to be updated from a perspective of whether the first device is the terminal device or the network device.

It should be noted that, the foregoing manners in which the first device determines whether the first compressor and the first decompressor need to be updated are merely examples, and do not constitute any limitation on the protection scope of this application. Simple variations of the foregoing manners and other determining manners also fall within the protection scope of this application. For example, the first device directly performs determining based on the downlink channel information, or the first device determines, based on empirical information, whether an update is required. Examples are not described herein one by one.

For example, in this application, the first device may further periodically perform the foregoing determining.

For example, the first device periodically determines, based on a preset periodicity T, whether the first compressor and the first decompressor need to be updated. T may be predefined in a protocol, or may be determined by the first device and the second device through negotiation, or may be a periodicity randomly selected by the first device. How the first device learns of the preset periodicity is not limited in this application.

For example, the first device may perform the foregoing determining based on second indication information sent by the second device. The second indication information may be referred to as trigger signaling, and is used to trigger the first device to perform the foregoing determining. To be specific, in this example, the method procedure shown in FIG. 5(a)-1 and FIG. 5(a)-2 to FIG. 5(e) may further include S511: The second device sends the second indication information to the first device.

For example, the first device receives the second indication information sent by the second device, where the second indication information is used to indicate the first device to determine whether the first compressor and the first decompressor need to be updated. When the first device is the terminal device, the second device may be the network device. When the first device is the network device, the second device may be the terminal device.

For example, the first device may perform the foregoing determining based on trigger information of the first device.

For example, if the first device perceives that transmission performance (for example, throughput performance) of the first device deteriorates, the first device may trigger the first device to perform the foregoing determining.

Specifically, when the first device determines that the first compressor and the first decompressor need to be updated, the method procedure shown in FIG. 5(a)-1 and FIG. 5(a)-2 to FIG. 5(e) further includes: updating the first compressor and the first decompressor.

It should be noted that, when the first device determines that the first compressor and the first decompressor do not need to be updated, the first device may continuously determine whether the first compressor and the first decompressor need to be updated while providing a channel information feedback based on a current AI model. The following mainly describes a scenario in which the first compressor and the first decompressor need to be updated. When the first device determines that the first compressor and the first decompressor do not need to be updated, and subsequently determines that the compressor and the decompressor need to be updated, for a specific update manner of the compressor and the decompressor, refer to the following update procedure of the first compressor and the first decompressor. Details are not described in this application.

A case in which it is determined that the first compressor and the first decompressor need to be updated (for example, the degree of difference between the downlink channel information and the estimated downlink channel information is greater than or equal to the first preset threshold, or the similarity between the downlink channel information and the estimated downlink channel information is less than or equal to the second preset threshold) has been described in S510. Therefore, details are not described herein again.

The following describes several manners of updating the first compressor and the first decompressor.

Manner 1:

The first device updates the first compressor and the first decompressor. In the manner 1, the first device determines that an update is required, and the first device performs the step of updating the first compressor and the first decompressor to obtain an appropriate second compressor and an appropriate second decompressor. To be specific, in the manner 1, the method procedure shown in FIG. 5(a)-1 and FIG. 5(a)-2 to FIG. 5(e) further includes: S520: The first device updates the first compressor and the first decompressor.

By way of example but not limitation, that the first device updates the first compressor and the first decompressor to obtain an appropriate second compressor and an appropriate second decompressor includes the following several possibilities.

Possibility 1: The first device is the terminal device. After determining that the first compressor and the first decompressor need to be updated, the terminal device selects the appropriate second compressor and the appropriate second decompressor from a first set based on currently obtained downlink channel information or based on currently obtained downlink channel information and uplink channel information, where the first set includes at least one compressor and at least one decompressor.

For example, the terminal device may locally store at least one pair of a compressor and a decompressor, and channels may be classified based on channel information such as angle spreads and delay spreads. Different channel information corresponds to different compressors and decompressors. The following uses a specific example to describe how the terminal device updates the first compressor and the first decompressor.

For example, the terminal device locally stores three pairs of compressors and decompressors: a compressor #1 and a decompressor #1, a compressor #2 and a decompressor #2, and a compressor #3 and a decompressor #3. In addition, the compressor #1 and the decompressor #1 may be applied to downlink channel information feedback when the downlink channel information is downlink channel information #1, the compressor #2 and the decompressor #2 may be applied to downlink channel information feedback when the downlink channel information is downlink channel information #2, and the compressor #3 and the decompressor #3 may be applied to downlink channel information feedback when the downlink channel information is downlink channel information #3. When the terminal device determines that the compressor #1 and the decompressor #1 need to be updated, and the currently obtained downlink channel information is the downlink channel information #2, the terminal device may respectively update the compressor #1 and the decompressor #1 in a feedback framework to the compressor #2 and the decompressor #2.

Possibility 2: The first device is the terminal device. After determining that the first compressor and the first decompressor need to be updated, the terminal device adjusts the first compressor and the first decompressor based on currently obtained downlink channel information or based on currently obtained downlink channel information and uplink channel information, so that an adjusted first compressor and an adjusted first decompressor can be used in a channel information feedback framework. The adjusted first compressor may be referred to as the second compressor, and the adjusted first decompressor may be referred to as the second decompressor.

For example, the terminal device may determine, based on the currently obtained downlink channel information or based on the currently obtained downlink channel information and uplink channel information, weights corresponding to the compressor and the decompressor. The following uses a specific example to describe how the terminal device updates the first compressor and the first decompressor.

For example, the terminal device determines, based on the currently obtained downlink channel information or based on the currently obtained downlink channel information and uplink channel information, that a network weight corresponding to the compressor is a network weight #3 and a network weight corresponding to the decompressor is a network weight #4. A network weight corresponding to the first compressor is a network weight # 1, and a network weight corresponding to the first decompressor is a network weight #2. The appropriate second compressor may be obtained by adjusting the network weight corresponding to the first compressor, namely, the network weight #1 to the network weight #3, and the appropriate second decompressor may be obtained by adjusting the network weight corresponding to the first decompressor, namely, the network weight #2 to the network weight #4.

Possibility 3: The first device is the terminal device. After determining that the first compressor and the first decompressor need to be updated, the terminal device selects a third compressor and a third decompressor based on currently obtained downlink channel information or based on currently obtained downlink channel information and uplink channel information, and further adjusts the third compressor and the third decompressor to obtain an appropriate compressor and an appropriate decompressor. The compressor selected and obtained through adjustment may be referred to as the second compressor, and the decompressor selected and obtained through adjustment may be referred to as the second decompressor.

For example, the terminal device may locally store at least one pair of a compressor and a decompressor, and channels may be classified based on channel information such as angle spreads and delay spreads. Different channel information may be used to determine different compressors and decompressors. The following uses a specific example to describe how the terminal device updates the first compressor and the first decompressor.

For example, the terminal device locally stores three pairs of compressors and decompressors: a compressor #1 and a decompressor #1, a compressor #2 and a decompressor #2, and a compressor #3 and a decompressor #3. In addition, the compressor #1 and the decompressor #1 may be applied to downlink channel information feedback when the downlink channel information is downlink channel information #1, the compressor #2 and the decompressor #2 may be applied to downlink channel information feedback when the downlink channel information is downlink channel information #2, and the compressor #3 and the decompressor #3 may be applied to downlink channel information feedback when the downlink channel information is downlink channel information #3.

Further, after weights corresponding to the compressor #3 and the decompressor #3 are respectively adjusted to a network weight #1 and a network weight #2, the weights may be applied to downlink channel information feedback when the downlink channel information is downlink channel information #4. After weights corresponding to the compressor #3 and the decompressor #3 are respectively adjusted to a network weight #3 and a network weight #4, the weights may be applied to downlink channel information feedback when the downlink channel information is downlink channel information #5.

When the terminal device determines that the compressor # 1 and the decompressor #1 need to be updated, and the currently obtained downlink channel information is the downlink channel information #5, the terminal device may first select the appropriate compressor #3 and the appropriate decompressor #3 based on the downlink channel information #5, and further respectively adjust, based on the downlink channel information #5, the weights corresponding to the compressor #3 and the decompressor #3 in a feedback framework to the network weight #3 and the network weight #4.

Possibility 4: The first device is the network device. When the first device is the network device, after determining that the first compressor and the first decompressor need to be updated, the network device selects the appropriate second compressor and the appropriate second decompressor based on currently obtained downlink channel information or based on currently obtained downlink channel information and uplink channel information. A specific update manner is similar to that in the foregoing possibility 1, except that an execution body is changed from the terminal device to the network device, and the obtained downlink channel information is downlink channel information that has a compression loss. Details are not described herein again.

Possibility 5: The first device is the network device. When the first device is the network device, after determining that the first compressor and the first decompressor need to be updated, the network device adjusts the first compressor and the first decompressor based on currently obtained downlink channel information or based on currently obtained downlink channel information and uplink channel information, so that an adjusted first compressor and an adjusted first decompressor can be used in a channel information feedback framework. The adjusted first compressor may be referred to as the second compressor, and the adjusted first decompressor may be referred to as the second decompressor. A specific update manner is similar to that in the foregoing possibility 2, except that an execution body is changed from the terminal device to the network device, and the obtained downlink channel information is downlink channel information that has a compression loss. Details are not described herein again.

Possibility 6: The first device is the network device. When the first device is the network device, after determining that the first compressor and the first decompressor need to be updated, the network device selects a third compressor and a third decompressor based on currently obtained downlink channel information or based on currently obtained downlink channel information and uplink channel information, and further adjusts the third compressor and the third decompressor to obtain an appropriate compressor and an appropriate decompressor. The compressor selected and obtained through adjustment may be referred to as the second compressor, and the decompressor selected and obtained through adjustment may be referred to as the second decompressor. A specific update manner is similar to that in the foregoing possibility 3, except that an execution body is changed from the terminal device to the network device, and the obtained downlink channel information is downlink channel information that has a compression loss. Details are not described herein again.

Optionally, after the first device performs the foregoing step of updating the first compressor and the first decompressor, if an appropriate compressor and an appropriate decompressor cannot be found and/or obtained through adjustment, the first device may choose to roll back a channel feedback manner to a non-AI mode, for example, roll back to a conventional channel information feedback based on a precoding matrix.

Optionally, after the first device performs the foregoing step of updating the first compressor and the first decompressor, if an appropriate compressor and an appropriate decompressor can be found and/or obtained through adjustment, the first device may also choose to roll back the channel information feedback manner to the non-AI mode, for example, roll back to the conventional channel information feedback based on the precoding matrix.

Manner 2:

The second device updates the first compressor and the first decompressor. In the manner 2, the first device determines that an update is required, and the second device performs the step of updating the first compressor and the first decompressor. In the manner 2, the first device needs to trigger the second device to perform the step of updating the first compressor and the first decompressor. To be specific, in the manner 2, the method procedure shown in FIG. 5(a)-1 and FIG. 5(a)-2 to FIG. 5(e) further includes S530: The first device sends the first indication information to the second device. S531: The second device updates the first compressor and the first decompressor.

The first indication information is used to indicate the second device to update the first compressor and the first decompressor. The first indication information may be understood as trigger information, to trigger the second device to implement the update step.

It should be noted that, the second device may also include a terminal device and a network device. When the second device is the terminal device, a manner in which the second device performs update is similar to the manner 1 in which when the first device is the terminal device, the terminal device updates the first compressor and the first decompressor (for example, the possibility 1 to the possibility 3 shown in the manner 1), and details are not described herein again. Similarly, when the second device is the network device, a manner in which the second device performs update is similar to the manner 1 in which when the first device is the network device, the network device updates the first compressor and the first decompressor (for example, the possibility 4 to the possibility 6 shown in the manner 1), and details are not described herein again.

Optionally, after the second device performs the foregoing step of updating the first compressor and the first decompressor, if an appropriate compressor and an appropriate decompressor cannot be found and/or obtained through adjustment, the second device may choose to roll back a channel feedback manner to a non-AI mode, for example, roll back to a conventional channel feedback manner a based on a precoding matrix.

Optionally, after the second device performs the foregoing step of updating the first compressor and the first decompressor, if an appropriate compressor and an appropriate decompressor can be found and/or obtained through adjustment, the second device may also choose to roll back the channel information feedback manner to the non-AI mode, for example, roll back to the conventional channel feedback manner based on the precoding matrix.

It should be noted that, S520 and S531 are not mandatory steps. For example, in this embodiment of this application, after the first device determines that the first compressor and the first decompressor need to be updated, the first device may choose to roll back the channel information feedback manner to the non-AI mode; or the first device notifies the second device that the first compressor and the first decompressor need to be updated, and the second device may choose not to perform update but determine to roll back the channel information feedback manner to the non-AI mode, for example, roll back to the conventional channel feedback manner based on the precoding matrix.

The following mainly describes a transmission manner after the update, and a manner of rejecting the update and rolling back to the non-AI model for channel information feedback is not described in detail.

In correspondence to S520, after updating the first compressor and the first decompressor, the first device needs to notify information about an updated encoder and/or an updated decoder to the second device. To be specific, the method procedure shown in FIG. 5(a)-1 and FIG. 5(a)-2 to FIG. 5(e) further includes S523: The first device sends the information about the updated encoder and/or the updated decoder to the second device, so that the second device can learn of the updated encoder and/or the updated decoder, and the first device and the second device align the encoder and the decoder used for subsequent channel information feedback.

In a possible implementation, in this embodiment of this application, before the first device sends the information about the updated encoder and/or the updated decoder to the second device, the first device may determine a specific form of the information about the updated encoder and/or the updated decoder based on a capability of the second device.

To be specific, the method procedure shown in FIG. 5(a)-1 and FIG. 5(a)-2 to FIG. 5(e) further includes S521: The first device sends sixth indication information to the second device, where the sixth indication information is used to indicate the second device to report the capability of the second device, and the capability of the second device may be referred to as an AI capability, for example, a computing capability, a storage capability, information indicating whether an AI model (for example, a channel information decompressor) having a specific function is stored, a supported neural network structure, a supported neural network scale, or a supported AI communication function. S522: The second device sends second capability information to the first device.

After learning of the capability of the second device, the first device can determine, based on the capability of the second device, the specific form of the information about the updated encoder and/or the updated decoder that is sent to the second device.

For example, the second device has an AI computing capability. When sending the information about the encoder and/or the decoder, the first device may send, to the second device, network structures/a network structure and network weights/a network weight corresponding to the encoder and/or the decoder, and the second device calculates the encoder and/or the decoder.

With reference to FIG. 8, the following describes in detail how the first device notifies the second device of the information about the updated encoder and/or the updated decoder. FIG. 8 is a schematic flowchart of sending the information about the updated encoder and/or the updated decoder according to an embodiment of this application.

Specifically, in correspondence to the possibility 1 in S520, as shown in (a) in FIG. 8, the following steps are included.

S801a: The terminal device determines whether the first compressor and the first decompressor need to be updated.

Specifically, for how the terminal device determines whether the first compressor and the first decompressor need to be updated in S801a, refer to the possibility 1 in the manner 1 and the possibility 1 and the possibility 2 in the manner 2 in S510.

When the terminal device determines that the first compressor and the first decompressor need to be updated, the method procedure shown in (a) in FIG. 8 further includes: S810a: The terminal device selects the appropriate second compressor and the appropriate second decompressor based on currently obtained downlink channel information or based on currently obtained downlink channel information and uplink channel information.

Specifically, for how the terminal device selects the appropriate second compressor and the appropriate second decompressor in S810a, refer to the descriptions in the possibility 1 in the manner 1 in S520. Details are not described herein again.

After the terminal device selects the appropriate second compressor and the appropriate second decompressor, by way of example but not limitation, the method procedure shown in (a) in FIG. 8 further includes the following several possible manners subsequently.

Manner 1: The method procedure shown in (a) in FIG. 8 further includes: S820a: The terminal device sends first information to the network device. The first information is used to notify the network device to receive information about the second decompressor, or the first information is used to notify the network device to receive information about the second compressor and information about the second decompressor.

After the network device receives the first information, steps that may be performed include the following two possibilities.

Possibility 1: After receiving the first information, the network device sends a first response message to the terminal device, where the first response message is used to indicate that the terminal device can report the information about the second decompressor, or the first response message is used to indicate that the terminal device can report the information about the second compressor and the information about the second decompressor. In the possibility 1, the method procedure shown in (a) in FIG. 8 further includes S830a: The network device sends the first response message to the terminal device.

Further, in the possibility 1, the method procedure shown in (a) in FIG. 8 further includes S840a: The terminal device sends the information about the second decompressor to the network device, or the terminal device sends the information about the second compressor and the information about the second decompressor to the network device.

It should be noted that, in this embodiment of this application, the terminal device may send, to the network device, the information about the second decompressor that needs to be configured by the network device, or the terminal device may send, to the network device, the information about the selected appropriate second compressor and the information about the selected appropriate second decompressor. Subsequently, the network device may re-determine, based on the second compressor and the second decompressor, whether the second compressor and the second decompressor need to be updated.

In a possible implementation, the network device and the terminal device each locally store the second decompressor, and an index (index) of the second decompressor in the network device is the same as an index of the second decompressor in the terminal device. In this case, that the terminal device sends the information about the second decompressor to the network device may be sending the index of the second decompressor. Similarly, the network device locally stores the second compressor and the second decompressor, and indexes corresponding to the second compressor and the second decompressor in the network device are the same as indexes corresponding to the second compressor and the second decompressor in the terminal device. In this case, that the terminal device sends the information about the second compressor and the information about the second decompressor to the network device may be sending the indexes corresponding to the second compressor and the second decompressor.

Optionally, the index of the second compressor is the same as the index of the second decompressor. In this case, the information about the second compressor and the information about the second decompressor are the same index.

In another possible implementation, the second decompressor may be represented by using a first network weight and a first network structure. In this case, that the terminal device sends the information about the second decompressor to the network device may be sending the first network weight and the first network structure. Similarly, the second decompressor may be represented by using the first network weight and the first network structure, and the second compressor may be represented by using a second network weight and a second network structure. In this case, that the terminal device sends the information about the second decompressor to the network device may be sending the first network weight and the first network structure, and that the terminal device sends the second compressor to the network device may be sending the second network weight and the second network structure.

In still another possible implementation, the network device and the terminal device each locally store a first network structure corresponding to the second decompressor, an index of the first network structure in the network device is the same as an index of the first network structure in the terminal device, and the second decompressor may be represented by using a first network weight and the first network structure. In this case, that the terminal device sends the information about the second decompressor to the network device may be sending the index of the first network structure and the first network weight.

Similarly, the network device and the terminal device each locally store a second network structure corresponding to the second compressor and a first network structure corresponding to the second decompressor, an index corresponding to the second network structure in the network device is the same as an index corresponding to the second network structure in the terminal device, an index corresponding to the first network structure in the network device is the same as an index corresponding to the first network structure in the terminal device, the second decompressor may be represented by using the first network weight and the first network structure, and the second compressor may be represented by using a second network weight and the second network structure. In this case, that the terminal device sends the information about the second decompressor to the network device may be sending the first network weight and the index of the first network structure, and that terminal device sends the second compressor to the network device may be sending the second network weight and the index of the second network structure.

Optionally, the index of the first network structure is the same as the index of the second network structure. In this case, the index of the first network structure and the index of the second network structure are the same index.

In still another possible implementation, the network device and the terminal device each locally store a first network structure corresponding to the second decompressor, an index of the first network structure in the network device is the same as an index of the first network structure in terminal device, the second decompressor may be represented by using a first network weight and the first network structure, the network device and the terminal device each locally store the first network weight corresponding to the second decompressor, and an index of the first network weight in the network device is the same as an index of the first network weight in the terminal device. In this case, that the terminal device sends the information about the second decompressor to the network device may be sending the index of the first network structure and the index of the first network weight.

Similarly, the network device and the terminal device each locally store a second network structure corresponding to the second compressor and a first network structure corresponding to the second decompressor, an index corresponding to the second network structure in the network device is the same as an index corresponding to the second network structure in the terminal device, an index corresponding to the first network structure in the network device is the same as an index corresponding to the first network structure in the terminal device, the second decompressor may be represented by using a first network weight and the first network structure, the second compressor may be represented by using a second network weight and the second network structure, the network device and the terminal device each locally store the first network weight corresponding to the second decompressor, an index of the first network weight in the network device is the same as an index of the first network weight in the terminal device, the network device and the terminal device each locally store the second network weight corresponding to the second compressor, and an index of the second network weight in the network device is the same as an index of the second network weight in the terminal device.

In this case, that the terminal device sends the information about the second decompressor to the network device may be sending the index of the first network weight and the index of the first network structure, and that the terminal device sends the second compressor to the network device may be sending the index of the second network weight and the index of the second network structure.

Optionally, the index of the first network structure is the same as the index of the second network structure. In this case, the index of the first network structure and the index of the second network structure are the same index. The index of the first network weight is the same as the index of the second network weight. In this case, the index of the first network weight and the index of the second network weight are the same index.

In still another possible implementation, the network device and the terminal device each locally store only a first network structure corresponding to the second decompressor, and the second decompressor may be represented by using a first network weight and the first network structure. In this case, that the terminal device sends the information about the second decompressor to the network device may be sending the first network weight. Similarly, the network device and the terminal device each locally store only a second network structure corresponding to the second compressor and a first network structure corresponding to the second decompressor, the second decompressor may be represented by using a first network weight and the first network structure, and the second compressor may be represented by using a second network weight and the second network structure. In this case, that the terminal device sends the information about the second decompressor to the network device may be sending the first network weight, and that the terminal device sends the second compressor to the network device may be sending the second network weight.

In still another possible implementation, the network device and the terminal device each locally store only a first network structure corresponding to the second decompressor, the second decompressor may be represented by using a first network weight and the first network structure, the network device and the terminal device each locally store a first network weight corresponding to the second decompressor, and an index of the first network weight in the network device is the same as an index of the first network weight in the terminal device. In this case, that the terminal device sends the information about the second decompressor to the network device may be sending the index of the first network weight.

The network device and the terminal device each locally store only a first network structure corresponding to the second decompressor and a second network structure corresponding to the second compressor, the second decompressor may be represented by using a first network weight and the first network structure, the second compressor may be represented by using a second network weight and the second network structure,

the network device and the terminal device each locally store the first network weight corresponding to the second decompressor, an index of the first network weight in the network device is the same as an index of the first network weight in the terminal device, the network device and the terminal device each locally store the second network weight corresponding to the second compressor, and an index of the second network weight in the network device is the same as an index of the second network weight in the terminal device. In this case, that the terminal device sends the information about the second decompressor to the network device may be sending the index of the first network weight, and that the terminal device sends the second compressor to the network device may be sending the index of the second network weight.

Optionally, the index of the first network weight is the same as the index of the second network weight. In this case, the index of the first network weight and the index of the second network weight are the same index.

In still another possible implementation, the network device and the terminal device each locally store only a first network structure corresponding to the second decompressor, the second decompressor may be represented by using a first network weight and the first network structure, and a variation between the first network weight corresponding to the second decompressor and a third network weight corresponding to the first decompressor is a first network weight variation. In this case, that the terminal device sends the information about the second decompressor to the network device may be sending the first network weight variation.

The network device and the terminal device each locally store only a first network structure corresponding to the second decompressor and a second network structure corresponding to the second compressor, the second decompressor may be represented by using a first network weight and the first network structure, the second compressor may be represented by using a second network weight and the second network structure,

a variation between the first network weight corresponding to the second decompressor and a third network weight corresponding to the first decompressor is a first network weight variation, and a variation between the second network weight corresponding to the second compressor and a fourth network weight corresponding to the first compressor is a second network weight variation. In this case, that the terminal device sends the information about the second decompressor to the network device may be sending the first network weight variation, and that the terminal device sends the second compressor to the network device may be sending the second network weight variation. It should be noted that, the foregoing possible implementations in which the terminal device sends the information about the second decompressor, or the information about the second decompressor and the information about the second compressor to the network device are merely examples, and do not constitute any limitation on the protection scope of this application. Simple variations of the foregoing manners and other manners in which the terminal device reports the information about the selected appropriate second decompressor, or the information about the second decompressor and the information about the second compressor to the network device also fall within the protection scope of this application. For example, the terminal device reports the indexes of the network structure and the network weight that correspond to the second decompressor. Examples are not described one by one herein.

Possibility 2: After receiving the first information, the network device may not agree to receive, based on an AI mode, channel information fed back by the terminal device. For example, the network device sends a second response message to the terminal device, where the second response message is used to indicate the terminal device to continue to feed back the channel information based on a conventional channel information feedback model. For another example, if the network device does not send a response message to the terminal device after receiving the first information, and the terminal device does not receive any response message within fourth preset duration after a time point at which the terminal device sends the first information, the terminal device may determine to continue to feed back the channel information based on a conventional channel information feedback model.

In the possibility 2, the method procedure shown in (a) in FIG. 8 further includes S831a: The network device sends the second response message to the terminal device, or the network device skips sending a response message to the terminal device within the fourth preset duration.

It should be noted that, in the possibility 2, a premise that the network device does not agree to receive, based on the AI mode, the channel information fed back by the terminal device includes the following.

It is predefined in a protocol that when the first compressor and the first decompressor need to be updated, the network device and the terminal device determine to roll back to a conventional channel information feedback mode; or the terminal device sends a second notification message to the network device, or the network device sends a second notification message to the terminal device. The second notification message is used to notify a peer device to roll back to the conventional channel information feedback mode from an AI mode-based channel information feedback mode (where a compressor and a decompressor in an AI framework are the first compressor and the first decompressor). In other words, in the possibility 2, the method procedure shown in (a) in FIG. 8 further includes S811a: Send the second notification message.

It should be understood that, the possibility 1 may also include S811a, or S811a does not need to be performed in the possibility 1. After determining that the first compressor and the first decompressor need to be updated, the terminal device does not need to notify the network device to first roll back to the conventional channel information feedback manner, but may continue to provide a channel information feedback based on the first compressor and the first decompressor.

Manner 2: The method procedure shown in (a) in FIG. 8 further includes: S821a: The network device sends second information to the terminal device, where the second information is used to indicate that the network device can receive information about the second decompressor, or the second information is used to notify that the network device can receive information about the second compressor and information about the second decompressor.

The terminal device sends the information about the second decompressor to the network device, or sends the information about the second compressor and the information about the second decompressor to the network device after receiving the second information.

It should be noted that, in this embodiment of this application, an occasion on which the terminal device sends the information about the second decompressor to the network device, or sends the information about the second compressor and the information about the second decompressor to the network device after receiving the second information is not limited, and may be any moment after the second information is received.

For example, the information about the second decompressor starts to be sent to the network device, or the information about the second compressor and the information about the second decompressor start to be sent to the network device within first preset duration after a first start moment or after the first preset duration. To be specific, in the manner 2, the method procedure shown in (a) in FIG. 8 further includes S840a. For details about sending the information about the second compressor and the information about the second decompressor, refer to the possibility 1 in the manner 1. Details are not described herein again.

Manner 3: After selecting the appropriate second compressor and the appropriate second decompressor, the terminal device starts to send information about the second decompressor to the network device, or send information about the second compressor and information about the second decompressor to the network device within second preset duration after a second start moment or after the second preset duration.

It should be noted that, in this embodiment of this application, an occasion on which the terminal device sends the information about the second decompressor to the network device, or sends the information about the second compressor and the information about the second decompressor to the network device after selecting the appropriate second compressor and the appropriate second decompressor is not limited, and may be any moment after the appropriate second compressor and the appropriate second decompressor are selected.

For example, the information about the second decompressor starts to be sent to the network device, or the information about the second compressor and the information about the second decompressor start to be sent to the network device within the second preset duration after the second start moment or after the second preset duration. To be specific, in the manner 3, the method procedure shown in (a) in FIG. 8 further includes S840a. For details about sending the information about the second compressor and the information about the second decompressor, refer to the possibility 1 in the manner 1. Details are not described herein again.

It should be noted that, in the manner 2 and the manner 3, both the terminal device and the network device can learn of a moment at which the first compressor and the first decompressor start to be updated (for example, the terminal device that performs update can learn of the moment, and the network device perceives occurrence of the update based on an interruption or a mode of downlink channel information transmission). After the preset duration, the terminal device and the network device learn that the update is completed, and may agree to transmit the information about the second decompressor obtained through update, or the information about the second compressor obtained through update and the information about the second decompressor obtained through update, without requiring an instruction (for example, the first information) to notify the network device that the update is completed.

Manner 4: The method procedure shown in (a) in FIG. 8 further includes: S820a: The terminal device sends first information to the network device. The first information is used to notify the network device to receive information about the second decompressor, or the first information is used to notify the network device to receive information about the second compressor and information about the second decompressor. After sending the first information to the network device, the terminal device starts to send the information about the second decompressor to the network device, or send the information about the second compressor and the information about the second decompressor to the network device within third preset duration or after the third preset duration. To be specific, in the manner 4, the method procedure shown in (a) in FIG. 8 further includes S840a. For details about sending the information about the second compressor and the information about the second decompressor, refer to the possibility 1 in the manner 1. Details are not described herein again.

It should be understood that, the neural network adjustment method provided in this embodiment of this application may be applied to CSI feedback. When this embodiment provided in this application is used in a CSI feedback procedure, the following two possible cases are included.

Case 1: The method procedure shown in (a) in FIG. 8 further includes S812a: The network device sends a CSI-RS to the terminal device. S813a: The terminal device performs channel measurement based on the CSI-RS to obtain downlink channel information. To be specific, in S801a, that the terminal device determines whether the first compressor and the first decompressor need to be updated may be determining, based on the downlink channel information obtained by the terminal device through channel measurement based on the CSI-RS, and the first compressor and the first decompressor that are known.

Case 2: The method procedure shown in (a) in FIG. 8 further includes S814a: The terminal device starts measurement and sends a third notification message to the network device. The terminal device starts measurement and sends the third notification message to the network device to obtain uplink channel information. It should be understood that the uplink channel information obtained by the terminal device from a network device side has a compression loss. In this embodiment of this application, the terminal device may start measurement because the terminal device perceives deterioration of a downlink throughput. S815a: The network device sends a CSI-RS and the uplink channel information to the terminal device. S816a: The terminal device performs channel measurement based on the CSI-RS to obtain downlink channel information. To be specific, in S801a, that the terminal device determines whether the first compressor and the first decompressor need to be updated may be determining, based on the downlink channel information obtained by the terminal device through channel measurement based on the CSI-RS, the uplink channel information that has a compression loss and that is received from the network device, and the first compressor and the first decompressor that are known.

Specifically, in correspondence to the possibility 2 in S520,
as shown in (b) in FIG. 8, the following steps are included.

S801b: The terminal device determines whether the first compressor and the first decompressor need to be updated.

Specifically, for how the terminal device determines whether the first compressor and the first decompressor need to be updated in S801b, refer to the possibility 1 in the manner 1 and the possibility 1 and the possibility 2 in the manner 2 in S510.

When the terminal device determines that the first compressor and the first decompressor need to be updated, the method procedure shown in (b) in FIG. 8 further includes: S810b: The terminal device adjusts the first compressor and the first decompressor based on currently obtained downlink channel information or based on currently obtained downlink channel information and uplink channel information.

Specifically, for how the terminal device adjusts the first compressor and the first decompressor in S810b, refer to the descriptions in the possibility 2 in S520. Details are not described herein again.

For ease of description, in this embodiment, the adjusted first decompressor may also be referred to as the second decompressor, and the adjusted first compressor may also be referred to as the second compressor. To distinguish from (a) in FIG. 8, the adjusted first decompressor and the adjusted first compressor are used for description below.

After the terminal device adjusts the first compressor and the first decompressor, by way of example but not limitation, the method procedure shown in (b) in FIG. 8 further includes the following several possible manners subsequently.

Manner 1: The method procedure shown in (b) in FIG. 8 further includes: S820b: The terminal device sends a fourth notification message to the network device. The fourth notification message is used to notify the network device to receive information about the adjusted first decompressor, or the fourth notification message is used to notify the network device to receive information about the adjusted first compressor and information about the adjusted first decompressor.

It should be understood that, a function of the fourth notification message in (b) in FIG. 8 is similar to a function of the first information in (a) in FIG. 8, and both the functions are notifying the network device to receive the information about the updated compressor and the information about the updated decompressor. Therefore, the fourth notification message in this application may also be referred to as the first information.

After the network device receives the fourth notification message, steps that may be performed include the following two possibilities.

Possibility 1: After receiving the fourth notification message, the network device sends a fourth response message to the terminal device, where the fourth response message is used to indicate that the terminal device can report the information about the adjusted first decompressor, or the fourth response message is used to indicate that the terminal device can report the information about the adjusted first compressor and the information about the adjusted first decompressor. In the manner 1, the method procedure shown in (b) in FIG. 8 further includes S830b: The network device sends the fourth response message to the terminal device.

The fourth response message may also be referred to as the first response message.

Further, in the possibility 1, the method procedure shown in (b) in FIG. 8 further includes S840b: The terminal device sends the information about the adjusted first decompressor to the network device, or the terminal device sends the information about the adjusted first compressor and the information about the adjusted first decompressor to the network device.

It should be noted that, in this embodiment of this application, the terminal device may send, to the network device, the information about the adjusted first decompressor that needs to be configured by the network device, or the terminal device may send, to the network device, the information about the adjusted first compressor and the information about the adjusted first decompressor. Subsequently, the network device may re-determine, based on the adjusted first compressor and the adjusted first decompressor, whether the adjusted first compressor and the adjusted first decompressor need to be updated.

In a possible implementation, the network device and the terminal device each locally store only a third network structure corresponding to the first decompressor, and the adjusted first decompressor may be represented by using the third network structure and a third network weight. In this case, that the terminal device sends the information about the adjusted first decompressor to the network device may be sending the third network weight.

Similarly, the network device and the terminal device each locally store only a fourth network structure corresponding to the first compressor and a third network structure corresponding to the first decompressor, the adjusted first decompressor may be represented by using the third network structure and a third network weight, and the adjusted first compressor may be represented by using the fourth network structure and a fourth network weight. In this case, that the terminal device sends the information about the adjusted first decompressor to the network device may be sending the third network weight, and that the terminal device sends the information about the adjusted first compressor to the network device may be sending the fourth network weight.

It should be noted that, when the adjusted first decompressor is referred to as the second decompressor, the third network structure is referred to as the first network structure, and the third network weight is referred to as the first network weight; and when the adjusted first compressor is referred to as the second compressor, the fourth network structure is referred to as the second network structure, and the fourth network weight is referred to as the second network weight.

In another possible implementation, the network device and the terminal device each locally store only a third network structure corresponding to the first decompressor, and a difference between the adjusted first decompressor and the first decompressor may be represented by using a first network weight variation. In this case, that the terminal device sends the first decompressor to the network device may be sending the first network weight variation.

Similarly, the network device and the terminal device each locally store only a fourth network structure corresponding to the first compressor and a third network structure corresponding to the first decompressor, a difference between the adjusted first decompressor and the first decompressor may be represented by using a first network weight variation, and a difference between the adjusted first compressor and the first compressor may be represented by using a second network weight variation. In this case, that the terminal device sends the adjusted first decompressor to the network device may be sending the first network weight variation, and that the terminal device sends the information about the adjusted first compressor to the network device may be sending the second network weight variation.

It should be noted that, the foregoing possible implementations in which the terminal device sends the information about the adjusted first decompressor, or the information about the adjusted first decompressor and the information about the adjusted first compressor to the network device are merely examples, and do not constitute any limitation on the protection scope of this application. Simple variations of the foregoing manners and other manners in which the terminal device reports the information about the adjusted first decompressor, or the information about the adjusted first decompressor and the information about the adjusted first compressor to the network device also fall within the protection scope of this application. For example, the terminal device reports the indexes of the network structure and the network weight that correspond to the adjusted first decompressor. Examples are not described one by one herein.

Possibility 2: After receiving the fourth notification message, the network device may not agree to receive, based on an AI mode, channel information fed back by the terminal device. For example, the network device sends a third response message to the terminal device, where the third response message is used to indicate the terminal device to continue to feed back the channel information based on a conventional channel information feedback model. For another example, if the network device does not send a response message to the terminal device after receiving the fourth notification message, and the terminal device does not receive any response message within a preset time period after a time point at which the terminal device sends the fourth notification message, the terminal device may determine to continue to feed back the channel information based on the conventional channel information feedback model.

In the possibility 2, the method procedure shown in (b) in FIG. 8 further includes S831b: The network device sends the third response message to the terminal device, or the network device skips sending a response message to the terminal device within the fourth preset duration. The third response message is similar to the second response message in (a) in FIG. 8, and may also be referred to as the second response message.

It should be noted that, in the possibility 2, a premise that the network device does not agree to receive, based on the AI mode, the channel information fed back by the terminal device includes the following.

It is predefined in a protocol that when the first compressor and the first decompressor need to be updated, the network device and the terminal device determine to roll back to a conventional channel information feedback mode; or the terminal device sends a second notification message to the network device, or the network device sends a second notification message to the terminal device. The second notification message is used to notify a peer device to roll back to the conventional channel information feedback mode from an AI mode-based channel information feedback mode (where a compressor and a decompressor in an AI framework are the first compressor and the first decompressor). In other words, in the possibility 2, the method procedure shown in (b) in FIG. 8 further includes S811b: Send the second notification message.

It should be understood that, the possibility 1 may also include S811b, or S811b does not need to be performed in the possibility 1. After determining that an update is required, the terminal device does not need to notify the network device to first roll back to the conventional channel information feedback manner, but may continue to provide a channel information feedback based on the first compressor and the first decompressor.

Manner 2: The method procedure shown in (b) in FIG. 8 further includes: S821b: The network device sends second information to the terminal device, where the second information is used to indicate that the network device can receive information about the adjusted first decompressor, or the second information is used to notify that the network device can receive information about the adjusted first decompressor and information about the adjusted first compressor.

The terminal device sends the information about the adjusted first decompressor to the network device, or sends the information about the adjusted first decompressor and the information about the adjusted first compressor to the network device after receiving the second information.

It should be noted that, in this embodiment of this application, an occasion on which the terminal device sends the information about the adjusted first decompressor to the network device, or sends the information about the adjusted first decompressor and the information about the adjusted first compressor to the network device after receiving the second information is not limited, and may be any moment after the second information is received.

For example, the information about the adjusted first decompressor starts to be sent to the network device, or the information about the adjusted first decompressor and the information about the adjusted first compressor start to be sent to the network device within first preset duration after a first start moment or after the first preset duration. To be specific, in the manner 2, the method procedure shown in (b) in FIG. 8 further includes S840b. For details about sending the information about the adjusted first decompressor and the information about the adjusted first compressor, refer to the possibility 1 in the manner 1. Details are not described herein again.

Manner 3: The terminal device sends information about the adjusted first decompressor to the network device, or sends information about the adjusted first decompressor and information about the adjusted first compressor to the network device after adjusting the first compressor and the first decompressor.

It should be noted that, in this embodiment of this application, an occasion on which the terminal device sends the information about the adjusted first decompressor to the network device, or sends the information about the adjusted first decompressor and the information about the adjusted first compressor to the network device after adjusting the first compressor and the first decompressor is not limited, and may be any moment after the first compressor and the first decompressor are adjusted.

For example, the information about the adjusted first decompressor starts to be sent to the network device, or the information about the adjusted first decompressor and the information about the adjusted first compressor start to be sent to the network device within second preset duration after a second start moment or after the second preset duration. To be specific, in the manner 2, the method procedure shown in (b) in FIG. 8 further includes S840b. For details about sending the information about the adjusted first decompressor and the information about the adjusted first compressor, refer to the possibility 1 in the manner 1. Details are not described herein again.

It should be noted that, in the manner 2 and the manner 3, both the terminal device and the network device can learn of a moment at which the first compressor and the first decompressor start to be updated (for example, the terminal device that performs update can learn of the moment, and the network device perceives occurrence of the update based on an interruption or a mode of downlink channel information transmission). After the preset duration, the terminal device and the network device learn that the update is completed, and may agree to transmit the information about the second decompressor obtained through update, or the information about the second compressor obtained through update and the information about the second decompressor obtained through update, without requiring an instruction (for example, the first information) to notify the network device that the update is completed.

Manner 4: The method procedure shown in (b) in FIG. 8 further includes: S820b: The terminal device sends a fourth notification message to the network device. The fourth notification message is used to notify the network device to receive information about the adjusted first decompressor, or the fourth notification message is used to notify the network device to receive information about the adjusted first decompressor and information about the adjusted first compressor. The terminal device starts to send the information about the adjusted first decompressor to the network device, or send the information about the adjusted first decompressor and the information about the adjusted first compressor to the network device after sending the fourth notification message to the network device within third preset duration or after the third preset duration. To be specific, in the manner 2, the method procedure shown in (b) in FIG. 8 further includes S840b. For details about sending the information about the adjusted first decompressor and the information about the adjusted first compressor, refer to the possibility 1 in the manner 1. Details are not described herein again.

It should be understood that, the neural network adjustment method provided in this embodiment of this application may be applied to CSI feedback. When the embodiment shown in (b) in FIG. 8 is used in a CSI feedback procedure, the following two possible cases are included.

Case 1: The method procedure shown in (b) in FIG. 8 further includes S812b: The network device sends a CSI-RS to the terminal device. S813b: The terminal device performs channel measurement based on the CSI-RS to obtain downlink channel information. To be specific, in S801b, that the terminal device determines whether the first compressor and the first decompressor need to be updated may be determining, based on the downlink channel information obtained by the terminal device through channel measurement based on the CSI-RS, and the first compressor and the first decompressor that are known.

Case 2: The method procedure shown in (b) in FIG. 8 further includes S814b: The terminal device starts measurement, and sends a third notification message to the network device. S815b: The network device sends a CSI-RS and uplink channel information to the terminal device. S813b: The terminal device performs channel measurement based on the CSI-RS to obtain downlink channel information. To be specific, in S801b, that the terminal device determines whether the first compressor and the first decompressor need to be updated may be determining, based on the downlink channel information obtained by the terminal device through channel measurement based on the CSI-RS, the uplink channel information that has a compression loss and that is received from the network device, and the first compressor and the first decompressor that are known.

Specifically, in correspondence to the possibility 3 in S520,

as shown in (c) in FIG. 8, the following steps are included.

S801c: The terminal device determines whether the first compressor and the first decompressor need to be updated.

Specifically, for how the terminal device determines whether the first compressor and the first decompressor need to be updated in S801c, refer to the possibility 1 in the manner 1 and the possibility 1 and the possibility 2 in the manner 2 in S510.

When the terminal device determines that the first compressor and the first decompressor need to be updated, the method procedure shown in (c) in FIG. 8 further includes: S810c: The terminal device selects the compressor and the decompressor based on currently obtained downlink channel information or based on currently obtained downlink channel information and uplink channel information, and further adjusts the compressor and the decompressor to obtain an appropriate third compressor and an appropriate third decompressor.

Specifically, for how the terminal device selects and obtains through adjustment the appropriate third compressor and the appropriate third decompressor in S810c, refer to the descriptions in the possibility 3 in S520. Details are not described herein again.

For ease of description, in this embodiment of this application, the third decompressor may also be referred to as the second decompressor, and the third compressor may also be referred to as the second compressor. To distinguish from (a) in FIG. 8, the third compressor and the third decompressor are used for description below.

After the terminal device selects and obtains through adjustment the appropriate third compressor and the appropriate third decompressor, by way of example but not limitation, the method procedure shown in (c) in FIG. 8 further includes the following several possible manners subsequently.

Manner 1: The method procedure shown in (c) in FIG. 8 further includes: S820c: The terminal device sends a fifth notification message to the network device. The fifth notification message is used to notify the network device to receive information about the third decompressor, or the first information is used to notify the network device to receive information about the third compressor and information about the third decompressor.

It should be understood that, a function of the fifth notification message in (c) in FIG. 8 is similar to a function of the first information in (a) in FIG. 8, and both the functions are notifying the network device to receive the information about the updated compressor and the information about the updated decompressor. Therefore, the fifth notification message in this application may also be referred to as the first information.

After the network device receives the fifth notification message, steps that may be performed include the following two possibilities.

Possibility 1: After receiving the fifth notification message, the network device sends a fifth response message to the terminal device, where the fifth response message is used to indicate that the terminal device can report the information about the third decompressor, or the fifth response message is used to indicate that the terminal device can report the information about the third compressor and the information about the third decompressor. In the manner 1, the method procedure shown in (c) in FIG. 8 further includes S830c: The network device sends the fifth response message to the terminal device.

The fifth response message may also be referred to as the first response message.

Further, in the possibility 1, the method procedure shown in (c) in FIG. 8 further includes S840c: The terminal device sends the information about the third decompressor to the network device, or the terminal device sends the information about the third compressor and the information about the third decompressor to the network device.

It should be noted that, in this embodiment of this application, the terminal device may send, to the network device, the information about the third decompressor that needs to be configured by the network device, or the terminal device may send, to the network device, the information about the third compressor and the information about the third decompressor. Subsequently, the network device may re-determine, based on the third compressor and the third decompressor, whether the third compressor and the third decompressor need to be updated.

In a possible implementation, a fifth network structure corresponding to the third decompressor is the same as the third network structure corresponding to the first decompressor. The third decompressor may be represented by using the fifth network structure and a fifth network weight. In this case, that the terminal device sends the information about the third decompressor to the network device may be sending the fifth network weight and third indication information. The third indication is used to indicate that the fifth network structure corresponding to the third decompressor is the same as the third network structure corresponding to the first decompressor, that is, indicate that a network structure is not changed.

Similarly, a fifth network structure corresponding to the third decompressor is the same as the third network structure corresponding to the first decompressor, and a sixth network structure corresponding to the third compressor is the same as the fourth network structure corresponding to the first compressor. The third decompressor may be represented by using the fifth network structure and a fifth network weight, and the third decompressor may be represented by using the sixth network structure and a sixth network weight. In this case, that the terminal device sends the information about the third decompressor to the network device may be sending the fifth network weight and third indication information, and that the terminal device sends the information about the third compressor to the network device may be sending the sixth network weight and fourth indication information. The third indication information is used to indicate that the fifth network structure corresponding to the third decompressor is the same as the third network structure corresponding to the first decompressor, and the fourth indication is used to indicate that the sixth network structure corresponding to the third compressor is the same as the fourth network structure corresponding to the first decompressor. The third indication information and the fourth indication information may be a same piece of indication information, that is, indicate that network structures are not changed.

It should be noted that, when the adjusted third decompressor is referred to as the second decompressor, the fifth network structure is referred to as the first network structure, and the fifth network weight is referred to as the first network weight; and when the third compressor is referred to as the second compressor, the sixth network structure is referred to as the second network structure, and the sixth network weight is referred to as the second network weight.

In another possible implementation, a fifth network structure corresponding to the third decompressor is the same as the third network structure corresponding to the first decompressor. The third decompressor may be represented by using the fifth network structure and a fifth network weight, the network device and the terminal device each locally store the fifth network weight corresponding to the third decompressor, and an index of the fifth network weight in the network device is the same as an index of the fifth network weight in the terminal device. In this case, that the terminal device sends the information about the third decompressor to the network device may be sending the index of the fifth network weight and third indication information. The third indication is used to indicate that the fifth network structure corresponding to the third decompressor is the same as the third network structure corresponding to the first decompressor, that is, indicate that a network structure is not changed.

Similarly, a fifth network structure corresponding to the third decompressor is the same as the third network structure corresponding to the first decompressor, and a sixth network structure corresponding to the third compressor is the same as the fourth network structure corresponding to the first compressor. The third decompressor may be represented by using the fifth network structure and a fifth network weight, the third compressor may be represented by using the sixth network structure and a sixth network weight,

the network device and the terminal device each locally store the fifth network weight corresponding to the third decompressor, an index of the fifth network weight in the network device is the same as an index of the fifth network weight in the terminal device, the network device and the terminal device each locally store the sixth network weight corresponding to the third compressor, and an index of the sixth network weight in the network device is the same as an index of the sixth network weight in the terminal device. In this case, that the terminal device sends the information about the third decompressor to the network device may be sending the index of the fifth network weight and third indication information, and that the terminal device sends the information about the third compressor to the network device may be sending the index of the sixth network weight and fourth indication information. The third indication is used to indicate that the fifth network structure corresponding to the third decompressor is the same as the third network structure corresponding to the first decompressor, and the fourth indication is used to indicate that the sixth network structure corresponding to the third compressor is the same as the fourth network structure corresponding to the first decompressor. The third indication information and the fourth indication information may be a same piece of indication information, that is, indicate that network structures are not changed.

Optionally, the index of the fifth network weight is the same as the index of the sixth network weight. In this case, the index of the fifth network weight and the index of the sixth network weight are the same index.

In still another possible implementation, a fifth network structure corresponding to the third decompressor is the same as the third network structure corresponding to the first decompressor. The third decompressor may be represented by using the fifth network structure and a fifth network weight, the first decompressor may be represented by using the third network structure and a third network weight, and a variation between the third network weight and the fifth network weight is a third network weight variation. In this case, that the terminal device sends the information about the third decompressor to the network device may be sending the third network weight variation and third indication information. The third indication is used to indicate that the fifth network structure corresponding to the third decompressor is the same as the third network structure corresponding to the first decompressor, that is, indicate that a network structure is not changed.

Similarly, a fifth network structure corresponding to the third decompressor is the same as the third network structure corresponding to the first decompressor, and a sixth network structure corresponding to the third compressor is the same as the fourth network structure corresponding to the first compressor. The third decompressor may be represented by using the fifth network structure and a fifth network weight, the first decompressor may be represented by using the third network structure and a third network weight, a variation between the third network weight and the fifth network weight is a third network weight variation, the third compressor may be represented by using the sixth network structure and a sixth network weight, the first compressor may be represented by using the fourth network structure and a fourth network weight, and a variation between the fourth network weight and the sixth network weight is a fourth network weight variation.

In this case, that the terminal device sends the information about the third decompressor to the network device may be sending the third network weight variation and third indication information, and that the terminal device sends the information about the third compressor to the network device may be sending the fourth network weight variation and fourth indication information. The third indication is used to indicate that the fifth network structure corresponding to the third decompressor is the same as the third network structure corresponding to the first decompressor, and the fourth indication is used to indicate that the sixth network structure corresponding to the third compressor is the same as the fourth network structure corresponding to the first decompressor. The third indication information and the fourth indication information may be a same piece of indication information, that is, indicate that network structures are not changed.

In still another possible implementation, a fifth network structure corresponding to the third decompressor is different from or the same as the third network structure corresponding to the first decompressor. The network device and the terminal device each locally store the third decompressor, and an index (index) of the third decompressor in the network device is the same as an index of the third decompressor in the terminal device. In this case, that the terminal device sends the information about the third decompressor to the network device may be sending the index of the third decompressor, or may be sending indication information used to indicate whether a network structure is changed.

Similarly, a fifth network structure corresponding to the third decompressor is different from or the same as the third network structure corresponding to the first decompressor, and a sixth network structure corresponding to the third compressor is different from or the same as the fourth network structure corresponding to the first compressor. The network device locally stores the third compressor and the third decompressor, and indexes corresponding to the third compressor and the third decompressor in the network device are the same as indexes corresponding to the third compressor and the third decompressor in the terminal device. In this case, that the terminal device sends the information about the third compressor and the information about the third decompressor to the network device may be sending the indexes corresponding to the third compressor and the third decompressor, or may be sending indication information used to indicate whether a network structure is changed.

Optionally, the index of the third compressor is the same as the index of the third decompressor. In this case, the information about the third compressor and the information about the third decompressor are the same index and the indication information indicating whether the network structure is changed.

In still another possible implementation, a fifth network structure corresponding to the third decompressor is different from the third network structure corresponding to the first decompressor. The third decompressor may be represented by using a fifth network weight and the fifth network structure. In this case, that the terminal device sends the information about the third decompressor to the network device may be sending the fifth network weight, the fifth network structure, and fifth indication information. The fifth indication information is used to indicate that a network structure is changed.

Similarly, a fifth network structure corresponding to the third decompressor is different from the third network structure corresponding to the first decompressor, and a sixth network structure corresponding to the third compressor is different from the fourth network structure corresponding to the first compressor. The third decompressor may be represented by using a fifth network weight and the fifth network structure, and the third compressor may be represented by using a sixth network weight and the sixth network structure. In this case, that the terminal device sends the information about the third decompressor to the network device may be sending the fifth network weight, the fifth network structure, and fifth indication information, and that the terminal device sends the information about the third compressor to the network device may be sending the sixth network weight, the sixth network structure, and sixth indication information. The fifth indication information and the sixth indication information may be a same piece of information, used to indicate that network structures are changed.

In still another possible implementation, a fifth network structure corresponding to the third decompressor is different from the third network structure corresponding to the first decompressor. The third decompressor may be represented by using a fifth network weight and the fifth network structure, the network device and the terminal device each locally store the fifth network structure, and an index of the fifth network structure in the network device is the same as an index of the fifth network structure in the terminal device. In this case, that the terminal device sends the information about the third decompressor to the network device may be sending the fifth network weight, the index of the fifth network structure, and fifth indication information. The fifth indication information is used to indicate that a network structure is changed.

Similarly, a fifth network structure corresponding to the third decompressor is different from the third network structure corresponding to the first decompressor, and a sixth network structure corresponding to the third compressor is different from the fourth network structure corresponding to the first compressor. The third decompressor may be represented by using a fifth network weight and the fifth network structure, the third compressor may be represented by using a sixth network weight and the sixth network structure,
the network device and the terminal device each locally store the fifth network structure, an index of the fifth network structure in the network device is the same as an index of the fifth network structure in the terminal device, the network device and the terminal device each locally store the fifth network structure, and an index of the sixth network structure in the network device is the same as an index of the sixth network structure in the terminal device.

In this case, that the terminal device sends the information about the third decompressor to the network device may be sending the fifth network weight, the index of the fifth network structure, and fifth indication information, and that the terminal device sends the information about the third compressor to the network device may be sending the sixth network weight, the index of the sixth network structure, and sixth indication information. The fifth indication information and the sixth indication information may be a same piece of information, used to indicate that network structures are changed.

Optionally, the index of the fifth network structure is the same as the index of the sixth network structure. In this case, the index of the fifth network structure and the index of the sixth network structure are the same index.

In still another possible implementation, a fifth network structure corresponding to the third decompressor is different from the third network structure corresponding to the first decompressor. The third decompressor may be represented by using a fifth network weight and the fifth network structure, the network device and the terminal device each locally store the fifth network structure, an index of the fifth network structure in the network device is the same as an index of the fifth network structure in the terminal device, the network device and the terminal device each locally store the fifth network weight, and an index of the fifth network weight in the network device is the same as an index of the fifth network weight in the terminal device. In this case, that the terminal device sends the information about the third decompressor to the network device may be sending the index of the fifth network weight, the index of the fifth network structure, and fifth indication information. The fifth indication information is used to indicate that a network structure is changed.

Similarly, a fifth network structure corresponding to the third decompressor is different from the third network structure corresponding to the first decompressor, and a sixth network structure corresponding to the third compressor is different from the fourth network structure corresponding to the first compressor. The third decompressor may be represented by using a fifth network weight and the fifth network structure, the third compressor may be represented by using a sixth network weight and the sixth network structure,

the network device and the terminal device each locally store the fifth network structure, an index of the fifth network structure in the network device is the same as an index of the fifth network structure in the terminal device, the network device and the terminal device each locally store the fifth network weight, an index of the fifth network weight in the network device is the same as an index of the fifth network weight in the terminal device, the network device and the terminal device each locally store the sixth network structure, an index of the sixth network structure in the network device is the same as an index of the sixth network structure in the terminal device, the network device and the terminal device each locally store the sixth network weight, and an index of the sixth network weight in the network device is the same as an index of the sixth network weight in the terminal device.

In this case, that the terminal device sends the information about the third decompressor to the network device may be sending the index of the fifth network weight, the index of the fifth network structure, and fifth indication information, and that the terminal device sends the information about the third compressor to the network device may be sending the index of the sixth network weight, the index of the sixth network structure, and sixth indication information. The fifth indication information and the sixth indication information may be a same piece of information, used to indicate that a network structure is changed.

Optionally, the index of the fifth network structure is the same as the index of the sixth network structure. In this case, the index of the fifth network structure and the index of the sixth network structure are the same index. The index of the fifth network weight is the same as the index of the sixth network weight. In this case, the index of the fifth network weight and the index of the sixth network weight are the same index.

It should be noted that, the foregoing possible implementations in which the terminal device sends the third decompressor, or the third compressor and the third decompressor to the network device are merely examples, and do not constitute any limitation on the protection scope of this application. Simple variations of the foregoing manners and other manners in which the terminal device reports the third decompressor obtained through adjustment, or the third compressor and the third decompressor to the network device also fall within the protection scope of this application. For example, the terminal device reports the indexes of the network structure and the network weight that correspond to the third decompressor. Examples are not described one by one herein.

Possibility 2: After receiving the fifth notification message, the network device may not agree to receive, based on an AI mode, channel information fed back by the terminal device. For example, the network device sends a sixth response message to the terminal device, where the sixth response message is used to indicate the terminal device to continue to feed back the channel information based on a conventional channel information feedback model. For another example, if the network device does not send a response message to the terminal device after receiving the first information, and the terminal device does not receive any response message within a preset time period after a time point at which the terminal device sends the fifth notification message, the terminal device may determine to continue to feed back the channel information based on the conventional channel information feedback model.

In the possibility 2, the method procedure shown in (c) in FIG. 8 further includes S831c: The network device sends the sixth response message to the terminal device, or the network device skips sending a response message to the terminal device within the fourth preset duration. The sixth response message is similar to the second response message in (a) in FIG. 8, and may also be referred to as the sixth response message.

It should be noted that, in the possibility 2, a premise that the network device does not agree to receive, based on the AI mode, the channel information fed back by the terminal device includes the following.

It is predefined in a protocol that when the first compressor and the first decompressor need to be updated, the network device and the terminal device determine to roll back to a conventional channel information feedback mode; or the terminal device sends a second notification message to the network device, or the network device sends a second notification message to the terminal device. The second notification message is used to notify a peer device to roll back to the conventional channel information feedback mode from an AI mode-based channel information feedback mode (where a compressor and a decompressor in an AI framework are the first compressor and the first decompressor). In other words, in the possibility 2, the method procedure shown in (c) in FIG. 8 further includes S811c: Send the second notification message.

It should be understood that, the possibility 1 may also include S811c, or S811c does not need to be performed in the possibility 1. After determining that an update is required, the terminal device does not need to notify the network device to first roll back to the conventional channel information feedback manner, but may continue to provide a channel information feedback based on the first compressor and the first decompressor.

Manner 2: The method procedure shown in (c) in FIG. 8 further includes: S821c: The network device sends second information to the terminal device, where the second information is used to indicate that the network device can receive information about the third decompressor, or the second information is used to notify that the network device can receive information about the third decompressor and information about the third compressor.

The terminal device sends the information about the third decompressor to the network device, or sends the information about the third decompressor and the information about the third compressor to the network device after receiving the second information.

It should be noted that, in this embodiment of this application, an occasion on which the terminal device sends the information about the third decompressor to the network device, or sends the information about the third decompressor and the information about the third compressor to the network device after receiving the second information is not limited, and may be any moment after the second information is received.

For example, the information about the third decompressor starts to be sent to the network device, or the information about the third decompressor and the information about the third compressor start to be sent to the network device within first preset duration after a first start moment or after the first preset duration. To be specific, in the manner 2, the method procedure shown in (c) in FIG. 8 further includes S840c. For details about sending the information about the third decompressor and the information about the third compressor, refer to the possibility 1 in the manner 1. Details are not described herein again.

Manner 3: The terminal device starts to send information about the third decompressor to the network device, or send information about the third decompressor and information about the third compressor to the network device after determining the third compressor and the third decompressor.

It should be noted that, in this embodiment of this application, an occasion on which the terminal device sends the information about the third decompressor to the network device, or sends the information about the third decompressor and the information about the third compressor to the network device after determining the third compressor and the third decompressor is not limited, and may be any moment after the terminal device determines the third compressor and the third decompressor.

For example, the information about the third decompressor starts to be sent to the network device, or the information about the third decompressor and the information about the third compressor start to be sent to the network device within second preset duration after a second start moment or after the second preset duration. To be specific, in the manner 2, the method procedure shown in (c) in FIG. 8 further includes S840c. For details about sending the information about the third decompressor and the information about the third compressor, refer to the possibility 1 in the manner 1. Details are not described herein again.

It should be noted that, in the manner 2 and the manner 3, both the terminal device and the network device can learn of a moment at which the first compressor and the first decompressor start to be updated (for example, the terminal device that performs update can learn of the moment, and the network device perceives occurrence of the update based on an interruption or a mode of downlink channel information transmission). After the preset duration, the terminal device and the network device learn that the update is completed, and may agree to transmit the information about the second decompressor obtained through update, or the information about the second compressor obtained through update and the information about the second decompressor obtained through update, without requiring an instruction (for example, the first information) to notify the network device that the update is completed.

Manner 4: The method procedure shown in (c) in FIG. 8 further includes: S820c: The terminal device sends a fifth notification message to the network device. The fifth notification message is used to notify the network device to receive information about the third decompressor, or the fourth notification message is used to notify the network device to receive information about the third compressor and information about the third decompressor. After sending the fifth notification message to the network device, the terminal device starts to send the information about the third decompressor to the network device, or send the information about the third decompressor and the information about the third compressor to the network device within third preset duration or after the third preset duration. To be specific, in the manner 2, the method procedure shown in (c) in FIG. 8 further includes S840c. For details about sending the information about the third decompressor and the information about the third compressor, refer to the possibility 1 in the manner 1. Details are not described herein again.

It should be understood that, the neural network adjustment method provided in this embodiment of this application may be applied to CSI feedback. When this embodiment provided in this application is used in a CSI feedback procedure, the following two possible cases are included.

Case 1: The method procedure shown in (c) in FIG. 8 further includes S812c: The network device sends a CSI-RS to the terminal device. S813c: The terminal device performs channel measurement based on the CSI-RS to obtain downlink channel information. To be specific, in S801c, that the terminal device determines whether the first compressor and the first decompressor need to be updated may be determining, based on the downlink channel information obtained by the terminal device through channel measurement based on the CSI-RS, and the first compressor and the first decompressor that are known.

Case 2: The method procedure shown in (c) in FIG. 8 further includes S814c: The terminal device starts measurement, and sends a third notification message to the network device. S815c: The network device sends a CSI-RS and uplink channel information to the terminal device. S816c: The terminal device performs channel measurement based on the CSI-RS to obtain downlink channel information. To be specific, in S801c, that the terminal device determines whether the first compressor and the first decompressor need to be updated may be determining, based on the downlink channel information obtained by the terminal device through channel measurement based on the CSI-RS, the uplink channel information that has a compression loss and that is received from the network device, and the first compressor and the first decompressor that are known.

Specifically, in correspondence to the possibility 4 in S520,

as shown in (d) in FIG. 8, the following steps are included.

S801d: The network device determines whether the first compressor and the first decompressor need to be updated.

Specifically, for how the network device determines whether the first compressor and the first decompressor need to be updated in S801d, refer to the possibility 2 in the manner 1 and the possibility 3 and the possibility 4 in the manner 2 in S510.

When the network device determines that the first compressor and the first decompressor need to be updated, the method procedure shown in (d) in FIG. 8 further includes: S810d: The network device selects the appropriate second compressor and the appropriate second decompressor based on currently obtained downlink channel information or based on currently obtained downlink channel information and uplink channel information.

Specifically, for how the network device selects the appropriate second compressor and the appropriate second decompressor in S810d, refer to the descriptions in the possibility 4 in S520. Details are not described herein again.

After the terminal device selects the appropriate first compressor and the appropriate first decompressor, by way of example but not limitation, the method procedure shown in (d) in FIG. 8 further includes the following several possible manners subsequently.

Manner 1: The method procedure shown in (d) in FIG. 8 further includes: S820d: The network device sends first information to the terminal device. The first information is used to notify the terminal device to receive information about the second decompressor, or the first information is used to notify the terminal device to receive information about the second compressor and information about the second decompressor.

After the terminal device receives the first information, steps that may be performed include the following two possibilities.

Possibility 1: After receiving the first information, the terminal device sends a first response message to the network device, where the first response message is used to indicate that the network device can deliver the second decompressor, or the first response message is used to indicate that the network device can report the second compressor and the second decompressor. In the possibility 1, the method procedure shown in (d) in FIG. 8 further includes S830d: The terminal device sends the first response message to the network device.

Further, in the possibility 1, the method procedure shown in (d) in FIG. 8 further includes S840d: The network device sends the information about the second compressor to the terminal device, or the network device sends the information about the second compressor and the information about the second decompressor to the terminal device.

It should be noted that, in this embodiment of this application, the network device may send, to the terminal device, the information about the second compressor that needs to be configured by the terminal device, or the network device may send, to the terminal device, the information about the selected appropriate second compressor and the information about the selected appropriate second decompressor. Subsequently, the terminal device may re-determine, based on the second compressor and the second decompressor, whether the second compressor and the second decompressor need to be updated.

In a possible implementation, the terminal device and the network device each locally store the second compressor, and an index of the second compressor in the terminal device is the same as an index of the second compressor in the network device. In this case, that the network device sends the second compressor to the terminal device may be sending the index of the second compressor. Similarly, the terminal device locally stores the second compressor and the second decompressor, and indexes corresponding to the second compressor and the second decompressor in the terminal device are the same as indexes corresponding to the second compressor and the second decompressor in the network device. In this case, that the network device sends the information about the second compressor and the information about the second decompressor to the terminal device may be sending the indexes corresponding to the second compressor and the second decompressor.

Optionally, the index of the second compressor is the same as the index of the second decompressor. In this case, the index of the second compressor and the index of the second decompressor are the same index.

In another possible implementation, the second compressor may be represented by using a second network weight and a second network structure. In this case, that the network device sends the second compressor to the terminal device may be sending the second network weight and the second network structure. Similarly, the second decompressor may be represented by using a first network weight and a first network structure, and the second compressor may be represented by using a second network weight and a second network structure. In this case, that the network device sends the information about the second decompressor to the terminal device may be sending the first network weight and the first network structure, and that the network device sends the second compressor to the terminal device may be sending the second network weight and the second network structure.

In still another possible implementation, the terminal device and the network device each locally store a second network structure corresponding to the second compressor, an index of the second network structure in the terminal device is the same as an index of the second network structure in the network device, and the second compressor may be represented by using a second network weight and the second network structure. In this case, that the network device sends the second compressor to the terminal device may be sending the index of the second network structure and the second network weight.

Similarly, the terminal device and the network device each locally store a second network structure corresponding to the second compressor and a first network structure corresponding to the second decompressor, an index corresponding to the second network structure in the terminal device is the same as an index corresponding to the second network structure in the network device, an index corresponding to the first network structure in the terminal device is the same as an index corresponding to the first network structure in the network device,

the second decompressor may be represented by using a first network weight and the first network structure, and the second compressor may be represented by using a second network weight and the second network structure. In this case, that the network device sends the information about the second decompressor to the terminal device may be sending the first network weight and the index of the first network structure, and that network device sends the second compressor to the terminal device may be sending the second network weight and the index of the second network structure.

Optionally, the index of the second network structure is the same as the index of the first network structure. In this case, the index of the second network structure and the index of the first network structure are the same index.

In still another possible implementation, the terminal device and the network device each locally store a second network structure corresponding to the second compressor, an index of the second network structure in the terminal device is the same as an index of the second network structure in network device, the second compressor may be represented by using a second network weight and the second network structure, the terminal device and the network device each locally store the second network weight corresponding to the second compressor, and an index of the second network weight in the terminal device is the same as an index of the second network weight in the network device. In this case, that the network device sends the second compressor to the terminal device may be sending the index of the second network structure and the index of the second network weight.

Similarly, the terminal device and the network device each locally store a second network structure corresponding to the second compressor and a first network structure corresponding to the second decompressor, an index corresponding to the second network structure in the terminal device is the same as an index corresponding to the second network structure in the network device, an index corresponding to the first network structure in the terminal device is the same as an index corresponding to the first network structure in the network device,

the second decompressor may be represented by using a first network weight and the first network structure, the second compressor may be represented by using a second network weight and the second network structure, the terminal device and the network device each locally store the first network weight corresponding to the second decompressor, an index of the first network weight in the terminal device is the same as an index of the first network weight in the network device, the terminal device and the network device each locally store the second network weight corresponding to the second compressor, and an index of the second network weight in the terminal device is the same as an index of the second network weight in the network device.

In this case, that the network device sends the information about the second decompressor to the terminal device may be sending the index of the first network weight and the index of the first network structure, and that the network device sends the second compressor to the terminal device may be sending the index of the second network weight and the index of the second network structure.

Optionally, the index of the first network structure is the same as the index of the second network structure. In this case, the index of the first network structure and the index of the second network structure are the same index. The index of the first network weight is the same as the index of the second network weight. In this case, the index of the first network weight and the index of the second network weight are the same index.

In still another possible implementation, the terminal device and the network device each locally store only a second network structure corresponding to the second compressor, and the second compressor may be represented by using a second network weight and the second network structure. In this case, that the network device sends the second compressor to the terminal device may be sending the second network weight. Similarly, the terminal device and the network device each locally store only a second network structure corresponding to the second compressor and a first network structure corresponding to the second decompressor, the second decompressor may be represented by using a first network weight and the first network structure, and the second compressor may be represented by using a second network weight and the second network structure. In this case, that the network device sends the information about the second decompressor to the terminal device may be sending the first network weight, and that the network device sends the second compressor to the terminal device may be sending the second network weight.

In still another possible implementation, the terminal device and the network device each locally store only a second network structure corresponding to the second compressor, the second compressor may be represented by using a second network weight and the second network structure, the terminal device and the network device each locally store the second network weight corresponding to the second compressor, and an index of the second network weight in the terminal device is the same as an index of the second network weight in the network device. In this case, that the network device sends the second compressor to the terminal device may be sending the index of the second network weight.

Similarly, the terminal device and the network device each locally store only a first network structure corresponding to the second decompressor and a second network structure corresponding to the second compressor, the second decompressor may be represented by using a first network weight and the first network structure, the second compressor may be represented by using a second network weight and the second network structure,

the terminal device and the network device each locally store the first network weight corresponding to the second decompressor, an index of the first network weight in the terminal device is the same as an index of the first network weight in the network device, the terminal device and the network device each locally store the second network weight corresponding to the second compressor, and an index of the second network weight in the terminal device is the same as an index of the second network weight in the network device. In this case, that the network device sends the information about the second decompressor to the terminal device may be sending the index of the first network weight, and that the network device sends the second compressor to the terminal device may be sending the index of the second network weight.

Optionally, the index of the first network weight is the same as the index of the second network weight. In this case, the index of the first network weight and the index of the second network weight are the same index.

In still another possible implementation, the network device and the terminal device each locally store only a second network structure corresponding to the second compressor, the second compressor may be represented by using a second network weight and the second network structure, and a variation between the second network weight corresponding to the second compressor and a fourth network weight corresponding to the first compressor is a second network weight variation. In this case, that the network device sends the information about the second compressor to the terminal device may be sending the second network weight variation.

The network device and the terminal device each locally store only a first network structure corresponding to the second decompressor and a second network structure corresponding to the second compressor, the second decompressor may be represented by using a first network weight and the first network structure, the second compressor may be represented by using a second network weight and the second network structure,

a variation between the first network weight corresponding to the second decompressor and a third network weight corresponding to the first decompressor is a first network weight variation, and a variation between the second network weight corresponding to the second compressor and a fourth network weight corresponding to the first compressor is a second network weight variation. In this case, that the network device sends the information about the second decompressor to the terminal device may be sending the first network weight variation, and that the network device sends the second compressor to the terminal device may be sending the second network weight variation.

It should be noted that, the foregoing possible implementations in which the network device sends the information about the second compressor, or the information about the second decompressor and the information about the second compressor to the terminal device are merely examples, and do not constitute any limitation on the protection scope of this application. Simple variations of the foregoing manners and other manners in which the network device notifies the information about the selected appropriate second compressor, or the information about the second decompressor and the information about the second compressor to the terminal device also fall within the protection scope of this application. For example, the network device notifies the indexes of the network structure and the network weight that correspond to the second compressor to the terminal device. Examples are not described one by one herein.

Possibility 2: After receiving the first information, the terminal device may not agree to feed back, based on an AI mode, channel information to the network device. For example, the terminal device sends a second response message to the network device, where the second response message is used to indicate the network device to continue to feed back the channel information based on a conventional channel information feedback model. For another example, if the terminal device does not send a response message to the network device after receiving the first information, and the network device does not receive any response message within a preset time period after a time point at which the network device sends the first information, the network device may determine to continue to feed back the channel information based on a conventional channel information feedback model.

In the possibility 2, the method procedure shown in (d) in FIG. 8 further includes S831d: The terminal device sends the second response message to the network device, or the terminal device skips sending a response message to the network device within the fourth preset duration.

It should be noted that, in the possibility 2, a premise that the terminal device does not agree to feed back, based on the AI mode, the channel information to the network device includes the following.

It is predefined in a protocol that when the first compressor and the first decompressor need to be updated, the network device and the terminal device determine to roll back to a conventional channel information feedback mode; or the network device sends a second notification message to the terminal device, or the terminal device sends a second notification message to the network device. The second notification message is used to notify a peer device to roll back to the conventional channel information feedback mode from an AI mode-based channel information feedback mode (where a compressor and a decompressor in an AI framework are the first compressor and the first decompressor). In other words, in the possibility 2, the method procedure shown in (d) in FIG. 8 further includes S811d: Send the second notification message.

It should be understood that, the possibility 1 may also include S811d, or S811d does not need to be performed in the possibility 1. After determining that an update is required, the network device does not need to notify the terminal device to first roll back to the conventional channel information feedback manner, but may continue to provide a channel information feedback based on the first compressor and the first decompressor.

Manner 2: The method procedure shown in (d) in FIG. 8 further includes: S821d: The terminal device sends second information to the network device, where the second information is used to indicate that the terminal device can receive information about the second decompressor, or the second information is used to notify that the terminal device can receive information about the second compressor and information about the second decompressor.

The network device sends the information about the second decompressor to the terminal device, or sends the information about the second compressor and the information about the second decompressor to the terminal device after receiving the second information.

It should be noted that, in this embodiment of this application, an occasion on which the network device sends the information about the second decompressor to the terminal device, or sends the information about the second compressor and the information about the second decompressor to the terminal device after receiving the second information is not limited, and may be any moment after the second information is received.

For example, the information about the second decompressor starts to be sent to the terminal device, or the information about the second compressor and the information about the second decompressor start to be sent to the terminal device within first preset duration after a first start moment or after the first preset duration. To be specific, in the manner 2, the method procedure shown in (d) in FIG. 8 further includes S840d. For details about sending the information about the second compressor and the information about the second decompressor, refer to the possibility 1 in the manner 1. Details are not described herein again.

Manner 3: The network device sends information about the second decompressor to the terminal device, or sends information about the second compressor and information about the second decompressor to the terminal device after selecting the appropriate second compressor and the appropriate second decompressor.

It should be noted that, in this embodiment of this application, an occasion on which the network device sends the information about the second decompressor to the terminal device, or sends the information about the second compressor and the information about the second decompressor to the terminal device after selecting the appropriate second compressor and the appropriate second decompressor is not limited, and may be any moment after the network device selects the appropriate second compressor and the appropriate second decompressor.

For example, the information about the second decompressor starts to be sent to the terminal device, or the information about the second compressor and the information about the second decompressor start to be sent to the terminal device within second preset duration after a second start moment or after the second preset duration. To be specific, in the manner 3, the method procedure shown in (d) in FIG. 8 further includes S840d. For details about sending the information about the second compressor and the information about the second decompressor, refer to the possibility 1 in the manner 1. Details are not described herein again.

It should be noted that, in the manner 2 and the manner 3, both the terminal device and the network device can learn of a moment at which the first compressor and the first decompressor start to be updated (for example, the network device that performs update can learn of the moment, and the terminal device perceives occurrence of the update based on an interruption or a mode of downlink channel information transmission). After the preset duration, the terminal device and the network device learn that the update is completed, and may agree to transmit the information about the second decompressor obtained through update, or the information about the second compressor obtained through update and the information about the second decompressor obtained through update, without requiring an instruction (for example, the first information) to notify the terminal device that the update is completed.

Manner 4: The method procedure shown in (d) in FIG. 8 further includes: S820d: The network device sends first information to the terminal device. The first information is used to notify the terminal device to receive information about the second decompressor, or the first information is used to notify the terminal device to receive information about the second compressor and information about the second decompressor. After sending the first information to the terminal device, the network device starts to send the information about the second decompressor to the terminal device, or send the information about the second compressor and the information about the second decompressor to the terminal device within third preset duration or after the third preset duration. To be specific, in the manner 4, the method procedure shown in (d) in FIG. 8 further includes S840d. For details about sending the information about the second compressor and the information about the second decompressor, refer to the possibility 1 in the manner 1. Details are not described herein again.

It should be understood that, the neural network adjustment method provided in this embodiment of this application may be applied to CSI feedback. When this embodiment provided in this application is used in a CSI feedback procedure, the following is included.

The method procedure shown in (d) in FIG. 8 further includes S812d: The network device sends a CSI-RS to the terminal device. S813d: The terminal device performs channel measurement based on the CSI-RS to obtain downlink channel information. To be specific, in S801d, that the network device determines whether the first compressor and the first decompressor need to be updated may be determining, based on downlink channel information on which lossy compression is performed and that is reported by the terminal device, and the first compressor and the first decompressor that are known; or that the network device determines whether the first compressor and the first decompressor need to be updated may be determining, based on downlink channel information on which lossy compression is performed and that is reported by the terminal device, uplink channel information obtained by the network device, and the first compressor and the first decompressor that are known.

Specifically, in correspondence to the possibility 5 in S520,

as shown in (e) in FIG. 8, the following steps are included.

S801e: The network device determines whether the first compressor and the first decompressor need to be updated.

Specifically, for how the network device determines whether the first compressor and the first decompressor need to be updated in S801e, refer to the possibility 2 in the manner 1 and the possibility 3 and the possibility 4 in the manner 2 in S510.

When the network device determines that the first compressor and the first decompressor need to be updated, the method procedure shown in (e) in FIG. 8 further includes: S810e: The network device adjusts the first compressor and the first decompressor based on currently obtained downlink channel information or based on currently obtained downlink channel information and uplink channel information.

Specifically, for how the network device adjusts the first compressor and the first decompressor in S810e, refer to the descriptions in the possibility 5 in S520. Details are not described herein again.

For ease of description, in this embodiment, the adjusted first decompressor may also be referred to as the second decompressor, and the adjusted first compressor may also be referred to as the second compressor. To distinguish from (d) in FIG. 8, the adjusted first decompressor and the adjusted first compressor are used for description below.

After the network device adjusts the first compressor and the first decompressor, by way of example but not limitation, the method procedure shown in (e) in FIG. 8 further includes the following several possible manners subsequently.

Manner 1: The method procedure shown in (e) in FIG. 8 further includes: S820e: The network device sends a fourth notification message to the terminal device. The fourth notification message is used to notify the terminal device to receive the adjusted first decompressor, or the fourth notification message is used to notify the terminal device to receive the adjusted first compressor and the adjusted first decompressor.

It should be understood that, a function of the fourth notification message in (e) in FIG. 8 is similar to a function of the first information in (d) in FIG. 8, and both the functions are notifying the terminal device to receive the information about the updated compressor and the information about the updated decompressor. Therefore, the fourth notification message in this application may also be referred to as the first information.

After the terminal device receives the fourth notification message, steps that may be performed include the following two possibilities.

Possibility 1: After receiving the fourth notification message, the terminal device sends a fourth response message to the network device, where the fourth response message is used to indicate that the network device can report the adjusted first decompressor, or the fourth response message is used to indicate that the network device can report the adjusted first compressor and the adjusted first decompressor. In the manner 1, the method procedure shown in (e) in FIG. 8 further includes S830e: The terminal device sends the fourth response message to the network device.

The fourth response message may also be referred to as the first response message.

Further, in the manner 1, the method procedure shown in (e) in FIG. 8 further includes S840e: The network device sends the information about the adjusted first compressor to the terminal device, or the network device sends the information about the adjusted first compressor and the information about the adjusted first decompressor to the terminal device.

It should be noted that, in this embodiment of this application, the network device may send, to the terminal device, the information about the adjusted first compressor that needs to be configured by the terminal device, or the network device may send, to the terminal device, the information about the adjusted first compressor and the information about the adjusted first decompressor. Subsequently, the terminal device may re-determine, based on the adjusted first compressor and the adjusted first decompressor, whether the adjusted first compressor and the adjusted first decompressor need to be updated.

In a possible implementation, the terminal device and the network device each locally store only a third network structure corresponding to the first compressor, and the adjusted first compressor may be represented by using a fourth network structure and a fourth network weight. In this case, that the network device sends the information about the adjusted first compressor to the terminal device may be sending the fourth network weight.

Similarly, the terminal device and the network device each locally store only a fourth network structure corresponding to the first compressor and a third network structure corresponding to the first decompressor, the adjusted first decompressor may be represented by using the third network structure and a third network weight, and the adjusted first compressor may be represented by using the fourth network structure and a fourth network weight. In this case, that the network device sends the information about the adjusted first decompressor to the terminal device may be sending the third network weight, and that the network device sends the information about the adjusted first compressor to the terminal device may be sending the fourth network weight.

It should be noted that, when the adjusted first decompressor is referred to as the second decompressor, the third network structure is referred to as the first network structure, and the third network weight is referred to as the first network weight; and when the adjusted first compressor is referred to as the second compressor, the fourth network structure is referred to as the second network structure, and the fourth network weight is referred to as the second network weight.

In another possible implementation, the terminal device and the network device each locally store only a fourth network structure corresponding to the first compressor, the adjusted first compressor may be represented by using a fourth network structure and a fourth network weight, the terminal device and the network device each locally store the fourth network weight corresponding to the adjusted first compressor, and an index of the fourth network weight in the terminal device is the same as an index of the fourth network weight in the network device. In this case, that the network device sends the information about the adjusted first compressor to the terminal device may be sending the index of the fourth network weight.

Similarly, the terminal device and the network device each locally store only a fourth network structure corresponding to the first compressor and a third network structure corresponding to the first decompressor, the adjusted first decompressor may be represented by using the third network structure and a third network weight, the adjusted first compressor may be represented by using the fourth network structure and a fourth network weight,

the terminal device and the network device each locally store the third network weight corresponding to the adjusted first decompressor, an index of the third network weight in the terminal device is the same as an index of the third network weight in the network device, the terminal device and the network device each locally store the fourth network weight corresponding to the adjusted first compressor, and an index of the fourth network weight in the terminal device is the same as an index of the fourth network weight in the network device. In this case, that the network device sends the information about the adjusted first decompressor to the terminal device may be sending the index of the third network weight, and that the network device sends the information about the adjusted first compressor to the terminal device may be sending the index of the fourth network weight.

Optionally, the index of the third network weight is the same as the index of the fourth network weight. In this case, the index of the third network weight and the index of the fourth network weight are the same index.

In still another possible implementation, the terminal device and the network device each locally store only a fourth network structure corresponding to the first compressor, and a difference between the adjusted first compressor and the first compressor may be represented by using a second network weight variation. In this case, that the network device sends the information about the first compressor to the terminal device may be sending the second network weight variation.

Similarly, the terminal device and the network device each locally store only a fourth network structure corresponding to the first compressor and a third network structure corresponding to the first decompressor, a difference between the adjusted first decompressor and the first decompressor may be represented by using a first network weight variation, and a difference between the adjusted first compressor and the first compressor may be represented by using a second network weight variation. In this case, that the network device sends the information about the adjusted first decompressor to the terminal device may be sending the first network weight variation, and that the network device sends the information about the adjusted first compressor to the terminal device may be sending the second network weight variation.

It should be noted that, the foregoing possible implementations in which the network device sends the information about the adjusted first decompressor, or the information about the adjusted first decompressor and the information about the adjusted first compressor to the terminal device are merely examples, and do not constitute any limitation on the protection scope of this application. Simple variations of the foregoing manners and other manners in which the network device reports the information about the adjusted first decompressor, or the information about the adjusted first decompressor and the information about the adjusted first compressor to the terminal device also fall within the protection scope of this application. For example, the network device reports the indexes of the network structure and the network weight that correspond to the adjusted first decompressor. Examples are not described one by one herein.

Possibility 2: After receiving the fourth notification message, the terminal device may not agree to feed back, based on an AI mode, channel information to the network device. For example, the terminal device sends a third response message to the network device, where the third response message is used to indicate the network device to continue to feed back the channel information based on a conventional channel information feedback model. For another example, if the terminal device does not send a response message to the network device after receiving the fourth notification message, and the network device does not receive any response message within a preset time period after a time point at which the network device sends the fourth notification message, the network device may determine to continue to feed back the channel information based on a conventional channel information feedback model.

In the possibility 2, the method procedure shown in (e) in FIG. 8 further includes S831e: The terminal device sends the third response message to the network device, or the terminal device skips sending a response message to the network device within the fourth preset duration. The third response message is similar to the second response message in (d) in FIG. 8, and may also be referred to as the second response message.

It should be noted that, in the possibility 2, a premise that the terminal device does not agree to feed back, based on the AI mode, the channel information to the network device includes the following.

It is predefined in a protocol that when the first compressor and the first decompressor need to be updated, the network device and the terminal device determine to roll back to a conventional channel information feedback mode; or the network device sends a second notification message to the terminal device, or the terminal device sends a second notification message to the network device. The second notification message is used to notify a peer device to roll back to the conventional channel information feedback mode from an AI mode-based channel information feedback mode (where a compressor and a decompressor in an AI framework are the first compressor and the first decompressor). In other words, in the possibility 2, the method procedure shown in (e) in FIG. 8 further includes S811e: Send the second notification message.

It should be understood that, the possibility 1 may also include S811e, or S811e does not need to be performed in the possibility 1. After determining that an update is required, the network device does not need to notify the terminal device to first roll back to the conventional channel information feedback manner, but may continue to provide a channel information feedback based on the first compressor and the first decompressor.

Manner 2: The method procedure shown in (e) in FIG. 8 further includes: S821e: The terminal device sends second information to the network device, where the second information is used to indicate that the terminal device can receive information about the adjusted first decompressor, or the second information is used to notify that the terminal device can receive information about the adjusted first decompressor and information about the adjusted first compressor.

The network device sends the information about the adjusted first decompressor to the terminal device, or sends the information about the adjusted first decompressor and the information about the adjusted first compressor to the terminal device after receiving the second information.

It should be noted that, in this embodiment of this application, an occasion on which the network device sends the information about the adjusted first decompressor to the terminal device, or sends the information about the adjusted first decompressor and the information about the adjusted first compressor to the terminal device after receiving the second information is not limited, and may be any moment after the second information is received.

For example, the information about the adjusted first decompressor starts to be sent to the terminal device, or the information about the adjusted first decompressor and the information about the adjusted first compressor start to be sent to the terminal device within first preset duration after a first start moment or after the first preset duration. To be specific, in the manner 2, the method procedure shown in (e) in FIG. 8 further includes S840e. For details about sending the information about the adjusted first decompressor and the information about the adjusted first compressor, refer to the possibility 1 in the manner 1. Details are not described herein again.

Manner 3: The network device sends the information about the adjusted first decompressor to the terminal device, or sends the information about the adjusted first decompressor and the information about the adjusted first compressor to the terminal device after adjusting the first compressor and the first decompressor.

It should be noted that, in this embodiment of this application, an occasion on which the network device sends the information about the adjusted first decompressor to the terminal device, or sends the information about the adjusted first decompressor and the information about the adjusted first compressor to the terminal device after adjusting the first compressor and the first decompressor is not limited, and may be any moment after the network device adjusts the first compressor and the first decompressor.

For example, the information about the adjusted first decompressor starts to be sent to the terminal device, or the information about the adjusted first decompressor and the information about the adjusted first compressor start to be sent to the terminal device within second preset duration after a second start moment or after the second preset duration. To be specific, in the manner 2, the method procedure shown in (e) in FIG. 8 further includes S840e. For details about sending the information about the adjusted first decompressor and the information about the adjusted first compressor, refer to the possibility 1 in the manner 1. Details are not described herein again.

It should be noted that, in the manner 2 and the manner 3, both the terminal device and the network device can learn of a moment at which the first compressor and the first decompressor start to be updated (for example, the network device that performs update can learn of the moment, and the terminal device perceives occurrence of the update based on an interruption or a mode of downlink channel information transmission). After the preset duration, the terminal device and the network device learn that the update is completed, and may agree to transmit the information about the second decompressor obtained through update, or the information about the second compressor obtained through update and the information about the second decompressor obtained through update, without requiring an instruction (for example, the first information) to notify the terminal device that the update is completed.

Manner 4: The method procedure shown in (e) in FIG. 8 further includes: S820e: The network device sends a fourth notification message to the terminal device. The fourth notification message is used to notify the terminal device to receive information about the adjusted first decompressor, or the fourth notification message is used to notify the terminal device to receive information about the adjusted first decompressor and information about the adjusted first compressor. After sending the fourth notification message to the terminal device, the network device starts to send the information about the adjusted first decompressor to the terminal device, or send the information about the adjusted first decompressor and the information about the adjusted first compressor to the terminal device within third preset duration or after the third preset duration. To be specific, in the manner 2, the method procedure shown in (e) in FIG. 8 further includes S840e. For details about sending the information about the adjusted first decompressor and the information about the adjusted first compressor, refer to the possibility 1 in the manner 1. Details are not described herein again.

It should be understood that, the neural network adjustment method provided in this embodiment of this application may be applied to CSI feedback. When this embodiment provided in this application is used in a CSI feedback procedure, the following is included.

The method procedure shown in (d) in FIG. 8 further includes S812d: The network device sends a CSI-RS to the terminal device. S813d: The terminal device performs channel measurement based on the CSI-RS to obtain downlink channel information. To be specific, in S801d, that the network device determines whether the first compressor and the first decompressor need to be updated may be determining, based on downlink channel information on which lossy compression is performed and that is reported by the terminal device, and the first compressor and the first decompressor that are known; or that the network device determines whether the first compressor and the first decompressor need to be updated may be determining, based on downlink channel information on which lossy compression is performed and that is reported by the terminal device, uplink channel information obtained by the network device, and the first compressor and the first decompressor that are known.

Specifically, in correspondence to the possibility 6 in S520, as shown in (f) in FIG. 8, the following steps are included.

S801f: The network device determines whether the first compressor and the first decompressor need to be updated.

Specifically, for how the network device determines whether the first compressor and the first decompressor need to be updated in S801f, refer to the possibility 2 in the manner 1 and the possibility 3 and the possibility 4 in the manner 2 in S510.

When the network device determines that the first compressor and the first decompressor need to be updated, the method procedure shown in (f) in FIG. 8 further includes: S810f: The network device selects the appropriate compressor and the appropriate decompressor based on currently obtained downlink channel information or based on currently obtained downlink channel information and uplink channel information, and further adjusts the appropriate compressor and the appropriate decompressor to obtain an appropriate third compressor and an appropriate third decompressor.

Specifically, for how the network device selects and obtains through adjustment the appropriate third compressor and the appropriate third decompressor in S810f, refer to the descriptions in the possibility 6 in S520. Details are not described herein again.

For ease of description, in this embodiment of this application, the third decompressor may also be referred to as the second decompressor, and the third compressor may also be referred to as the second compressor. To distinguish from (d) in FIG. 8, the third compressor and the third decompressor are used for description below.

After the network device selects and obtains through adjustment the appropriate third compressor and the appropriate third decompressor, by way of example but not limitation, the method procedure shown in (f) in FIG. 8 further includes the following several possible manners subsequently.

Manner 1: The method procedure shown in (f) in FIG. 8 further includes: S820f: The network device sends a fifth notification message to the terminal device. The fifth notification message is used to notify the terminal device to receive information about the third compressor, or the first information is used to notify the terminal device to receive information about the third compressor and information about the third decompressor.

It should be understood that, a function of the fifth notification message in (f) in FIG. 8 is similar to a function of the first information in (a) in FIG. 8, and both the functions are notifying the network device to receive the information about the updated compressor and the information about the updated decompressor. Therefore, the fifth notification message in this application may also be referred to as the first information.

After the terminal device receives the fifth notification message, steps that may be performed include the following two possibilities.

Possibility 1: After receiving the fifth notification message, the terminal device sends a fifth response message to the network device, where the fifth response message is used to indicate that the network device can deliver the information about the third decompressor, or the fifth response message is used to indicate that the network device can report the information about the third compressor and the information about the third decompressor. In the manner 1, the method procedure shown in (f) in FIG. 8 further includes S830f: The terminal device sends the fifth response message to the network device.

The fifth response message may also be referred to as the first response message.

Further, in the manner 1, the method procedure shown in (f) in FIG. 8 further includes S840f: The network device sends the information about the third decompressor to the terminal device, or the network device sends the information about the third compressor and the information about the third decompressor to the terminal device.

It should be noted that, in this embodiment of this application, the network device may send, to the terminal device, the information about the third decompressor that needs to be configured by the terminal device, or the network device may send, to the terminal device, the information about the third compressor and the information about the third decompressor. Subsequently, the terminal device may re-determine, based on the third compressor and the third decompressor, whether the third compressor and the third decompressor need to be updated.

In a possible implementation, a sixth network structure corresponding to the third compressor is the same as the fourth network structure corresponding to the first compressor. The third compressor may be represented by using the sixth network structure and a sixth network weight. In this case, that the network device sends the information about the third compressor to the terminal device may be sending the sixth network weight and fourth indication information. The fourth indication is used to indicate that the sixth network structure corresponding to the third compressor is the same as the fourth network structure corresponding to the first compressor, that is, indicate that a network structure is not changed.

Similarly, a fifth network structure corresponding to the third decompressor is the same as the third network structure corresponding to the first decompressor, and a sixth network structure corresponding to the third compressor is the same as the fourth network structure corresponding to the first compressor. The third decompressor may be represented by using the fifth network structure and a fifth network weight, and the third decompressor may be represented by using the sixth network structure and a sixth network weight. In this case, that the network device sends the information about the third decompressor to the terminal device may be sending the fifth network weight and third indication information, and that the network device sends the information about the third compressor to the terminal device may be sending the sixth network weight and fourth indication information. The third indication is used to indicate that the fifth network structure corresponding to the third decompressor is the same as the third network structure corresponding to the first decompressor, and the fourth indication is used to indicate that the sixth network structure corresponding to the third compressor is the same as the fourth network structure corresponding to the first decompressor. The third indication information and the fourth indication information may be a same piece of indication information, that is, indicate that network structures are not changed.

In another possible implementation, a sixth network structure corresponding to the third compressor is the same as the fourth network structure corresponding to the first compressor. The third compressor may be represented by using the sixth network structure and a sixth network weight, the terminal device and the network device each locally store the sixth network weight corresponding to the third compressor, and an index of the sixth network weight in the terminal device is the same as an index of the sixth network weight in the network device. In this case, that the network device sends the information about the third compressor to the terminal device may be sending the index of the sixth network weight and fourth indication information. The fourth indication is used to indicate that the sixth network structure corresponding to the third compressor is the same as the fourth network structure corresponding to the first compressor, that is, indicate that a network structure is not changed.

Similarly, a fifth network structure corresponding to the third decompressor is the same as the third network structure corresponding to the first decompressor, and a sixth network structure corresponding to the third compressor is the same as the fourth network structure corresponding to the first compressor. The third decompressor may be represented by using the fifth network structure and a fifth network weight, the third compressor may be represented by using the sixth network structure and a sixth network weight, the terminal device and the network device each locally store the fifth network weight corresponding to the third decompressor, an index of the fifth network weight in the terminal device is the same as an index of the fifth network weight in the network device, the terminal device and the network device each locally store the sixth network weight corresponding to the third compressor, and an index of the sixth network weight in the terminal device is the same as an index of the sixth network weight in the network device. In this case, that the network device sends the information about the third decompressor to the terminal device may be sending the index of the fifth network weight and third indication information, and that the network device sends the information about the third compressor to the terminal device may be sending the index of the sixth network weight and fourth indication information. The third indication is used to indicate that the fifth network structure corresponding to the third decompressor is the same as the third network structure corresponding to the first decompressor, and the fourth indication is used to indicate that the sixth network structure corresponding to the third compressor is the same as the fourth network structure corresponding to the first decompressor. The third indication information and the fourth indication information may be a same piece of indication information, that is, indicate that network structures are not changed.

Optionally, the index of the fifth network weight is the same as the index of the sixth network weight. In this case, the index of the fifth network weight and the index of the sixth network weight are the same index.

In still another possible implementation, a sixth network structure corresponding to the third compressor is the same as the fourth network structure corresponding to the first compressor. The third compressor may be represented by using the sixth network structure and a sixth network weight, the first compressor may be represented by using the fourth network structure and a fourth network weight, and a variation between the fourth network weight and the sixth network weight is a fourth network weight variation. In this case, that the network device sends the information about the third compressor to the terminal device may be sending the fourth network weight variation and fourth indication information. The fourth indication is used to indicate that the sixth network structure corresponding to the third compressor is the same as the fourth network structure corresponding to the first compressor, that is, indicate that a network structure is not changed.

Similarly, a fifth network structure corresponding to the third decompressor is the same as the third network structure corresponding to the first decompressor, and a sixth network structure corresponding to the third compressor is the same as the fourth network structure corresponding to the first compressor. The third decompressor may be represented by using the fifth network structure and a fifth network weight, the first decompressor may be represented by using the third network structure and a third network weight, a variation between the third network weight and the fifth network weight is a third network weight variation, the third compressor may be represented by using the sixth network structure and a sixth network weight, the first compressor may be represented by using the fourth network structure and a fourth network weight, and a variation between the fourth network weight and the sixth network weight is a fourth network weight variation.

In this case, that the network device sends the information about the third decompressor to the terminal device may be sending the third network weight variation and third indication information, and that the network device sends the information about the third compressor to the terminal device may be sending the fourth network weight variation and fourth indication information. The third indication is used to indicate that the fifth network structure corresponding to the third decompressor is the same as the third network structure corresponding to the first decompressor, and the fourth indication is used to indicate that the sixth network structure corresponding to the third compressor is the same as the fourth network structure corresponding to the first decompressor. The third indication information and the fourth indication information may be a same piece of indication information, that is, indicate that network structures are not changed.

In still another possible implementation, a sixth network structure corresponding to the third compressor is different from or the same as the fourth network structure corresponding to the first compressor. The terminal device and the network device each locally store the third compressor, and an index (index) of the third compressor in the terminal device is the same as an index of the third compressor in the network device. In this case, that the network device sends the information about the third compressor to the terminal device may be sending the index of the third compressor, or may be sending indication information used to indicate whether a network structure is changed.

Similarly, a fifth network structure corresponding to the third decompressor is different from or the same as the third network structure corresponding to the first decompressor, and a sixth network structure corresponding to the third compressor is different from or the same as the fourth network structure corresponding to the first compressor. The terminal device locally stores the third compressor and the third decompressor, and indexes corresponding to the third compressor and the third decompressor in the terminal device are the same as indexes corresponding to the third compressor and the third decompressor in the network device. In this case, that the network device sends the information about the third compressor and the information about the third decompressor to the terminal device may be sending the indexes corresponding to the third compressor and the third decompressor, or may be sending indication information used to indicate whether a network structure is changed.

Optionally, the index of the third compressor is the same as the index of the third decompressor. In this case, the index of the third compressor and the index of the third decompressor are the same index.

In still another possible implementation, a sixth network structure corresponding to the third compressor is different from the fourth network structure corresponding to the first compressor. The third compressor may be represented by using a sixth network weight and the sixth network structure. In this case, that the network device sends the information about the third compressor to the terminal device may be sending the sixth network weight, the sixth network structure, and sixth indication information. The sixth indication information is used to indicate that a network structure is changed.

Similarly, a fifth network structure corresponding to the third decompressor is different from the third network structure corresponding to the first decompressor, and a sixth network structure corresponding to the third compressor is different from the fourth network structure corresponding to the first compressor. The third decompressor may be represented by using a fifth network weight and the fifth network structure, and the third compressor may be represented by using a sixth network weight and the sixth network structure. In this case, that the network device sends the information about the third decompressor to the terminal device may be sending the fifth network weight, the fifth network structure, and fifth indication information, and that the network device sends the information about the third compressor to the terminal device may be sending the sixth network weight, the sixth network structure, and sixth indication information. The fifth indication information and the sixth indication information may be a same piece of information, used to indicate that network structures are changed.

In still another possible implementation, a sixth network structure corresponding to the third compressor is different from the fourth network structure corresponding to the first compressor. The third compressor may be represented by using a sixth network weight and the sixth network structure, the terminal device and the network device each locally store the sixth network structure, and an index of the sixth network structure in the terminal device is the same as an index of the sixth network structure in the network device. In this case, that the network device sends the information about the third compressor to the terminal device may be sending the sixth network weight, the index of the sixth network structure, and sixth indication information. The sixth indication information is used to indicate that a network structure is changed.

Similarly, a fifth network structure corresponding to the third decompressor is different from the third network structure corresponding to the first decompressor, and a sixth network structure corresponding to the third compressor is different from the fourth network structure corresponding to the first compressor. The third decompressor may be represented by using a fifth network weight and the fifth network structure, the third compressor may be represented by using a sixth network weight and the sixth network structure,
the terminal device and the network device each locally store the fifth network structure, an index of the fifth network structure in the terminal device is the same as an index of the fifth network structure in the network device, the terminal device and the network device each locally store the fifth network structure, and an index of the sixth network structure in the terminal device is the same as an index of the sixth network structure in the network device.

In this case, that the network device sends the information about the third decompressor to the terminal device may be sending the fifth network weight, the index of the fifth network structure, and fifth indication information, and that the network device sends the information about the third compressor to the terminal device may be sending the sixth network weight, the index of the sixth network structure, and sixth indication information. The fifth indication information and the sixth indication information may be a same piece of information, used to indicate that network structures are changed.

Optionally, the index of the fifth network structure is the same as the index of the sixth network structure. In this case, the index of the fifth network structure and the index of the sixth network structure are the same index.

In still another possible implementation, a sixth network structure corresponding to the third compressor is different from the fourth network structure corresponding to the first compressor. The third compressor may be represented by using a sixth network weight and the sixth network structure, the terminal device and the network device each locally store the sixth network structure, an index of the sixth network structure in the terminal device is the same as an index of the sixth network structure in the network device, the terminal device and the network device each locally store the sixth network weight, and an index of the sixth network weight in the terminal device is the same as an index of the sixth network weight in the network device. In this case, that the network device sends the information about the third compressor to the terminal device may be sending the index of the sixth network weight, the index of the sixth network structure, and sixth indication information. The sixth indication information is used to indicate that a network structure is changed.

Similarly, a fifth network structure corresponding to the third decompressor is different from the third network structure corresponding to the first decompressor, and a sixth network structure corresponding to the third compressor is different from the fourth network structure corresponding to the first compressor. The third decompressor may be represented by using a fifth network weight and the fifth network structure, the third compressor may be represented by using a sixth network weight and the sixth network structure,
the terminal device and the network device each locally store the fifth network structure, an index of the fifth network structure in the terminal device is the same as an index of the fifth network structure in the network device, the terminal device and the network device each locally store the fifth network weight, an index of the fifth network weight in the terminal device is the same as an index of the fifth network weight in the network device, the terminal device and the network device each locally store the sixth network structure, an index of the sixth network structure in the terminal device is the same as an index of the sixth network structure in the network device, the terminal device and the network device each locally store the sixth network weight, and an index of the sixth network weight in the terminal device is the same as an index of the sixth network weight in the network device.

In this case, that the network device sends the information about the third decompressor to the terminal device may be sending the index of the fifth network weight, the index of the fifth network structure, and fifth indication information, and that the network device sends the information about the third compressor to the terminal device may be sending the index of the sixth network weight, the index of the sixth network structure, and sixth indication information. The fifth indication information and the sixth indication information may be a same piece of information, used to indicate that a network structure is changed.

Optionally, the index of the fifth network structure is the same as the index of the sixth network structure. In this case, the index of the fifth network structure and the index of the sixth network structure are the same index. The index of the fifth network weight is the same as the index of the sixth network weight. In this case, the index of the fifth network weight and the index of the sixth network weight are the same index.

It should be noted that, the foregoing possible implementations in which the network device sends the third compressor, or the third compressor and the third decompressor to the terminal device are merely examples, and do not constitute any limitation on the protection scope of this application. Simple variations of the foregoing manners and other manners in which the network device reports the third compressor obtained through adjustment, or the third compressor and the third decompressor to the terminal device also fall within the protection scope of this application. For example, the network device reports the indexes of the network structure and the network weight that correspond to the third compressor. Examples are not described one by one herein.

Possibility 2: After receiving the fifth notification message, the terminal device may not agree to feed back, based on an AI mode, channel information to the network device. For example, the terminal device sends a sixth response message to the network device, where the sixth response message is used to indicate the network device to continue to feed back the channel information based on a conventional channel information feedback model. For another example, if the terminal device does not send a response message to the network device after receiving the first information, and the network device does not receive any response message within a preset time period after a time point at which the network device sends the fifth notification message, the network device may determine to continue to transmit the channel information based on a conventional channel information feedback model.

In the possibility 2, the method procedure shown in (f) in FIG. 8 further includes S831f: The terminal device sends the sixth response message to the network device, or the terminal device skips sending a response message to the network device within the fourth preset duration. The sixth response message is similar to the second response message in (d) in FIG. 8, and may also be referred to as the sixth response message.

It should be noted that, in the possibility 2, a premise that the terminal device does not agree to feed back, based on the AI mode, the channel information to the network device includes the following.

It is predefined in a protocol that when the first compressor and the first decompressor need to be updated, the network device and the terminal device determine to roll back to a conventional channel information feedback mode; or the network device sends a second notification message to the terminal device, or the terminal device sends a second notification message to the network device. The second notification message is used to notify a peer device to roll back to the conventional channel information feedback mode from an AI mode-based channel information feedback mode (where a compressor and a decompressor in an AI framework are the first compressor and the first decompressor). In other words, in the possibility 2, the method procedure shown in (f) in FIG. 8 further includes S811f: Send the second notification message.

Manner 2: The method procedure shown in (f) in FIG. 8 further includes: S821f: The terminal device sends second information to the network device, where the second information is used to indicate that the terminal device can receive information about the third decompressor, or the second information is used to notify that the terminal device can receive information about the third decompressor and information about the third compressor.

The network device sends the information about the third decompressor to the terminal device, or sends the information about the third decompressor and the information about the third compressor to the terminal device after receiving the second information.

It should be noted that, in this embodiment of this application, an occasion on which the network device sends the information about the third decompressor to the terminal device, or sends the information about the third decompressor and the information about the third compressor to the terminal device after receiving the second information is not limited, and may be any moment after the second information is received.

For example, the information about the third decompressor starts to be sent to the terminal device, or the information about the third decompressor and the information about the third compressor start to be sent to the terminal device within first preset duration after a first start moment or after the first preset duration. To be specific, in the manner 2, the method procedure shown in (f) in FIG. 8 further includes S840f. For details about sending the information about the third decompressor and the information about the third compressor, refer to the possibility 1 in the manner 1. Details are not described herein again.

Manner 3: The network device sends information about the third decompressor to the terminal device, or sends information about the third decompressor and information about the third compressor to the terminal device after determining the third compressor and the third decompressor.

It should be noted that, in this embodiment of this application, an occasion on which the network device sends the information about the third decompressor to the terminal device, or sends the information about the third decompressor and information about the third compressor to the terminal device after determining the third compressor and the third decompressor is not limited, and may be any moment after the network device determines the third compressor and the third decompressor.

For example, the information about the third decompressor starts to be sent to the terminal device, or the information about the third decompressor and the information about the third compressor start to be sent to the terminal device within second preset duration after a second start moment or after the second preset duration. To be specific, in the manner 2, the method procedure shown in (f) in FIG. 8 further includes S840f. For details about sending the information about the third decompressor and the information about the third compressor, refer to the possibility 1 in the manner 1. Details are not described herein again.

It should be noted that, in the manner 2 and the manner 3, both the terminal device and the network device can learn of a moment at which the first compressor and the first decompressor start to be updated (for example, the network device that performs update can learn of the moment, and the terminal device perceives occurrence of the update based on an interruption or a mode of downlink channel information transmission). After the preset duration, the terminal device and the network device learn that the update is completed, and may agree to transmit the information about the second decompressor obtained through update, or the information about the second compressor obtained through update and the information about the second decompressor obtained through update, without requiring an instruction (for example, the first information) to notify the terminal device that the update is completed.

Manner 4: The method procedure shown in (f) in FIG. 8 further includes: S820f: The network device sends a fifth notification message to the terminal device. The fifth notification message is used to notify the terminal device to receive information about the third decompressor, or the fourth notification message is used to notify the terminal device to receive information about the third compressor and information about the third decompressor. After sending the fifth notification message to the terminal device, the network device starts to send the information about the third decompressor to the terminal device, or send the information about the third decompressor and the information about the third compressor to the terminal device within third preset duration or after the third preset duration. To be specific, in the manner 2, the method procedure shown in (f) in FIG. 8 further includes S840f. For details about sending the information about the third decompressor and the information about the third compressor, refer to the possibility 1 in the manner 1. Details are not described herein again.

It should be understood that, the possibility 1 may also include S811f, or S811f does not need to be performed in the possibility 1. After determining that an update is required, the network device does not need to notify the terminal device to first roll back to the conventional channel information feedback manner, but may continue to provide a channel information feedback based on the first compressor and the first decompressor.

It should be understood that, the neural network adjustment method provided in this embodiment of this application may be applied to CSI feedback. When the embodiment shown in (f) in FIG. 8 is used in a CSI feedback procedure, the following is included.

Case 1: The method procedure shown in (f) in FIG. 8 further includes S812f: The network device sends a CSI-RS to the terminal device. S813f: The terminal device performs channel measurement based on the CSI-RS to obtain downlink channel information. To be specific, in S801f, that the network device determines whether the first compressor and the first decompressor need to be updated may be determining, based on downlink channel information on which lossy compression is performed and that is reported by the terminal device, and the first compressor and the first decompressor that are known; or that the network device determines whether the first compressor and the first decompressor need to be updated may be determining, based on downlink channel information on which lossy compression is performed and that is reported by the terminal device, uplink channel information obtained by the network device, and the first compressor and the first decompressor that are known.

In correspondence to S531, after updating the first compressor and the first decompressor, the second device needs to notify information about an updated encoder and/or an updated decoder to the first device. To be specific, the method procedure shown in FIG. 5(a)-1 and FIG. 5(a)-2 to FIG. 5(e) further includes S534: The second device sends the information about the updated encoder and/or the updated decoder to the first device, so that the first device can learn of the updated encoder and/or the updated decoder, and the first device and the second device align the encoder and the decoder used for subsequent channel information feedback.

In a possible implementation, in this embodiment of this application, before the second device sends the information about the updated encoder and/or the updated decoder to the first device, the second device may determine a specific form of the information about the updated encoder and/or the updated decoder based on a capability of the first device.

To be specific, the method procedure shown in FIG. 5(a)-1 and FIG. 5(a)-2 to FIG. 5(e) further includes S532: The second device sends fifth indication information to the first device, where the fifth indication information is used to indicate the first device to report the capability of the first device, and the capability of the first device may be referred to as an AI capability, for example, a computing capability, a storage capability, information indicating whether an AI model (for example, a channel information decompressor) having a specific function is stored, a supported neural network structure, a supported neural network scale, or a supported AI communication function. S533: The first device sends first capability information to the second device.

After learning of the capability of the first device, the second device can determine, based on the capability of the first device, the specific form of the information about the updated encoder and/or the updated decoder that is sent to the first device.

For example, the first device has an AI computing capability. When sending the information about the encoder and/or the decoder, the second device may send, to the first device, network structures/a network structure and network weights/a network weight corresponding to the encoder and/or the decoder, and the first device calculates the encoder and/or the decoder.

With reference to FIG. 9, the following describes in detail how the second device notifies the first device of the information about the updated encoder and/or the updated decoder. FIG. 9 is a schematic flowchart of sending the information about the updated encoder and/or the updated decoder according to an embodiment of this application.

Specifically, in correspondence to S531, that the second device sends the information about the updated encoder and/or the updated decoder to the first device includes the following several possibilities.

Possibility 1: The second device is the terminal device, and the first device is the network device. As shown in (a) in FIG. 9, the following steps are included.

S901a: The network device determines whether the first compressor and the first decompressor need to be updated.

Specifically, for how the network device determines whether the first compressor and the first decompressor need to be updated in S901a, refer to the possibility 2 in the manner 1 and the possibility 3 and the possibility 4 in the manner 2 in S510.

When the network device determines that the first compressor and the first decompressor need to be updated, the method procedure shown in (a) in FIG. 9 further includes: S910a: The network device sends first indication information to the terminal device, where the first indication information is used to indicate the terminal device to update the first compressor and the first decompressor.

Optionally, after receiving the first indication information, the terminal device may reject the update of the first compressor and the first decompressor.

Optionally, after receiving the first indication information, the terminal device updates the first compressor and the first decompressor. In this embodiment of this application, a case in which the first compressor and the first decompressor are updated is mainly considered. To be specific, the method procedure shown in (a) in FIG. 9 further includes: S920a: The terminal device selects the appropriate second compressor and the appropriate second decompressor based on currently obtained downlink channel information or based on currently obtained downlink channel information and uplink channel information. This is similar to S810a in (a) in FIG. 8, and details are not described herein again.

After the terminal device selects the appropriate second compressor and the appropriate second decompressor, by way of example but not limitation, the method procedure shown in (a) in FIG. 9 further includes the following several possible manners subsequently.

Manner 1: The method procedure shown in (a) in FIG. 9 further includes: S930a: The terminal device sends first information to the network device. This is similar to S820a in (a) in FIG. 8, and details are not described herein again.

After the network device receives the first information, steps that may be performed include the following two possibilities.

Possibility 1: After receiving the first information, the network device sends a first response message to the terminal device, and further, the terminal device sends information about the second decompressor to the network device, or the terminal device sends information about the second compressor and information about the second decompressor to the network device. The method procedure shown in (a) in FIG. 9 further includes: S940a: The network device sends the first response message to the terminal device. This is similar to S830a in (a) in FIG. 8, and details are not described herein again. S950a: The terminal device sends the information about the second decompressor to the network device, or the terminal device sends the information about the second compressor and the information about the second decompressor to the network device. This is similar to S840a in (a) in FIG. 8, and details are not described herein again.

Possibility 2: After receiving the first information, the network device may not agree to receive, based on an AI mode, channel information fed back by the terminal device. The method procedure shown in (a) in FIG. 9 further includes: S941a: The network device sends a second response message to the terminal device, or the network device skips sending a response message to the terminal device within fourth preset duration. This is similar to S831a in (a) in FIG. 8, and details are not described herein again.

It should be noted that, in the possibility 2, a premise that the network device does not agree to receive, based on the AI mode, the channel information fed back by the terminal device includes the following.

It may be predefined in a protocol that when the first compressor and the first decompressor need to be updated, the network device and the terminal device determine to roll back to a conventional channel information feedback mode, or when the first compressor and the first decompressor need to be updated, the network device and/or the terminal device determine/determines to roll back to a conventional channel information feedback mode. To be specific, the method procedure shown in (a) in FIG. 9 further includes S960a: The network device and the terminal device roll back to the conventional channel information feedback mode.

Further, after determining to roll back to the conventional channel information feedback mode, the network device may notify the terminal device to roll back to the conventional channel information feedback mode, or after determining to roll back to the conventional channel information feedback mode, the terminal device may notify the network device to roll back to the conventional channel information feedback mode. In this case, the method procedure shown in (a) in FIG. 9 further includes S961a: Send a second notification message, where the second notification message is used to indicate a peer device to roll back from an AI mode-based channel information feedback mode (where a compressor and a decompressor in an AI framework are the first compressor and the first decompressor) to the conventional channel information feedback mode.

In a possible implementation, the second notification message and the first indication information may be sent by using one message, that is, S961a and S910a are a same step.

In another possible implementation, the second notification message and the first indication information may be sent by using different messages, that is, S961a and S910a are not a same step. It should be understood that, the possibility 1 may also include S961a, or S961a does not need to be performed in the possibility 1. After determining that the first compressor and the first decompressor need to be updated, the network device does not need to notify the terminal device to first roll back to the conventional channel information feedback manner, but may continue to provide a channel information feedback based on the first compressor and the first decompressor.

The manner 2 to the manner 4 are similar to the manner 2 to the manner 4 shown in (a) in FIG. 8, and details are not described herein again.

In correspondence to the manner 2, the method procedure shown in (a) in FIG. 9 further includes S950a and S921a: The network device sends second information to the terminal device. In correspondence to the manner 3, the method procedure shown in (a) in FIG. 9 further includes S950a. In correspondence to the manner 4, the method procedure shown in (a) in FIG. 9 further includes S930a and S950a.

It should be understood that, the neural network adjustment method provided in this embodiment of this application may be applied to CSI feedback. When the embodiment shown in (a) in FIG. 9 is used in a CSI feedback procedure, the following is included.

The method procedure shown in (a) in FIG. 9 further includes S912a: The network device sends a CSI-RS to the terminal device. S913a: The terminal device performs channel measurement based on the CSI-RS to obtain downlink channel information. To be specific, in S901a, that the network device determines whether the first compressor and the first decompressor need to be updated may be determining, based on downlink channel information on which lossy compression is performed and that is reported by the terminal device, and the first compressor and the first decompressor that are known; or that the network device determines whether the first compressor and the first decompressor need to be updated may be determining, based on downlink channel information on which lossy compression is performed and that is reported by the terminal device, uplink channel information obtained by the network device, and the first compressor and the first decompressor that are known.

Possibility 2: The second device is the terminal device, and the first device is the network device. As shown in (b) in FIG. 9, the following steps are included.

S901b: The network device determines whether the first compressor and the first decompressor need to be updated.

Specifically, for how the network device determines whether the first compressor and the first decompressor need to be updated in S901b, refer to the possibility 2 in the manner 1 and the possibility 3 and the possibility 4 in the manner 2 in S510.

When the network device determines that the first compressor and the first decompressor need to be updated, the method procedure shown in (b) in FIG. 9 further includes: S910b: The network device sends first indication information to the terminal device, where the first indication information is used to indicate the terminal device to update the first compressor and the first decompressor.

Optionally, after receiving the first indication information, the terminal device may reject the update of the first compressor and the first decompressor.

Optionally, after receiving the first indication information, the terminal device updates the first compressor and the first decompressor. In this embodiment of this application, a case in which the first compressor and the first decompressor are updated is mainly considered. To be specific, the method procedure shown in (b) in FIG. 9 further includes: S920b: The terminal device adjusts the first compressor and the first decompressor based on currently obtained downlink channel information or based on currently obtained downlink channel information and uplink channel information. This is similar to S810b in (b) in FIG. 8, and details are not described herein again.

For ease of description, in this embodiment, the adjusted first decompressor may also be referred to as the second decompressor, and the adjusted first compressor may also be referred to as the second compressor. To distinguish from (a) in FIG. 9, the adjusted first decompressor and the adjusted first compressor are used for description below.

After the terminal device adjusts the first compressor and the first decompressor, by way of example but not limitation, the method procedure shown in (b) in FIG. 9 further includes the following several possible manners subsequently.

Manner 1: The method procedure shown in (b) in FIG. 9 further includes: S930b: The terminal device sends a fourth notification message to the network device. This is similar to S820b in (b) in FIG. 8, and details are not described herein again.

It should be understood that, a function of the fourth notification message in (b) in FIG. 9 is similar to a function of the first information in (a) in FIG. 9, and both the functions are notifying the network device to receive the information about the updated compressor and the information about the updated decompressor. Therefore, the fourth notification message in this application may also be referred to as the first information.

After the network device receives the fourth notification message, steps that may be performed include the following two possibilities.

Possibility 1: After receiving the fourth notification message, the network device sends a fourth response message to the terminal device, and further, the terminal device sends the adjusted first decompressor to the network device, or the terminal device sends the adjusted first compressor and the adjusted first decompressor to the network device. The method procedure shown in (b) in FIG. 9 further includes: S940b: The network device sends the fourth response message to the terminal device. This is similar to S830b in (b) in FIG. 8, and details are not described herein again. S950b: The terminal device sends the adjusted first decompressor to the network device, or the terminal device sends the adjusted first compressor and the adjusted first decompressor to the network device. This is similar to S840b in (b) in FIG. 8, and details are not described herein again.

The fourth response message may also be referred to as the first response message.

Possibility 2: After receiving the fourth notification message, the network device may not agree to receive, based on an AI mode, channel information fed back by the terminal device. The method procedure shown in (b) in FIG. 9 further includes: S941b: The network device sends a third response message to the terminal device, or the network device skips sending a response message to the terminal device within fourth preset duration. This is similar to S831b in (b) in FIG. 8, and details are not described herein again.

It should be noted that, in the possibility 2, a premise that the network device does not agree to receive, based on the AI mode, the channel information fed back by the terminal device includes the following.

It may be predefined in a protocol that when the first compressor and the first decompressor need to be updated, the network device and the terminal device determine to roll back to a conventional channel information feedback mode, or when the first compressor and the first decompressor need to be updated, the network device and/or the terminal device determine/determines to roll back to a conventional channel information feedback mode. To be specific, the method procedure shown in (b) in FIG. 9 further includes S960b: The network device and the terminal device roll back to the conventional channel information feedback mode.

Further, after determining to roll back to the conventional channel information feedback mode, the network device may notify the terminal device to roll back to the conventional channel information feedback mode, or after determining to roll back to the conventional channel information feedback mode, the terminal device may notify the network device to roll back to the conventional channel information feedback mode. In this case, the method procedure shown in (b) in FIG. 9 further includes S961b: The network device sends a second notification message to the terminal device, where the second notification message is used to indicate a peer device to roll back from an AI mode-based channel information feedback mode (where a compressor and a decompressor in an AI framework are the first compressor and the first decompressor) to the conventional channel information feedback mode.

In a possible implementation, the second notification message and the first indication information may be sent by using one message, that is, S961b and S910b are a same step.

In another possible implementation, the second notification message and the first indication information may be sent by using different messages, that is, S961b and S910b are not a same step.

It should be understood that, the possibility 1 may also include S961b, or S961b does not need to be performed in the possibility 1. After determining that the first compressor and the first decompressor need to be updated, the network device does not need to notify the terminal device to first roll back to the conventional channel information feedback manner, but may continue to provide a channel information feedback based on the first compressor and the first decompressor.

The manner 2 to the manner 4 are similar to the manner 2 to the manner 4 shown in (b) in FIG. 8, and details are not described herein again.

In correspondence to the manner 2, the method procedure shown in (b) in FIG. 9 further includes S950b and S921b: The network device sends second information to the terminal device. In correspondence to the manner 3, the method procedure shown in (b) in FIG. 9 further includes S950b. In correspondence to the manner 4, the method procedure shown in (b) in FIG. 9 further includes S930b and S950b.

It should be understood that, the neural network adjustment method provided in this embodiment of this application may be applied to CSI feedback. When the embodiment shown in (b) in FIG. 9 is used in a CSI feedback procedure, the following is included.

The method procedure shown in (b) in FIG. 9 further includes S912b: The network device sends a CSI-RS to the terminal device. S913b: The terminal device performs channel measurement based on the CSI-RS to obtain downlink channel information. To be specific, in S901b, that the network device determines whether the first compressor and the first decompressor need to be updated may be determining, based on downlink channel information on which lossy compression is performed and that is reported by the terminal device, and the first compressor and the first decompressor that are known; or that the network device determines whether the first compressor and the first decompressor need to be updated may be determining, based on downlink channel information on which lossy compression is performed and that is reported by the terminal device, uplink channel information obtained by the network device, and the first compressor and the first decompressor that are known.

Possibility 3: The second device is the terminal device, and the first device is the network device. As shown in (c) in FIG. 9, the following steps are included.

S901c: The network device determines whether the first compressor and the first decompressor need to be updated.

Specifically, for how the network device determines whether the first compressor and the first decompressor need to be updated in S901c, refer to the possibility 2 in the manner 1 and the possibility 3 and the possibility 4 in the manner 2 in S510.

When the network device determines that the first compressor and the first decompressor need to be updated, the method procedure shown in (c) in FIG. 9 further includes: S910c: The network device sends first indication information to the terminal device, where the first indication information is used to indicate the terminal device to update the first compressor and the first decompressor.

Optionally, after receiving the first indication information, the terminal device may reject the update of the first compressor and the first decompressor.

Optionally, after receiving the first indication information, the terminal device updates the first compressor and the first decompressor. In this embodiment of this application, a case in which the first compressor and the first decompressor are updated is mainly considered. To be specific, the method procedure shown in (c) in FIG. 9 further includes: S920c: The terminal device selects the second compressor and the second decompressor based on currently obtained downlink channel information or based on currently obtained downlink channel information and uplink channel information, and further adjusts the second compressor and the second decompressor to obtain an appropriate third compressor and an appropriate third decompressor. This is similar to S810c in (c) in FIG. 8, and details are not described herein again.

For ease of description, in this embodiment of this application, the third decompressor may also be referred to as a second decompressor, and the third compressor may also be referred to as a second compressor. To distinguish from (a) in FIG. 9, the third compressor and the third decompressor are used for description below.

After the terminal device selects and obtains through adjustment the appropriate third compressor and the appropriate third decompressor, by way of example but not limitation, the method procedure shown in (c) in FIG. 9 further includes the following several possible manners subsequently.

Manner 1: The method procedure shown in (c) in FIG. 9 further includes: S930c: The terminal device sends a fifth notification message to the network device. This is similar to S820c in (c) in FIG. 8, and details are not described herein again.

It should be understood that, a function of the fifth notification message in (c) in FIG. 9 is similar to a function of the first information in (a) in FIG. 9, and both the functions are notifying the network device to receive the information about the updated compressor and the information about the updated decompressor. Therefore, the fifth notification message in this application may also be referred to as the first information.

After the network device receives the fifth notification message, steps that may be performed include the following two possibilities.

Possibility 1: After receiving the fifth notification message, the network device sends a fifth response message to the terminal device, and further, the terminal device sends the information about the third decompressor to the network device, or the terminal device sends the information about the third compressor and the information about the third decompressor to the network device. The method procedure shown in (c) in FIG. 9 further includes: S940c: The network device sends the fifth response message to the terminal device. This is similar to S830c in (c) in FIG. 8, and details are not described herein again. S950c: The terminal device sends the information about the third decompressor to the network device, or the terminal device sends the information about the third compressor and the information about the third decompressor to the network device. This is similar to S840c in (c) in FIG. 8, and details are not described herein again.

The fifth response message may also be referred to as the first response message.

Possibility 2: After receiving the fifth notification message, the network device may not agree to receive, based on an AI mode, channel information fed back by the terminal device. The method procedure shown in (c) in FIG. 9 further includes: S941c: The network device sends a sixth response message to the terminal device, or the network device skips sending a response message to the terminal device within fourth preset duration. This is similar to S831c in (c) in FIG. 8, and details are not described herein again.

It should be noted that, in the possibility 2, a premise that the network device does not agree to receive, based on the AI mode, the channel information fed back by the terminal device includes the following.

It may be predefined in a protocol that when the first compressor and the first decompressor need to be updated, the network device and the terminal device determine to roll back to a conventional channel information feedback mode, or when the first compressor and the first decompressor need to be updated, the network device and/or the terminal device determine/determines to roll back to a conventional channel information feedback mode. To be specific, the method procedure shown in (c) in FIG. 9 further includes S960c: The network device and the terminal device determine to roll back to the conventional channel information feedback mode.

Further, after determining to roll back to the conventional channel information feedback mode, the network device may notify the terminal device to roll back to the conventional channel information feedback mode, or after determining to roll back to the conventional channel information feedback mode, the terminal device may notify the network device to roll back to the conventional channel information feedback mode. In this case, the method procedure shown in (c) in FIG. 9 further includes S961c: The network device sends a second notification message to the terminal device, where the second notification message is used to indicate a peer device to roll back from an AI mode-based channel information feedback mode (where a compressor and a decompressor in an AI framework are the first compressor and the first decompressor) to the conventional channel information feedback mode.

In a possible implementation, the second notification message and the first indication information may be sent by using one message, that is, S960c and S910c are a same step.

In another possible implementation, the second notification message and the first indication information may be sent by using different messages, that is, S961c and S910c are not a same step.

It should be understood that, the possibility 1 may also include S961c, or S961c does not need to be performed in the possibility 1. After determining that the first compressor and the first decompressor need to be updated, the network device does not need to notify the terminal device to first roll back to the conventional channel information feedback manner, but may continue to provide a channel information feedback based on the first compressor and the first decompressor.

The manner 2 to the manner 4 are similar to the manner 2 to the manner 4 shown in (c) in FIG. 8, and details are not described herein again.

In correspondence to the manner 2, the method procedure shown in (c) in FIG. 9 further includes S950c and S921c: The network device sends second information to the terminal device. In correspondence to the manner 3, the method procedure shown in (c) in FIG. 9 further includes S950c. In correspondence to the manner 4, the method procedure shown in (c) in FIG. 9 further includes S930c and S950c.

It should be understood that, the neural network adjustment method provided in this embodiment of this application may be applied to CSI feedback. When the embodiment shown in (c) in FIG. 9 is used in a CSI feedback procedure, the following is included.

The method procedure shown in (c) in FIG. 9 further includes S912c: The network device sends a CSI-RS to the terminal device. S913c: The terminal device performs channel measurement based on the CSI-RS to obtain downlink channel information. To be specific, in S901c, that the network device determines whether the first compressor and the first decompressor need to be updated may be determining, based on downlink channel information on which lossy compression is performed and that is reported by the terminal device, and the first compressor and the first decompressor that are known; or that the network device determines whether the first compressor and the first decompressor need to be updated may be determining, based on downlink channel information on which lossy compression is performed and that is reported by the terminal device, uplink channel information obtained by the network device, and the first compressor and the first decompressor that are known.

Possibility 4: The second device is the network device, and the first device is the terminal device. As shown in (d) in FIG. 9, the following steps are included.

S901d: The terminal device determines whether the first compressor and the first decompressor need to be updated.

Specifically, for how the terminal device determines whether the first compressor and the first decompressor need to be updated in S901d, refer to the possibility 1 in the manner 1 and the possibility 1 and the possibility 2 in the manner 2 in S510.

When the terminal device determines that the first compressor and the first decompressor need to be updated, the method procedure shown in (d) in FIG. 9 further includes: S910d: The terminal device sends first indication information to the network device, where the first indication information is used to indicate the network device to update the first compressor and the first decompressor.

Optionally, after receiving the first indication information, the network device may reject the update of the first compressor and the first decompressor.

Optionally, after receiving the first indication information, the network device updates the first compressor and the first decompressor. In this embodiment of this application, a case in which the first compressor and the first decompressor are updated is mainly considered. To be specific, the method procedure shown in (d) in FIG. 9 further includes: S920d: The network device selects the appropriate second compressor and the appropriate second decompressor based on currently obtained downlink channel information or based on currently obtained downlink channel information and uplink channel information. This is similar to S810d in (d) in FIG. 8, and details are not described herein again.

After the network device selects the appropriate second compressor and the appropriate second decompressor, by way of example but not limitation, the method procedure shown in (d) in FIG. 9 further includes the following several possible manners subsequently.

Manner 1: The method procedure shown in (d) in FIG. 9 further includes: S930d: The network device sends first information to the terminal device. This is similar to S820d in (d) in FIG. 8, and details are not described herein again.

After the terminal device receives the first information, steps that may be performed include the following several manners. Possibility 1: After receiving the first information, the terminal device sends a first response message to the network device, and further, the network device sends information about the second compressor to the terminal device, or the network device sends information about the second compressor and information about the second decompressor to the terminal device. The method procedure shown in (d) in FIG. 9 further includes: S940d: The terminal device sends the first response message to the network device. This is similar to S830d in (d) in FIG. 8, and details are not described herein again. S950d: The network device sends the information about the second compressor to the terminal device, or the network device sends the information about the second compressor and the information about the second decompressor to the terminal device. This is similar to S840d in (d) in FIG. 8, and details are not described herein again.

Possibility 2: After receiving the first information, the terminal device may not agree to feed back, based on an AI mode, channel information to the network device. The method procedure shown in (d) in FIG. 9 further includes: S941d: The terminal device sends a second response message to the network device, or the terminal device skips sending a response message to the network device within fourth preset duration. This is similar to S831d in (d) in FIG. 8, and details are not described herein again.

It should be noted that, in the possibility 2, a premise that the terminal device does not agree to feed back, based on the AI mode, the channel information to the network device includes the following.

It may be predefined in a protocol that when the first compressor and the first decompressor need to be updated, the terminal device and the network device determine to roll back to a conventional channel information feedback mode, or when the first compressor and the first decompressor need to be updated, the terminal device and/or the network device determine/determines to roll back to a conventional channel information feedback mode. To be specific, the method procedure shown in (d) in FIG. 9 further includes S960d: The terminal device and the network device determine to roll back to the conventional channel information feedback mode.

Further, after determining to roll back to the conventional channel information feedback mode, the terminal device may notify the network device to roll back to the conventional channel information feedback mode, or after determining to roll back to the conventional channel information feedback mode, the network device may notify the terminal device to roll back to the conventional channel information feedback mode. In this case, the method procedure shown in (d) in FIG. 9 further includes S961d: Send a second notification message, where the second notification message is used to indicate a peer device to roll back from an AI mode-based channel information feedback mode (where a compressor and a decompressor in an AI framework are the first compressor and the first decompressor) to the conventional channel information feedback mode.

In a possible implementation, the second notification message and the first indication information may be sent by using one message, that is, S961d and S910d are a same step.

In another possible implementation, the second notification message and the first indication information may be sent by using different messages, that is, S961d and S910d are not a same step.

It should be understood that, the possibility 1 may also include S961d, or S961d does not need to be performed in the possibility 1. After determining that the first compressor and the first decompressor need to be updated, the terminal device does not need to notify the network device to first roll back to the conventional channel information feedback manner, but may continue to provide a channel information feedback based on the first compressor and the first decompressor.

The manner 2 to the manner 4 are similar to the manner 2 to the manner 4 shown in (d) in FIG. 8, and details are not described herein again.

In correspondence to the manner 2, the method procedure shown in (d) in FIG. 9 further includes S950c and S921d: The network device sends second information to the terminal device. In correspondence to the manner 3, the method procedure shown in (d) in FIG. 9 further includes S950d. In correspondence to the manner 4, the method procedure shown in (d) in FIG. 9 further includes S930d and S950d.

It should be understood that, the neural network adjustment method provided in this embodiment of this application may be applied to CSI feedback. When the embodiment shown in (d) in FIG. 9 is used in a CSI feedback procedure, the following two possible cases are included.

Case 1: The method procedure shown in (d) in FIG. 9 further includes S912d: The network device sends a CSI-RS to the terminal device. S913b: The terminal device performs channel measurement based on the CSI-RS to obtain downlink channel information. To be specific, in S901d, that the terminal device determines whether the first compressor and the first decompressor need to be updated may be determining, based on the downlink channel information obtained through channel measurement based on the CSI-RS, and the first compressor and the first decompressor that are known.

Case 2: The method procedure shown in (d) in FIG. 9 further includes S914d: The terminal device starts measurement, and sends a third notification message to the network device. S915d: The network device sends a CSI-RS and uplink channel information to the terminal device. S913d: The terminal device performs channel measurement based on the CSI-RS to obtain downlink channel information. To be specific, in S901d, that the terminal device determines whether the first compressor and the first decompressor need to be updated may be determining, based on the downlink channel information obtained through channel measurement based on the CSI-RS, the received uplink channel information that has a compression loss, and the first compressor and the first decompressor that are known.

Possibility 5: The second device is the network device, and the first device is the terminal device. As shown in (e) in FIG. 9, the following steps are included.

S901e: The terminal device determines whether the first compressor and the first decompressor need to be updated.

Specifically, for how the terminal device determines whether the first compressor and the first decompressor need to be updated in S901e, refer to the possibility 1 in the manner 1 and the possibility 1 and the possibility 2 in the manner 2 in S510.

When the terminal device determines that the first compressor and the first decompressor need to be updated, the method procedure shown in (e) in FIG. 9 further includes: S910e: The terminal device sends first indication information to the network device, where the first indication information is used to indicate the network device to update the first compressor and the first decompressor.

Optionally, after receiving the first indication information, the network device may reject the update of the first compressor and the first decompressor.

Optionally, after receiving the first indication information, the network device updates the first compressor and the first decompressor. In this embodiment of this application, a case in which the first compressor and the first decompressor are updated is mainly considered. To be specific, the method procedure shown in (e) in FIG. 9 further includes: S920e: The network device adjusts the first compressor and the first decompressor based on currently obtained downlink channel information or based on currently obtained downlink channel information and uplink channel information. This is similar to S810e in (e) in FIG. 8, and details are not described herein again.

For ease of description, in this embodiment, the adjusted first decompressor may also be referred to as the second decompressor, and the adjusted first compressor may also be referred to as the second compressor. To distinguish from (d) in FIG. 9, the adjusted first decompressor and the adjusted first compressor are used for description below.

After the network device adjusts the first compressor and the first decompressor, by way of example but not limitation, the method procedure shown in (e) in FIG. 9 further includes the following several possible manners subsequently.

Manner 1: The method procedure shown in (e) in FIG. 9 further includes: S930e: The network device sends a fourth notification message to the terminal device. This is similar to S820e in (e) in FIG. 8, and details are not described herein again.

It should be understood that, a function of the fourth notification message in (e) in FIG. 9 is similar to a function of the first information in (d) in FIG. 9, and both the functions are notifying the terminal device to receive the information about the updated compressor and the information about the updated decompressor. Therefore, the fourth notification message in this application may also be referred to as the first information.

After the terminal device receives the fourth notification message, steps that may be performed include the following several manners.

Possibility 1: After receiving the fourth notification message, the terminal device sends a fourth response message to the network device, and further, the network device sends the information about the adjusted first compressor to the terminal device, or the network device sends the information about the adjusted first compressor and the information about the adjusted first decompressor to the terminal device. The method procedure shown in (e) in FIG. 9 further includes: S940e: The terminal device sends the fourth response message to the network device. This is similar to S830e in (e) in FIG. 8, and details are not described herein again. S950e: The network device sends the information about the adjusted first compressor to the terminal device, or the network device sends the information about the adjusted first compressor and the information about the adjusted first decompressor to the terminal device. This is similar to S840e in (e) in FIG. 8, and details are not described herein again.

The fourth response message may also be referred to as the first response message.

Possibility 2: After receiving the fourth notification message, the terminal device may not agree to feed back, based on an AI mode, channel information to the network device. The method procedure shown in (e) in FIG. 9 further includes: S941e: The terminal device sends a third response message to the network device, or the terminal device skips sending a response message to the network device within fourth preset duration. This is similar to S831e in (e) in FIG. 8, and details are not described herein again.

It should be noted that, in the possibility 2, a premise that the terminal device does not agree to feed back, based on the AI mode, the channel information to the network device includes the following.

It may be predefined in a protocol that when the first compressor and the first decompressor need to be updated, the terminal device and the network device determine to roll back to a conventional channel information feedback mode, or when the first compressor and the first decompressor need to be updated, the terminal device and/or the network device determine/determines to roll back to a conventional channel information feedback mode. To be specific, the method procedure shown in (e) in FIG. 9 further includes S960e: The terminal device and the network device determine to roll back to the conventional channel information feedback mode.

Further, after determining to roll back to the conventional channel information feedback mode, the terminal device may notify the network device to roll back to the conventional channel information feedback mode, or after determining to roll back to the conventional channel information feedback mode, the network device may notify the terminal device to roll back to the conventional channel information feedback mode. In this case, the method procedure shown in (e) in FIG. 9 further includes S961e: Send a second notification message, where the second notification message is used to indicate a peer device to roll back from an AI mode-based channel information feedback mode (where a compressor and a decompressor in an AI framework are the first compressor and the first decompressor) to the conventional channel information feedback mode.

In a possible implementation, the second notification message and the first indication information may be sent by using one message, that is, S961c and S910e are a same step.

In another possible implementation, the second notification message and the first indication information may be sent by using different messages, that is, S960c and S910e are not a same step.

It should be understood that, the possibility 1 may also include S961e, or S961e does not need to be performed in the possibility 1. After determining that the first compressor and the first decompressor need to be updated, the terminal device does not need to notify the network device to first roll back to the conventional channel information feedback manner, but may continue to provide a channel information feedback based on the first compressor and the first decompressor.

The manner 2 to the manner 4 are similar to the manner 2 to the manner 4 shown in (e) in FIG. 8, and details are not described herein again.

In correspondence to the manner 2, the method procedure shown in (e) in FIG. 9 further includes S950c and S921e: The network device sends second information to the terminal device. In correspondence to the manner 3, the method procedure shown in (e) in FIG. 9 further includes S950c. In correspondence to the manner 4, the method procedure shown in (e) in FIG. 9 further includes S930e and S950e.

It should be understood that, the neural network adjustment method provided in this embodiment of this application may be applied to CSI feedback. When the embodiment shown in (e) in FIG. 9 is used in a CSI feedback procedure, the following two possible cases are included.

Case 1: The method procedure shown in (e) in FIG. 9 further includes S912e: The network device sends a CSI-RS to the terminal device. S913b: The terminal device performs channel measurement based on the CSI-RS to obtain downlink channel information. To be specific, in S901e, that the terminal device determines whether the first compressor and the first decompressor need to be updated may be determining, based on the downlink channel information obtained through channel measurement based on the CSI-RS, and the first compressor and the first decompressor that are known.

Case 2: The method procedure shown in (e) in FIG. 9 further includes S914e: The terminal device starts measurement, and sends a third notification message to the network device. S915e: The network device sends a CSI-RS and uplink channel information to the terminal device. S913e: The terminal device performs channel measurement based on the CSI-RS to obtain downlink channel information. To be specific, in S901e, that the terminal device determines whether the first compressor and the first decompressor need to be updated may be determining, based on the downlink channel information obtained through channel measurement based on the CSI-RS, the received uplink channel information that has a compression loss, and the first compressor and the first decompressor that are known.

Possibility 6: The second device is the network device, and the first device is the terminal device. As shown in (f) in FIG. 9, the following steps are included.

S901f: The terminal device determines whether the first compressor and the first decompressor need to be updated.

Specifically, for how the terminal device determines whether the first compressor and the first decompressor need to be updated in S901f, refer to the possibility 1 in the manner 1 and the possibility 1 and the possibility 2 in the manner 2 in S510.

When the terminal device determines that the first compressor and the first decompressor need to be updated, the method procedure shown in (f) in FIG. 9 further includes: S910f: The terminal device sends first indication information to the network device, where the first indication information is used to indicate the network device to update the first compressor and the first decompressor.

Optionally, after receiving the first indication information, the network device may reject the update of the first compressor and the first decompressor.

Optionally, after receiving the first indication information, the network device updates the first compressor and the first decompressor. In this embodiment of this application, a case in which the first compressor and the first decompressor are updated is mainly considered. To be specific, the method procedure shown in (f) in FIG. 9 further includes: S920f: The network device selects the appropriate compressor and the appropriate decompressor based on currently obtained downlink channel information or based on currently obtained downlink channel information and uplink channel information, and further adjusts the appropriate compressor and the appropriate decompressor to obtain an appropriate third compressor and an appropriate third decompressor. This is similar to S810f in (f) in FIG. 8, and details are not described herein again.

For ease of description, in this embodiment of this application, the third decompressor may also be referred to as the second decompressor, and the third compressor may also be referred to as the second compressor. To distinguish from (d) in FIG. 9, the third compressor and the third decompressor are used for description below.

After the network device selects and obtains through adjustment the appropriate third compressor and the appropriate third decompressor, by way of example but not limitation, the method procedure shown in (f) in FIG. 9 further includes the following several possible manners subsequently.

Manner 1: The method procedure shown in (f) in FIG. 9 further includes: S930f: The network device sends a fifth notification message to the terminal device. This is similar to S820f in (f) in FIG. 8, and details are not described herein again.

It should be understood that, a function of the fifth notification message in (f) in FIG. 9 is similar to a function of the first information in (a) in FIG. 9, and both the functions are notifying the network device to receive the information about the updated compressor and the information about the updated decompressor. Therefore, the fifth notification message in this application may also be referred to as the first information.

After the terminal device receives the fifth notification message, steps that may be performed include the following two possibilities.

Possibility 1: After receiving the fifth notification message, the terminal device sends a fifth response message to the network device, and further, the network device sends the third compressor to the terminal device, or the network device sends the third compressor and the third decompressor to the terminal device. The method procedure shown in (f) in FIG. 9 further includes: S940f: The terminal device sends the fifth response message to the network device. This is similar to S830f in (f) in FIG. 8, and details are not described herein again. S950f: The network device sends the information about the third compressor to the terminal device, or the network device sends the information about the third compressor and the information about the third decompressor to the terminal device. This is similar to S840f in (f) in FIG. 8, and details are not described herein again.

Possibility 2: After receiving the fifth notification message, the terminal device may not agree to feed back, based on an AI mode, channel information to the network device. The method procedure shown in (f) in FIG. 9 further includes: S941f: The terminal device sends a sixth response message to the network device, or the terminal device skips sending a response message to the network device within fourth preset duration. This is similar to S831f in (f) in FIG. 8, and details are not described herein again.

It should be noted that, in the possibility 2, a premise that the terminal device does not agree to feedback, based on the AI mode, the channel information to the network device includes the following.

It may be predefined in a protocol that when the first compressor and the first decompressor need to be updated, the terminal device and the network device determine to roll back to a conventional channel information feedback mode, or when the first compressor and the first decompressor need to be updated, the terminal device and/or the network device determine/determines to roll back to a conventional channel information feedback mode. To be specific, the method procedure shown in (f) in FIG. 9 further includes S960f: The terminal device and the network device determine to roll back to the conventional channel information feedback mode.

Further, after determining to roll back to the conventional channel information feedback mode, the terminal device may notify the network device to roll back to the conventional channel information feedback mode, or after determining to roll back to the conventional channel information feedback mode, the network device may notify the terminal device to roll back to the conventional channel information feedback mode. In this case, the method procedure shown in (f) in FIG. 9 further includes S961f: Send a second notification message, where the second notification message is used to indicate the peer device to roll back from an AI mode-based channel information feedback mode (where a compressor and a decompressor in an AI framework are the first compressor and the first decompressor) to the conventional channel information feedback mode.

In a possible implementation, the second notification message and the first indication information may be sent by using one message, that is, S961f and S910f are a same step.

In another possible implementation, the second notification message and the first indication information may be sent by using different messages, that is, S961f and S910f are not a same step.

It should be understood that, the possibility 1 may also include S961f, or S961f does not need to be performed in the possibility 1. After determining that the first compressor and the first decompressor need to be updated, the terminal device does not need to notify the network device to first roll back to the conventional channel information feedback manner, but may continue to provide a channel information feedback based on the first compressor and the first decompressor.

The manner 2 to the manner 4 are similar to the manner 2 to the manner 4 shown in (f) in FIG. 8, and details are not described herein again.

In correspondence to the manner 2, the method procedure shown in (f) in FIG. 9 further includes S950c and S921f: The network device sends second information to the terminal device. In correspondence to the manner 3, the method procedure shown in (f) in FIG. 9 further includes S950f. In correspondence to the manner 4, the method procedure shown in (f) in FIG. 9 further includes S930f and S950f.

It should be understood that, the neural network adjustment method provided in this embodiment of this application may be applied to CSI feedback. When the embodiment shown in (e) in FIG. 9 is used in a CSI feedback procedure, the following two possible cases are included.

Case 1: The method procedure shown in (f) in FIG. 9 further includes S912f: The network device sends a CSI-RS to the terminal device. S913b: The terminal device performs channel measurement based on the CSI-RS to obtain downlink channel information. To be specific, in S901f, that the terminal device determines whether the first compressor and the first decompressor need to be updated may be determining, based on the downlink channel information obtained through channel measurement based on the CSI-RS, and the first compressor and the first decompressor that are known.

Case 2: The method procedure shown in (f) in FIG. 9 further includes S914f: The terminal device starts measurement, and sends a third notification message to the network device. S915f: The network device sends a CSI-RS and uplink channel information to the terminal device. S913f: The terminal device performs channel measurement based on the CSI-RS to obtain downlink channel information. To be specific, in S901f, that the terminal device determines whether the first compressor and the first decompressor need to be updated may be determining, based on the downlink channel information obtained through channel measurement based on the CSI-RS, the received uplink channel information that has a compression loss, and the first compressor and the first decompressor that are known.

Further, in this embodiment of this application, in a scenario in which channel information is fed back based on the AI model, when feeding back the channel information, the terminal device may compress, by using a compressor, the channel information received by a plurality of receive antennas, and feed back the compressed channel information to the network device; and the network device may separately restore the channel information received by the plurality of receive antennas; or

when feeding back the channel information, the terminal device may compress, by using a compressor, the channel information corresponding to a plurality of layers, and feed back the compressed channel information to the network device; and the network device may separately restore the channel information corresponding to the plurality of layers.

This application further provides a communication method. The communication method is used to enable an AI function of a terminal device or a network device. The following describes the communication method in detail with reference to FIG. 10.

The communication method includes some or all of the following steps.

S1010: A first device sends a first message to a second device.

The first message is used to indicate the second device to report an AI capability of the second device.

In this embodiment of this application, that a first device sends a first message to a second device may be explicitly including the first message in a message, or implicitly including the first message in the message.

Optionally, the implicitly including the first message in the message includes:

The message includes first resource indication information. The first resource indication information is used to indicate the second device to receive the first message on a corresponding resource. The resource may be a PUCCH, a PDCCH, a PUSCH, a PDSCH, a UL grant, or a RACH.

S1020: The second device sends tenth indication information to the first device.

The tenth indication information is used to indicate the AI capability of the second device.

For example, the AI capability of the second device includes: a computing capability of the second device, a storage capability of the second device, information indicating whether the second device stores an AI model having a specific function, a neural network structure supported by the second device, a neural network scale supported by the second device, or an AI communication function supported by the second device.

For example, computing capability information of the second device may be a computing capability indicator or a computing capability indication, for example, a quantity of floating-point operations per second and a quantity of tensor operations per second.

The computing capability information of the second device may alternatively be chip information. For example, different chips have different computing capabilities, and the computing capability information may be a chip type.

The computing capability information of the second device may alternatively be information indicating whether the second device has an AI computing capability. For example, the computing capability information is 1 when the second device has the AI computing capability, and the computing capability information is 0 when the second device does not have the AI computing capability.

Optionally, the AI computing capability may be a computing capability different from a general computing capability. For example, the AI computing capability indicates a computing resource specially used for neural network-related computing, is used for parallel computing, and may include an operator corresponding to a neural network.

The computing capability information of the second device may alternatively be AI capability level information. For example, AI capability levels may be classified into levels 1 to 5, the computing capability information may be any one of the levels 1 to 5, and different AI levels correspond to different computing capabilities.

For example, storage capability information of the second device may be a storage capability indicator or a storage capability indication. For example, the storage capability information of the second device may be storage space, addressing information, or a quantity of storage bits (for example, 64 bits).

The storage capability information of the second device may alternatively be chip information. For example, different chips have different storage capabilities, and the storage capability information may be a chip type.

The storage capability information of the second device may alternatively be information indicating whether the second device has an AI storage capability. For example, the storage capability information is 1 when the second device has the AI storage capability, and the storage capability information is 0 when the second device does not have the AI storage capability.

Optionally, the AI storage capability may be a storage capability different from a general storage capability. For example, the AI storage capability indicates a memory specially used to store a neural network-related parameter.

The storage capability information of the second device may alternatively be AI capability level information. For example, AI capability levels may be classified into levels 1 to 5, the storage capability information may be any one of the levels 1 to 5, and different AI levels correspond to different storage capabilities.

For example, information indicating whether the second device stores a first AI model may be 1-bit information. For example, a bit value of information indicating that the first AI model is stored is 1, and a bit value of information indicating that the first AI model is not stored is 0.

For example, the neural network structure supported by the second device may be a neural network type (for example, a CNN, a DNN/FC, or an RNN) supported by the second device.

Alternatively, the neural network structure supported by the second device may be a degree to which the second device supports different neural networks. The support degree may be represented by using an operator quantity and a capability. Different neural networks may correspond to different quantities of hardware operators and different capabilities of the operators.

For example, the neural network scale supported by the second device may be a value of a related parameter of a supported neural network.

For example, the AI communication function supported by the second device may be a compression and decompression function, or may be a modulation and demodulation function. Different functions may also be represented by using operator quantities and capabilities.

In this embodiment of this application, an operator corresponding to the neural network may indicate a function of the neural network and/or a structure of the neural network. In this embodiment of this application, that the second device sends tenth indication information to the first device may be explicitly including the tenth indication information in a message, or implicitly including the tenth indication information in the message.

Optionally, the implicitly including the tenth indication information in the message includes:

The message includes second resource indication information. The second resource indication information is used to indicate the first device to receive the tenth indication information on a corresponding resource. The resource may be a PUCCH, a PDCCH, a PUSCH, a PDSCH, a UL grant, or a RACH.

After learning of the capability of the second device, the first device may send the AI model to the second device. To be specific, the method procedure shown in FIG. 10 further includes: S1030: The first device sends information about the AI model to the second device.

In this embodiment of this application, that the first device sends information about the AI model to the second device may be explicitly including the information about the AI model in a message, or implicitly including the information about the AI model in the message.

Optionally, the implicitly including the information about the AI model in the message includes:

The message includes third resource indication information. The third resource indication information is used to indicate the second device to receive the information about the AI model on a corresponding resource. The resource may be a PUCCH, a PDCCH, a PUSCH, a PDSCH, a UL grant, or a RACH.

The information about the AI model includes the following several possibilities.

Possibility 1: The first device and the second device each locally store the AI model. In this case, the information about the AI model may be an index of the AI model.

Possibility 2: The AI model may be represented by using a first network weight and a first network structure. In this case, the information about the AI model may be the first network weight and the first network structure.

Possibility 3: The first device and the second device each locally store a first network structure corresponding to the AI model, an index of the first network structure in the first device is the same as an index of the first network structure in the second device, and the AI model may be represented by using a first network weight and the first network structure. In this case, the information about the AI model may be the index of the first network structure and the first network weight.

Possibility 4: The first device and the second device each locally store a first network structure corresponding to the AI model, an index of the first network structure in the first device is the same as an index of the first network structure in the second device, the AI model may be represented by using a first network weight and the first network structure, the first device and the second device each locally store the first network weight corresponding to the AI model, and an index of the first network weight in the first device is the same as an index of the first network weight in the second device. In this case, the information about the AI model may be the index of the first network structure and the index of the first network weight.

Possibility 5: The first device and the second device each locally store only a first network structure corresponding to the AI model, and the AI model may be represented by using a first network weight and the first network structure. In this case, the information about the AI model may be the first network weight.

Possibility 6: The first device and the second device each locally store only a first network structure corresponding to the AI model, the AI model may be represented by using a first network weight and the first network structure, the first device and the second device each locally store the first network weight corresponding to the AI model, and an index of the first network weight in the first device is the same as an index of the first network weight in the second device. In this case, the information about the AI model may be the index of the first network weight.

In a possible implementation, in the procedure of the communication method shown in FIG. 10, when the first device locally stores N neural networks, before sending the information about the AI model, the first device may further send at least one neural network as a candidate neural network to the second device.

For example, that the first device sends at least one neural network to the second device includes the following several possibilities.

Possibility 1: The N neural networks locally stored in the first device are neural networks that need to be applied to the second device or the first device.

In the possibility 1, the first device may send information about M neural networks in the N neural networks to the second device, where M and N are positive integers, and M is less than or equal to N.

For example, that the first device sends information about M neural networks to the second device includes at least one of the following manners.

The first device sends the M neural networks to the second device, the first device sends network weights corresponding to the M neural networks to the second device, or the first device sends network structures corresponding to the M neural networks to the second device.

Possibility 2: The N neural networks that have a same network structure and that are locally stored in the first device are neural networks that need to be applied to the second device or the first device.

In the possibility 2, the first device may send a network structure of a specific neural network in the N neural networks to the second device.

Possibility 3: The N neural networks locally stored in the first device include N/2 neural network pairs, each neural network pair includes a first neural network and a second neural network, and N is a non-zero even number.

In the possibility 3, the first device may send information about first neural networks and/or information about second neural networks in Q neural network pairs in the N/2 neural network pairs to the second device, where Q is a positive integer less than or equal to N/2.

For example, that the first device sends information about first neural networks and/or information about second neural networks in Q neural network pairs to the second device includes at least one of the following manners.

The first device sends Q second neural networks to the second device, the first device sends Q first neural networks to the second device, the first device sends network weights corresponding to Q first neural networks to the second device, the first device sends network weights corresponding to Q second neural networks to the second device, the first device sends network structures corresponding to Q first neural networks to the second device, or the first device sends network structures corresponding to Q second neural networks to the second device.

Possibility 4: The N neural networks locally stored in the first device include N/2 neural network pairs, each neural network pair includes a first neural network and a second neural network, N/2 first neural networks have a same network structure, N/2 second neural networks have a same network structure, and N is a non-zero even number.

In the possibility 4, the first device may send information about a network structure corresponding to a first neural network and/or information about a network structure corresponding to a second neural network in a specific neural network pair in the N/2 neural network pairs to the second device.

The possibility 1 to the possibility 4 may be understood as that the first device sends the candidate neural network to the second device. Further, the first device may indicate, by using indication information, a currently used neural network in the at least one candidate neural network. Alternatively, the first device may directly send a currently used neural network to the second device without delivering the candidate neural network.

For example, the first device locally stores two corresponding neural network pairs: a neural network #1, a neural network #2, a neural network #3, and a neural network #4. The neural network #1 and the neural network #2 are a pair of neural networks, and the neural network #3 and the neural network #4 are a pair of neural networks. In addition, the neural network #1 and the neural network #3 need to be applied to a first device side, and the neural network #2 and the neural network #4 need to be applied to a second device side. In this case, the first device may send, to the second device, the neural network #2 and the neural network #4 that need to be applied to the second device side, or the first device may send all of the neural network #1, the neural network #2, the neural network #3, and the neural network #4 as candidate neural networks to the second device. In addition, indication information is used to indicate that a currently used neural network is the neural network #2. For an indication manner in which the indication information indicates that the currently used neural network is the neural network #2, refer to the possibility 1 to the possibility 6 shown in S1030. Details are not described herein again.

For example, the communication method that is shown in FIG. 10 and that is used to enable the AI function of the terminal device or the network device may be completed in a scenario of initial access of the terminal device, that is, the AI function of the terminal device is enabled in a procedure in which the terminal device implements initial access.

An existing initial access procedure is shown in FIG. 11. FIG. 11 is a schematic flowchart of initial access.

The initial access includes the following steps.

S1110: The terminal device sends a seventh message to the network device.

The seventh message includes a random access preamble (random access preamble), and the terminal device sends the random access preamble to the network device on a random access channel (Random Access Channel, PRACH), to initiate a random access procedure.

The seventh message in the existing random access procedure is referred to as a message 1 (message 1, MSG 1).

S1120: The network device sends a seventh response message to the terminal device.

The seventh response message includes a random access response (random access response). The network device sends the random access response to the terminal device on a physical downlink shared channel (physical downlink shared channel, PDSCH), to respond to random access of the terminal device. The seventh response message includes an index number of the random preamble sequence that corresponds to the terminal device and that is determined by a base station.

The seventh response message in the existing random access procedure is referred to as a message 2 (message 2, MSG 2).

S1130: The terminal device sends an eighth message to the network device.

The eighth message includes an RRC establishment request (RRC connection request) message. The terminal device sends the RRC connection request to the network device on a physical uplink shared channel (physical uplink shared channel, PDSCH), to request to establish a connection. The eighth message includes an identifier of the terminal device.

The eighth message in the existing random access procedure is referred to as a message 3 (message 3, MSG 3).

S1140: The network device sends an eighth response message to the terminal device.

The eighth response message includes a connection establishment (connection resolution) message. The network device sends the connection resolution to the terminal device on a PDSCH. The eighth response message is used to confirm conflict resolution in the random access process.

The eighth response message in the existing random access procedure is referred to as a message 4 (message 4, MSG 4).

The foregoing merely briefly describes the random access procedure. For specific signaling exchange in the random access procedure, refer to a specification in an existing protocol. This is not further described in this application. The embodiment shown in FIG. 11 mainly describes how to enable the AI function of the terminal device with reference to the random access procedure. The following several possible manners are included.

In a possible implementation, the eighth response message includes a first message, and the first message is used to indicate the terminal device to report an AI capability of the terminal device.

The first message may be explicitly carried in the eighth response message, or the first message is implicitly carried in the eighth response message.

Optionally, that the first message is implicitly carried in the eighth response message includes:

The eighth response message includes first resource indication information. The first resource indication information is used to indicate the terminal device to receive the first message on a corresponding resource. The resource may be a PUCCH, a PDCCH, a PUSCH, a PDSCH, a UL grant, or a RACH.

In this manner, after receiving the eighth response message, the terminal device sends the tenth indication information to the network device; and after receiving the tenth indication information reported by the terminal device, the network device may send the information about the AI model to the terminal device based on the tenth indication information or based on the AI capability of the terminal device.

To be specific, the method procedure shown in FIG. 11 further includes S1101: The terminal device sends the tenth indication information to the network device. This is similar to S1020 in FIG. 10, and details are not described herein again. S1102: The network device sends the information about the AI model to the terminal device. This is similar to S1030 in FIG. 10, and details are not described herein again

In another possible implementation, it is predefined in a protocol that the terminal device needs to report the tenth indication information to the network device after receiving the eighth response message.

In this manner, after receiving the eighth response message, the terminal device sends the tenth indication information to the network device; and after receiving the tenth indication information reported by the terminal device, the network device sends the information about the AI model to the terminal device. To be specific, the method procedure shown in FIG. 11 further includes S1101: The terminal device sends the tenth indication information to the network device. This is similar to S1020 in FIG. 10, and details are not described herein again. S1102: The network device sends the information about the AI model to the terminal device. This is similar to S 1030 in FIG. 10, and details are not described herein again

In still another possible implementation, the seventh response message includes a first message, and the first message is used to indicate the terminal device to report an AI capability of the terminal device.

The first message may be explicitly carried in the seventh response message, or the first message is implicitly carried in the seventh response message.

Optionally, that the first message is implicitly carried in the seventh response message includes:

The seventh response message includes first resource indication information. The first resource indication information is used to indicate the terminal device to receive the first message on a corresponding resource. The resource may be a PUCCH, a PDCCH, a PUSCH, a PDSCH, a UL grant, or a RACH.

In this manner, the eighth message that is sent by the terminal device to the network device after the terminal device receives the seventh response message includes the tenth indication information, or the eighth message includes second resource indication information. The second resource indication information is used to indicate the terminal device to receive the tenth indication information on a corresponding resource. The resource may be a PUCCH, a PDCCH, a PUSCH, a PDSCH, a UL grant, or a RACH.

In addition, the eighth response message that is sent by the network device to the terminal device after the network device receives the eighth message sent by the terminal device includes the information about the AI model, or the eighth response message includes third resource indication information. The third resource indication information is used to indicate the terminal device to receive the information about the AI model on a corresponding resource. The resource may be a PUCCH, a PDCCH, a PUSCH, a PDSCH, a UL grant, or a RACH.

In still another possible implementation, it is predefined in a protocol that the terminal device needs to report the tenth indication information to the network device after receiving the seventh response message.

In this manner, the eighth message that is sent by the terminal device to the network device after the terminal device receives the seventh response message includes the tenth indication information, or the eighth message includes second resource indication information. The second resource indication information is used to indicate the terminal device to receive the tenth indication information on a corresponding resource. The resource may be a PUCCH, a PDCCH, a PUSCH, a PDSCH, a UL grant, or a RACH.

In addition, the eighth response message that is sent by the network device to the terminal device after the network device receives the eighth message sent by the terminal device includes the information about the AI model, or the eighth response message includes third resource indication information. The third resource indication information is used to indicate the terminal device to receive the information about the AI model on a corresponding resource. The resource may be a PUCCH, a PDCCH, a PUSCH, a PDSCH, a UL grant, or a RACH.

In still another possible implementation, the seventh response message includes a first message, and the first message is used to indicate the terminal device to report the AI capability of the terminal device.

The first message may be explicitly carried in the seventh response message, or the first message is implicitly carried in the seventh response message.

Optionally, that the first message is implicitly carried in the seventh response message includes:

The seventh response message includes first resource indication information. The first resource indication information is used to indicate the terminal device to receive the first message on a corresponding resource. The resource may be a PUCCH, a PDCCH, a PUSCH, a PDSCH, a UL grant, or a RACH.

In this manner, the eighth message that is sent by the terminal device to the network device after the terminal device receives the seventh response message includes the tenth indication information, or the eighth message includes second resource indication information. The second resource indication information is used to indicate the terminal device to receive the tenth indication information on a corresponding resource. The resource may be a PUCCH, a PDCCH, a PUSCH, a PDSCH, a UL grant, or a RACH.

In addition, after receiving the eighth message sent by the terminal device and sending the eighth response message to the terminal device, the network device delivers the information about the AI model in other signaling. To be specific, the method procedure shown in FIG. 11 further includes S 1103: The network device sends the information about the AI model to the terminal device. This is similar to S1030 in FIG. 10, and details are not described herein again.

In still another possible implementation, it is predefined in a protocol that the terminal device needs to report the tenth indication information to the network device after receiving the seventh response message.

In this manner, the eighth message that is sent by the terminal device to the network device after the terminal device receives the seventh response message includes the tenth indication information, or the eighth message includes second resource indication information. The second resource indication information is used to indicate the terminal device to receive the tenth indication information on a corresponding resource. The resource may be a PUCCH, a PDCCH, a PUSCH, a PDSCH, a UL grant, or a RACH.

In addition, after receiving the eighth message sent by the terminal device and sending the eighth response message to the terminal device, the network device delivers the information about the AI model in other signaling. To be specific, the method procedure shown in FIG. 11 further includes S 1103: The network device sends the information about the AI model to the terminal device. This is similar to S1030 in FIG. 10, and details are not described herein again.

It should be noted that enabling the AI function of the terminal device in the initial access procedure shown in FIG. 11 is merely an example, and does not constitute any limitation on the protection scope of this application. The AI function of the terminal device may be enabled in a communication process after the terminal device establishes a connection to the network device.

Sequence numbers of the foregoing processes do not mean execution sequences in the foregoing method embodiments. The execution sequences of the processes should be determined based on functions and internal logic of the processes, and should not constitute any limitation on the implementation processes in embodiments of this application. In addition, it is possible that not all operations in the foregoing method embodiments need to be performed.

It should be understood that the terminal device and/or the network device in the foregoing method embodiments may perform some or all of the steps in the embodiments. These steps or operations are merely examples. In embodiments of this application, other operations or variants of the various operations may be further included.

It should be further understood that, in embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The foregoing describes in detail the neural network adjustment method and the communication method provided in embodiments of this application with reference to FIG. 5(a)-1 and FIG. 5(a)-2 to FIG. 5(e) to FIG. 11. The following describes in detail a neural network adjustment apparatus and a communication apparatus provided in embodiments of this application with reference to FIG. 12 to FIG. 17.

FIG. 12 is a schematic diagram of a neural network adjustment apparatus 1200 according to this application. As shown in FIG. 12, the apparatus 1200 includes a processing unit 1210 and a sending unit 1220.

The processing unit 1210 is configured to determine a third neural network and a fourth neural network, where the third neural network and the fourth neural network respectively correspond to a first neural network and a second neural network.

The sending unit 1220 is configured to send information about the fourth neural network to a second device.

The first neural network or the third neural network is used by a first device to perform first signal processing, the second neural network or the fourth neural network is used by the second device to perform second signal processing, and the second signal processing corresponds to the first signal processing.

For example, that the processing unit 1210 is configured to determine a third neural network and a fourth neural network includes:

The processing unit 1210 is configured to update the first neural network and the second neural network to respectively obtain the third neural network and the fourth neural network.

For example, the apparatus further includes a receiving unit, configured to: before the processing unit 1210 updates the first neural network and the second neural network to respectively obtain the third neural network and the fourth neural network, receive first indication information from the second device, where the first indication information is used to indicate the processing unit 1210 to update the first neural network and the second neural network; or receive second indication information from the second device, where the second indication information is used to indicate the processing unit 1210 to determine whether the first neural network and the second neural network need to be updated, where the processing unit 1210 determines that the first neural network and the second neural network need to be updated.

For example, the processing unit 1210 is configured to: before the processing unit 1210 updates the first neural network and the second neural network to respectively obtain the third neural network and the fourth neural network, periodically or aperiodically determine whether the first neural network and the second neural network need to be updated, and the processing unit 1210 determines that the first neural network and the second neural network need to be updated.

For example, the processing unit 1210 is configured to: before the processing unit 1210 updates the first neural network and the second neural network to respectively obtain the third neural network and the fourth neural network, determine, based on triggering of a preset condition, whether the first neural network and the second neural network need to be updated, and the processing unit 1210 determines that the first neural network and the second neural network need to be updated.

For example, that the processing unit 1210 updates the first neural network and the second neural network includes:

The processing unit 1210 periodically or aperiodically updates the first neural network and the second neural network.

For example, that the processing unit 1210 determines whether the first neural network and the second neural network need to be updated includes:

The processing unit 1210 determines, depending on whether a degree of difference or a similarity between first information and second information meets a third condition, whether the first neural network and the second neural network need to be updated, where the first information includes a first determining signal related to a first signal, and the second information includes a second determining signal related to a fifth signal.

For example, the processing unit 1210 is further configured to determine the second determining signal based on the first determining signal, the first neural network, and the second neural network; or

the processing unit 1210 is further configured to determine the second determining signal based on the first determining signal, the first neural network, the second neural network, and a first function module and/or a second function module.

For example, that the processing unit 1210 determines a third neural network and a fourth neural network includes:

the processing unit 1210 selects the third neural network and the fourth neural network from a first set based on communication system data, where the first set includes a plurality of neural networks; or

the processing unit 1210 adjusts, based on communication system data, network weights corresponding to the first neural network and the second neural network, to obtain the third neural network and the fourth neural network; or

the processing unit 1210 selects a fifth neural network and a sixth neural network from a second set based on communication system data, and then adjusts, based on the communication system data, network weights corresponding to the fifth neural network and the sixth neural network, to obtain the third neural network and the fourth neural network.

For example, the sending unit 1220 is further configured to send information about the third neural network to the second device.

For example, before the sending unit 1220 sends the information about the fourth neural network to the second device, or sends the information about the fourth neural network and the information about the third neural network, the sending unit 1220 is further configured to send first information to the second device, where the first information is used to request the second device to receive the information about the fourth neural network, or is used to request the second device to receive the information about the fourth neural network and the information about the third neural network; and the receiving unit is configured to receive a first response message from the second device, where the first response message is used to indicate the first device to send the information about the fourth neural network, or is used to indicate the first device to send the information about the fourth neural network and the information about the third neural network.

For example, before the sending unit 1220 sends the information about the fourth neural network to the second device, or sends the information about the fourth neural network and the information about the third neural network, the receiving unit is configured to receive second information from the second device, where the second information is used to indicate that the second device can receive the information about the fourth neural network, or indicate that the second device can receive the information about the fourth neural network and the information about the third neural network.

For example, that the sending unit 1220 sends information about the fourth neural network to a second device, or sends information about the fourth neural network and information about the third neural network includes:

The sending unit 1220 sends the information about the fourth neural network to the second device, or sends the information about the fourth neural network and the information about the third neural network after the receiving unit receives the second information.

For example, that the sending unit 1220 sends information about the fourth neural network to a second device, or sends information about the fourth neural network and information about the third neural network includes:

The sending unit 1220 sends the information about the fourth neural network to the second device, or sends the information about the fourth neural network and the information about the third neural network after the processing unit 1210 updates the first neural network and the second neural network to respectively obtain the third neural network and the fourth neural network.

For example, before the sending unit 1220 sends the information about the fourth neural network, or sends the information about the fourth neural network and the information about the third neural network, the sending unit 1220 is further configured to send first information to the second device, where the first information is used to notify the second device to receive the information about the fourth neural network, or the information about the fourth neural network and the information about the third neural network.

That the sending unit 1220 sends information about the fourth neural network to a second device, or sends information about the fourth neural network and information about the third neural network includes:

The sending unit 1220 starts to send the information about the fourth neural network to the second device, or send the information about the fourth neural network and the information about the third neural network within third preset duration after a time point at which the sending unit 1220 sends the first information to the second device or after the third preset duration.

For example, after the sending unit 1220 sends the information about the fourth neural network to the second device, or sends the information about the fourth neural network and the information about the third neural network, the receiving unit is further configured to receive a first notification message from the second device, where the first notification message is used to indicate the second device to perform information transmission by using the fourth neural network or by using the fourth neural network and the third neural network.

For example, the receiving unit is further configured to receive a second notification message from the second device, or the sending unit 1220 is further configured to send a second notification message to the second device.

The second notification message is used to notify that an information transmission mode is changed from a first mode to a second mode, the first mode includes information transmission based on neural networks, the neural networks include the first neural network and the second neural network, and the second mode includes information transmission based on a non-neural network.

For example, the processing unit 1210 is further configured to switch the information transmission mode from the first mode to the second mode, where the fourth start moment includes a moment at which the first device sends the second notification message to the second device or a moment at which the first device receives the second notification message from the second device.

For example, the receiving unit is further configured to receive a second response message from the second device, where the second response message is used to indicate to reject receiving of the information about the fourth neural network, or is used to indicate to reject receiving of the information about the fourth neural network and the information about the third neural network.

For example, the receiving unit is further configured to receive fifth indication information from the second device, where the fifth indication information is used to indicate the first device to send a capability of the first device; and the sending unit 1220 is further configured to send first capability information to the second device, where the first capability information includes at least one of the following information:

computing capability information of the first device, storage capability information of the first device, information indicating whether the first device stores a first AI model, a neural network structure supported by the first device, a neural network scale supported by the first device, or an AI communication function supported by the first device, where the first AI model is any AI model.

For example, the sending unit 1220 is further configured to send sixth indication information to the second device, where the sixth indication information is used to indicate the second device to send a capability of the second device; and the receiving unit is further configured to receive second capability information from the second device, where the second capability information includes at least one of the following information:

computing capability information of the second device, storage capability information of the second device, information indicating whether the second device stores a second AI model, a neural network structure supported by the second device, a neural network scale supported by the second device, or an AI communication function supported by the second device, where the second AI model is any AI model.

The apparatus 1200 corresponds to the first device in the embodiment of the neural network adjustment method. The apparatus 1200 may be the first device in the embodiment of the neural network adjustment method, or a chip or a function module inside the first device in the embodiment of the neural network adjustment method. A corresponding unit in the apparatus 1200 is configured to perform a corresponding step performed by the first device in the method embodiments shown in FIG. 5(a)-1 and FIG. 5(a)-2 to FIG. 5(e) to FIG. 9.

The processing unit 1210 in the apparatus 1200 is configured to perform a processing-related step corresponding to the first device in the embodiment of the neural network adjustment method.

The sending unit 1220 in the apparatus 1200 is configured to perform a sending step of the first device in the embodiment of the neural network adjustment method.

The receiving unit in the apparatus 1200 is configured to perform a receiving step of the first device in the embodiment of the neural network adjustment method.

The sending unit 1220 and the receiving unit may constitute a transceiver unit, which has both a receiving function and a sending function. The processing unit 1210 may be at least one processor. The sending unit 1220 may be a transmitter or an interface circuit, and the receiving unit may be a receiver or an interface circuit. The receiver and the transmitter may be integrated together to form a transceiver or an interface circuit.

Optionally, the apparatus 1200 may further include a storage unit, configured to store data and/or signaling. The processing unit 1210, the sending unit 1220, and the receiving unit may interact with or be coupled to the storage unit, for example, read or invoke the data and/or the signaling in the storage unit, to perform the method in the foregoing embodiment.

The foregoing units may exist independently, or may be all or partially integrated.

FIG. 13 is a schematic diagram of a communication apparatus 1300 according to this application. As shown in FIG. 13, the apparatus 1300 includes a receiving unit 1310 and a sending unit 1320.

The receiving unit 1310 is configured to receive tenth indication information from a second device, where the tenth indication information is used to indicate an AI capability of the second device.

The sending unit 1320 is configured to send information about an AI model to the second device based on the AI capability of the second device.

For example, before the receiving unit 1310 receives the tenth indication information from the second device, the sending unit 1320 is further configured to send a first message to the second device, where the first message is used to query the AI capability of the second device.

For example, that the sending unit 1320 sends a first message to the second device includes:

The sending unit 1320 sends an eighth response message to the second device, where the eighth response message includes the first message, or

the eighth response message includes first resource indication information, and the first resource indication information is used to indicate a resource for receiving the first message by the second device.

For example, that the sending unit 1320 sends a first message to the second device includes:

The sending unit 1320 sends a seventh response message to the second device, where the seventh response message includes the first message, or

the seventh response message includes first resource indication information, and the first resource indication information is used to indicate a resource for receiving the first message by the second device.

For example, before the receiving unit 1310 receives the tenth indication information from the second device, the sending unit 1320 sends an eighth response message to the second device, where the eighth response message is used to complete RRC establishment in an initial access process.

For example, before the receiving unit 1310 receives the tenth indication information from the second device, the sending unit 1320 sends a seventh response message to the second device, where the seventh response message is used to respond to an initial access request in an initial access process.

For example, that the receiving unit 1310 receives tenth indication information from a second device includes:

The receiving unit 1310 receives an eighth message from the second device, where the eighth message includes the tenth indication information, or

the eighth message includes second resource indication information, and the second resource indication information is used to indicate a resource for receiving the tenth indication information by the first device.

For example, that the sending unit 1320 sends information about an AI model to the second device includes:

The sending unit 1320 sends an eighth response message to the second device, where the eighth response message includes the information about the AI model, or

the eighth response message includes third resource indication information, and the third resource indication information is used to indicate a resource for receiving the information about the AI model by the second device.

For example, the sending unit 1320 is further configured to send at least one neural network to the second device, where N is a positive integer, and the at least one neural network is some or all of N neural networks.

For example, the sending unit 1320 is further configured to send eighth indication information to the second device, where the eighth indication information is used to indicate a currently applicable neural network.

The apparatus 1300 corresponds to the first device in the embodiment of the communication method for enabling an AI function. The apparatus 1300 may be the first device in the embodiment of the communication method for enabling an AI function, or a chip or a function module inside the first device in the embodiment of the communication method for enabling an AI function. A corresponding unit in the apparatus 1300 is configured to perform a corresponding step performed by the first device in the method embodiment shown in FIG. 10.

The sending unit 1320 in the apparatus 1300 is configured to perform a sending step of the first device in the embodiment of the communication method for enabling an AI function.

The receiving unit 1310 in the apparatus 1300 is configured to perform a receiving step of the first device in the embodiment of the communication method for enabling an AI function.

The apparatus 1300 may further include a processing unit, configured to perform a processing-related step corresponding to the first device in the embodiment of the communication method for enabling an AI function.

The sending unit 1320 and the receiving unit 1310 may constitute a transceiver unit, which has both a receiving function and a sending function. The processing unit may be at least one processor. The sending unit 1320 may be a transmitter or an interface circuit, and the receiving unit 1310 may be a receiver or an interface circuit. The receiver and the transmitter may be integrated together to form a transceiver or an interface circuit.

Optionally, the apparatus 1300 may further include a storage unit, configured to store data and/or signaling. The processing unit, the sending unit 1320, and the receiving unit 1310 may interact with or be coupled to the storage unit, for example, read or invoke the data and/or the signaling in the storage unit, to perform the method in the foregoing embodiment.

The foregoing units may exist independently, or may be all or partially integrated.

FIG. 14 is a schematic diagram of a first device 1400 according to this application. The first device 1400 includes a processor 1410. The processor 1410 is coupled to a memory 1420. The memory 1420 is configured to store a computer program or instructions and/or data. The processor 1410 is configured to execute the computer program or the instructions and/or the data stored in the memory 1420, to perform the method in the foregoing method embodiment.

Optionally, the first device 1400 includes one or more processors 1410.

Optionally, as shown in FIG. 14, the first device 1400 may further include the memory 1420.

Optionally, the first device 1400 may include one or more memories 1420.

Optionally, the memory 1420 and the processor 1410 may be integrated together, or separately disposed.

Optionally, as shown in FIG. 14, the first device 1400 may further include a transceiver 1430. The transceiver 1430 is configured to receive and/or send a signal. For example, the processor 1410 is configured to control the transceiver 1430 to receive and/or send a signal.

In a solution, the first device 1400 is configured to implement operations performed by the units in the first device in the foregoing method embodiment.

For example, the processor 1410 is configured to implement a processing-related operation performed by the processing unit in the first device in the foregoing method embodiment.

FIG. 15 is a schematic diagram of a neural network adjustment apparatus 1500 according to this application. As shown in FIG. 15, the apparatus 1500 includes a receiving unit 1510 and a processing unit 1520.

The receiving unit 1510 is configured to receive information about a fourth neural network from a first device, where the fourth neural network is a neural network corresponding to a second neural network.

The processing unit 1520 is configured to determine the fourth neural network based on the information about the fourth neural network.

For example, the processing unit 1520 is further configured to: before the receiving unit 1510 receives the information about the fourth neural network from the first device, or receives the information about the fourth neural network and information about a third neural network from the first device, determine that a first neural network and the second neural network need to be updated.

The apparatus 1500 further includes a sending unit, configured to send first indication information to the first device, where the first indication information is used to indicate the first device to update the first neural network and the second neural network; or

a sending unit, configured to send second indication information to the first device, where the second indication information is used to indicate the first device to determine whether the first neural network and the second neural network need to be updated.

For example, that the processing unit 1520 determines that a first neural network and the second neural network need to be updated includes:

the processing unit 1520 periodically or aperiodically determines whether the first neural network and the second neural network need to be updated; or

the receiving unit 1510 receives seventh indication information from the first device, where the seventh indication information is used to indicate a second device to determine whether the first neural network and the second neural network need to be updated; or

the processing unit 1520 determines, based on triggering of a preset condition, whether the first neural network and the second neural network need to be updated.

For example, that the processing unit 1520 determines that a first neural network and the second neural network need to be updated includes:

The processing unit 1520 determines, depending on whether a degree of difference or a similarity between first information and second information meets a third condition, whether the first neural network and the second neural network need to be updated, where the first information includes a first determining signal related to a first signal, and the second information includes a second determining signal related to a fifth signal.

For example, the processing unit 1520 is further configured to determine the second determining signal based on the first determining signal, the first neural network, and the second neural network; or

the processing unit 1520 is further configured to determine the second determining signal based on the first determining signal, the first neural network, the second neural network, and a first function module and/or a second function module.

For example, before the receiving unit 1510 receives the information about the fourth neural network from the first device, or the information about the fourth neural network and the information about the third neural network, the receiving unit 1510 is further configured to receive first information from the first device, where the first information is used to notify the second device to receive the information about the fourth neural network, or is used to notify the second device to receive the information about the fourth neural network and the information about the third neural network.

The sending unit is configured to send a first response message to the first device, where the first response message is used to indicate the first device to send the information about the fourth neural network, or is used to indicate the first device to send the information about the fourth neural network and the information about the third neural network.

For example, before the receiving unit 1510 receives the information about the fourth neural network from the first device, or the information about the fourth neural network and the information about the third neural network, the sending unit is configured to send second information to the first device, where the second information is used to indicate that the second device can receive the information about the fourth neural network, or the information about the fourth neural network and the information about the third neural network.

That the receiving unit 1510 receives information about a fourth neural network from a first device, or information about a fourth neural network and information about a third neural network includes:

receiving the information about the fourth neural network from the first device, or receiving the information about the fourth neural network and the information about the third neural network from the first device after the sending unit sends the second information.

For example, that the receiving unit 1510 receives information about a fourth neural network from a first device, or information about a fourth neural network and information about a third neural network includes: starting to receive the information about the fourth neural network from the first device, or receive the information about the fourth neural network and the information about the third neural network from the first device within second preset duration after a second start moment or after the second preset duration.

For example, before the receiving unit 1510 receives the information about the fourth neural network from the first device, or the information about the fourth neural network and the information about the third neural network, the receiving unit 1510 receives first information from the first device, where the first information is used to notify the second device to receive the information about the fourth neural network, or the information about the fourth neural network and the information about the third neural network.

That the receiving unit 1510 receives information about a fourth neural network from a first device, or information about a fourth neural network and information about a third neural network includes:

The receiving unit 1510 starts to receive the information about the fourth neural network from the first device, or receive the information about the fourth neural network and the information about the third neural network from the first device within third preset duration after a time point at which the receiving unit 1510 receives the first information from the first device or after the third preset duration.

For example, the sending unit sends a first notification message to the first device, where the first notification message is used to indicate the second device to perform information transmission by using the fourth neural network or by using the fourth neural network and the third neural network.

For example, the sending unit sends a second notification message to the first device, or the receiving unit 1510 receives a second notification message from the first device.

The second notification message is used to notify that an information transmission mode is changed from a first mode to a second mode, the first mode includes information transmission based on an AI model, the AI model includes a first compressor and a first decompressor, and the second mode includes information transmission based on a non-AI model.

For example, the sending unit sends a second response message to the first device, where the second response message is used to indicate to reject receiving of the information about the fourth neural network, or is used to indicate to reject receiving of the information about the fourth neural network and the information about the third neural network.

For example, the sending unit sends fifth indication information to the first device, where the fifth indication information is used to indicate the first device to send a capability of the first device; and
the receiving unit 1510 receives first capability information from the first device, where the first capability information includes at least one of the following information:

computing capability information of the first device, storage capability information of the first device, information indicating whether the first device stores a first AI model, a neural network structure supported by the first device, a neural network scale supported by the first device, or an AI communication function supported by the first device, where the first AI model is any AI model; or
the receiving unit 1510 receives sixth indication information from the first device, where the sixth indication information is used to indicate the second device to send a capability of the second device; and
the sending unit sends second capability information to the first device, where the second capability information includes at least one of the following information:
computing capability information of the second device, storage capability information of the second device, information indicating whether the second device stores a second AI model, a neural network structure supported by the second device, a neural network scale supported by the second device, or an AI communication function supported by the second device, where the second AI model is any AI model.

The apparatus 1500 corresponds to the second device in the embodiment of the neural network adjustment method. The apparatus 1500 may be the second device in the embodiment of the neural network adjustment method, or a chip or a function module inside the second device in the embodiment of the neural network adjustment method. A corresponding unit in the apparatus 1500 is configured to perform a corresponding step performed by the second device in the method embodiments shown in FIG. 5(a)-1 and FIG. 5(a)-2 to FIG. 5(e) to FIG. 9.

The processing unit 1520 in the apparatus 1500 is configured to perform a processing-related step corresponding to the second device in the embodiment of the neural network adjustment method.

The sending unit in the apparatus 1500 is configured to perform a sending step of the second device in the embodiment of the neural network adjustment method.

The receiving unit 1510 in the apparatus 1500 is configured to perform a receiving step of the second device in the embodiment of the neural network adjustment method.

The sending unit and the receiving unit 1510 may constitute a transceiver unit, which has both a receiving function and a sending function. The processing unit 1520 may be at least one processor. The sending unit may be a transmitter or an interface circuit, and the receiving unit 1510 may be a receiver or an interface circuit. The receiver and the transmitter may be integrated together to form a transceiver or an interface circuit.

Optionally, the apparatus 1500 may further include a storage unit, configured to store data and/or signaling. The processing unit 1520, the sending unit, and the receiving unit 1510 may interact with or be coupled to the storage unit, for example, read or invoke the data and/or the signaling in the storage unit, to perform the method in the foregoing embodiment.

The foregoing units may exist independently, or may be all or partially integrated.

FIG. 16 is a schematic diagram of a communication apparatus 1600 according to this application. As shown in FIG. 16, the apparatus 1600 includes a receiving unit 1610 and a sending unit 1620.

The sending unit 1620 is configured to send tenth indication information to a first device, where the tenth indication information is used to indicate an AI capability of a second device.

The receiving unit 1610 is configured to receive information about an AI model from the first device.

For example, that the receiving unit 1610 receives a first message from the first device includes:

The receiving unit 1610 receives an eighth response message from the first device, where the eighth response message includes the first message, or
the eighth response message includes first resource indication information, and the first resource indication information is used to indicate a resource for receiving the first message by the second device.

For example, that the receiving unit 1610 receives a first message from the first device includes:

The receiving unit 1610 receives a seventh response message from the first device, where the seventh response message includes the first message, or
the seventh response message includes first resource indication information, and the first resource indication information is used to indicate a resource for receiving the first message by the second device.

For example, before the sending unit 1620 sends the tenth indication information to the first device, the method further includes:

The receiving unit 1610 receives an eighth response message from the first device, where the eighth response message is used to complete RRC establishment in an initial access process.

For example, before the sending unit 1620 sends the tenth indication information to the first device, the method further includes:

The receiving unit 1610 receives a seventh response message from the first device, where the seventh response message is used to respond to an initial access request in an initial access process.

For example, that the sending unit 1620 sends tenth indication information to a first device includes:

The sending unit 1620 sends an eighth message to the first device, where the eighth message includes the tenth indication information, or

the eighth message includes second resource indication information, and the second resource indication information is used to indicate a resource for receiving the tenth indication information by the first device.

For example, that the receiving unit 1610 receives information about an AI model from the first device includes:

The receiving unit 1610 receives an eighth response message from the first device, where the eighth response message includes the information about the AI model, or

the eighth response message includes third resource indication information, and the third resource indication information is used to indicate a resource for receiving the information about the AI model by the second device.

For example, the receiving unit 1610 receives at least one neural network from the first device, where N is a positive integer, and the at least one neural network is some or all of N neural networks.

For example, the receiving unit 1610 receives eighth indication information from the first device, where the eighth indication information is used to indicate a currently applicable neural network.

The apparatus 1600 corresponds to the second device in the embodiment of the communication method for enabling an AI function. The apparatus 1600 may be the second device in the embodiment of the communication method for enabling an AI function, or a chip or a function module inside the second device in the embodiment of the communication method for enabling an AI function. A corresponding unit in the apparatus 1600 is configured to perform a corresponding step performed by the second device in the method embodiment shown in FIG. 10.

The sending unit 1620 in the apparatus 1600 is configured to perform a sending step of the second device in the embodiment of the communication method for enabling an AI function.

The receiving unit 1610 in the apparatus 1600 is configured to perform a receiving step of the second device in the embodiment of the communication method for enabling an AI function.

The apparatus 1600 may further include a processing unit, configured to perform a processing-related step corresponding to the second device in the embodiment of the communication method for enabling an AI function.

The sending unit 1620 and the receiving unit 1610 may constitute a transceiver unit, which has both a receiving function and a sending function. The processing unit may be at least one processor. The sending unit 1620 may be a transmitter or an interface circuit, and the receiving unit 1610 may be a receiver or an interface circuit. The receiver and the transmitter may be integrated together to form a transceiver or an interface circuit.

Optionally, the apparatus 1600 may further include a storage unit, configured to store data and/or signaling. The processing unit, the sending unit 1620, and the receiving unit 1610 may interact with or be coupled to the storage unit, for example, read or invoke the data and/or the signaling in the storage unit, to perform the method in the foregoing embodiment.

The foregoing units may exist independently, or may be all or partially integrated.

FIG. 17 is a schematic diagram of a second device 1700 according to this application. The second device 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, to perform the method in the foregoing method embodiment.

Optionally, the second device 1700 includes one or more processors 1710.

Optionally, as shown in FIG. 17, the second device 1700 may further include the memory 1720.

Optionally, the second device 1700 may include one or more memories 1720.

Optionally, the memory 1720 and the processor 1710 may be integrated together, or separately disposed.

Optionally, as shown in FIG. 17, the second device 1700 may further include a transceiver 1730. The transceiver 1730 is configured to receive and/or send a signal. For example, the processor 1710 is configured to control the transceiver 1730 to receive and/or send a signal.

In a solution, the second device 1700 is configured to implement operations performed by the units in the second device in the foregoing method embodiment.

For example, the processor 1710 is configured to implement a processing-related operation performed by the processing unit in the second device in the foregoing method embodiment.

An embodiment of this application further provides a communication system, including the foregoing first device and the foregoing second device.

Another implementation of this application further provides a communication apparatus. The communication apparatus may be a base station, a terminal, a relay node, or the like. The communication apparatus includes a memory or a storage unit. The memory may be integrated into a chip, or is a storage medium connected to the chip, and is configured to store one or more neural networks. Storing one or more neural networks herein may mean storing different neural network parameter sets. When performing data processing, the base station needs to invoke the one or more neural network parameter sets to perform calculation. In addition to the parameter set, storing one or more neural networks herein may further mean storing content that describes the neural network in addition to parameters, for example, a function used in a calculation process of the neural network, for example, storing an activation function or an identifier of the activation function. The activation function may be a step function, a ReLU function, or the like. The descriptions herein are also applicable to the foregoing embodiment. For specific steps such as calculation, switching, data or signal processing, and an initialization process, refer to the embodiments of the method or the apparatus in this application or a combination thereof. Further, in an embodiment, the communication apparatus may include a calculation unit, which is implemented by an apparatus such as a processor, to process steps such as the foregoing calculation step, switching, data or signal processing, and initialization process. In another embodiment, the communication apparatus may include only a processor, and the neural network parameter set may be configured by using another apparatus or network element.

This application further provides a computer-readable storage medium. The computer-readable storage medium stores instructions. When the instructions are run on a computer, the computer is enabled to perform the steps performed by the first device in the methods shown in FIG. 5(a)-1 and FIG. 5(a)-2, FIG. 5(b), and FIG. 8 to FIG. 10.

This application further provides a computer-readable storage medium. The computer-readable storage medium stores instructions. When the instructions are run on a computer, the computer is enabled to perform the steps performed by the second device in the methods shown in FIG. 5(a)-1 and FIG. 5(a)-2, FIG. 5(b), and FIG. 8 to FIG. 10.

This application further provides a computer program product including instructions. When the computer program product runs on a computer, the computer is enabled to perform the steps performed by the first device in the methods shown in FIG. 5(a)-1 and FIG. 5(a)-2, FIG. 5(b), and FIG. 8 to FIG. 10.

This application further provides a computer program product including instructions. When the computer program product runs on a computer, the computer is enabled to perform the steps performed by the second device in the methods shown in FIG. 5(a)-1 and FIG. 5(a)-2, FIG. 5(b), and FIG. 8 to FIG. 10.

This application further provides a chip, including a processor. The processor is configured to read and run a computer program stored in a memory, to perform a corresponding operation and/or procedure performed by the first device in the neural network adjustment method or the communication method for enabling an AI function provided in this application. Optionally, the chip further includes a memory. The memory and the processor are connected to the memory by using a circuit or a wire. The processor is configured to read and execute a computer program in the memory. Further, optionally, the chip system further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the second device in the neural network adjustment method or the communication method for enabling an AI function provided in this application. Optionally, the chip further includes a memory. The memory and the processor are connected to the memory by using a circuit or a wire. The processor is configured to read and execute a computer program in the memory. Further, optionally, the chip system further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

The foregoing chip may alternatively be replaced with a chip system, and details are not described herein again.

In this application, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A neural network adjustment method, relating to a first neural network and a second neural network, wherein the first neural network is applied to a first device side, the second neural network is applied to a second device side, and the method comprises:

   determining, by a first device, a third neural network and a fourth neural network, wherein the third neural network and the fourth neural network respectively correspond to the first neural network and the second neural network; and
   sending, by the first device, information about the fourth neural network to a second device, wherein
   the first neural network or the third neural network is used by the first device to perform first signal processing, the second neural network or the fourth neural network is used by the second device to perform second signal processing, and the second signal processing corresponds to the first signal processing.

2. The method according to claim 1, wherein that the first neural network or the third neural network is used by the first device to perform first signal processing comprises:

   the first neural network is used by the first device to process a first signal to obtain a second signal; and

the third neural network is used by the first device to process a third signal to obtain a fourth signal; and

that the second neural network or the fourth neural network is used by the second device to perform second signal processing comprises:

the second neural network is used by the second device to process the second signal to obtain a fifth signal; and

the fourth neural network is used by the second device to process the fourth signal to obtain a sixth signal; or

that the second neural network or the fourth neural network is used by the second device to perform second signal processing comprises:

the second neural network is used by the second device to process a first signal to obtain a second signal; and

the fourth neural network is used by the second device to process a third signal to obtain a fourth signal; and

that the first neural network or the third neural network is used by the first device to perform first signal processing comprises:

the first neural network is used by the first device to process the second signal to obtain a fifth signal; and

the third neural network is used by the first device to process the fourth signal to obtain a sixth signal.

3. The method according to claim 2, wherein a degree of difference between a first training signal related to the third signal and a second training signal related to the sixth signal meets a first condition; or

a similarity between a first training signal and a second training signal meets a second condition.

4. The method according to claim 3, wherein the degree of difference comprises any one of the following:

a difference, a mean squared error, a normalized mean squared error, or an average absolute error; and
the similarity comprises a correlation coefficient.

5. The method according to any one of claims 2 to 4, wherein that the first neural network or the second neural network is used to process a first signal to obtain a second signal comprises:

the first neural network or the second neural network and a first function module are used to process the first signal to obtain the second signal;
and/or
that the first neural network or the second neural network is used to process the second signal to obtain a fifth signal comprises:
the first neural network or the second neural network and a second function module are used to process the second signal to obtain the fifth signal.

6. The method according to any one of claims 2 to 5, wherein that the third neural network or the fourth neural network is used to process a third signal to obtain a fourth signal comprises:

the third neural network or the fourth neural network and a third function module are used to process the third signal to obtain the fourth signal;
and/or
that the third neural network or the fourth neural network is used to process the fourth signal to obtain a sixth signal comprises:
the third neural network or the fourth neural network and a fourth function module are used to process the fourth signal to obtain the sixth signal.

7. The method according to any one of claims 1 to 6, wherein the determining, by a first device, a third neural network and a fourth neural network comprises:
updating, by the first device, the first neural network and the second neural network to respectively obtain the third neural network and the fourth neural network.

8. The method according to claim 7, wherein before the updating, by the first device, the first neural network and the second neural network to respectively obtain the third neural network and the fourth neural network, the method further comprises:

receiving, by the first device, first indication information from the second device, wherein the first indication information is used to indicate the first device to update the first neural network and the second neural network; or periodically or aperiodically determining, by the first device, whether the first neural network and the second neural network need to be updated, and determining, by the first device, that the first neural network and the second neural network need to be updated; or receiving, by the first device, second indication information from the second device, wherein the second indication information is used to indicate the first device to determine whether the first neural network and the second neural network need to be updated, and determining, by the first device, that the first neural network and the second neural network need to be updated; or determining, by the first device based on triggering of a preset condition, whether the first neural network and the second neural network need to be updated, and determining, by the first device, that the first neural network and the second neural network need to be updated.

9. The method according to claim 8, wherein the first indication information and/or the second indication information are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

10. The method according to any one of claims 7 to 9, wherein the updating, by the first device, the first neural network and the second neural network comprises:
periodically or aperiodically updating, by the first device, the first neural network and the second neural network.

11. The method according to claim 8 or 9, wherein the determining, by the first device, whether the first neural network and the second neural network need to be updated comprises:
determining, by the first device depending on whether a degree of difference or a similarity between first information and second information meets a third condition, whether the first neural network and the second neural network need to be updated, wherein the first information comprises a first determining signal related to the first signal, and the second information comprises a second determining signal related to the fifth signal.

12. The method according to claim 11, wherein the method further comprises:

determining, by the first device, the second determining signal based on the first determining signal, the first neural network, and the second neural network; or
determining, by the first device, the second determining signal based on the first determining signal, the first neural network, the second neural network, and the first function module and/or the second function module.

13. The method according to claim 11 or 12, wherein the first determining signal comprises downlink channel information received by the first device from the second device; or

the first determining signal comprises channel information obtained through measurement by the first device based on a sounding reference signal SRS received from the second device, wherein
the downlink channel information is carried on a preset resource, or the downlink channel information is indicated to be used to determine the first determining signal.

14. The method according to any one of claims 1 to 13, wherein the determining, by a first device, a third neural network and a fourth neural network comprises:

selecting, by the first device, the third neural network and the fourth neural network from a first set based on communication system data, wherein the first set comprises a plurality of neural networks; or
adjusting, by the first device based on communication system data, network weights corresponding to the first neural network and the second neural network, to obtain the third neural network and the fourth neural network; or
selecting, by the first device, a fifth neural network and a sixth neural network from a second set based on communication system data, and then adjusting, based on the communication system data, network weights corresponding to the fifth neural network and the sixth neural network, to obtain the third neural network and the fourth neural network.

15. The method according to claim 14, wherein the communication system data comprises at least one of the following: a channel feature, a signal-to-noise ratio, downlink channel information, uplink channel information, and hybrid automatic repeat request HARQ information.

16. The method according to any one of claims 1 to 15, wherein the method further comprises:
sending, by the first device, information about the third neural network to the second device.

17. The method according to claim 16, wherein
the information about the third neural network comprises at least one of the following information:
an identifier of the third neural network, information about a network structure corresponding to the third neural network and information about a network weight corresponding to the third neural network, an identifier of a network structure corresponding to the third neural network and information about a network weight corresponding to the third neural network, an identifier of a network structure corresponding to the third neural network and an identifier of a network weight corresponding to the third neural network, information about a network weight corresponding to the third neural network, a variation between a network weight corresponding to the third neural network and a network weight corresponding to the first neural network, an identifier of a network weight corresponding to the third neural network, or third indication information, wherein the third indication information is used to indicate whether the network structure corresponding to the third neural network is the same as a network structure corresponding to the first neural network.

18. The method according to any one of claims 1 to 17, wherein
the information about the fourth neural network comprises at least one of the following information:
an identifier of the fourth neural network, information about a network structure corresponding to the fourth neural network and information about a network weight corresponding to the fourth neural network, an identifier of a network structure corresponding to the fourth neural network and information about a network weight corresponding to the fourth neural network, an identifier of a network structure corresponding to the fourth neural network and an identifier of a network weight corresponding to the fourth neural network, information about a network weight corresponding to the fourth neural network, a variation between a network weight corresponding to the fourth neural network and a network weight corresponding to the second neural network, an identifier of a network weight corresponding to the fourth neural network, or fourth indication information, wherein the fourth indication information is used to indicate whether the network structure corresponding to the fourth neural network is the same as a network structure corresponding to the second neural network.

19. The method according to claim 17 or 18, wherein the variation between the network weight corresponding to the third neural network and the network weight corresponding to the first neural network and/or the variation between the network weight corresponding to the fourth neural network and the network weight corresponding to the second neural network comprise/comprises one or more of the following information:

weight position information, weight interpretation rule indication information, weight value arrangement information, and weight value variation arrangement information;
the information about the network structure corresponding to the third neural network and/or the information about the network structure corresponding to the fourth neural network comprise/comprises:

neural network type indication information and neural network structure indication information; and
the information about the network weight corresponding to the third neural network and/or the information about the network weight corresponding to the fourth neural network comprise/comprises:
weight interpretation rule indication information and/or weight value arrangement information.

20. The method according to any one of claims 1 to 19, wherein before the sending, by the first device, information about the fourth neural network to a second device, or the sending information about the fourth neural network and information about the third neural network, the method further comprises:

sending, by the first device, first information to the second device, wherein the first information is used to request the second device to receive the information about the fourth neural network, or is used to request the second device to receive the information about the fourth neural network and the information about the third neural network; and

receiving, by the first device, a first response message from the second device, wherein the first response message is used to indicate the first device to send the information about the fourth neural network, or is used to indicate the first device to send the information about the fourth neural network and the information about the third neural network.

21. The method according to claim 20, wherein the first information and/or the first response message are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

22. The method according to any one of claims 1 to 21, wherein before the sending, by the first device, information about the fourth neural network to a second device, or the sending information about the fourth neural network and information about the third neural network, the method further comprises:

receiving, by the first device, second information from the second device, wherein the second information is used to indicate that the second device can receive the information about the fourth neural network, or indicate that the second device can receive the information about the fourth neural network and the information about the third neural network; and
the sending, by the first device, information about the fourth neural network to a second device, or the sending information about the fourth neural network and information about the third neural network comprises:
sending, by the first device, the information about the fourth neural network to the second device, or sending the information about the fourth neural network and the information about the third neural network after receiving the second information.

23. The method according to claim 22, wherein the sending, by the first device, the information about the fourth neural network to the second device, or sending the information about the fourth neural network and the information about the third neural network after receiving the second information comprises:
after receiving the second information, starting, by the first device, to send the information about the fourth neural network to the second device, or send the information about the fourth neural network and the information about the third neural network within first preset duration after a first start moment or after the first preset duration.

24. The method according to claim 22 or 23, wherein the second information is carried on a physical uplink control channel PUCCH, a physical downlink control channel PDCCH, a physical uplink shared channel PUSCH, a physical downlink shared channel PDSCH, an uplink grant UL grant, or a random access channel RACH.

25. The method according to any one of claims 1 to 24, wherein the sending, by the first device, information about the fourth neural network to a second device, or the sending information about the fourth neural network and information about the third neural network comprises:
sending, by the first device, the information about the fourth neural network to the second device, or sending the information about the fourth neural network and the information about the third neural network after updating the first neural network and the second neural network to respectively obtain the third neural network and the fourth neural network.

26. The method according to claim 25, wherein the sending, by the first device, information about the fourth neural network to a second device, or the sending information about the fourth neural network and information about the third neural network comprises:
after updating the first neural network and the second neural network to respectively obtain the third neural network and the fourth neural network, starting, by the first device, to send the information about the fourth neural network to the second device, or send the information about the fourth neural network and the information about the third neural network within second preset duration after a second start moment or after the second preset duration.

27. The method according to any one of claims 1 to 26, wherein before the sending, by the first device, information about the fourth neural network to a second device, or the sending information about the fourth neural network and information about the third neural network, the method further comprises:

sending, by the first device, first information to the second device, wherein the first information is used to notify the second device to receive the information about the fourth neural network, or the information about the fourth neural network and the information about the third neural network; and

the sending, by the first device, information about the fourth neural network to a second device, or the sending information about the fourth neural network and information about the third neural network comprises:
starting, by the first device, to send the information about the fourth neural network to the second device, or send the information about the fourth neural network and the information about the third neural network within third preset duration after a time point at which the first device sends the first information to the second device or after the third preset duration.

28. The method according to any one of claims 1 to 27, wherein after the sending, by the first device, information about the fourth neural network to a second device, or the sending information about the fourth neural network and information about the third neural network, the method further comprises:
receiving, by the first device, a first notification message from the second device, wherein the first notification message is used to indicate the second device to perform information transmission by using the fourth neural network or by using the fourth neural network and the third neural network.

29. The method according to claim 28, wherein the first notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

30. The method according to any one of claims 20 to 29, wherein the method further comprises:

sending, by the first device, a second notification message to the second device; or
receiving, by the first device, a second notification message from the second device, wherein
the second notification message is used to notify that an information transmission mode is changed from a first mode to a second mode, the first mode comprises information transmission based on neural networks, the neural networks comprise the first neural network and the second neural network, and the second mode comprises information transmission based on a non-neural network.

31. The method according to claim 30, wherein the neural networks further comprise a seventh neural network and an eighth neural network.

32. The method according to claim 30 or 31, wherein the method further comprises:
switching, by the first device, the information transmission mode from the first mode to the second mode.

33. The method according to claim 32, wherein the switching, by the first device, the information transmission mode from the first mode to the second mode comprises:
starting, by the first device, to switch the information transmission mode from the first mode to the second mode within fourth preset duration after a fourth start moment or after the fourth preset duration, wherein the fourth start moment comprises a moment at which the first device sends the second notification message to the second device or a moment at which the first device receives the second notification message from the second device.

34. The method according to any one of claims 23 to 33, wherein the first start moment and the second start moment comprise:

a moment at which the first device receives the first indication information from the second device; or
the moment at which the first device sends the second notification message to the second device; or
the moment at which the first device receives the second notification message from the second device; or
a moment at which the first device sends first signaling to the second device; or
a moment at which the first device receives second signaling from the second device, wherein the first signaling is used to indicate that timing starts, and the second signaling is used to indicate that an update starts, wherein the second notification message is used to notify that the information transmission mode is changed from the first mode to the second mode.

35. The method according to any one of claims 30 to 34, wherein the second notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

36. The method according to any one of claims 1 to 35, wherein the method further comprises:
receiving, by the first device, a second response message from the second device, wherein the second response message is used to indicate to reject receiving of the information about the fourth neural network, or is used to indicate to reject receiving of the information about the fourth neural network and the information about the third neural network.

37. The method according to claim 36, wherein the second response message is carried on a physical uplink control channel PUCCH, a physical downlink control channel PDCCH, a physical uplink shared channel PUSCH, a physical downlink shared channel PDSCH, an uplink grant UL grant, or a random access channel RACH.

38. The method according to any one of claims 1 to 37, wherein the first device comprises a terminal device or a network device, and the second device comprises the terminal device or the network device; and

when the first device is the terminal device, the second device is the network device; or
when the first device is the network device, the second device is the terminal device.

39. The method according to any one of claims 1 to 38, wherein the method further comprises:

receiving, by the first device, fifth indication information from the second device, wherein the fifth indication information is used to indicate the first device to send a capability of the first device; and
sending, by the first device, first capability information to the second device, wherein the first capability information comprises at least one of the following information:

computing capability information of the first device, storage capability information of the first device, information indicating whether the first device stores a first AI model, a neural network structure supported by the first device, a neural network scale supported by the first device, or an AI communication function supported by the first device, wherein the first AI model is any AI model; or
the method further comprises:

sending, by the first device, sixth indication information to the second device, wherein the sixth indication information is used to indicate the second device to send a capability of the second device; and
receiving, by the first device, second capability information from the second device, wherein the second capability information comprises at least one of the following information:
computing capability information of the second device, storage capability information of the second device, information indicating whether the second device stores a second AI model, a neural network structure supported by the second device, a neural network scale supported by the second device, or an AI communication function supported by the second device, wherein the second AI model is any AI model.

40. The method according to any one of claims 2 to 39, wherein the first signal comprises channel information; and

the first neural network comprises a first compressor, the second neural network comprises a first decompressor, the third neural network comprises a second compressor, and the fourth neural network comprises a second decompressor; or
the first neural network comprises a first decompressor, the second neural network comprises a first compressor, the third neural network comprises a second decompressor, and the fourth neural network comprises a second compressor.

41. The method according to claim 40, wherein the channel information comprises channel information received by a plurality of receive antennas or channel information for a plurality of layers.

42. A neural network adjustment method, relating to a first neural network and a second neural network, wherein the first neural network is applied to a first device side, the second neural network is applied to a second device side, and the method comprises:

receiving, by a second device, information about a fourth neural network from a first device, wherein the fourth neural network is a neural network corresponding to the second neural network; and
determining, by the second device, the fourth neural network based on the information about the fourth neural network.

**43.** The method according to claim 42, wherein the method further comprises:

receiving, by the second device, information about a third neural network from the first device, wherein the third neural network is a neural network corresponding to the first neural network, wherein the first neural network or the third neural network is used by the first device to perform first signal processing, the second neural network or the fourth neural network is used by the second device to perform second signal processing, and the second signal processing corresponds to the first signal processing.

**44.** The method according to claim 43, wherein that the first neural network or the third neural network is used by the first device to perform first signal processing comprises:

the first neural network is used by the first device to process a first signal to obtain a second signal; and
the third neural network is used by the first device to process a third signal to obtain a fourth signal; and
that the second neural network or the fourth neural network is used by the second device to perform second signal processing comprises:

the second neural network is used by the second device to process the second signal to obtain a fifth signal; and
the fourth neural network is used by the second device to process the fourth signal to obtain a sixth signal; or
that the second neural network or the fourth neural network is used by the second device to perform second signal processing comprises:

the second neural network is used by the second device to process a first signal to obtain a second signal; and
the fourth neural network is used by the second device to process a third signal to obtain a fourth signal; and
that the first neural network or the third neural network is used by the first device to perform first signal processing comprises:

the first neural network is used by the first device to process the second signal to obtain a fifth signal; and
the third neural network is used by the first device to process the fourth signal to obtain a sixth signal.

**45.** The method according to claim 44, wherein a degree of difference between a first training signal related to the third signal and a second training signal related to the sixth signal meets a first condition; or
a similarity between a first training signal and a second training signal meets a second condition.

**46.** The method according to claim 45, wherein the degree of difference comprises any one of the following:

a difference, a mean squared error, a normalized mean squared error, or an average absolute error; and
the similarity comprises a correlation coefficient.

**47.** The method according to any one of claims 44 to 46, wherein that the first neural network or the second neural network is used to process a first signal to obtain a second signal comprises:

the first neural network or the second neural network and a first function module are used to process the first signal to obtain the second signal;
and/or
that the first neural network or the second neural network is used to process the second signal to obtain a fifth signal comprises:
the first neural network or the second neural network and a second function module are used to process the second signal to obtain the fifth signal.

**48.** The method according to any one of claims 44 to 47, wherein that the third neural network or the fourth neural network is used to process a third signal to obtain a fourth signal comprises:

the third neural network or the fourth neural network and a third function module are used to process the third signal to obtain the fourth signal;
and/or
that the third neural network or the fourth neural network is used to process the fourth signal to obtain a sixth signal comprises:
the third neural network or the fourth neural network and a fourth function module are used to process the fourth signal to obtain the sixth signal.

49. The method according to any one of claims 42 to 48, wherein before the receiving, by a second device, information about a fourth neural network from a first device, or the receiving information about a fourth neural network and information about a third neural network from the first device, the method further comprises:

determining, by the second device, that the first neural network and the second neural network need to be updated; and
sending, by the second device, first indication information to the first device, wherein the first indication information is used to indicate the first device to update the first neural network and the second neural network; or
the method further comprises:
sending, by the second device, second indication information to the first device, wherein the second indication information is used to indicate the first device to determine whether the first neural network and the second neural network need to be updated.

50. The method according to claim 49, wherein the first indication information and/or the second indication information are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

51. The method according to claim 49 or 50, wherein the determining, by the second device, that the first neural network and the second neural network need to be updated comprises:

periodically or aperiodically determining, by the second device, whether the first neural network and the second neural network need to be updated; or
receiving, by the second device, seventh indication information from the first device, wherein the seventh indication information is used to indicate the second device to determine whether the first neural network and the second neural network need to be updated; or
determining, by the second device based on triggering of a preset condition, whether the first neural network and the second neural network need to be updated.

52. The method according to claim 51, wherein the seventh indication information is carried on a physical uplink control channel PUCCH, a physical downlink control channel PDCCH, a physical uplink shared channel PUSCH, a physical downlink shared channel PDSCH, an uplink grant UL grant, or a random access channel RACH.

53. The method according to any one of claims 49 to 52, wherein the determining, by the second device, whether the first neural network and the second neural network need to be updated comprises:
determining, by the second device depending on whether a degree of difference or a similarity between first information and second information meets a third condition, whether the first neural network and the second neural network need to be updated, wherein the first information comprises a first determining signal related to the first signal, and the second information comprises a second determining signal related to the fifth signal.

54. The method according to claim 53, wherein the method further comprises:

determining, by the second device, the second determining signal based on the first determining signal, the first neural network, and the second neural network; or
determining, by the second device, the second determining signal based on the first determining signal, the first neural network, the second neural network, and the first function module and/or the second function module.

55. The method according to claim 53 or 54, wherein the first determining signal comprises downlink channel information sent by the first device to the second device; or

the first determining signal comprises channel information obtained through measurement based on a sounding reference signal SRS sent by the first device, wherein
the downlink channel information is carried on a preset resource, or the downlink channel information is indicated to be used to determine the first determining signal.

56. The method according to any one of claims 43 to 55, wherein
the information about the third neural network comprises at least one of the following information:
an identifier of the third neural network, information about a network structure corresponding to the third neural network and information about a network weight corresponding to the third neural network, an identifier of a network structure corresponding to the third neural network and information about a network weight corresponding to the third neural network, an identifier of a network structure corresponding to the third neural network and an identifier of a network weight corresponding to the third neural network, information about a network weight corresponding to the third neural network, a variation between a network weight corresponding to the third neural network and a network weight corresponding to the first neural network, an identifier of a network weight corresponding to the third neural network, or third indication information, wherein the third indication information is used to indicate whether the network structure corresponding to the third neural network is the same as a network structure corresponding to the first neural network.

57. The method according to any one of claims 42 to 56, wherein
the information about the fourth neural network comprises at least one of the following information:
an identifier of the fourth neural network, information about a network structure corresponding to the fourth neural network and information about a network weight corresponding to the fourth neural network, an identifier of a network structure corresponding to the fourth neural network and information about a network weight corresponding to the fourth neural network, an identifier of a network structure corresponding to the fourth neural network and an identifier of a network weight corresponding to the fourth neural network, information about a network weight corresponding to the fourth neural network, a variation between a network weight corresponding to the fourth neural network and a network weight corresponding to the second neural network, an identifier of a network weight corresponding to the fourth neural network, or fourth indication information, wherein the fourth indication information is used to indicate whether the network structure corresponding to the fourth neural network is the same as a network structure corresponding to the second neural network.

58. The method according to claim 56 or 57, wherein the variation between the network weight corresponding to the third neural network and the network weight corresponding to the first neural network and/or the variation between the network weight corresponding to the fourth neural network and the network weight corresponding to the second neural network comprise/comprises one or more of the following information:

weight position information, weight interpretation rule indication information, weight value arrangement information, and weight value variation arrangement information;
the information about the network structure corresponding to the third neural network and/or the information about the network structure corresponding to the fourth neural network comprise/comprises:

neural network type indication information and neural network structure indication information; and
the information about the network weight corresponding to the third neural network and/or the information about the network weight corresponding to the fourth neural network comprise/comprises:
weight interpretation rule indication information and/or weight value arrangement information.

59. The method according to any one of claims 42 to 58, wherein before the receiving, by a second device, information about a fourth neural network from a first device, or the receiving information about a fourth neural network and information about a third neural network from the first device, the method further comprises:

receiving, by the second device, first information from the first device, wherein the first information is used to notify the second device to receive the information about the fourth neural network, or is used to notify the second device to receive the information about the fourth neural network and the information about the third neural network; and
sending, by the second device, a first response message to the first device, wherein the first response message is used to indicate the first device to send the information about the fourth neural network, or is used to indicate the first device to send the information about the fourth neural network and the information about the third neural network.

60. The method according to claim 59, wherein the first information and/or the first response message are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

61. The method according to any one of claims 42 to 60, wherein before the receiving, by a second device, information about a fourth neural network from a first device, or the receiving information about a fourth neural network and information about a third neural network from the first device, the method further comprises:

sending, by the second device, second information to the first device, wherein the second information is used to indicate that the second device can receive the information about the fourth neural network, or indicate that the second device can receive the information about the fourth neural network and the information about the third neural network; and

the receiving, by a second device, information about a fourth neural network from a first device, or the receiving information about a fourth neural network and information about a third neural network from the first device comprises:

receiving, by the second device, the information about the fourth neural network from the first device, or receiving the information about the fourth neural network and the information about the third neural network from the first device after sending the second information.

62. The method according to claim 61, wherein the receiving, by the second device, the information about the fourth neural network from the first device, or receiving the information about the fourth neural network and the information about the third neural network from the first device after sending the second information comprises:

after sending the second information, starting, by the second device, to receive the information about the fourth neural network from the first device, or receive the information about the fourth neural network and the information about the third neural network from the first device within first preset duration after a first start moment or after the first preset duration.

63. The method according to claim 61 or 62, wherein the second information is carried on a physical uplink control channel PUCCH, a physical downlink control channel PDCCH, a physical uplink shared channel PUSCH, a physical downlink shared channel PDSCH, an uplink grant UL grant, or a random access channel RACH.

64. The method according to any one of claims 42 to 63, wherein the receiving, by a second device, information about a fourth neural network from a first device, or the receiving information about a fourth neural network and information about a third neural network from the first device comprises:

starting to receive the information about the fourth neural network from the first device, or receive the information about the fourth neural network and the information about the third neural network from the first device within second preset duration after a second start moment or after the second preset duration.

65. The method according to any one of claims 42 to 64, wherein before the receiving, by a second device, information about a fourth neural network from a first device, or the receiving information about a fourth neural network and information about a third neural network from the first device, the method further comprises:

receiving, by the second device, first information from the first device, wherein the first information is used to notify the second device to receive the information about the fourth neural network, or notify the second device to receive the information about the fourth neural network and the information about the third neural network; and

the receiving, by a second device, information about a fourth neural network from a first device, or the receiving information about a fourth neural network and information about a third neural network from the first device comprises:

starting, by the second device, to receive the information about the fourth neural network from the first device, or receive the information about the fourth neural network and the information about the third neural network from the first device within third preset duration after a time point at which the second device receives the first information from the first device or after the third preset duration.

66. The method according to any one of claims 42 to 65, wherein after the receiving, by a second device, information about a fourth neural network from a first device, or the receiving information about a fourth neural network and information about a third neural network, the method further comprises:

sending, by the second device, a first notification message to the first device, wherein the first notification message is used to indicate the second device to perform information transmission by using the fourth neural network or by using the fourth neural network and the third neural network.

**67.** The method according to claim 66, wherein the first notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

**68.** The method according to any one of claims 59 to 67, wherein the method further comprises:

sending, by the second device, a second notification message to the first device; or
receiving, by the second device, a second notification message from the first device, wherein
the second notification message is used to notify that an information transmission mode is changed from a first mode to a second mode, the first mode comprises information transmission based on neural networks, the neural networks comprise the first neural network and the second neural network, and the second mode comprises information transmission based on a non-neural network.

**69.** The method according to claim 68, wherein the neural networks further comprise a seventh neural network and an eighth neural network.

**70.** The method according to claim 68 or 69, wherein the method further comprises:
switching, by the second device, the information transmission mode from the first mode to the second mode.

**71.** The method according to claim 70, wherein the switching, by the second device, the information transmission mode from the first mode to the second mode comprises:
starting, by the second device, to switch the information transmission mode from the first mode to the second mode within fourth preset duration after a fourth start moment or after the fourth preset duration, wherein the fourth start moment comprises a moment at which the second device sends the second notification message to the first device or a moment at which the second device receives the second notification message from the first device.

**72.** The method according to any one of claims 62 to 71, wherein the first start moment and the second start moment comprise:

a moment at which the second device sends the first indication information to the first device; or
the moment at which the second device receives the second notification message from the first device; or
the moment at which the second device sends the second notification message to the first device; or
a moment at which the second device receives first signaling from the first device; or
a moment at which the second device sends second signaling to the first device, wherein the first signaling is used to indicate that timing starts, and the second signaling is used to indicate that an update starts, wherein the second notification message is used to notify that the information transmission mode is changed from the first mode to the second mode.

**73.** The method according to any one of claims 68 to 72, wherein the second notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

**74.** The method according to any one of claims 42 to 73, wherein the method further comprises:
sending, by the second device, a second response message to the first device, wherein the second response message is used to indicate to reject receiving of the information about the fourth neural network, or is used to indicate to reject receiving of the information about the fourth neural network and the information about the third neural network.

**75.** The method according to claim 74, wherein the second response message is carried on a physical uplink control channel PUCCH, a physical downlink control channel PDCCH, a physical uplink shared channel PUSCH, a physical downlink shared channel PDSCH, an uplink grant UL grant, or a random access channel RACH.

**76.** The method according to any one of claims 42 to 75, wherein the first device comprises a terminal device or a network device, and the second device comprises the terminal device or the network device; and

when the first device is the terminal device, the second device is the network device; or
when the first device is the network device, the second device is the terminal device.

**77.** The method according to any one of claims 42 to 76, wherein the method further comprises:

sending, by the second device, fifth indication information to the first device, wherein the fifth indication information is used to indicate the first device to send a capability of the first device; and
receiving, by the second device, first capability information from the first device, wherein the first capability information comprises at least one of the following information:

computing capability information of the first device, storage capability information of the first device, information indicating whether the first device stores a first AI model, a neural network structure supported by the first device, a neural network scale supported by the first device, or an AI communication function supported by the first device, wherein the first AI model is any AI model; or
the method further comprises:

receiving, by the second device, sixth indication information from the first device, wherein the sixth indication information is used to indicate the second device to send a capability of the second device; and
sending, by the second device, second capability information to the first device, wherein the second capability information comprises at least one of the following information:
computing capability information of the second device, storage capability information of the second device, information indicating whether the second device stores a second AI model, a neural network structure supported by the second device, a neural network scale supported by the second device, or an AI communication function supported by the second device, wherein the second AI model is any AI model.

**78.** The method according to any one of claims 44 to 77, wherein the first signal comprises channel information; and

the first neural network comprises a first compressor, the second neural network comprises a first decompressor, the third neural network comprises a second compressor, and the fourth neural network comprises a second decompressor; or
the first neural network comprises a first decompressor, the second neural network comprises a first compressor, the third neural network comprises a second decompressor, and the fourth neural network comprises a second compressor.

**79.** The method according to claim 78, wherein the channel information comprises channel information received by a plurality of receive antennas or channel information for a plurality of layers.

**80.** A neural network adjustment apparatus, relating to a first neural network and a second neural network, wherein the first neural network is applied to an apparatus side, the second neural network is applied to a second device side, and the apparatus comprises:

a processing unit, configured to determine a third neural network and a fourth neural network, wherein the third neural network and the fourth neural network respectively correspond to the first neural network and the second neural network; and
a sending unit, configured to send information about the fourth neural network to a second device, wherein the first neural network or the third neural network is used by the processing unit to perform first signal processing, the second neural network or the fourth neural network is used by the second device to perform second signal processing, and the second signal processing corresponds to the first signal processing.

**81.** The apparatus according to claim 80, wherein that the first neural network or the third neural network is used by the processing unit to perform first signal processing comprises:

the first neural network is used by the processing unit to process a first signal to obtain a second signal; and
the third neural network is used by the processing unit to process a third signal to obtain a fourth signal; and
that the second neural network or the fourth neural network is used by the second device to perform second signal processing comprises:

the second neural network is used by the second device to process the second signal to obtain a fifth signal; and

the fourth neural network is used by the second device to process the fourth signal to obtain a sixth signal; or

that the second neural network or the fourth neural network is used by the second device to perform second signal processing comprises:

the second neural network is used by the second device to process a first signal to obtain a second signal; and

the fourth neural network is used by the second device to process a third signal to obtain a fourth signal; and

that the first neural network or the third neural network is used by the processing unit to perform first signal processing comprises:

the first neural network is used by the processing unit to process the second signal to obtain a fifth signal; and

the third neural network is used by the processing unit to process the fourth signal to obtain a sixth signal.

82. The apparatus according to claim 81, wherein a degree of difference between a first training signal related to the third signal and a second training signal related to the sixth signal meets a first condition; or
a similarity between a first training signal and a second training signal meets a second condition.

83. The apparatus according to claim 82, wherein the degree of difference comprises any one of the following:

a difference, a mean squared error, a normalized mean squared error, or an average absolute error; and
the similarity comprises a correlation coefficient.

84. The apparatus according to any one of claims 81 to 83, wherein that the first neural network or the second neural network is used to process a first signal to obtain a second signal comprises:

the first neural network or the second neural network and a first function module are used to process the first signal to obtain the second signal;
and/or
that the first neural network or the second neural network is used to process the second signal to obtain a fifth signal comprises:
the first neural network or the second neural network and a second function module are used to process the second signal to obtain the fifth signal.

85. The apparatus according to any one of claims 81 to 84, wherein that the third neural network or the fourth neural network is used to process a third signal to obtain a fourth signal comprises:

the third neural network or the fourth neural network and a third function module are used to process the third signal to obtain the fourth signal;
and/or
that the third neural network or the fourth neural network is used to process the fourth signal to obtain a sixth signal comprises:
the third neural network or the fourth neural network and a fourth function module are used to process the fourth signal to obtain the sixth signal.

86. The apparatus according to any one of claims 80 to 85, wherein that the processing unit determines a third neural network and a fourth neural network comprises:
the processing unit updates the first neural network and the second neural network to respectively obtain the third neural network and the fourth neural network.

87. The apparatus according to claim 86, wherein before that the processing unit updates the first neural network and the second neural network to respectively obtain the third neural network and the fourth neural network, the apparatus further comprises:

a receiving unit, configured to receive first indication information from the second device, wherein the first indication information is used to indicate the processing unit to update the first neural network and the second neural network; or

the processing unit periodically or aperiodically determines whether the first neural network and the second neural network need to be updated, and the processing unit determines that the first neural network and the second neural network need to be updated; or

the receiving unit receives second indication information from the second device, wherein the second indication information is used to indicate the processing unit to determine whether the first neural network and the second neural network need to be updated, and the processing unit determines that the first neural network and the second neural network need to be updated; or

the processing unit determines, based on triggering of a preset condition, whether the first neural network and the second neural network need to be updated, and the processing unit determines that the first neural network and the second neural network need to be updated.

88. The apparatus according to claim 87, wherein the first indication information and/or the second indication information are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

89. The apparatus according to any one of claims 86 to 88, wherein that the processing unit updates the first neural network and the second neural network comprises:
the processing unit periodically or aperiodically updates the first neural network and the second neural network.

90. The apparatus according to claim 87 or 88, wherein that the processing unit determines whether the first neural network and the second neural network need to be updated comprises:
the processing unit determines, depending on whether a degree of difference or a similarity between first information and second information meets a third condition, whether the first neural network and the second neural network need to be updated, wherein the first information comprises a first determining signal related to the first signal, and the second information comprises a second determining signal related to the fifth signal.

91. The apparatus according to claim 90, wherein the processing unit is further configured to determine the second determining signal based on the first determining signal, the first neural network, and the second neural network; or
the processing unit is further configured to determine the second determining signal based on the first determining signal, the first neural network, the second neural network, and the first function module and/or the second function module.

92. The apparatus according to claim 90 or 91, wherein the first determining signal comprises downlink channel information received by the receiving unit from the second device; or

the first determining signal comprises channel information obtained through measurement by the processing unit based on a sounding reference signal SRS received from the second device, wherein
the downlink channel information is carried on a preset resource, or the downlink channel information is indicated to be used to determine the first determining signal.

93. The apparatus according to any one of claims 80 to 92, wherein that the processing unit determines a third neural network and a fourth neural network comprises:

the processing unit selects the third neural network and the fourth neural network from a first set based on communication system data, wherein the first set comprises a plurality of neural networks; or
the processing unit adjusts, based on communication system data, network weights corresponding to the first neural network and the second neural network, to obtain the third neural network and the fourth neural network; or
the processing unit selects a fifth neural network and a sixth neural network from a second set based on communication system data, and then adjusts, based on the communication system data, network weights corresponding to the fifth neural network and the sixth neural network, to obtain the third neural network and the fourth neural network.

94. The apparatus according to claim 93, wherein the communication system data comprises at least one of the following:
a channel feature, a signal-to-noise ratio, downlink channel information, uplink channel information, and hybrid automatic repeat request HARQ information.

**95.** The apparatus according to any one of claims 80 to 94, wherein the sending unit is further configured to send information about the third neural network to the second device.

**96.** The apparatus according to claim 95, wherein
the information about the third neural network comprises at least one of the following information:
an identifier of the third neural network, information about a network structure corresponding to the third neural network and information about a network weight corresponding to the third neural network, an identifier of a network structure corresponding to the third neural network and information about a network weight corresponding to the third neural network, an identifier of a network structure corresponding to the third neural network and an identifier of a network weight corresponding to the third neural network, information about a network weight corresponding to the third neural network, a variation between a network weight corresponding to the third neural network and a network weight corresponding to the first neural network, an identifier of a network weight corresponding to the third neural network, or third indication information, wherein the third indication information is used to indicate whether the network structure corresponding to the third neural network is the same as a network structure corresponding to the first neural network.

**97.** The apparatus according to any one of claims 80 to 96, wherein
the information about the fourth neural network comprises at least one of the following information:
an identifier of the fourth neural network, information about a network structure corresponding to the fourth neural network and information about a network weight corresponding to the fourth neural network, an identifier of a network structure corresponding to the fourth neural network and information about a network weight corresponding to the fourth neural network, an identifier of a network structure corresponding to the fourth neural network and an identifier of a network weight corresponding to the fourth neural network, information about a network weight corresponding to the fourth neural network, a variation between a network weight corresponding to the fourth neural network and a network weight corresponding to the second neural network, an identifier of a network weight corresponding to the fourth neural network, or fourth indication information, wherein the fourth indication information is used to indicate whether the network structure corresponding to the fourth neural network is the same as a network structure corresponding to the second neural network.

**98.** The apparatus according to claim 96 or 97, wherein the variation between the network weight corresponding to the third neural network and the network weight corresponding to the first neural network and/or the variation between the network weight corresponding to the fourth neural network and the network weight corresponding to the second neural network comprise/comprises one or more of the following information:

weight position information, weight interpretation rule indication information, weight value arrangement information, and weight value variation arrangement information;
the information about the network structure corresponding to the third neural network and/or the information about the network structure corresponding to the fourth neural network comprise/comprises:

neural network type indication information and neural network structure indication information; and
the information about the network weight corresponding to the third neural network and/or the information about the network weight corresponding to the fourth neural network comprise/comprises:
weight interpretation rule indication information and/or weight value arrangement information.

**99.** The apparatus according to any one of claims 80 to 98, wherein before the sending unit sends the information about the fourth neural network to the second device, or sends the information about the fourth neural network and the information about the third neural network, the sending unit is further configured to send first information to the second device, wherein the first information is used to request the second device to receive the information about the fourth neural network, or is used to request the second device to receive the information about the fourth neural network and the information about the third neural network; and
the receiving unit is configured to receive a first response message from the second device, wherein the first response message is used to indicate the sending unit to send the information about the fourth neural network, or is used to indicate the sending unit to send the information about the fourth neural network and the information about the third neural network.

**100.** The apparatus according to claim 99, wherein the first information and/or the first response message are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

101. The apparatus according to any one of claims 80 to 100, wherein before the sending unit sends the information about the fourth neural network to the second device, or sends the information about the fourth neural network and the information about the third neural network, the receiving unit is configured to receive second information from the second device, wherein the second information is used to indicate that the second device can receive the information about the fourth neural network, or indicate that the second device can receive the information about the fourth neural network and the information about the third neural network; and
that the sending unit is configured to send information about the fourth neural network to a second device, or send information about the fourth neural network and information about the third neural network comprises:
the sending unit sends the information about the fourth neural network to the second device, or sends the information about the fourth neural network and the information about the third neural network after the receiving unit receives the second information.

102. The apparatus according to claim 101, wherein that the sending unit sends the information about the fourth neural network to the second device, or sends the information about the fourth neural network and the information about the third neural network after the receiving unit receives the second information comprises:
after the receiving unit receives the second information, the sending unit starts to send the information about the fourth neural network to the second device, or send the information about the fourth neural network and the information about the third neural network within first preset duration after a first start moment or after the first preset duration.

103. The apparatus according to claim 101 or 102, wherein the second information is carried on a physical uplink control channel PUCCH, a physical downlink control channel PDCCH, a physical uplink shared channel PUSCH, a physical downlink shared channel PDSCH, an uplink grant UL grant, or a random access channel RACH.

104. The apparatus according to any one of claims 80 to 103, wherein that the sending unit sends information about the fourth neural network to a second device, or sends information about the fourth neural network and information about the third neural network comprises:
the sending unit sends the information about the fourth neural network to the second device, or sends the information about the fourth neural network and the information about the third neural network after the processing unit updates the first neural network and the second neural network to respectively obtain the third neural network and the fourth neural network.

105. The apparatus according to claim 104, wherein that the sending unit sends the information about the fourth neural network to the second device, or sends the information about the fourth neural network and the information about the third neural network after the processing unit updates the first neural network and the second neural network to respectively obtain the third neural network and the fourth neural network comprises:
after the processing unit updates the first neural network and the second neural network to respectively obtain the third neural network and the fourth neural network, the sending unit starts to send the information about the fourth neural network to the second device, or send the information about the fourth neural network and the information about the third neural network within second preset duration after a second start moment or after the second preset duration.

106. The apparatus according to any one of claims 80 to 105, wherein before the sending unit sends the information about the fourth neural network to the second device, or sends the information about the fourth neural network and the information about the third neural network, the sending unit is further configured to send first information to the second device, wherein the first information is used to notify the second device to receive the information about the fourth neural network, or is used to notify the second device to receive the information about the fourth neural network and the information about the third neural network; and
that the sending unit sends information about the fourth neural network to a second device, or sends information about the fourth neural network and information about the third neural network comprises:
the sending unit starts to send the information about the fourth neural network to the second device, or send the information about the fourth neural network and the information about the third neural network within third preset duration after a time point at which the sending unit sends the first information to the second device or after the third preset duration.

107. The apparatus according to any one of claims 80 to 106, wherein after the sending unit sends the information about the fourth neural network to the second device, or sends the information about the fourth neural network and the information about the third neural network, the receiving unit receives a first notification message from the second device, wherein the first notification message is used to indicate the second device to perform information transmission by using the fourth neural network or by using the fourth neural network and the third neural network.

108. The apparatus according to claim 107, wherein the first notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

109. The apparatus according to any one of claims 99 to 108, wherein the sending unit is further configured to a second notification message to the second device; or

the receiving unit receives a second notification message from the second device, wherein
the second notification message is used to notify that an information transmission mode is changed from a first mode to a second mode, the first mode comprises information transmission based on neural networks, the neural networks comprise the first neural network and the second neural network, and the second mode comprises information transmission based on a non-neural network.

110. The apparatus according to claim 109, wherein the neural networks further comprise a seventh neural network and an eighth neural network.

111. The apparatus according to claim 109 or 110, wherein the processing unit is further configured to switch the information transmission mode from the first mode to the second mode.

112. The apparatus according to claim 111, wherein that the processing unit is further configured to switch the information transmission mode from the first mode to the second mode comprises:
the processing unit is further configured to start to switch the information transmission mode from the first mode to the second mode within fourth preset duration after a fourth start moment or after the fourth preset duration, wherein the fourth start moment comprises a moment at which the sending unit sends the second notification message to the second device or a moment at which the receiving unit receives the second notification message from the second device.

113. The apparatus according to any one of claims 102 to 112, wherein the first start moment and the second start moment comprise:

a moment at which the receiving unit receives the first indication information from the second device; or
the moment at which the sending unit sends the second notification message to the second device; or
the moment at which the receiving unit receives the second notification message from the second device; or
a moment at which the sending unit sends first signaling to the second device; or
a moment at which the receiving unit receives second signaling from the second device, wherein the first signaling is used to indicate that timing starts, and the second signaling is used to indicate that an update starts, wherein
the second notification message is used to notify that the information transmission mode is changed from the first mode to the second mode.

114. The apparatus according to any one of claims 109 to 113, wherein the second notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

115. The apparatus according to any one of claims 80 to 114, wherein the receiving unit receives a second response message from the second device, wherein the second response message is used to indicate to reject receiving of the information about the fourth neural network, or is used to indicate to reject receiving of the information about the fourth neural network and the information about the third neural network.

116. The apparatus according to claim 115, wherein the second response message is carried on a physical uplink control channel PUCCH, a physical downlink control channel PDCCH, a physical uplink shared channel PUSCH, a physical downlink shared channel PDSCH, an uplink grant UL grant, or a random access channel RACH.

117. The apparatus according to any one of claims 80 to 116, wherein the apparatus comprises a terminal device or a network device, and the second device comprises the terminal device or the network device; and

when the apparatus is the terminal device, the second device is the network device; or
when the apparatus is the network device, the second device is the terminal device.

118. The apparatus according to any one of claims 80 to 117, wherein the receiving unit receives fifth indication information from the second device, wherein the fifth indication information is used to indicate the sending unit to send a capability of the apparatus; and
the sending unit sends first capability information to the second device, wherein the first capability information comprises at least one of the following information:

computing capability information of the apparatus, storage capability information of the apparatus, information indicating whether the apparatus stores a first AI model, a neural network structure supported by the apparatus, a neural network scale supported by the apparatus, or an AI communication function supported by the apparatus, wherein the first AI model is any AI model; or
the apparatus further comprises:

the sending unit sends sixth indication information to the second device, wherein the sixth indication information is used to indicate the second device to send a capability of the second device; and
the receiving unit receives second capability information from the second device, wherein the second capability information comprises at least one of the following information:
computing capability information of the second device, storage capability information of the second device, information indicating whether the second device stores a second AI model, a neural network structure supported by the second device, a neural network scale supported by the second device, or an AI communication function supported by the second device, wherein the second AI model is any AI model.

119. The apparatus according to any one of claims 81 to 118, wherein the first signal comprises channel information; and

the first neural network comprises a first compressor, the second neural network comprises a first decompressor, the third neural network comprises a second compressor, and the fourth neural network comprises a second decompressor; or
the first neural network comprises a first decompressor, the second neural network comprises a first compressor, the third neural network comprises a second decompressor, and the fourth neural network comprises a second compressor.

120. The apparatus according to claim 119, wherein the channel information comprises channel information received by a plurality of receive antennas or channel information for a plurality of layers.

121. A neural network adjustment apparatus, relating to a first neural network and a second neural network, wherein the first neural network is applied to a first device side, the second neural network is applied to an apparatus side, and the apparatus comprises:

a receiving unit, configured to receive information about a fourth neural network from a first device, wherein the fourth neural network is a neural network corresponding to the second neural network; and
a processing unit, configured to determine the fourth neural network based on the information about the fourth neural network.

122. The apparatus according to claim 121, wherein the receiving unit is further configured to receive information about a third neural network from the first device, wherein the third neural network is a neural network corresponding to the first neural network, wherein
the first neural network or the third neural network is used by the first device to perform first signal processing, the second neural network or the fourth neural network is used by the processing unit to perform second signal processing, and the second signal processing corresponds to the first signal processing.

123. The apparatus according to claim 122, wherein that the first neural network or the third neural network is used by the first device to perform first signal processing comprises:

the first neural network is used by the first device to process a first signal to obtain a second signal; and
the third neural network is used by the first device to process a third signal to obtain a fourth signal; and
that the second neural network or the fourth neural network is used by the processing unit to perform second signal processing comprises:

the second neural network is used by the processing unit to process the second signal to obtain a fifth signal; and
the fourth neural network is used by the processing unit to process the fourth signal to obtain a sixth signal; or
that the second neural network or the fourth neural network is used by the processing unit to perform second signal processing comprises:

the second neural network is used by the processing unit to process a first signal to obtain a second signal; and
the fourth neural network is used by the processing unit to process a third signal to obtain a fourth signal; and
that the first neural network or the third neural network is used by the first device to perform first signal processing comprises:

the first neural network is used by the first device to process the second signal to obtain a fifth signal; and
the third neural network is used by the first device to process the fourth signal to obtain a sixth signal.

124. The apparatus according to claim 123, wherein a degree of difference between a first training signal related to the third signal and a second training signal related to the sixth signal meets a first condition; or
a similarity between a first training signal and a second training signal meets a second condition.

125. The apparatus according to claim 124, wherein the degree of difference comprises any one of the following:

a difference, a mean squared error, a normalized mean squared error, or an average absolute error; and
the similarity comprises a correlation coefficient.

126. The apparatus according to any one of claims 123 to 125, wherein that the first neural network or the second neural network is used to process a first signal to obtain a second signal comprises:

the first neural network or the second neural network and a first function module are used to process the first signal to obtain the second signal;
and/or
that the first neural network or the second neural network is used to process the second signal to obtain a fifth signal comprises:
the first neural network or the second neural network and a second function module are used to process the second signal to obtain the fifth signal.

127. The apparatus according to any one of claims 123 to 126, wherein that the third neural network or the fourth neural network is used to process a third signal to obtain a fourth signal comprises:

the third neural network or the fourth neural network and a third function module are used to process the third signal to obtain the fourth signal;
and/or
that the third neural network or the fourth neural network is used to process the fourth signal to obtain a sixth signal comprises:
the third neural network or the fourth neural network and a fourth function module are used to process the fourth signal to obtain the sixth signal.

128. The apparatus according to any one of claims 121 to 123, wherein before the receiving unit receives the information about the fourth neural network from the first device, or receives the information about the fourth neural network

and the information about the third neural network from the first device, the processing unit is further configured to determine that the first neural network and the second neural network need to be updated; and
the apparatus further comprises:

a sending unit, configured to send first indication information to the first device, wherein the first indication information is used to indicate the first device to update the first neural network and the second neural network; or
a sending unit, further configured to send second indication information to the first device, wherein the second indication information is used to indicate the first device to determine whether the first neural network and the second neural network need to be updated.

129. The apparatus according to claim 128, wherein the first indication information and/or the second indication information are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

130. The apparatus according to claim 128 or 129, wherein that the processing unit determines that the first neural network and the second neural network need to be updated comprises:

the processing unit periodically or aperiodically determines whether the first neural network and the second neural network need to be updated; or
the receiving unit receives seventh indication information from the first device, wherein the seventh indication information is used to indicate the processing unit to determine whether the first neural network and the second neural network need to be updated; or
the processing unit determines, based on triggering of a preset condition, whether the first neural network and the second neural network need to be updated.

131. The apparatus according to claim 130, wherein the seventh indication information is carried on a physical uplink control channel PUCCH, a physical downlink control channel PDCCH, a physical uplink shared channel PUSCH, a physical downlink shared channel PDSCH, an uplink grant UL grant, or a random access channel RACH.

132. The apparatus according to any one of claims 128 to 131, wherein the processing unit determines whether the first neural network and the second neural network need to be updated comprises:
the processing unit determines, depending on whether a degree of difference or a similarity between first information and second information meets a third condition, whether the first neural network and the second neural network need to be updated, wherein the first information comprises a first determining signal related to the first signal, and the second information comprises a second determining signal related to the fifth signal.

133. The apparatus according to claim 132, wherein the processing unit determines the second determining signal based on the first determining signal, the first neural network, and the second neural network; or
the processing unit determines the second determining signal based on the first determining signal, the first neural network, the second neural network, and the first function module and/or the second function module.

134. The apparatus according to claim 132 or 133, wherein the first determining signal comprises downlink channel information received by the receiving unit; or

the first determining signal comprises channel information obtained through measurement based on a sounding reference signal SRS received by the receiving unit, wherein
the downlink channel information is carried on a preset resource, or the downlink channel information is indicated to be used to determine the first determining signal.

135. The apparatus according to any one of claims 122 to 134, wherein
the information about the third neural network comprises at least one of the following information:
an identifier of the third neural network, information about a network structure corresponding to the third neural network and information about a network weight corresponding to the third neural network, an identifier of a network structure corresponding to the third neural network and information about a network weight corresponding to the third neural network, an identifier of a network structure corresponding to the third neural network and an identifier of a network weight corresponding to the third neural network, information about a network weight corresponding to the third neural network, a variation between a network weight corresponding to the third neural network and a network weight corresponding to the first neural network, an identifier of a network weight corresponding to the third neural network, or third indication information, wherein the third indication information is used to indicate whether the network structure corresponding to the third neural network is the same as a network structure corresponding to the first neural network.

136. The apparatus according to any one of claims 121 to 135, wherein
the information about the fourth neural network comprises at least one of the following information:
an identifier of the fourth neural network, information about a network structure corresponding to the fourth neural network and information about a network weight corresponding to the fourth neural network, an identifier of a network structure corresponding to the fourth neural network and information about a network weight corresponding to the fourth neural network, an identifier of a network structure corresponding to the fourth neural network and an identifier of a network weight corresponding to the fourth neural network, information about a network weight corresponding to the fourth neural network, a variation between a network weight corresponding to the fourth neural network and a network weight corresponding to the second neural network, an identifier of a network weight corresponding to the fourth neural network, or fourth indication information, wherein the fourth indication information is used to indicate whether the network structure corresponding to the fourth neural network is the same as a network structure corresponding to the second neural network.

137. The apparatus according to claim 135 or 136, wherein the variation between the network weight corresponding to the third neural network and the network weight corresponding to the first neural network and/or the variation between the network weight corresponding to the fourth neural network and the network weight corresponding to the second neural network comprise/comprises one or more of the following information:

weight position information, weight interpretation rule indication information, weight value arrangement information, and weight value variation arrangement information;
the information about the network structure corresponding to the third neural network and/or the information about the network structure corresponding to the fourth neural network comprise/comprises:

neural network type indication information and neural network structure indication information; and
the information about the network weight corresponding to the third neural network and/or the information about the network weight corresponding to the fourth neural network comprise/comprises:
weight interpretation rule indication information and/or weight value arrangement information.

138. The apparatus according to any one of claims 121 to 137, wherein before the receiving unit receives the information about the fourth neural network from the first device, or receives the information about the fourth neural network and the information about the third neural network from the first device, the receiving unit is further configured to receive first information from the first device, wherein the first information is used to notify the receiving unit to receive the information about the fourth neural network, or is used to notify the receiving unit to receive the information about the fourth neural network and the information about the third neural network; and
the sending unit sends a first response message to the first device, wherein the first response message is used to indicate the first device to send the information about the fourth neural network, or is used to indicate the first device to send the information about the fourth neural network and the information about the third neural network.

139. The apparatus according to claim 138, wherein the first information and/or the first response message are/is carried on a physical uplink control channel PUCCH, a physical downlink control channel PDCCH, a physical uplink shared channel PUSCH, a physical downlink shared channel PDSCH, an uplink grant UL grant, or a random access channel RACH.

140. The apparatus according to any one of claims 121 to 139, wherein before the receiving unit receives the information about the fourth neural network from the first device, or receives the information about the fourth neural network and the information about the third neural network from the first device, the sending unit sends second information to the first device, wherein the second information is used to indicate that the receiving unit can receive the information about the fourth neural network, or receive the information about the fourth neural network and the information about the third neural network; and
that the receiving unit receives information about a fourth neural network from a first device, or receives information about a fourth neural network and information about a third neural network from the first device comprises:
the receiving unit receives the information about the fourth neural network from the first device, or receives the information about the fourth neural network and the information about the third neural network from the first device after the sending unit sends the second information.

141. The apparatus according to claim 140, wherein that the receiving unit receives the information about the fourth neural network from the first device, or receives the information about the fourth neural network and the information about the third neural network from the first device after the sending unit sends the second information comprises: after the sending unit sends the second information, the receiving unit starts to receive the information about the fourth neural network from the first device, or receive the information about the fourth neural network and the information about the third neural network from the first device within first preset duration after a first start moment or after the first preset duration.

142. The apparatus according to claim 140 or 141, wherein the second information is carried on a physical uplink control channel PUCCH, a physical downlink control channel PDCCH, a physical uplink shared channel PUSCH, a physical downlink shared channel PDSCH, an uplink grant UL grant, or a random access channel RACH.

143. The apparatus according to any one of claims 121 to 141, wherein that the receiving unit receives information about a fourth neural network from a first device, or receives information about a fourth neural network and information about a third neural network from the first device comprises: the receiving unit starts to receive the information about the fourth neural network from the first device, or receive the information about the fourth neural network and the information about the third neural network from the first device within second preset duration after a second start moment or after the second preset duration.

144. The apparatus according to any one of claims 121 to 143, wherein before the receiving unit receives the information about the fourth neural network from the first device, or receives the information about the fourth neural network and the information about the third neural network from the first device, the receiving unit receives first information from the first device, wherein the first information is used to notify the receiving unit to receive the information about the fourth neural network, or receive the information about the fourth neural network and the information about the third neural network; and that the receiving unit receives information about a fourth neural network from a first device, or receives information about a fourth neural network and information about a third neural network from the first device comprises: the receiving unit starts to receive the information about the fourth neural network from the first device, or receive the information about the fourth neural network and the information about the third neural network from the first device within third preset duration after a time point at which the receiving unit receives the first information from the first device or after the third preset duration.

145. The apparatus according to any one of claims 121 to 144, wherein after the receiving unit receives the information about the fourth neural network from the first device, or receives the information about the fourth neural network and the information about the third neural network, the sending unit sends a first notification message to the first device, wherein the first notification message is used to indicate the processing unit to perform information transmission by using the fourth neural network or by using the fourth neural network and the third neural network.

146. The apparatus according to claim 145, wherein the first notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

147. The apparatus according to any one of claims 138 to 146, wherein the sending unit sends a second notification message to the first device; or

the receiving unit receives a second notification message from the first device, wherein the second notification message is used to notify that an information transmission mode is changed from a first mode to a second mode, the first mode comprises information transmission based on neural networks, the neural networks comprise the first neural network and the second neural network, and the second mode comprises information transmission based on a non-neural network.

148. The apparatus according to claim 147, wherein the neural networks further comprise a seventh neural network and an eighth neural network.

149. The apparatus according to claim 147 or 148, wherein the processing unit switches the information transmission mode from the first mode to the second mode.

150. The apparatus according to claim 149, wherein that the processing unit switches the information transmission mode from the first mode to the second mode comprises:

the processing unit starts to switch the information transmission mode from the first mode to the second mode within fourth preset duration after a fourth start moment or after the fourth preset duration, wherein the fourth start moment comprises a moment at which the sending unit sends the second notification message to the first device or a moment at which the receiving unit receives the second notification message from the first device.

151. The apparatus according to any one of claims 141 to 150, wherein the first start moment and the second start moment comprise:

a moment at which the sending unit sends the first indication information to the first device; or
the moment at which the receiving unit receives the second notification message from the first device; or
the moment at which the sending unit sends the second notification message to the first device; or
a moment at which the receiving unit receives first signaling from the first device; or
a moment at which the sending unit sends second signaling to the first device, wherein the first signaling is used to indicate that timing starts, and the second signaling is used to indicate that an update starts, wherein the second notification message is used to notify that the information transmission mode is changed from the first mode to the second mode.

152. The apparatus according to any one of claims 147 to 151, wherein the second notification message is carried on a physical uplink control channel PUCCH, a physical downlink control channel PDCCH, a physical uplink shared channel PUSCH, a physical downlink shared channel PDSCH, an uplink grant UL grant, or a random access channel RACH.

153. The apparatus according to any one of claims 121 to 152, wherein the sending unit sends a second response message to the first device, wherein the second response message is used to indicate to reject receiving of the information about the fourth neural network, or is used to indicate to reject receiving of the information about the fourth neural network and the information about the third neural network.

154. The apparatus according to claim 153, wherein the second response message is carried on a physical uplink control channel PUCCH, a physical downlink control channel PDCCH, a physical uplink shared channel PUSCH, a physical downlink shared channel PDSCH, an uplink grant UL grant, or a random access channel RACH.

155. The apparatus according to any one of claims 121 to 154, wherein the first device comprises a terminal device or a network device, and the apparatus comprises the terminal device or the network device; and

when the first device is the terminal device, the apparatus is the network device; or
when the first device is the network device, the apparatus is the terminal device.

156. The apparatus according to any one of claims 121 to 155, wherein the sending unit sends fifth indication information to the first device, wherein the fifth indication information is used to indicate the first device to send a capability of the first device; and
the receiving unit receives first capability information from the first device, wherein the first capability information comprises at least one of the following information:

computing capability information of the first device, storage capability information of the first device, information indicating whether the first device stores a first AI model, a neural network structure supported by the first device, a neural network scale supported by the first device, or an AI communication function supported by the first device, wherein the first AI model is any AI model; or
the apparatus further comprises:

the receiving unit receives sixth indication information from the first device, wherein the sixth indication information is used to indicate the sending unit to send a capability of the apparatus; and
the sending unit sends second capability information to the first device, wherein the second capability information comprises at least one of the following information:
computing capability information of the apparatus, storage capability information of the apparatus, information indicating whether the apparatus stores a second AI model, a neural network structure supported by the apparatus, a neural network scale supported by the apparatus, or an AI communication function supported by the apparatus, wherein the second AI model is any AI model.

157. The apparatus according to any one of claims 123 to 156, wherein the first signal comprises channel information; and

the first neural network comprises a first compressor, the second neural network comprises a first decompressor, the third neural network comprises a second compressor, and the fourth neural network comprises a second decompressor; or
the first neural network comprises a first decompressor, the second neural network comprises a first compressor, the third neural network comprises a second decompressor, and the fourth neural network comprises a second compressor.

158. The apparatus according to claim 157, wherein the channel information comprises channel information received by a plurality of receive antennas or channel information for a plurality of layers.

159. A communication system, comprising the neural network adjustment apparatus according to any one of claims 80 to 120 and the neural network adjustment apparatus according to any one of claims 121 to 158.

160. A computer-readable storage medium, wherein the computer-readable storage medium stores a computer program, and when the computer program is run by a computer, the computer is enabled to perform the method according to any one of claims 1 to 41, or the computer is enabled to perform the method according to any one of claims 42 to 79.

161. A chip apparatus, comprising a processing circuit, wherein the processing circuit is configured to invoke a program from a memory and run the program, to enable a communication device in which the chip apparatus is installed to perform the method according to any one of claims 1 to 41, or enable a communication device in which the chip apparatus is installed to perform the method according to any one of claims 42 to 79.

FIG. 1

FIG. 2

FIG. 3

Training channel

Compressor          Decompressor

(a)

Estimated channel          Restored channel

Compressor → Compressed channel → Decompressor

(b)

FIG. 4

First device

Second device

S513a: Second indication information

S512a: Determine that a first neural network and a second neural network need to be updated

S512a: Determine that a first neural network and a second neural network need to be updated

S511a: First indication information

S521a: Second notification message

S522a: Roll back to a non-AI mode for information transmission

S522a: Roll back to a non-AI mode for information transmission

S510a: Update the first neural network and the second neural network

S510a: Update the first neural network and the second neural network

Manner 1

S530a: First notification message

S531a: First response message

S520a: Information about a third neural network and/or a fourth neural network

TO
FIG. 5(a)-2

TO
FIG. 5(a)-2

FIG. 5(a)-1

CONT.
FROM
FIG. 5(a)-1

CONT.
FROM
FIG. 5(a)-1

**Manner 2**

S530a: First notification message

S532a: Determine not to send a response message

Alternatively, S532a: Second response message

S522a: Keep a non-AI mode for information transmission

S522a: Keep a non-AI mode for information transmission

**Manner 3**

S540a: Second information

S520a: Information about a third neural network and/or a fourth neural network

**Manner 4**

S520a: Information about a third neural network and/or a fourth neural network

**Manner 5**

S530a: First notification message

S520a: Information about a third neural network and/or a fourth neural network

FIG. 5(a)-2

First device

Second device

S511: Second indication information

S510: Determine whether a
first compressor and a first
decompressor need to be
updated

S520: Update the first
compressor and the first
decompressor

Manner 1

S521: Sixth indication information

S522: Second capability information

S523: Information about an updated
encoder and/or an updated decoder

S530: First indication information

S531: Update the first
compressor and the first
decompressor

Manner
2

S532: Fifth indication information

S533: First capability information

S534: Information about an updated
encoder and/or an updated decoder

FIG. 5(b)

| First signal | → | ... | → | First neural network | → | ... | → | Second signal | Feedback link | Second signal | → | ... | → | Second neural network | → | ... | → | Fifth signal |

FIG. 5(c)

To-be-fed-back downlink channel information → First compressor → Compressed channel information → Feedback link → Compressed channel information → Second decompressor → Restored downlink channel information

FIG. 5(d)

Second neural
network #1

Terminal device #1

Second neural
network #2

Terminal device #2

First neural
network #1

Function module

First neural
network #2

Network device

FIG. 5(e)

| Downlink channel information $H_d$ | First compressor $f_{en}$ | $f_{en}(H_d)$ | First decompressor $f_{de}$ | Estimated downlink channel information $f_{de}(f_{en}(H_d))$ |
|---|---|---|---|---|

(a)

| Downlink channel information $H_{d\_NB}$ | First compressor $f_{en}$ | $f_{en}(H_{d\_NB})$ | First decompressor $f_{de}$ | Estimated downlink channel information $f_{de}(f_{en}(H_{d\_NB}))$ |
|---|---|---|---|---|

(b)

FIG. 6

Downlink channel information $H_d$ → First compressor $f_{en}$ → $f_{en}(H_d)$

Uplink channel information $H_u$ → $H_u$

First decompressor $f_{de}$ → Estimated downlink channel information $f_{de}(f_{en}(H_d),H_u)$

(a)

Downlink channel information $H_d$

Uplink channel information $H_u$

→ First compressor $f_{en}$ → $f_{en}(H_d,H_u)$

Uplink channel information $H_u$

→ First decompressor $f_{de}$ → Estimated downlink channel information $f_{de}(f_{en}(H_d,H_u),H_u)$

(b)

Downlink channel information $H_{d\_NB}$ → First compressor $f_{en}$ → $f_{en}(H_d)$

Uplink channel information $H_u$ → $H_u$

First decompressor $f_{de}$ → Estimated downlink channel information $f_{de}(f_{en}(H_{d\_NB}),H_u)$

(c)

Downlink channel information $H_{d\_NB}$

Uplink channel information $H_u$

→ First compressor $f_{en}$ → $f_{en}(H_{d\_NB},H_u)$

Uplink channel information $H_u$

→ First decompressor $f_{de}$ → Estimated downlink channel information $f_{de}(f_{en}(H_{d\_NB},H_u),H_u)$

(d)

FIG. 7

(a)

```
                    Terminal device                                    Network device

        ┌──────────────────────────────────────────────────────────────────────────┐
        ╎  Case 1                         S812b: CSI-RS                              ╎
        └──────────────────────────────────────────────────────────────────────────┘
           ┌───────────────────────────────────────────────────────────────────────┐
           ╎                      S814b: Third notification message                 ╎
           ╎  Case 2  ─────────────────────────────────────────────────────────────╎
           ╎           S815b: CSI-RS and uplink channel information                 ╎
           └───────────────────────────────────────────────────────────────────────┘
        ┌────────────────────────────┐
        ╎  S813b: Measure downlink    ╎
        ╎     channel information     ╎
        └────────────────────────────┘
    ┌───────────────────────────────────────────────┐
    │ S801b: Determine whether a compressor and      │
    │ a decompressor need to be updated              │
    └───────────────────────────────────────────────┘
                       S811b: Second notification message
    ┌───────────────────────────────────────────────┐
    │  S810b: Adjust the compressor and the          │
    │             decompressor                       │
    └───────────────────────────────────────────────┘
```

S820b: Fourth notification message

**Manner 1**

**Possibility 1**

S830b: Fourth response message

S840b: Information about an adjusted decompressor

**Possibility 2**

S831b: Skip sending a response message to the terminal device within fourth preset duration

Alternatively, S831b: Third response message

**Manner 2**

S821b: Second information

S840b: Information about an adjusted decompressor

**Manner 3**

S840b: Information about an adjusted decompressor

**Manner 4**

S820b: Fourth notification message

S840b: Information about an adjusted decompressor

(b)

| Terminal device | | Network device |
|---|---|---|

Case 1 — S812c: CSI-RS

Case 2 — S814c: Third notification message

S815c: CSI-RS and uplink channel information

S813c: Measure downlink channel information

S801c: Determine whether a compressor and a decompressor need to be updated

S811c: Second notification message

S810c: Select and adjust the compressor and the decompressor

**Manner 1**

Possibility 1

S820c: Fifth notification message

S830c: Fifth response message

S840c: Information about a third decompressor

Possibility 2

S831c: Skip sending a response message to the terminal device within fourth preset duration

Alternatively, S831c: Sixth response message

**Manner 2**

S821c: Second information

S840c: Information about a third decompressor

**Manner 3**

S840c: Information about a third decompressor

**Manner 4**

S820c: Fifth notification message

S840c: Information about a third decompressor

(c)

(d)

| Network device | Terminal device |

Case 1 | S812e: CSI-RS

Case 2
S814e: Third notification message
S815e: CSI-RS and uplink channel information

S801e: Determine whether a compressor and a decompressor need to be updated

S813e: Measure downlink channel information

S811e: Second notification message

S810e: Adjust the compressor and the decompressor

Manner 1

Possibility 1
S820e: Fourth notification message
S830e: Fourth response message
S840e: Information about an adjusted compressor

Possibility 2
S831e: Skip sending a response message to the network device within fourth preset duration
Alternatively, S831e: Third response message

Manner 2
S821e: Second information
S840e: Information about an adjusted compressor

Manner 3
S840e: Information about an adjusted compressor

Manner 4
S820e: Fourth notification message
S840e: Information about an adjusted compressor

(e)

| Network device | | Terminal device |
|---|---|---|

**Case 1** — S812f: CSI-RS

**Case 2** — S814f: Third notification message

S815f: CSI-RS and uplink channel information

S801f: Determine whether a compressor and a decompressor need to be updated

S813f: Measure downlink channel information

S811f: Second notification message

S810f: Adjust the compressor and the decompressor

**Manner 1**

**Possibility 1**

S820f: Fifth notification message

S830f: Fifth response message

S840f: Information about a third compressor

**Possibility 2**

S831f: Skip sending a response message to the network device within fourth preset duration

Alternatively, S831f: Sixth response message

**Manner 2**

S821e: Second information

S840e: Information about a third compressor

**Manner 3**

S840e: Information about a third compressor

**Manner 4**

S820e: Fifth notification message

S840e: Information about a third compressor

(f)

FIG. 8

Terminal device | Network device

Case 1 | S912a: CSI-RS

Case 2 | S914a: Third notification message
S915a: CSI-RS and uplink channel information

S913a: Measure downlink channel information

S901a: Determine whether a compressor and a decompressor need to be updated

S910a: First indication information

S920a: Select an appropriate compressor and an appropriate decompressor

Manner 1

S930a: First information

Possibility 1

S940a: First response message

S950a: Information about a second decompressor

Possibility 2

S960a: Determine to roll back to a conventional feedback manner

S961a: Second notification message

S941a: Skip sending a response message to the terminal device within fourth preset duration

Alternatively, S941a: Second response message

Manner 2

S921a: Second information

S950a: Information about a second decompressor

Manner 3

S950a: Information about a second decompressor

Manner 4

S930a: First information

S950a: Information about a second decompressor

(a)

(b)

(c)

| Network device | | Terminal device |
|---|---|---|

Case 1 | S912d: CSI-RS

Case 2
S914d: Third notification message
S915d: CSI-RS and uplink channel information

S913d: Measure downlink channel information

S901d: Determine whether a compressor and a decompressor need to be updated

S910d: Second indication information

S920d: Select an appropriate compressor and an appropriate decompressor

Manner 1

Possibility 1
S930d: First notification message
S940d: First response message
S950d: Information about a second compressor

Possibility 2
S960c: Determine to roll back to a conventional feedback manner
S961c: Second notification message
S941d: Skip sending a response message to the network device within fourth preset duration
Alternatively, S941d: Second response message

Manner 2
S921d: Second information
S950d: Information about a second compressor

Manner 3
S950d: Information about a second compressor

Manner 4
S930d: First notification message
S950d: Information about a second compressor

(d)

| Network device | Terminal device |
|---|---|

Case 1 — S912e: CSI-RS

Case 2 — S914e: Third notification message

S915e: CSI-RS and uplink channel information

S913e: Measure downlink channel information

S901e: Determine whether a compressor and a decompressor need to be updated

S910e: First indication information

S920e: Adjust the compressor and the decompressor

**Manner 1**

S930e: Fourth notification message

**Possibility 1**

S940e: Fourth response message

S950e: Information about an adjusted compressor

**Possibility 2**

S960c: Determine to roll back to a conventional feedback manner

S961c: Second notification message

S941e: Skip sending a response message to the network device within fourth preset duration

Alternatively, S941e: Third response message

**Manner 2**

S921e: Second information

S950e: Information about an adjusted compressor

**Manner 3**

S950e: Information about an adjusted compressor

**Manner 4**

S930e: Fourth notification message

S950e: Information about an adjusted compressor

(e)

Network device | Terminal device

Case 1 — S912f: CSI-RS

Case 2

S914f: Third notification message

S915f: CSI-RS and uplink channel information

S913f: Measure downlink channel information

S901f: Determine whether a compressor and a decompressor need to be updated

S910f: First indication information

S920f: Select and adjust the compressor and the decompressor

Manner 1

Possibility 1

S930f: Fifth notification message

S940f: Fifth response message

S950f: Information about a third compressor

Possibility 2

S960c: Determine to roll back to a conventional feedback manner

S961c: Second notification message

S941f: Skip sending a response message to the network device within fourth preset duration

Alternatively, S941f: Sixth response message

Manner 2

S921f: Second information

S950f: Information about a third compressor

Manner 3

S950f: Information about a third compressor

Manner 4

S930f: Fifth notification message

S950f: Information about a third compressor

(f)

FIG. 9

First device

Second device

S1010: First message

S1020: Tenth indication information

S1030: Information about an AI model

FIG. 10

Terminal device

Network device

S1110: Seventh message

S1120: Seventh response message

S1130: Eighth message

S1140: Eighth response message

FIG. 11

Apparatus 1200

Processing unit 1210

Sending unit 1220

FIG. 12

Apparatus 1300

Receiving unit 1310

Sending unit 1320

FIG. 13

1400

Processor 1410

Transceiver 1430

Memory 1420

FIG. 14

Apparatus 1500

Receiving unit 1510

Processing unit 1520

FIG. 15

Apparatus 1600

Receiving unit 1610

Sending unit 1620

FIG. 16

1700

Processor 1710

Transceiver 1730

Memory 1720

FIG. 17

## INTERNATIONAL SEARCH REPORT

| International application No. |
|---|
| **PCT/CN2020/087875** |

**A. CLASSIFICATION OF SUBJECT MATTER**

H04L 1/00(2006.01)i; G06N 3/02(2006.01)i

According to International Patent Classification (IPC) or to both national classification and IPC

**B. FIELDS SEARCHED**

Minimum documentation searched (classification system followed by classification symbols)

H04L; G06N

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 百度; IEEE: 人工智能, 神经网络, 更新, 修改, 变更, 变化, 环境, 信道, 位置, 编码, 压缩, 离线, 训练, artificial intelligence, neural network, change, variation, update, channel, compress, off line, train, CNN, DNN

**C. DOCUMENTS CONSIDERED TO BE RELEVANT**

| Category* | Citation of document, with indication, where appropriate, of the relevant passages | Relevant to claim No. |
|---|---|---|
| Y | CN 109672464 A (XIDIAN UNIVERSITY) 23 April 2019 (2019-04-23) description, paragraphs [0030]-[0050] | 1, 2, 5-7, 10, 38, 40-42, 76, 78-81, 84-86, 89, 117, 119-121, 155, 157-161 |
| Y | CN 110636020 A (PEKING UNIVERSITY) 31 December 2019 (2019-12-31) description, paragraphs [0060]-[0082] | 1, 2, 5-7, 10, 38, 40-42, 76, 78-81, 84-86, 89, 117, 119-121, 155, 157-161 |
| A | CN 108390706 A (SOUTHEAST UNIVERSITY) 10 August 2018 (2018-08-10) entire document | 1-161 |
| A | CN 107994973 A (UNIVERSITY OF ELECTRONIC SCIENCE AND TECHNOLOGY OF CHINA) 04 May 2018 (2018-05-04) entire document | 1-161 |
| A | US 10572830 B2 (VIRGINIA TECH INTELLECTUAL PROPERTIES INC.) 25 February 2020 (2020-02-25) entire document | 1-161 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 December 2020** | **15 January 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/087875**

| Patent document cited in search report | | | Publication date (day/month/year) | Patent family member(s) | | | Publication date (day/month/year) |
|---|---|---|---|---|---|---|---|
| CN | 109672464 | A | 23 April 2019 | None | | | |
| CN | 110636020 | A | 31 December 2019 | None | | | |
| CN | 108390706 | A | 10 August 2018 | CN | 108390706 | B | 27 October 2020 |
| CN | 107994973 | A | 04 May 2018 | CN | 107994973 | B | 21 February 2020 |
| US | 10572830 | B2 | 25 February 2020 | US | 2018314985 | A1 | 01 November 2018 |

Form PCT/ISA/210 (patent family annex) (January 2015)